(19) Europäisches Patentamt
European Patent Office
Office européen des brevets

(11) **EP 3 414 591 B1**

(12) **EUROPÄISCHE PATENTSCHRIFT**

(45) Veröffentlichungstag und Bekanntmachung des Hinweises auf die Patenterteilung:
**01.04.2020   Patentblatt 2020/14**

(51) Int Cl.:
**G01S 3/38** *(2006.01)*          **G01S 13/76** *(2006.01)*
**G01S 7/04** *(2006.01)*

(21) Anmeldenummer: **17707774.0**

(22) Anmeldetag: **13.02.2017**

(86) Internationale Anmeldenummer:
**PCT/EP2017/053151**

(87) Internationale Veröffentlichungsnummer:
**WO 2017/137626 (17.08.2017 Gazette 2017/33)**

(54) **VORRICHTUNG ZUR DARSTELLUNG VON BENUTZERINFORMATIONEN UND ENTSPRECHENDES VERFAHREN**

DEVICE FOR DISPLAYING USER INFORMATION AND CORRESPONDING METHOD

DISPOSITIF DE REPRÉSENTATION D'INFORMATIONS D'UTILISATEUR ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2016   DE 102016202206**
**20.07.2016   DE 102016213234**

(43) Veröffentlichungstag der Anmeldung:
**19.12.2018   Patentblatt 2018/51**

(73) Patentinhaber: **Fraunhofer-Gesellschaft zur Förderung der angewandten Forschung e.V.
80686 München (DE)**

(72) Erfinder:
• **SCHÜHLER, Mario**
  **91090 Effeltrich (DE)**
• **WEISGERBER, Lars**
  **02727 Ebersbach-Neugersdorf (DE)**

• **ARENDT, Johannes**
  **91054 Erlangen (DE)**
• **WANSCH, Rainer**
  **91083 Baiersdorf (DE)**
• **MILOSIU, Heinrich**
  **91056 Erlangen (DE)**
• **OEHLER, Frank**
  **91325 Adelsdorf (DE)**

(74) Vertreter: **Hersina, Günter et al
Schoppe, Zimmermann, Stöckeler Zinkler, Schenk & Partner mbB Patentanwälte
Radlkoferstrasse 2
81373 München (DE)**

(56) Entgegenhaltungen:
EP-A1- 2 797 330          DE-C- 165 546
US-A1- 2006 022 814      US-A1- 2008 191 846
US-A1- 2013 135 146

EP 3 414 591 B1

**Beschreibung**

Die Erfindung bezieht sich auf eine Vorrichtung sowie ein Verfahren zur Darstellung von Benutzerinformationen.

Das menschliche Auge nimmt Licht im Wellenlängenbereich zwischen ca. 380 nm (Violett) und 780 nm (Rot) wahr. Elektromagnetische Signale, wie sie beispielsweise für die Kommunikation von RFID ("radio-frequency identification")-Tags oder RFID-Transpondern mit RFID-Lesegeräten oder RFID-Readern verwendet werden, sind daher unsichtbar für das menschliche Auge. Für Anwendungen, welche auf Funksysteme zurückgreifen, kann die "Sichtbarmachung" der verwendeten Wellen einen Informationsgewinn bedeuten. Vorteilhaft wäre je nach Anwendung das Sehen des elektromagnetischen Spektrums beispielsweise von 1 Hz bis 100 000 THz.

Eine Art Erweiterung der dem menschlichen Auge zugänglichen Wellenlängen besteht im Bereich der virtuellen Realität und durch besondere Brillenformen oder in Form der sogenannten erweiterten Realität ("augmented reality"). Dabei werden Informationen oder Graphiken optischen Bildern überlagert oder in das Blickfeld eines Benutzers eingeblendet. So blenden z. B. Instrumentenlandesysteme (ILS) bei Flugzeugen oder Navigationssysteme bei Fahrzeugen Signale in sogenannten "Head-up-displays" (HUD) ein.

Die WO 2015/067982 A1 offenbart beispielsweise eine Brille mit einer integrierten Antenne, über die andere mobile elektronische Geräte in der Nähe erkannt und zugehörige Informationen dargestellt werden.

Ein Mittel, um zwei Antennen in einem Gelände zueinander auszurichten, offenbart die US 2013/0135146 A1. Dabei wird einem visuellen Bild des Geländes eine Darstellung der Hauptachsen sowie die Strahlungsmuster der Antennen überlagert.

Die US 2006 / 0022814 A1 beschreibt eine Vorrichtung mit einer Kamera und RFID Tags. Objekte, die mit den RFID Tags versehen sind, werden mittels optischer Bilderkennung verifiziert und lokalisiert.

Die EP 2 797 330 A1 beschreibt ein drahtloses User Device mit zwei Antennen, die auf unterschiedliche Frequenzbereiche ausgelegt sind. Mittels der beiden Antennen können Signale von entfernten Geräten empfangen werden. Durch einen Vergleich der beiden Empfangssignale unterschiedlicher Frequenzen können die Positionen der entfernten Geräte ermittelt und visuell auf einem Display angezeigt werden.

Die DE 165 546 C beschreibt ein Verfahren, um metallische Gegenstände mittels elektrischer Wellen einem Beobachter zu melden. Gemäß diesem Verfahren werden elektrische Wellen ausgesendet und reflektierte Anteile dieser Wellen werden empfangen. Der Empfang der Wellen wird akustisch oder visuell angezeigt.

Die US 2008 / 0191846 A1 beschreibt ein Verfahren und eine Vorrichtung zum Visualisieren von Gegenständen, die mit RFID Tags versehen sind. Die Lokalisierung kann basierend auf den Einfallswinkeln der elektromagnetischen Strahlung durchgeführt werden. Die Position der lokalisierten Gegenstände kann auf einem portablen Gerät angezeigt werden.

Über Kamerabilder und Barcodes oder Bilderkennungsalgorithmen lassen sich Objekte im Blickfeld identifizieren. Dabei ist jedoch eine gute optische Erkennbarkeit erforderlich, was beispielsweise nicht gegeben ist bei Paletten mit in Kisten verpackten Objekten.

Die Aufgabe der Erfindung besteht daher darin, eine Vorrichtung sowie ein Verfahren vorzuschlagen, um einem Benutzer ergänzende Informationen über eine betrachtete Szenerie zur Verfügung zu stellen.

Die Erfindung löst die Aufgabe durch eine Vorrichtung zur Darstellung von Benutzerinformationen. Dargestellt oder visualisiert werden somit Informationen für einen Benutzer.

Die Vorrichtung weist zumindest eine Antennenvorrichtung, eine Verarbeitungsvorrichtung und eine Darstellungsvorrichtung auf. Die Antennenvorrichtung ist derartig ausgestaltet, Signale mindestens eines Senders in einer Szenerie zu empfangen. Dabei empfängt die Antennenvorrichtung die Signale mit mindestens einer Richtcharakteristik, die sich auf räumlich unterschiedliche Empfangsempfindlichkeiten bezieht. Die Antennenvorrichtung empfängt also in Abhängigkeit von der Richtcharakteristik Signale unterschiedlich stark aus unterschiedlichen Bereichen. Damit geht auch eine Richtwirkung des Empfangs einher. Alternativ oder ergänzend ist die Antennenvorrichtung derartig ausgestaltet, Signale mit mindestens einer Richtcharakteristik in eine Szenerie zu senden und Signale mindestens eines Senders aus der Szenerie zu empfangen. In dieser alternativen oder ergänzenden Ausgestaltung sendet die Antennenvorrichtung Signale mit mindestens einer Richtcharakteristik aus, so dass die Signale im Wesentlichen nur in den Raumbereich gelangen, der der jeweiligen Richtcharakteristik zugeordnet ist. Es wird somit quasi jeweils nur ein Raumbereich in der Szenerie mit Signalen beaufschlagt. Der Empfang der Signale, die von mindestens einem Sender stammen, geschieht dabei je nach Ausgestaltung ungerichtet oder gerichtet über mindestens eine Richtcharakteristik, die sich dann entsprechend auf die Empfangsempfindlichkeit bezieht. Die Verarbeitungsvorrichtung ist derartig ausgestaltet, die empfangenen Signale in Hinblick auf die Szenerie zu verarbeiten und Darstellungsdaten zu ermitteln. Die Darstellungsdaten beziehen sich beispielsweise in einer Ausgestaltung auf die ermittelte Position des Senders und beziehen sich in einer weiteren Ausgestaltung auf die räumliche Verteilung der empfangenen Signale. In einer Ausgestaltung stehen der Verarbeitungsvorrichtung insbesondere Daten zur Verfügung, die die jeweils verwendete Richtcharakteristik beschreiben. So handelt es sich beispielsweise um wenigstens einen Datensatz, der bezogen auf Positionen relativ zur Antennenvorrichtung ein Maß für die Empfangsempfindlichkeit der Antennenvorrichtung für die verwendete Richtcharakteristik aufweist. Schließlich ist die Darstellungsvorrichtung derartig ausgestaltet, zumindest die ermittelten Darstellungsdaten darzustellen. Damit werden die Darstellungsdaten auch einem Benutzer zugängig und stellen für ihn eine Information dar.

Die Vorrichtung weist eine Positionsbestimmungsvorrichtung auf, die Daten über mindestens einen Sender bzw. über empfangene Signale, die von mindestens einem Sender stammen, bereitstellt und an die Vorrichtung übermittelt. Dabei weist die Positionsbestimmungsvorrichtung die Antennenvorrichtung und/oder die Verarbeitungsvorrichtung auf. Unterschiedliche Varianten der Positionsbestimmungsvorrichtung werden im Folgenden beschrieben und erläutert.

Je nach Ausgestaltung ist die Antennenvorrichtung einteilig oder mehrteilig ausgestaltet. In der mehrteiligen Variante besteht die Antennenvorrichtung in einer Ausgestaltung aus mehreren Antennenelementen, die einzeln oder gemeinsam dem Senden und/oder Empfangen von Signalen dienen.

Die Szenerie bezieht sich dabei auf den Bereich oder Raum, in dem sich zumindest der Sender befindet.

In einer Ausgestaltung verfügt die Vorrichtung über eine Aufnahmevorrichtung, die derartig ausgestaltet ist, visuelle Bilder der Szenerie aufzunehmen. In einer Ausgestaltung handelt es sich um eine Kamera. Weiterhin ist die Darstellungsvorrichtung derartig ausgestaltet, einer Darstellung mindestens eines aufgenommenen visuellen Bildes zumindest die ermittelten Darstellungsdaten zu überlagern. Die Darstellungsvorrichtung ist beispielweise ein Monitor oder ein Display, um dem visuellen Bild der Szenerie die Darstellungsdaten zu überlagern. Damit erhält der Betrachter somit eine räumliche Referenz, um die Darstellungsdaten besser verwenden zu können. Mit anderen Worten: Die Überlagerung erlaubt dem Benutzer das Sehen mit unterschiedlichen Frequenzen bzw. das Anwenden von Informationen, die sich aus der Auswertung von mehreren Frequenzbereichen ergeben.

In einer Ausgestaltung ist die Antennenvorrichtung gemäß einer Ausgestaltung, die in der DE 10 2014 223 328 A1 offenbart ist, ausgeführt.

Insbesondere für den Fall, dass die Antennenvorrichtung, die Aufnahmevorrichtung oder die Darstellungsvorrichtung nicht statisch sind, sondern bewegt werden, ist es für den Abgleich der jeweiligen Daten bzw. für die gemeinsame Darstellung erforderlich, dass die Positionen relativ zueinander bzw. zur Szenerie bekannt sind.

Daher sieht es eine Ausgestaltung vor, dass die Vorrichtung mindestens einen Lagesensor aufweist. Entsprechend ist die Darstellungsvorrichtung derartig ausgestaltet, dass sie die Darstellungsdaten in Abhängigkeit von Daten des Lagesensors darstellt.

In einer Ausgestaltung sind insbesondere mehrere Lagesensoren vorhanden und den unterschiedlichen Vorrichtungen zugeordnet, so dass jeweils deren Position bzw. Ausrichtung ermittelt werden kann.

In einer Ausgestaltung ist der Lagesensor der Darstellungsvorrichtung zugeordnet und erlaubt daher die Ermittlung der Lage der Darstellungsvorrichtung. Weiterhin ist die Darstellungsvorrichtung derartig ausgestaltet, dass sie die Darstellungsdaten in Abhängigkeit von einer Ausrichtung der Darstellungsvorrichtung relativ zur Szenerie darstellt.

In einer Ausgestaltung ist die Darstellungsvorrichtung in Form einer Brille ausgestaltet. In diese Brille werden daher die Darstellungsdaten projiziert. Da der Benutzer die Brille unterschiedlich zur Szenerie ausrichten kann, dient beispielsweise ein Lagesensor, der z. B. auf oder in der Brille fixiert ist, dazu, dass die Darstellungsdaten jeweils passend zur Ausrichtung der Brille eingeblendet werden und damit auch in die Richtung, in die der Benutzer blickt.

In einer Ausgestaltung ist der Lagesensor der Aufnahmevorrichtung zugeordnet. Die Darstellungsvorrichtung ist derartig ausgestaltet, die Darstellungsdaten in Abhängigkeit von einer Ausrichtung der Aufnahmevorrichtung relativ zur Antennenvorrichtung darzustellen. In einer Ausgestaltung ist die Antennenvorrichtung insbesondere ortsfest, wobei der Lagesensor der Aufnahmevorrichtung Informationen darüber liefert, von welchem Bereich einer Szenerie die entsprechenden Aufnahmen der Aufnahmevorrichtung stammen.

In einer Ausgestaltung ist die Darstellungsvorrichtung derartig ausgestaltet, basierend auf aus den empfangenen Signalen ermittelten Informationen ein optisches Element darzustellen. Das optische Element ist beispielsweise ein Icon, das die Position des Senders angibt. Alternativ oder ergänzend handelt es sich um eine Bezeichnung des Senders oder um den Hinweis, dass weitere Informationen zur Verfügung stehen.

In einer Ausgestaltung ist die Darstellungsvorrichtung derartig ausgestaltet, basierend auf einem Abstand zwischen dem Sender und der Darstellungsvorrichtung und/oder basierend auf einer Orientierung zwischen Sender und Darstellungsvorrichtung und/oder basierend auf einer von dem Sender übertragenen Information die ermittelten Informationen darzustellen. In dieser Ausgestaltung wird z. B. für den Sender ein blinkendes Icon verwendet, dessen Blinkfrequenz mit abnehmendem Zustand zunimmt. Somit kann leichter verdeutlicht werden, wenn eine Annäherung an den Sender stattfindet. Alternativ oder ergänzend wird die ermittelte Information in Abhängigkeit von einer Orientierung zwischen Sender und Darstellungsvorrichtung dargestellt. Dies bezieht sich beispielsweise auf eine Richtung von der Darstellungsvorrichtung zum Sender oder umgekehrt oder bezieht sich beispielsweise auf eine Ausrichtung der Darstellungsvorrichtung bzw. des Senders. Weiterhin wird die ermittelte Information alternativ oder ergänzend basierend auf einer Information dargestellt, die vom Sender übertragen worden ist.

In einer Ausgestaltung ist eine - insbesondere externe - Datenbank vorgesehen, in der Daten oder Informationen hinterlegt sind, auf die die Verarbeitungsvorrichtung zugreift. Dies dient in einer Ausgestaltung der Auswertung der empfangenen Signale bzw. zum Erzeugen der Darstellungsdaten.

In einer Ausgestaltung ist die Verarbeitungsvorrichtung derartig ausgestaltet, basierend auf der mindestens einen Richtcharakteristik und basierend auf mindestens einem empfangenen Signal eine Signalverteilung des Senders als Darstellungsdaten zu ermitteln. Die Darstellungsvorrichtung ist entsprechend ausgestaltet, die Signalverteilung darzustellen. Diese Ausgestaltung ermöglicht somit eine Visualisierung der elektromagnetischen Hochfrequenz-Signale, die von der Antennenvorrichtung empfangen werden. Die Signalverteilung ergibt sich dabei aus der Abstrahlungscharakteristik des Senders und der Verteilung der Empfangsempfindlichkeit der Antennenvorrichtung. Alternativ folgt die Signalverteilung aus der Richtcharakteristik für das Aussenden der Signale, wobei in einer Ausgestaltung die Signalverteilung ergänzend aus der Richtcharakteristik für den Empfang der Signale folgt. In einer Ausgestaltung bezieht sich die Signalverteilung auf die Verteilung der Signalstärken der empfangenen Signale im Raum und in einer alternativen oder ergänzenden Ausgestaltung umfasst die Signalverteilung eine ermittelte Änderung der Signalstärke im Raum.

In einer Ausgestaltung wird die Signalverteilung aus mehreren empfangenen Signalen und den jeweils verwendeten Richtcharakteristiken ermittelt.

Für die bessere Erkennbarkeit sieht es eine Ausgestaltung vor, dass die Darstellungsvorrichtung derartig ausgestaltet ist, beispielsweise die Signalverteilung oder die vom Sender abgestrahlte Signalstärke oder eine Signalstärkenänderung im Raum mit einer Farbkodierung oder mit einer Graustufenkodierung oder mit Signalstärkelinien darzustellen. Die Signalstärkelinien zeigen dabei den räumlichen Verlauf von Signalstärken der empfangenen Signale in der Art von Höhenlinien bei Landkarten, wobei jede Linie mit einer ausgewählten Signalstärke verbunden ist.

Es folgen Ausgestaltungen, die sich auf die Gewinnung der darzustellenden Daten - insbesondere in Bezug auf die Position eines Senders oder in Bezug auf die Verteilung von empfangenen Signalen - beziehen. Dabei können die Ausgestaltungen auch unterschiedlich miteinander kombiniert werden.

Insbesondere werden hier die Vorrichtungen zur Datengewinnung beschrieben, die hier als Positionsbestimmungsvorrichtungen bezeichnet werden. Die Komponenten der Positionsbestimmungsvorrichtungen können dabei jedoch auch gesondert miteinander oder z. B. mit einer separaten Antennenvorrichtung kombiniert werden. Daher kann z. B. die Positionsbestimmungsvorrichtung teilweise auch eine Antennenvorrichtung umfassen oder alternativ nur der Auswertung der mit einer separaten Antennenvorrichtung empfangenen Signale dienen. In einer Ausgestaltung lassen sich die Positionsbestimmungsvorrichtungen auch unabhängig von der Vorrichtung zur Darstellung von Benutzerinformationen verwenden.

In einer Ausgestaltung einer ersten Variante weist die Vorrichtung eine Positionsbestimmungsvorrichtung auf. Die Antennenvorrichtung weist mehrere unterschiedliche Richtcharakteristiken auf, wobei die Richtcharakteristiken sich jeweils auf eine Menge an räumlich unterschiedlichen Empfangsempfindlichkeiten der Antennenvorrichtung beziehen. Eine Kontrollvorrichtung wirkt derartig auf die Antennenvorrichtung ein, dass mindestens eine der Richtcharakteristiken der Antennenvorrichtung aktiviert ist. Die Antennenvorrichtung empfängt mindestens ein von dem Sender ausgehendes Signal, wobei dies mit der aktivierten Richtcharakteristik geschieht. Weiterhin verarbeitet eine Datenverarbeitungsvorrichtung das mindestens eine empfangene Signal und die der aktivierten Richtcharakteristik zugeordnete Menge an räumlich unterschiedlichen Empfangsempfindlichkeiten zu einer Menge von gewichteten Empfangswerten. Zudem ermittelt die Datenverarbeitungsvorrichtung mindestens aus der Menge der gewichteten Empfangswerte die Information über die Position des Senders. In einer Ausgestaltung gehören die Datenverarbeitungsvorrichtung und die Antennenvorrichtung zu der Positionsbestimmungsvorrichtung.

Die Richtcharakteristiken beziehen sich dabei auf die räumliche Verteilung der Empfangsempfindlichkeiten. Daher werden nicht aus allen Raumrichtungen Signale gleichmäßig aufgenommen, sondern es gibt Bereiche, aus denen die Antennenvorrichtung bevorzugt Signale empfängt. Damit geht einher, dass beim Empfangen der Signale mit einer ausgesuchten bzw. aktivierten Richtcharakteristik ein Zusammenhang zwischen der Position des Senders und dem empfangenen Signal besteht. Dieser Zusammenhang wird von der Datenverarbeitungsvorrichtung ausgenutzt, die derartig ausgestaltet ist, das empfangene Signal und Daten über die beim Empfang verwendete und somit aktivierte Richtcharakteristik bzw. die Menge der räumlich unterschiedlichen Empfangsempfindlichkeiten zu verarbeiten. Die Datenverarbeitungsvorrichtung ermittelt aus dem empfangenen Signal und den Daten über die Verteilung der Empfangsempfindlichkeiten eine Menge an gewichteten Empfangswerten. Aus der Menge der gewichteten Empfangswerte lässt sich sodann die Information über die Position des mindestens einen Senders ermitteln. Die Kontrollvorrichtung dient dabei dem Zweck, dass mindestens eine Richtcharakteristik der Antennenvorrichtung aktiviert ist. Dabei werden in einer Ausgestaltung mehrere Richtcharakteristiken aktiviert, so dass es zu überlagerten Richtcharakteristiken kommt.

In einer Ausgestaltung stehen für die Auswertung der empfangenen Signale die Amplituden und die Phasen der Signale zur Verfügung. In einer alternativen Ausgestaltung werden nur die Amplituden der Signale verarbeitet.

In einer Ausgestaltung ist vorgesehen, dass die Kontrollvorrichtung derartig auf die Antennenvorrichtung einwirkt, dass mehrere unterschiedliche Richtcharakteristiken der Antennenvorrichtung aktiviert sind. Die Richtcharakteristiken werden in einer Ausgestaltung insbesondere nacheinander aktiviert. Dabei empfängt die Antennenvorrichtung zu jeder aktivierten Richtcharakteristik mindestens ein Signal des Senders. Die Datenverarbeitungsvorrichtung verarbeitet die empfangenen Signale und die der jeweils aktivierten Richtcharakteristik zugeordnete Menge an räumlich unterschiedlichen Empfangsempfindlichkeiten jeweils zu einer der jeweils aktivierten Richtcharakteristik zugehörigen Menge von gewichteten Empfangswerten. Zudem verarbeitet die Datenverarbeitungsvorrichtung die zu den unterschiedlichen Richtcharakteristiken zugehörigen Mengen der gewichteten Empfangswerte miteinander.

Die folgenden Ausgestaltungen widmen sich der Verarbeitung der Daten der empfangenen Signale und der jeweils aktivierten Richtcharakteristiken durch die Datenverarbeitungsvorrichtung.

Eine Ausgestaltung beinhaltet, dass die Datenverarbeitungsvorrichtung Daten, die die empfangenen Signale beschreiben, und die Mengen von räumlich unterschiedlichen Empfangsempfindlichkeiten der jeweils aktivierten Richtcharakteristiken, die in Matrix-Form vorliegen, miteinander verarbeitet, um die Mengen von gewichteten Empfangswerten ebenfalls in Form von Matrizen zu erhalten. In einer Ausgestaltung werden die Daten der empfangenen Signale und die den Richtcharakteristiken zugehörigen Matrizen miteinander multipliziert.

In einer Ausgestaltung ist vorgesehen, dass die Datenverarbeitungsvorrichtung zumindest eine Gruppe der Mengen der gewichteten Empfangswerte, die unterschiedlichen Richtcharakteristiken zugehörig sind, aufaddiert. Durch das Addieren der Mengen der gewichteten Empfangswerte ergeben sich in einer Ausgestaltung Häufungspunkte, die es erlauben, die Position des Senders zu identifizieren. Dabei bezieht sich in einer Ausgestaltung die Gruppe auf einen Teil der ermittelten Mengen der gewichteten Empfangswerte und ist somit eine Teil- oder Untergruppe. In einer alternativen Ausgestaltung bezieht sich die Gruppe auf alle Mengen der gewichteten Empfangswerte, die der Datenverarbeitungsvorrichtung vorliegen.

In einer Ausgestaltung ermittelt die Datenverarbeitungsvorrichtung zumindest zwischen zwei Gruppen der Mengen der gewichteten Empfangswerte eine Differenz. In einer Ausgestaltung weist zumindest eine der zwei Gruppen der Mengen der gewichteten Empfangswerte nur eine Menge der gewichteten Empfangswerte und somit nur die Daten des Signalempfangs mit einer aktivierten Richtcharakteristik auf.

In einer Ausgestaltung ist vorgesehen, dass die zwei Gruppen überlappend sind. In dieser Ausgestaltung findet sich somit in beiden Gruppen zumindest eine gemeinsame Menge an gewichteten Empfangswerten. In einer alternativen Ausgestaltung sind die zwei Gruppen disjunkt, so dass sich in den Gruppen nur jeweils unterschiedliche Mengen an gewichteten Empfangswerten befinden.

Eine Ausgestaltung beinhaltet, dass die Antennenvorrichtung eine Mehrkeulenantenne ist. Eine Mehrkeulenantenne (andere Bezeichnung ist: Multibeam-Antenne) verfügt in Bezug auf die Empfangsempfindlichkeit (und damit auch für die Sendeeigenschaften bzw. entsprechende Empfangsempfindlichkeiten) über mehrere Keulen oder zumindest über mehrere Hauptkeulen. Die Keulen sind dabei unterschiedlichen Richtcharakteristiken zugeordnet. Damit geht einher, dass es bei den Richtcharakteristiken jeweils eine Hauptrichtung oder einen Hauptbereich gibt, der der jeweiligen Keule bzw. der Hauptkeule zugeordnet ist. Oder mit anderen Worten: bei jeder aktivierten Richtcharakteristik werden Signale hauptsächlich aus einem räumlichen Bereich empfangen, in dem die jeweils zugehörige (Empfangs-)Keule liegt.

In einer Ausgestaltung ist vorgesehen, dass die Richtcharakteristiken der als Mehrkeulenantenne ausgestalteten Antennenvorrichtung sich durch die Richtung der Keulen voneinander unterscheiden. Die Keulen sind dabei in einer Ausgestaltung insbesondere die Hauptkeulen, die durch eine Hauptrichtung der jeweiligen Richtcharakteristik gegeben sind.

Eine Ausgestaltung beinhaltet, dass die als Mehrkeulenantenne ausgestaltete Antennenvorrichtung für jede schaltbare Richtcharakteristik einen einzelnen Signalausgang aufweist. In einer Ausgestaltung ist vorgesehen, dass die Antennenvorrichtung stets mit mehreren Richtcharakteristiken Signale empfängt und dass es durch die Antennenvorrichtung selbst oder eine nachgeordnete Komponente möglich ist, die insgesamt gleichzeitig empfangenen Signale hinsichtlich ihrer jeweiligen Richtcharakteristiken aufzutrennen, so dass sich Einzelsignale ergeben, die jeweils einer Richtcharakteristik zugeordnet sind. Das Aktivieren der Richtcharakteristik ist dabei in einer Ausgestaltung das Auswählen der Richtcharakteristik und das Auswerten des mit der aktivierten Richtcharakteristik empfangenen Signals. Alternativ bezieht sich das Aktivieren auf das elektronische Aktivieren, so dass Signale nur mit einer Richtcharakteristik von der Antennenvorrichtung empfangbar sind.

In einer Ausgestaltung ist vorgesehen, dass der Datenverarbeitungsvorrichtung pro aktivierter Richtcharakteristik nur das Signal eines Signalausgangs der Antennenvorrichtung zur Verfügung steht. In dieser Ausgestaltung verarbeitet die Datenverarbeitungsvorrichtung somit jeweils nur ein empfangenes Signal, das der jeweils aktivierten Richtcharakteristik zugeordnet ist. In einer Ausgestaltung werden die empfangenen Signale verarbeitet, nachdem alle Richtcharakteristiken aktiviert worden sind.

Eine Ausgestaltung beinhaltet, dass der Datenverarbeitungsvorrichtung pro aktivierter Richtcharakteristik die Signale mehrerer Signalausgänge der Antennenvorrichtung zur Verfügung stehen. In dieser Ausgestaltung verarbeitet die Datenverarbeitungsvorrichtung somit nicht nur das Signal einer aktivierten und daher speziell ausgewählten Richtcharakteristik, sondern auch die Signale, die anderen Richtcharakteristiken zugeordnet sind.

Eine Ausgestaltung beinhaltet, dass die Datenverarbeitungsvorrichtung eine Gruppe der Mengen der gewichteten Empfangswerte aufaddiert und mindestens aus einem Häufungsbereich der empfangenen Signale die Information über die Position des Senders ermittelt. Es wird somit ermittelt, aus welchem Raumbereich oder aus welcher Richtung relativ zur Antennenvorrichtung verstärkt Signale stammen.

In einer Ausgestaltung ist vorgesehen, dass die Datenverarbeitungsvorrichtung aus einer Differenz zwischen mindestens zwei Gruppen der Mengen der gewichteten Empfangswerte das Vorliegen von mehreren Sendern ermittelt. Ergeben sich beispielsweise zwei Häufungsbereiche, so zeigt dies die Anwesenheit von zwei Sendern an.

In einer Ausgestaltung wird von der Datenverarbeitungsvorrichtung ein Zwischenergebnis für die Information über die Position des Senders ermittelt und ausgehend davon werden für weitere Schritte die Richtcharakteristiken aktiviert, die zu dem Zwischenergebnis passende Raumbereiche abdecken.

Eine Ausgestaltung beinhaltet, dass die Antennenvorrichtung mindestens ein Signal aussendet, damit von dem Sender ein Signal ausgeht. In dieser Ausgestaltung wird der Sender dazu animiert, wenigstens ein Signal auszusenden. Dabei ist in einer Ausgestaltung vorgesehen, dass der Sender durch das von der Antennenvorrichtung ausgesendete Signal Energie zum Aussenden des eigenen Signals erhält. In dieser Ausgestaltung handelt es sich bei dem Sender beispielsweise um einen RFID-Tag. In einer alternativen Ausgestaltung handelt es sich bei dem von dem Sender ausgehenden Signal um ein Reflexionssignal, das sich durch die Reflexion des von der Antennenvorrichtung ausgehenden Signals an dem Sender ergibt.

Eine Ausgestaltung beinhaltet, dass die Antennenvorrichtung und die Datenverarbeitungsvorrichtung derartig ausgestaltet sind, von dem Sender aktiv erzeugte Signale als von dem Sender ausgehende Signale zu empfangen und zu verarbeiten. In einer Ausgestaltung erzeugt der Sender aktiv Signale, indem er selbsttätig Signale aussendet. In einer weiteren Ausgestaltung wird der Sender von dem Signal der Antennenvorrichtung aktiviert und sendet dann Signale aktiv aus. Aktives Erzeugen bedeutet in einer Ausgestaltung auch das Empfangen und Aussenden von Signalen mit gewissen Veränderungen, z. B. das Verschieben der Frequenz oder das Aufprägen einer Information.

In einer Ausgestaltung ist vorgesehen, dass die Antennenvorrichtung und die Datenverarbeitungsvorrichtung derartig ausgestaltet sind, von dem Sender reflektierte Signale als von dem Sender ausgehende Signale zu empfangen und zu verarbeiten. Der Sender ist in dieser Ausgestaltung also beispielsweise ein Objekt, das mit RADAR-Signalen bestrahlt wird und die Signale entsprechend reflektiert.

In einer Ausgestaltung ist vorgesehen, dass die Datenverarbeitungsvorrichtung eine Unsicherheit der ermittelten Information über die Position des Senders in Abhängigkeit von einer Keulenbreite der Keulen der aktivierten Richtcharakteristiken der als Mehrkeulenantenne ausgestalteten Antennenvorrichtung ermittelt.

Es folgt eine weitere Vorrichtung zur Ermittlung der über die zuvor beschriebene Vorrichtung darzustellenden Daten. Die folgenden Ausgestaltungen lassen sich dabei auch mit den vorherigen kombinieren. Gleiches gilt umgekehrt.

Die Vorrichtung zur Darstellung der Benutzerinformationen umfasst daher in einer Ausgestaltung eine Positionsbestimmungsvorrichtung gemäß einer zweiten Variante. Die Antennenvorrichtung weist mehrere unterschiedliche Richtcharakteristiken auf, die sich jeweils zumindest auf eine Menge an räumlich unterschiedlichen Empfangsempfindlichkeiten der Antennenvorrichtung beziehen. Die Antennenvorrichtung empfängt die Signale somit nicht räumlich homogen, sondern je nach Richtcharakteristik bevorzugt aus unterschiedlichen Raumbereichen. Die Antennenvorrichtung ist derartig ausgestaltet, mit unterschiedlichen Richtcharakteristiken jeweils mindestens ein Signal von dem Sender zu empfangen. Da jede Richtcharakteristik mit einer eigenen Verteilung der Empfindlichkeit verbunden ist, werden auch die Signale des Senders als unterschiedliche Empfangssignale empfangen. Der Empfang mit den unterschiedlichen Richtcharakteristiken geschieht dabei in einer Ausgestaltung zeitlich versetzt und geschieht in einer anderen Ausgestaltung zeitgleich. Dabei wird in einer Ausgestaltung davon ausgegangen, dass der Sender die Signale jeweils im Wesentlichen mit der gleichen Signalstärke aussendet. Eine Signalverarbeitungsvorrichtung ist derartig ausgestaltet, die von der Antennenvorrichtung empfangenen Signale zu verarbeiten und jeweils einen Amplitudenwert einer Feldstärke des empfangenen Signals zu ermitteln. Schließlich ist eine Datenverarbeitungsvorrichtung derartig ausgestaltet, basierend auf den Richtcharakteristiken und den aus den jeweils zugeordneten empfangenen Signalen ermittelten Amplitudenwerten die Information über die Position des Senders zu ermitteln. In einer Ausgestaltung ist dabei die Antennenvorrichtung ein Bestandteil der Positionsbestimmungsvorrichtung. Die ermittelten Daten werden anschließend von der oben geschilderten Vorrichtung zur Darstellung von Benutzerinformationen passend dargestellt. In einer Ausgestaltung umfasst die Positionsbestimmungsvorrichtung die Antennenvorrichtung und die Signalverarbeitungsvorrichtung.

Es werden somit mit unterschiedlichen Richtcharakteristiken Signale empfangen. Für die empfangenen Signale wird jeweils ein Amplitudenwert ermittelt, der dem entsprechenden Signal und damit auch der jeweiligen Richtcharakteristik zugeordnet ist. Die Richtcharakteristiken sind in einer Ausgestaltung mit einer Richtung einer Keule verbunden, so dass Signale auch primär aus dieser Richtung empfangen werden. Ausgehend von Daten der Richtcharakteristiken und dem jeweiligen Amplitudenwert wird dann die Information über die Position des Senders ermittelt.

In einer Ausgestaltung ist eine Steuervorrichtung vorhanden und derartig ausgestaltet, unterschiedliche Richtcharakteristiken zum Empfangen von von dem Sender ausgehenden Signalen zu schalten. Daher ist die Datenverarbeitungsvorrichtung derartig ausgestaltet, basierend auf den geschalteten Richtcharakteristiken und den zugeordneten ermittelten Amplitudenwerten die Information über die Position des Senders zu ermitteln. Das Schalten der Richtcharakteristiken bedeutet in einer Ausgestaltung, dass nur die Signale der geschalteten Richtcharakteristik zur Signalverarbeitungsvorrichtung gelangen. In einer alternativen oder ergänzenden Ausgestaltung wird derartig in die Antennenvorrichtung eingegriffen, das lediglich mit der geschalteten Richtcharakteristik Signale empfangen werden können.

In einer Ausgestaltung dient die Steuervorrichtung auch dem Schalten der Richtcharakteristiken, über die ein Anregungssignal ausgesendet wird. Dies ist beispielsweise bei passiven Sendern, z. B. RFID-Transpondern, erforderlich. In einer Ausgestaltung gehen daher die Richtcharakteristiken auch mit einer räumlich unterschiedlichen Abstrahlungsverteilung einher.

Eine Ausgestaltung sieht vor, dass die Datenverarbeitungsvorrichtung derartig ausgestaltet ist, aus den ermittelten Amplitudenwerten in vektorieller Form und Daten über die Richtcharakteristiken eine Aussage über eine Richtung des Senders relativ zur Antennenvorrichtung als Information über die Position des Senders zu ermitteln. In dieser Ausgestaltung wird zumindest ermittelt, in welcher Richtung der Sender relativ zur Antennenvorrichtung positioniert ist. Aus den Amplitudenwerten und den Daten über die jeweilige Richtcharakteristik wird ein Empfangsvektor konstruiert.

Eine Ausgestaltung beinhaltet, dass die Antennenvorrichtung derartig ausgestaltet ist, dass die Richtcharakteristiken jeweils ein globales Maximum aufweisen, das jeweils in einem durch ein Paar eines Azimutwinkels und eines Co-Elevationwinkels bestimmten eigenem Sektor in einem der Antennenvorrichtung zugeordneten Ausleuchtbereich liegt. In dieser Ausgestaltung wird jeweils ein Maximum - insbesondere in Bezug auf die Empfangsempfindlichkeit - der Richtcharakteristiken einem Sektor oder Bereich um die Antennenvorrichtung zugeordnet. Das bedeutet, dass jede Richtcharakteristik am stärksten Signale aus dem ihr jeweils zugeordneten Sektor empfängt. In einer Ausgestaltung gilt dies auch für das Aussenden von Signalen über die Antennenvorrichtung. Der Sektor ist dabei durch zwei Winkel definiert.

Eine Ausgestaltung sieht vor, dass die Antennenvorrichtung derartig ausgestaltet ist, dass die Richtcharakteristiken jeweils ein Nebenmaximum aufweisen, das jeweils in einem Sektor liegt, der sich von dem unterscheidet, in dem das globale Maximum liegt, und das einen vorgebbaren Pegelabstand zu einem Pegel des globalen Maximums aufweist, In dieser Ausgestaltung sind auch kleinere Nebenmaxima in Bezug auf die Empfangsempfindlichkeit vorgesehen, die sich in anderen Sektoren befinden. Dabei haben die Nebenmaxima jeweils einen vorgebbaren Pegelabstand zu dem Pegel des globalen Maximums. Der Pegel ist dabei ein beliebig zu definierendes Maß für die Empfangseigenschaft bzw. je nach Ausgestaltung auch für die Sendeeigenschaften der Antennenvorrichtung.

Eine Ausgestaltung beinhaltet, dass die Antennenvorrichtung derartig ausgestaltet ist, dass die Richtcharakteristiken jeweils ein Nebenmaximum aufweisen, das jeweils in dem gleichen Sektor wie das globale Maximum liegt, und das einen vorgebbaren Pegelabstand zu einem Pegel des globalen Maximums aufweist. In dieser Ausgestaltung liegen die Nebenmaxima im gleichen Sektor wie das jeweilige globale Maximum. Damit wird das Risiko des Empfangs aus benachbarten Sektoren weiter reduziert und daher auch die Eindeutigkeit der Ermittlung der Information über die Position des Senders erhöht.

Eine Ausgestaltung sieht vor, dass es sich bei der Signalverarbeitungsvorrichtung um ein RFiD-Lesegerät handelt, das als Amplitudenwert der Feldstärke der empfangenen Signale einen "Received Signal Strength Indication"-Wert erzeugt. In der Ausgestaltung handelt es sich bei den Sendern insbesondere um RFID-Transponder, so dass die Signalverarbeitungsvorrichtung daher auch ein RFID-Lesegerät oder RFID-Reader ist.

Eine Ausgestaltung beinhaltet, dass die Signalverarbeitungsvorrichtung derartig ausgestaltet ist, den Sender zu identifizieren. Dies geschieht beispielsweise bei RFID-Transpondern über die in den Antwortsignalen übermittelten Identifikationsdaten.

Eine Ausgestaltung sieht vor, dass eine Signalquelle derartig ausgestaltet ist, ein Anregungssignal zu erzeugen. Weiterhin ist die Steuervorrichtung derartig ausgestaltet, jeweils eine Richtcharakteristik für das Abstrahlen des Anregungssignals zu schalten. In einer alternativen Ausgestaltung wird das Anregungssignal ohne die Steuervorrichtung ungerichtet ausgestrahlt. Das Anregungssignal stellt in einer Ausgestaltung für den Sender die notwendige Energie zur Verfügung, um eigene Signale aussenden zu können. Alternativ wird das Anregungssignal vom Sender reflektiert, so dass der Sender rein passiv ist. Im alternativen Fall werden also - wie beispielsweise beim Radar - Signale nur (passiv) reflektiert.

Eine Ausgestaltung beinhaltet, dass die Steuervorrichtung derartig ausgestaltet ist, die für das Abstrahlen des Anregungssignals geschaltete Richtcharakteristik als Richtcharakteristik für das Empfangen des von dem Sender ausgehenden Signals zu schalten. In dieser Ausgestaltung wird das Anregungssignal mit einer Richtcharakteristik gesendet und wird das Empfangssignal mit der gleichen Richtcharakteristik empfangen. Daher wird ein Raumbereich besonders mit dem Anregungssignal bedacht und wird das Signal im Wesentlichen nur aus diesem Raumbereich empfangen.

In einer weiteren Variante handelt es sich um einen aktiven Sender, der von sich aus Signale aussendet. Diese Signale werden von der Antennenvorrichtung empfangen und anschließend für die Ermittlung der Richtungsinformation verwendet. In einer Variante ist die Vorrichtung somit nur empfangend.

Eine Ausgestaltung sieht vor, dass die Antennenvorrichtung mehrere Antennenelemente aufweist. In einer Ausgestaltung ist jedes Antennenelement mit einer Richtcharakteristik verbunden. Dabei sind die Antennenelemente in einer Ausgestaltung Teile einer Patch-Antenne oder es handelt sich alternativ um Dipolantennen, Monopolantennen, monopol-artige Antennen, Chip-Antennen oder Schleifenantennen.

Eine Ausgestaltung beinhaltet, dass die Antennenvorrichtung ein Speisenetzwerk aufweist, das unterschiedliche Richtcharakteristiken der Antennenvorrichtung bewirkt. Das Speisenetzwerk bzw. Keulenformungsnetzwerk ist beispielsweise als Butler-Matrix ausgestaltet.

Eine Ausgestaltung sieht vor, dass das Speisenetzwerk derartig ausgestaltet ist, von der Antennenvorrichtung empfangene Signale entsprechend den Richtcharakteristiken aufgeteilt auszugeben. In einer Ausgestaltung ist vorgesehen, dass die Antennenvorrichtung jeweils gleichzeitig Signale mit unterschiedlichen Richtcharakteristiken empfängt und dass das Speisenetzwerk alle empfangenen Signale jeweils den Richtcharakteristiken zugeordnet ausgibt. Es handelt sich also quasi um eine räumliche spektrale Zerlegung.

Eine Ausgestaltung beinhaltet, dass die Antennenvorrichtung als Mehrkeulenantenne ausgestaltet ist. Eine Mehrkeulen- oder Multibeam-Antenne verfügt über mehrere Richtcharakteristiken, die sich jeweils durch eine Keule auszeichnen. Die Keulen weisen dabei in einer Ausgestaltung in unterschiedliche Richtungen.

Es folgen einige Ausgestaltungen einer dritten Variante der Positionsbestimmungsvorrichtung. Dabei lassen sich diese Ausgestaltungen teilweise auch mit den zuvor beschriebenen Ausgestaltungen kombinieren.

So umfasst die Vorrichtung zur Darstellung von Benutzerinformationen in einer Ausgestaltung eine Positionsbestimmungsvorrichtung gemäß einer dritten Variante. Die Antennenvorrichtung ist in einer Ausgestaltung Teil der Positionsbestimmungsvorrichtung und alternativ eine separate Komponente. Die Antennenvorrichtung ist derartig ausgestaltet, von dem Sender ausgehende Signale zu empfangen. Die Antennenvorrichtung weist mindestens eine ausgezeichnete Richtcharakteristik auf. Dabei bezieht sich die ausgezeichnete Richtcharakteristik auf eine Menge an räumlich unterschiedlichen Empfangsempfindlichkeiten der Antennenvorrichtung. Die ausgezeichnete - alternativ auch als "speziell" oder "ausgesucht" bezeichnete - Richtcharakteristik verfügt über mindestens ein Empfindlichkeitsminimum, das einem räumlichen Detektionsbereich zugeordnet ist. Weiterhin ist eine Datenverarbeitungsvorrichtung derartig ausgestaltet, zumindest die von der Antennenvorrichtung mit der ausgezeichneten Richtcharakteristik empfangenen Signale im Hinblick auf die Position des Senders relativ zum Detektionsbereich auszuwerten. In einer Ausgestaltung weist die Positionsbestimmungsvorrichtung die Antennenvorrichtung und die Datenverarbeitungsvorrichtung auf.

Die Richtcharakteristik bezieht sich dabei auf räumlich unterschiedliche Empfangsempfindlichkeiten. Dies bedeutet, dass die Antennenvorrichtung mit dieser Richtcharakteristik Signale aus unterschiedlichen Raumbereichen unterschiedlich stark empfängt. Bei der ausgezeichneten Richtcharakteristik ist sogar vorgesehen, dass in einem räumlichen Detektionsbereich ein Minimum hinsichtlich des Empfangs von Signalen besteht. Das bedeutet, dass die Signale eines Senders, der sich in diesem Detektionsbereich befindet, nur sehr schwach oder gar nicht von der Antennenvorrichtung empfangen werden. Sendet daher der Sender seine Signale mit gleicher Ausgangsleistung und bewegt er sich durch den Detektionsbereich, so wird die Feldstärke der empfangenen Signale deutlich abnehmen oder sogar gegen Null gehen. Daher ist die Datenverarbeitungsvorrichtung derartig ausgestaltet, die empfangenen Signale daraufhin auszuwerten, in welcher Position sich der Sender relativ zu dem Detektionsbereich befindet. Im einfachsten Fall deutet ein Minimum der Feldstärke des empfangenen Signals an, dass sich der Sender im Detektionsbereich befindet. Bei einer größeren Feldstärke befindet sich der Sender außerhalb des Detektionsbereichs.

Für die Positionsermittlung ist daher in einer Ausgestaltung die Verwendung von Historiendaten, d. h. von abgespeicherten Messwerten, vorgesehen, so dass aus der Abnahme und anschließenden Zunahme der Signalamplitude der Zeitpunkt ermittelt wird, an dem der Sender den Detektionsbereich passiert hat.

In einer Ausgestaltung weist die Antennenvorrichtung mehrere (mindestens zwei) unterschiedliche Richtcharakteristiken auf, die sich jeweils auf eine Menge an räumlich unterschiedlichen Empfangsempfindlichkeiten der Antennenvorrichtung beziehen. Eine der Richtcharakteristiken ist dabei die ausgezeichnete Richtcharakteristik mit dem angesprochenen Empfindlichkeitsminimum. Zudem weist die Vorrichtung eine Steuervorrichtung auf, die derartig ausgestaltet ist, die Richtcharakteristiken zum Empfangen von Signalen zu schalten, die von dem Sender ausgehen.

In einer Ausgestaltung schaltet, d. h. aktiviert die Steuervorrichtung insbesondere auch die ausgezeichnete Richtcharakteristik. In einer alternativen Ausgestaltung verfügt die Antennenvorrichtung nur über eine Richtcharakteristik, die damit auch die ausgezeichnete Richtcharakteristik ist.

Die folgende Ausgestaltung bezieht sich darauf, dass insbesondere neben der ausgezeichneten Richtcharakteristik noch eine weitere Richtcharakteristik vorhanden ist.

In dieser Ausgestaltung ist die Steuervorrichtung derartig ausgestaltet, mindestens eine Vergleichsrichtcharakteristik der Antennenvorrichtung zu schalten. Die Vergleichsrichtcharakteristik ist dabei eine weitere Richtcharakteristik, die über ein Empfindlichkeitsmaximum in dem räumlichen Detektionsbereich verfügt. Die empfangenen Signale des Senders haben damit bei dieser Vergleichsrichtcharakteristik dann eine höhere Signalamplitude, wenn sich der Sender im Detektionsbereich befindet, und eine geringere Amplitude, wenn sich der Sender außerhalb des Detektionsbereichs befindet. Schließlich ist die Datenverarbeitungsvorrichtung derartig ausgestaltet, ausgehend von den von der Antennenvorrichtung mit der Vergleichsrichtcharakteristik empfangenen Signale die Information über die Position des Senders relativ zum Detektionsbereich zu kontrollieren. Die eigentliche Ermittlung der Position des Senders erfolgt daher mit den mit der ausgezeichneten Richtcharakteristik gemessenen Signalen. Kontrolliert werden diese Ergebnisse sodann mit den Signalen, die mit der Vergleichsrichtcharakteristik empfangen worden sind. Es wird also überprüft, ob die jeweiligen Aussagen über die Positionen zueinander passen.

In einer Ausgestaltung ist die Datenverarbeitungsvorrichtung derartig ausgestaltet, zu unterschiedlichen Zeiten von der Antennenvorrichtung empfangene Signale im Hinblick auf die Position des Senders relativ zum Detektionsbereich auszuwerten. In dieser Ausgestaltung werden zu unterschiedlichen Zeiten Signale empfangen und wird der zeitliche Verlauf der Signale bzw. der daraus ermittelten Daten in Bezug auf die Position des Senders ausgewertet. So kann beispielsweise intrapoliert werden, zu welchem Zeitpunkt der Sender den Detektionsbereich durchschritten hat. Da der Detektionsbereich mit einem Empfindlichkeitsminimum verbunden ist, ergibt sich beispielsweise ein Fall, dass die Amplitude der empfangenen Signale abnimmt und dann wieder zunimmt. Das bedeutet, dass der Sender sich zwischen der Abnahme und wieder Zunahme im Detektionsbereich befunden haben muss.

In einer Ausgestaltung bewegt sich der Sender nur in eine Richtung relativ zum Detektionsbereich. Die Bewegungsrichtung ist in einer Ausgestaltung parallel zu einer Achse, auf der sich die Antennenelemente der Antennenvorrichtung befinden. Weiterhin ist in einer Ausgestaltung vorgesehen, dass sich der Sender auf einer Achse senkrecht zum Detektionsbereich bewegt.

Bewegt sich der Sender nur auf einem bekannten Weg relativ zum Detektionsbereich, so vereinfacht dies die Auswertung der Signale. Insbesondere lässt sich für die Richtcharakteristiken auf eine durch die Bewegung des Senders bedingte Abfolge der Änderungen der Signale schließen. Dies wiederum erlaubt es, aus den Signalen auf die Position des Senders zu schließen. So ergibt sich beispielsweise für die oben bereits gennannte Form der ausgezeichneten Richtcharakteristik der Ablauf von Amplitudenabnahme und dann wieder Amplitudenzunahme. Dies jeweils unter der Voraussetzung, dass der Sender im Wesentlichen stets mit der gleichen Feldstärke die Signale aussendet.

Folgt nun in einem Szenario ein weiterer Sender dem vorgenannten Sender, so kann es zwar auftreten, dass die Signale des weiteren Senders empfangen werden, da er sich jedoch räumlich hinter dem zuerst genannten Sender befindet, werden dessen Signale mit einer anderen Empfangsempfindlichkeit empfangen, die somit auch eine andere Signalamplitude bewirken, die sich von den für den ersten Sender erwarteten Werten unterscheiden. So springt beispielsweise die Signalamplitude, wobei sich vorher eigentlich eine Abnahme der Signalamplitude gezeigt hatte. Daher kann hier zwischen mehreren Sendern unterschieden werden.

In einer weiteren Ausgestaltung werden aus den empfangenen Signalen Informationsdaten über den Sender ermittelt. Diese Ausgestaltung setzt darauf, dass beispielsweise RFID-Transponder auch Identifikationsdaten mit den Antwortsignalen aussenden. Diese Ausgestaltung erlaubt daher die Trennung zwischen den Signalen von unterschiedlichen Sendern, indem die Sender jeweils durch ihre eigenen Signale identifiziert werden.

Eine Ausgestaltung sieht es vor, dass die Positionsbestimmungsvorrichtung einen Datenspeicher aufweist. Dabei ist die Datenverarbeitungsvorrichtung derartig ausgestaltet, Daten, die den zu unterschiedlichen Zeitpunkten empfangenen Signalen zugeordnet sind, in dem Datenspeicher zu hinterlegen. Weiterhin ist die Datenverarbeitungsvorrichtung derartig ausgestaltet, aus den in dem Datenspeicher hinterlegten Daten den Zeitpunkt zu ermitteln, zu dem der Sender sich in dem Detektionsbereich befindet und/oder den Detektionsbereich passiert. Ein bereits angesprochenes Schema für den Verlauf der Signalamplituden ist: Abnahme der Amplitude, Erreichen eines Minimums, Zunahme der Amplitude. Dies für den Fall, dass nur ein Empfangsminimum vorhanden ist. Bei einer angenommenen konstanten Geschwindigkeit des Senders kann der Zeitpunkt der Passage ggf. auch extrapoliert werden.

Eine Ausgestaltung sieht es vor, dass die ausgezeichnete Richtcharakteristik über mehrere Empfindlichkeitsminima verfügt, die unterschiedlichen räumlichen Detektionsbereichen zugeordnet sind. In dieser Ausgestaltung ermöglicht die Richtcharakteristik durch die Mehrzahl von Empfindlichkeitsminima, dass unterschiedliche Detektionsbereiche überwacht werden können. Damit lässt sich zum einen die Position des Senders genauer eingrenzen, d. h. ob er sich z. B. zwischen zwei Detektionsbereichen befindet. Weiterhin lassen sich auch die Aussagen über die Position des Senders verifizieren. Dies insbesondere im Zusammenhang mit der Auswertung von Signalen, die zu unterschiedlichen Zeitpunkten empfangen worden sind.

In einer Ausgestaltung ist eine Signalverarbeitungsvorrichtung vorhanden. Dabei ist die Signalverarbeitungsvorrichtung derartig ausgestaltet, die von der Antennenvorrichtung empfangenen Signale zu verarbeiten und jeweils einen Amplitudenwert einer Feldstärke des empfangenen Signals zu ermitteln. Die Auswertung der empfangenen Signale lässt sich mit dieser Ausgestaltung vereinfachen, da jedem Signal nur ein Wert zugeordnet ist. Dabei ist die Datenverarbeitungsvorrichtung entsprechend ausgestaltet, die Amplitudenwerte der empfangenen Signale zu verarbeiten.

Eine Ausgestaltung sieht es vor, dass es sich bei der Signalverarbeitungsvorrichtung um eine RFID-Lesevorrichtung handelt, die als Amplitudenwert der Feldstärke der empfangenen Signale jeweils einen "Received Signal Strength Indication"-Wert erzeugt.

In einer alternativen oder ergänzenden Ausgestaltung werden von den empfangenen Signalen auch Daten ermittelt, die die Identifikation des Senders erlauben.

In einer Ausgestaltung weist die Positionsbestimmungsvorrichtung eine Signalquelle auf, die derartig ausgestaltet ist, ein Anregungssignal zu erzeugen. Die Antennenvorrichtung ist derartig ausgestaltet, das Anregungssignal abzustrahlen. Die Signalquelle ist dabei in einer Ausgestaltung Teil der Signalverarbeitungsvorrichtung und ist in einer alternativen Ausgestaltung eine separate Komponente. In einer Ausgestaltung ist die Signalquelle insbesondere zugehörig zur Signalverarbeitungsvorrichtung, die als RFID-Lesegerät (oder RFID-Reader) ausgestaltet ist.

Eine Ausgestaltung sieht es vor, dass es sich bei dem Detektionsbereich um eine Ebene handelt. Der Detektionsbereich erstreckt sich in einer Ausgestaltung insbesondere nur über eine Ebene. Hierbei wird erkannt, ob der Sender eine Ebene passiert.

In einer Ausgestaltung ist die Antennenvorrichtung als Mehrkeulenantenne ausgestaltet. Eine Mehrkeulenantenne oder auch Multibeam-Antenne weist unterschiedliche Richtcharakteristiken auf, die jeweils durch eine Keule oder Hauptkeule gekennzeichnet sind. Diese Keulen sind zumindest teilweise unterschiedlich im Raum ausgerichtet, so dass auch unterschiedliche Raumbereiche mit unterschiedlichen Empfangsempfindlichkeiten vermessen werden.

Eine Ausgestaltung sieht es vor, dass die Antennenvorrichtung mehrere Antennenelemente aufweist. Die Antennenelemente sind in einer Ausgestaltung Komponenten einer Patch-Antenne und sind in einer alternativen Ausgestaltung einzelne Dipolantennen, Monopolantennen, monopol-artige Antennen, Chip-Antennen oder Schleifenantennen.

In einer Ausgestaltung weist die Antennenvorrichtung zwei Antennenelemente auf. Dabei ist die Steuervorrichtung derartig ausgestaltet, die zwei Antennenelemente abwechselnd im Gegentakt und im Gleichtakt zu schalten. Die zwei Antennenelemente sind in einer Ausgestaltung im Wesentlichen gleich ausgestaltet und haben daher auch gleiche Eigenschaften im Hinblick auf den Empfang von Signalen. Die unterschiedliche Speisung der Antennenelemente führt jeweils zu unterschiedlichen Richtcharakteristiken.

In einer Ausgestaltung ergibt sich bei einer Speisung der Antennenelemente im Gleichtakt ein Empfindlichkeitsmaximum in einer Ebene, die senkrecht auf einer Verbindungsachse zwischen den zwei Antennenelementen steht. Die Speisung im Gegentakt erzeugt eine Richtcharakteristik mit einem Minimum bzw. einer Nullstelle in der Ebene, die senkrecht auf der Verbindungsachse steht.

Daher ist es in einer Ausgestaltung vorgesehen, dass die Antennenelemente so angeordnet sind, dass die betroffene Ebene im Detektionsbereich liegt. Damit geht dann auch einher, dass die Richtcharakteristik, die sich aus der Speisung im Gegentakt ergibt, zugleich die ausgezeichnete Richtcharakteristik und dass die Richtcharakteristik, die sich bei der Speisung im Gleichtakt einstellt, die Vergleichsrichtcharakteristik ist.

Eine Ausgestaltung sieht es vor, dass die Antennenvorrichtung ein Speisenetzwerk aufweist. Dabei ist das Speisenetzwerk derartig ausgestaltet, unterschiedliche Richtcharakteristiken der Antennenvorrichtung zu bewirken. Dies bezieht sich auf das Senden und das Empfangen von Signalen. Das Speisenetzwerk ist in einer Ausgestaltung insbesondere so ausgestaltet, dass es zu jeder Richtcharakteristik das jeweils empfangene Signal ausgibt, insofern die Antennenvorrichtung mit mehreren Richtcharakteristiken gleichzeitig Signale empfängt.

Es folgen Ausgestaltungen einer vierten Variante der Positionsbestimmungsvorrichtung als Teil der Vorrichtung zur Darstellung von Benutzerinformationen. Die folgenden Ausgestaltungen erlauben teilweise auch die Kombination mit den vorgenannten Ausgestaltungen.

In einer Ausgestaltung umfasst die Vorrichtung eine Positionsbestimmungsvorrichtung gemäß einer vierten Variante. Die Antennenvorrichtung weist mehrere unterschiedliche Richtcharakteristiken auf, wobei die Richtcharakteristiken sich jeweils auf eine Menge an räumlich unterschiedlichen Empfangsempfindlichkeiten der Antennenvorrichtung beziehen. Weiterhin weist die Antennenvorrichtung Signalausgänge auf, wobei die Richtcharakteristiken den Signalausgängen zugeordnet sind. Weiterhin ist eine Kontrollvorrichtung derartig ausgestaltet, einen Signalausgang der Antennenvorrichtung mit einer Informations-Lesevorrichtung und weitere Signalausgänge der Antennenvorrichtung mit einer Datenverarbeitungsvorrichtung zu verbinden. Dabei ist die Informations-Lesevorrichtung derartig ausgestaltet, aus empfangenen Signalen Daten zu ermitteln, die mit den Signalen übertragen werden. Zudem ist die Datenverarbeitungsvorrichtung derartig ausgestaltet, empfangene Signale hinsichtlich ihrer physikalischen Eigenschaften auszuwerten. In einer Ausgestaltung weist die Positionsbestimmungsvorrichtung die Antennenvorrichtung, die Kontrollvorrichtung, die Informations-Lesevorrichtung und die Datenverarbeitungsvorrichtung auf.

Dass die Antennenvorrichtung mehrere Richtcharakteristiken aufweist, bedeutet, dass die Antennenvorrichtung je nach ausgewählte Richtcharakteristik mit jeweils räumlich unterschiedlichen Empfindlichkeiten Signale empfängt. Oder mit anderen Worten: je nach Richtcharakteristik werden Signale aus unterschiedlichen Raumbereichen bevorzugt. Die Richtcharakteristiken sind den Signalausgängen zugeordnet. Eine Kontrollvorrichtung verbindet einen Signalausgang mit einer informations-Lesevorrichtung und verbindet weitere Signalausgänge mit der Datenverarbeitungsvorrichtung. Dabei unterscheiden sich die Informations-Lesevorrichtung und die Datenverarbeitungsvorrichtung zumindest darin voneinander, dass die Informations-Lesevorrichtung derartig ausgestaltet ist, aus dem ihr zugeführten Signal Daten zu ermitteln, die mit dem Signal übertragen werden. Der Sender strahlt somit Signale aus, die auch Informationen tragen, z. B. zur Identifizierung des Senders oder in Form von Messwerten oder z. B. in Form von weitergeleiteten Daten. Je nach der Art des Senders ist die Informations-Lesevorrichtung somit beispielsweise ein RFID-Lesegerät für einen RFID-Transponder als Sender oder ein Satelliten-Receiver für Satelliten-Signale bei einem Satelliten als Sender. Entsprechendes gilt auch für den Mobilfunk. Die Datenverarbeitungsvorrichtung dient zur Ermittlung der physikalischen Eigenschaften der Signale. In einer Ausgestaltung erlaubt die Datenverarbeitungsvorrichtung auch das Extrahieren von Daten aus den Signalen. In einer alternativen Ausgestaltung erlaubt die Datenverarbeitungsvorrichtung es nicht, Daten aus den Signalen zu extrahieren, so dass in dieser Ausgestaltung die Datenverarbeitungsvorrichtung auch weniger Intelligenz benötigt bzw. einfacher ausgestaltet sein kann. Die Datenverarbeitungsvorrichtung dient daher in der letztgenannten Ausgestaltung nur der Ermittlung der physikalischen Größen der empfangenen Signale. Dies ist beispielsweise die Signalamplitude oder die Phase der empfangenen Signale. Aufbauend auf diesen physikalischen Daten lässt sich dann die Information über die Position des Senders ermitteln, z. B. in Anwendung der Triangulation.

Die Antennenvorrichtung und die Auswertung der zusätzlichen empfangenen Signale liefert insgesamt die Richtungsinformation über den Sender als Ergänzung zu der Auswertung der Sendersignale in Hinblick auf die übertragenen Daten bzw. Informationen.

In einer Ausgestaltung ist die Informations-Lesevorrichtung der Datenverarbeitungsvorrichtung zugeordnet und wird in einer weiteren Ausgestaltung von der Datenverarbeitungsvorrichtung umfasst.

In einer Ausgestaltung weist die Positionsbestimmungsvorrichtung zwei Informations-Lesevorrichtungen auf, die von der Kontrollvorrichtung entsprechend mit den Signalausgängen der Antennenvorrichtung verbunden werden.

In einer Ausgestaltung ist die Antennenvorrichtung insbesondere so ausgestaltet, dass die Antennenvorrichtung stets mit mehreren Richtcharakteristiken Signale empfängt. Die Antennenvorrichtung verfügt in einer Ausgestaltung über mehrere Antennenelemente, die unterschiedlichen Richtcharakteristiken zugeordnet sind, und die ständig das Empfangen von Signalen ermöglichen.

In einer Ausgestaltung ist jeder Richtcharakteristik ein Signalausgang der Antennenvorrichtung zugeordnet.

Eine Ausgestaltung besteht darin, dass die Informations-Lesevorrichtung derartig ausgestaltet ist, sowohl aus den empfangenen Signalen die mit den Signalen übertragenen Daten zu ermitteln als auch die empfangenen Signale hinsichtlich ihrer physikalischen Eigenschaften auszuwerten. In dieser Ausgestaltung extrahiert die Informations-Lesevorrichtung Informationen bzw. Daten aus den empfangenen Signalen und ermittelt zudem noch mindesten eine Aussage über physikalische Eigenschaften des Signals. Handelt es sich bei der Informations-Lesevorrichtung beispielsweise um ein RFID-Lesegerät (oder RFID-Reader), so werden nicht nur die übertragenen Daten ermittelt, sondern es wird auch ein RSSI-Wert für die Signalamplitude generiert.

In einer Ausgestaltung ist vorgesehen, dass die Datenverarbeitungsvorrichtung derartig ausgestaltet ist, die empfangenen Signale nur hinsichtlich ihrer physikalischen Eigenschaften auszuwerten. Die Datenverarbeitungsvorrichtung kann somit aus den empfangenen Signalen keine Informationen ermitteln, die damit übertragen worden sind. Nimmt man wieder das obige Beispiel der RFID-Transponder, so sind die ausgesendeten RFID-Signale für die Datenverarbeitungsvorrichtung nur elektromagnetische Signale, die keine weitere Information tragen.

Eine Ausgestaltung besteht darin, dass die Antennenvorrichtung mehrere Antennenelemente aufweist. Dabei weisen die Antennenelemente jeweils eine Richtcharakteristik auf. Schließlich sind die Signalausgänge mit unterschiedlichen Antennenelementen verbunden. Dies ist eine Variante, durch die den Signalausgängen die den zugeordneten Richtcharakteristiken zugeordneten Signale separat zugehen. Die Antennenelemente sind in einer Ausgestaltung Elemente einer Patch-Antenne. In alternativen Ausgestaltungen handelt es sich um Dipolantennen, Monopolantennen, monopol-artige Antennen, Chip-Antennen oder um Schleifenantennen.

In einer Ausgestaltung ist vorgesehen, dass die Antennenvorrichtung ein Speisenetzwerk aufweist und dass das Speisenetzwerk unterschiedliche Richtcharakteristiken der Antennenvorrichtung bewirkt. Das Speisenetzwerk dient damit dem Erzeugen der Richtcharakteristiken.

Eine Ausgestaltung besteht darin, dass das Speisenetzwerk derartig ausgestaltet ist, mit der Antennenvorrichtung empfangene Signale in die einzelnen Richtcharakteristiken zu separieren. In dem Speisenetzwerk ist daher in einer Ausgestaltung insbesondere eine Butler-Matrix realisiert, die der Auftrennung der empfangenen Signale in die einzelnen Richtcharakteristiken dient.

In einer Ausgestaltung ist vorgesehen, dass die Antennenvorrichtung als Mehrkeulenantenne ausgestaltet ist. Eine alternative Bezeichnung ist Multibeam-Antenne. Die Richtcharakteristiken zeichnen sich dabei durch zumindest eine ausgeprägte Keule in Bezug auf die Empfangsempfindlichkeit aus.

Eine Ausgestaltung besteht darin, dass mindestens eine der Richtungscharakteristiken sich zumindest in Hinblick auf die Ausrichtung der Keulen von den anderen unterscheidet.

Die Antennenvorrichtung der vorgenannten Ausgestaltungen erlaubt somit die Schaltung von unterschiedlichen Richtcharakteristiken bzw. das Empfangen von Signalen mit unterschiedlichen Richtcharakteristiken, die jeweils eine Keule aufweisen. In einer Ausgestaltung sind die Keulen insbesondere in unterschiedliche Richtungen ausgerichtet. Die Mehrkeulenantenne erlaubt somit den Empfang aus jeweils unterschiedlichen Raumbereichen, die sich hauptsächlich durch die Orientierung der (Haupt-)Keulen voneinander unterscheiden. Durch den damit einhergehenden reduzierten Raumbereich und das Wissen um die Ausrichtung der Keulen lässt sich daher die Information über die Position des Senders ermitteln.

In einer Ausgestaltung wird insgesamt ausgenutzt, dass unter Verwendung einer Mehrkeulenantenne, welche durch ein Speisenetzwerk (wie eine Butler-Matrix) und deren Signalpfade angeregt wird, im Empfangsfall Amplitudeninformationen und Phaseninformationen gewonnen werden. Speisenetzwerke wie Butler-Matrizen werden in der Regel bei n * m oder n * n Mehrkeulenantennen angewendet. Die Antennenelemente oder die eigentliche Antenne hat dabei n Signalausgänge, die zu dem Speisenetzwerk geführt sind und von dem Speisenetzwerk auf m Signalausgaben geführt werden.

In einer Ausgestaltung ist vorgesehen, dass die Richtungscharakteristiken sich teilweise überlappen. In einer alternativen Ausgestaltungen sind zumindest mehrere Keulen der unterschiedlichen Richtcharakteristiken ohne Überlapp.

Eine Ausgestaltung besteht darin, dass die Kontrollvorrichtung derartig ausgestaltet ist, die Informations-Lesevorrichtung abwechselnd mit unterschiedlichen Signalausgängen der Antennenvorrichtung zu verbinden. Da die Signalausgänge mit unterschiedlichen Richtcharakteristiken verbunden sind, werden in dieser Ausgestaltung der Informations-Lesevorrichtung somit Signale aus unterschiedlichen Raumbereichen zugeführt.

In einer Ausgestaltung ist vorgesehen, dass die Datenverarbeitungsvorrichtung derartig ausgestaltet ist, die empfangenen Signale in Hinblick auf die Richtung des Senders auszuwerten. In dieser Ausgestaltung wird zumindest ermittelt, in welcher Richtung relativ zur Antennenvorrichtung der Sender positioniert ist. In einer weiteren Ausgestaltung wird die Position oder zumindest der Raumbereich des Senders ermittelt.

Eine Ausgestaltung besteht darin, dass die Positionsbestimmungsvorrichtung eine Signalquelle aufweist und dass die Signalquelle derartig ausgestaltet ist, ein Anregungssignal zu erzeugen, das die Antennenvorrichtung abstrahlt. Insofern es sich bei den Sendern um passive Komponenten, wie beispielsweise RFID-Transponder handelt, erhalten diese durch die Signalquelle ein Aufwecksignal bzw. die notwendige Energie, um Signale aussenden zu können. In einer Ausgestaltung ist die Signalquelle insbesondere ein Bestandteil der Informations-Lesevorrichtung. In einer Ausgestaltung sendet die Informations-Lesevorrichtung das Anregungs- oder Aufwecksignal mit der gleichen Richtcharakteristik, mit der die Antwortsignale empfangen werden, die dem Informations-Lesevorrichtung zugeführt werden. Somit werden die Sender aktiviert, von denen auch die Antwortsignal primär empfangen werden.

In einer Ausgestaltung ist vorgesehen, dass es sich bei dem Sender um einen Radio Frequency Identifikation-Transponder handelt. Der Sender ist daher ein RFID-Transponder oder RFID-Tag und die Informations-Lesevorrichtung ist korrespondierend ein RFID-Reader (bzw. RFID-Lesegerät), der insbesondere auch die Signalquelle aufweist, um die RFID-Transponder zu aktivieren. Insofern die Informations-Lesevorrichtung das Aktivierungssignal mit einer Richtcharakteristik aussendet, werden auch nur die RFID-Transponder innerhalb des zugeordneten Raumbereichs aktiviert.

Eine Ausgestaltung besteht darin, dass es sich bei dem Sender um einen Satelliten handelt. Entsprechend handelt es sich bei der Informations-Lesevorrichtung um einen Satelliten-Receiver, der die Satelliten-Signale empfängt und damit übertragene Daten extrahiert.

In einer Ausgestaltung ist vorgesehen, dass die Kontrollvorrichtung derartig ausgestaltet ist, die Informations-Lesevorrichtung abwechselnd mit unterschiedlichen Signalausgängen der Antennenvorrichtung und jeweils weitere Signalausgänge der Antennenvorrichtung mit der Datenverarbeitungsvorrichtung zu verbinden. Es wird also jeweils ein Signalausgang mit der Informations-Lesevorrichtung verbunden und es werden jeweils verbleibende Signalausgänge mit der Datenverarbeitungsvorrichtung verbunden.

Die folgenden Ausgestaltungen beziehen sich auf eine fünfte Variante der Positionsbestimmungsvorrichtung. Dabei sind auch Kombinationen der folgenden mit den vorhergehenden Ausgestaltungen realisierbar.

In einer Ausgestaltung weist die Vorrichtung eine Positionsbestimmungsvorrichtung gemäß einer fünften Variante auf. Die Positionsbestimmungsvorrichtung erlaubt dabei auch eine Kommunikation mit Kommunikationsvorrichtungen. Dabei sind hier die Kommunikationsvorrichtungen die oben beschriebenen Sender. Die Positionsbestimmungsvorrichtung weist eine Sendevorrichtung, eine Empfangsvorrichtung und eine Steuervorrichtung auf. Die Empfangsvorrichtung ist derartig ausgestaltet, Signale zu empfangen. Die Steuervorrichtung ist derartig ausgestaltet, einen Raumbereich vorzugeben, in den die Sendevorrichtung Signale aussendet.

Die Sendevorrichtung sendet Signale aus, die insbesondere für die Kommunikationsvorrichtungen bestimmt sind. Die Empfangsvorrichtung empfängt Signale von den Kommunikationsvorrichtungen. Dabei ist die Steuervorrichtung vorhanden, die der Sendevorrichtung einen Raumbereich vorgibt, in welchen Signale ausgesendet werden. Die Vorgabe des Raumbereichs für das Aussenden der Signale geschieht dabei in einer Ausgestaltung über das Auswählen einer Richtcharakteristik oder einer Überlagerung von Richtcharakteristiken, durch die die Signale in den ausgewählten Raumbereich ausgesendet werden. Ist beispielsweise eine Richtcharakteristik einer Sendeantenne mit einer Keulenform verbunden, so werden die Signale in diese Keule bzw. den zugehörigen Raumbereich ausgesendet. In einer Ausgestaltung ist vorgesehen, dass die Empfangsvorrichtung derartig ausgestaltet ist, Signale aus auswählbaren Empfangsbereichen zu empfangen.

Die folgenden Ausgestaltungen beziehen sich auf Signale, die von der Sendevorrichtung ausgesendet werden.

In einer Ausgestaltung ist vorgesehen, dass die Sendevorrichtung ein Aktivierungssignal ungerichtet aussendet. In dieser Ausgestaltung wird somit wenigstens ein Signal, nämlich das Aktivierungssignal, nicht nur in einen Raumbereich ausgesendet. Das Aktivierungssignal wird hier ungerichtet ausgesendet, so dass es möglichst viele Kommunikationsvorrichtungen erreichen kann. Dies baut darauf, dass für den Beginn noch nicht bekannt ist, ob und wo sich Kommunikationsvorrichtungen im Umfeld der Positionsbestimmungsvorrichtung befinden. Die ungerichtete Aussendung ist dabei durch die zur Verfügung stehende Antennenvorrichtungen bedingt.

In einer alternativen Ausgestaltung ist vorgesehen, dass die Steuervorrichtung derartig ausgestaltet ist, einen Aktivierungsbereich vorzugeben, in welchen die Sendevorrichtung ein Aktivierungssignal aussendet. In dieser Ausgestaltung wird somit ein Raumbereich - der Aktivierungsbereich - vorgegeben, in den das Aktivierungssignal ausgesendet wird. Es wird also eine Vorzugsrichtung vorgegeben.

Das Aktivierungssignal ist dabei je nach Ausgestaltung ein Signal, um festzustellen, ob Kommunikationsvorrichtungen vorhanden sind, und um eine Kommunikation mit diesen vorzubereiten. Das Aktivierungssignal erlaubt es je nach Ausgestaltung der Kommunikationsvorrichtungen auch, die Kommunikationsvorrichtungen aus einem passiven Zustand in einen aktiven Zustand zu versetzen (siehe die Offenbarung der DE 10 2009 047 199 A1) oder den Kommunikationsvorrichtungen die Energie zuzuführen, die für eine Kommunikation erforderlich ist (im Sinne von RFID-Tags).

Bedingt in der vorangegangenen Ausgestaltung das Aktivierungssignal, das von der Vorrichtung bzw. speziell von der Sendevorrichtung ausgeht, das Auslösen der Kommunikation, so wird in einer der folgenden Ausgestaltungen gezeigt, dass der Wunsch nach Kommunikation auch von den Kommunikationsvorrichtungen ausgehen kann.

Um die Anzahl der Kommunikationsvorrichtungen, die auf ein Aktivierungssignal reagieren sollen, einzuschränken, ist in einer Ausgestaltung die Sendevorrichtung derartig ausgestaltet, ein Aktivierungssignal mit einer Aufweckkennung für mindestens eine zu aktivierende Kommunikationsvorrichtung auszusenden. Das Aktivierungssignal beinhaltet damit die Aussage, welche Kommunikationsvorrichtung bzw. welche Kommunikationsvorrichtungen davon betroffen sind bzw. aktiviert werden sollen.

In einer Ausgestaltung ist die Steuervorrichtung derartig ausgestaltet, der Empfangsvorrichtung unterschiedliche Empfangsbereiche für das Empfangen von Signalen vorzugeben. Passend zum Aussenden von Signalen in ausgewählte Raumbereiche werden in dieser Ausgestaltung auch die Signale nur aus ausgewählten Raumbereichen empfangen. Mit anderen Worten: In dieser Ausgestaltung hört die Empfangsvorrichtung nur auf Signale aus bestimmten Bereichen.

In einer Ausgestaltung werden die Empfangsbereiche so vorgegeben, dass es sich jeweils um Teilbereiche des Aktivierungsbereichs handelt.

In einer Ausgestaltung weist die Empfangsvorrichtung eine Antennenvorrichtung auf. Dabei weist die Antennenvorrichtung mehrere Richtcharakteristiken auf, die sich auf räumlich unterschiedliche Empfangsempfindlichkeiten beziehen. Zudem ist die Empfangsvorrichtung derartig ausgestaltet, die empfangenen Signale den Richtcharakteristiken zuzuordnen. Die Empfangsvorrichtung empfängt somit in Abhängigkeit von der jeweiligen Richtcharakteristik Signale aus bestimmten Raumbereichen. Daher kann über die Wahl der Richtcharakteristik auch vorgegeben werden, aus welchem Raumbereich Signale empfangen werden. Entsprechendes gilt in einer Ausgestaltung dabei auch für den Zusammenhang zwischen den Richtcharakteristiken und den Raumbereichen für das Senden von Signalen.

Die Zuordnung zwischen den empfangenen Signalen und den Richtcharakteristiken geschieht in einer Ausgestaltung dadurch, dass nur mit einer ausgesuchten Richtcharakteristik Signale empfangen werden. In einer alternativen Ausgestaltung werden mit mehreren Richtcharakteristiken Signale empfangen, die durch ein entsprechendes Netzwerk - z. B. durch eine Realisierung einer Butler-Matrix - in die den jeweiligen Richtcharakteristiken zugeordneten Signale aufgeteilt werden.

Die folgenden Ausgestaltungen beziehen sich auf die eigentliche Kommunikation zwischen der Positionsbestimmungsvorrichtung und den Kommunikationsvorrichtungen, die insbesondere stattfinden, nachdem die Objekte und deren Position identifiziert worden sind. Die Positionsdaten können dabei erfindungsgemäß dargestellt werden.

In einer Ausgestaltung ist die Steuervorrichtung derartig ausgestaltet, einen Kommunikationsbereich vorzugeben, in welchen die Sendevorrichtung ein Kommunikationssignal aussendet. Durch die Einschränkung des Kommunikationsbereichs wird für das Aussenden der Signale weniger Energie benötigt und kann auch verhindert werden, dass nicht betroffene Kommunikationsvorrichtungen das Signal empfangen.

In einer weiteren Ausgestaltung geht von einer Kommunikationsvorrichtung ein Initiierungssignal aus, das bedeutet, dass die Kommunikationsvorrichtung in Kommunikation mit der Vorrichtung treten möchte. Für diesen Fall, dass die Empfangsvorrichtung von einer Kommunikationsvorrichtung ein Initiierungssignal empfängt, ist in einer damit verbundenen Ausgestaltung die Steuervorrichtung derartig ausgestaltet, einen Kommunikationsbereich vorzugeben. Der Kommunikationsbereich wird dabei in Abhängigkeit von einer Position der Kommunikationsvorrichtung vorgegeben, die das Initiierungssignal ausgesendet hatte. In den Kommunikationsbereich sendet dann die Sendevorrichtung ein Kommunikationssignal aus.

Die folgende Ausgestaltung bezieht sich darauf, dass über die Richtcharakteristiken eine gewisse Anzahl von Feldern oder Bereichen in Bezug auf die dort befindlichen Objekte bzw. Kommunikationsvorrichtungen abgetastet wird. Dabei sollen möglichst aus allen Bereichen alle Antwortsignale empfangen werden. Dies setzt beispielsweise darauf, dass von der Sendevorrichtung ein Aktivierungssignal ausgesendet wird, das die Kommunikationsvorrichtungen zu Antwortsignalen veranlasst. Um daher die Lokalisierung möglichst effektiv und energiesparend zu realisieren, sollte vorzugsweise ein Aktivierungssignal ausreichend sein, um die Positionen aller Kommunikationsvorrichtungen zu ermitteln. Daher ergibt sich das Ziel, möglichst schnell alle Bereiche zu durchlaufen.

Daher sieht es eine Ausgestaltung vor, dass die Empfangsvorrichtung derartig ausgestaltet ist, nur für einen vorgebbaren Zeitraum, der z. B. mit $T_{VD}$ bezeichnet ist, Signale zu empfangen. Die Zeitdauer wird dabei beispielsweise durch die Steuervorrichtung vorgegeben.

Der Zeitraum $T_{VD}$ wird dabei in einer Ausgestaltung in Abhängigkeit von einer Datenrate, die hier z. B. mit $1/T_b$ bezeichnet ist, vorgegeben, mit der die Kommunikationsvorrichtungen ihre Signale und insbesondere ihre Antwortsignale auf ein Aktivierungssignal aussenden. In einer Ausgestaltung ist der Zeitraum $T_{VD}$ proportional zum Kehrwert der Datenrate. Somit gilt bei einer Datenrate von $1/T_b$, dass der Zeitraum $T_{VD}$ proportional zu $T_b$ ist. Das bedeutet, dass bei einer höheren Datenrate der Zeitraum zum Empfangen von Signalen aus einem Empfangsbereich entsprechend kleiner wird. Dabei ist $T_b$ die Bitdauer.

Ergänzend oder alternativ sieht es eine Ausgestaltung vor, dass der Zeitraum $T_{VD}$ in Abhängigkeit von einer Anzahl der Empfangsbereiche, aus denen die Empfangsvorrichtung Signale empfängt, vorgegeben ist. In einer Ausgestaltung ist der Zeitraum $T_{VD}$ antiproportional zur Anzahl der Empfangsbereiche. Ist also beispielsweise die Anzahl der Empfangsbereiche gegeben über das Produkt M * N, so ist der Zeitraum $T_{VD}$ antiproportional zu M * N bzw. proportional zu 1/(M * N). Das bedeutet, dass mit wachsender Anzahl der Empfangsbereich die Zeit kleiner wird, während der die Empfangsvorrichtungen Signale aus den Bereichen empfängt. Um das Prozedere zu beschleunigen, ist es in einer Ausgestaltung vorgesehen, mehr als eine Empfangsvorrichtung zu verwenden.

In einer Ausgestaltung ergibt sich der Zeitraum $T_{VD}$ aus beiden vorgenannten Abhängigkeiten, so dass der Zeitraum $T_{VD}$ insbesondere proportional zu $T_b/(M * N)$ ist.

In einer Ausgestaltung ist der vorgebbare Zeitraum $T_{VD}$ für das Empfangen der Signale kleiner als die Bitdauer $T_b$. In einer weiteren Ausgestaltung ist der vorgebbare Zeitraum viel kleiner als die Bitdauer. In einer alternativen oder ergänzenden Ausgestaltung ist der vorgebbare Zeitraum $T_{VD}$ kleiner als die Bitdauer $T_b$ geteilt durch die Anzahl der Empfangsbereiche. Werden daher in einer Ausgestaltung n Felder abgefragt, so ist der Zeitraum kleiner oder vorzugsweise deutlich kleiner als die Bitdauer geteilt durch die Anzahl n der Felder. Das bedeutet: $T_{VD} < T_b/n$ bzw. $T_{VD} << T_b/n$. Bei zwei Feldern ist also der vorgebbare Zeitraum kleiner als die Hälfte der Bitdauer. Dies erlaubt die schnelle Erfassung von mehreren Feldern innerhalb eines Datenbits der Dauer $T_b$. Damit ergibt sich auch der Eindruck einer gleichzeitigen Kommunikation zwischen mehreren Objekten und der zentralen Funkeinheit.

In einer Ausgestaltung ist die Empfangsvorrichtung derartig ausgestaltet, aus mindestens einem empfangenen Signal eine Identitätskennung betreffend der Kommunikationsvorrichtung zu bestimmen, von der das empfangene Signal stammt. In dieser Ausgestaltung wird von den Kommunikationsvorrichtungen im Antwortsignal jeweils eine Information übertragen, die eine Ermittlung der Identität der Kommunikationsvorrichtung bzw. des zugeordneten Objekts erlaubt.

Die folgenden Ausgestaltungen beziehen sich auf die Sendevorrichtung oder die Empfangsvorrichtung, die je nach Ausgestaltung einen ähnlichen Aufbau oder unterschiedliche Ausgestaltungen haben.

So sieht es eine Ausgestaltung vor, dass die Sendevorrichtung mehrere auswählbare unterschiedliche Richtcharakteristiken aufweist. Dabei beziehen sich die Richtcharakteristiken jeweils auf eine Menge an räumlich unterschiedlichen Sendeeigenschaften. Je Richtcharakteristik bildet sich somit jeweils ein räumlich unterschiedlich verteiltes Sendefeld aus. Oder mit anderen Worten: Die Signale werden jeweils unterschiedlich in den Raum hinein ausgestrahlt.

Eine alternative oder ergänzende Ausgestaltung beinhaltet, dass die Empfangsvorrichtung mehrere auswählbare unterschiedliche Richtcharakteristiken aufweist. Dabei beziehen sich die Richtcharakteristiken jeweils auf eine Menge an räumlich unterschiedlichen Empfangsempfindlichkeiten. In dieser Ausgestaltung empfängt die Empfangsvorrichtung Signale unterschiedlich stark aus unterschiedlichen Raumbereichen.

In einer weiteren Ausgestaltung weisen oder weist die Sendevorrichtung und/oder die Empfangsvorrichtung eine Antennenvorrichtung auf. Dabei ist die Antennenvorrichtung als Mehrkeulenantenne ausgestaltet. Eine Mehrkeulenantenne oder Multibeam-Antenne verfügt über mehrere Richtcharakteristiken, die jeweils durch eine Keule gekennzeichnet sind. Die Keulen sind dabei jeweils in unterschiedliche Raumrichtungen ausgerichtet. Dies ist damit auch die Hauptrichtung, in die Signale gesendet und aus der Signale empfangen werden. Damit ist auch jede Richtcharakteristik einem Raumbereich zugeordnet. In einer Ausgestaltung verwenden die Sendevorrichtung und die Empfangsvorrichtung die gleiche Antennenvorrichtung.

In einer Ausgestaltung sind die Sendevorrichtung und die Empfangsvorrichtung als eine Komponente ausgeführt. Beide Vorrichtungen sind daher in dieser Ausgestaltung im Wesentlichen als eine Einheit ausgestaltet, die daher auch als zentrale Funkeinheit bezeichnet werden kann.

In einer alternativen Ausgestaltung sind die Sendevorrichtung und die Empfangsvorrichtung separate Einheiten, die sich auch an unterschiedlichen Positionen befinden.

In einer Ausgestaltung weist die Kommunikationsvorrichtung eine Aussendevorrichtung und eine Detektionsvorrichtung auf. Die Aussendevorrichtung ist derartig ausgestaltet, Signale auszusenden. Die Detektionsvorrichtung ist derartig ausgestaltet, Signale zu empfangen. Zudem ist die Aussendevorrichtung derartig ausgestaltet, die Signale derartig auszusenden, dass die Signale die Bestimmung mindestens einer Identitätskennung betreffend der Kommunikationsvorrichtung erlauben. Die Kommunikationsvorrichtung sendet somit Signale aus, die eine Identifizierung der Kommunikationsvorrichtung bzw. eines damit verbundenen Objekts erlauben.

Bei der Kommunikationsvorrichtung handelt es sich in einer Ausgestaltung um einen RFID-Tag. In einer alternativen oder ergänzenden Ausgestaltung ist die Kommunikationsvorrichtung gemäß der Offenbarung der Offenlegungsschrift DE 10 2009 047 199 A1 ausgestaltet.

Die Aussendevorrichtung ist in einer Ausgestaltung derartig ausgestaltet, ein Initiierungssignal auszusenden, um eine Kommunikation mit einer Vorrichtung zur Kommunikation zu initiieren. Die Kommunikationsvorrichtung ist in dieser Ausgestaltung nicht nur rein passiv und reagiert auf ein sie erreichendes Signal, sondern die Kommunikationsvorrichtung löst eine Kommunikation aus, indem es ein Initiierungssignal aussendet.

In einer Ausgestaltung ist die Kommunikationsvorrichtung derartig ausgestaltet, nach dem Empfang eines Aktivierungssignals mindestens ein Antwortsignal auszusenden.

In einer weiteren Ausgestaltung wechselt die Kommunikationsvorrichtung nach dem Empfang eines Aktivierungssignals von einem passiven Zustand in einen aktiven Zustand. Die Kommunikationsvorrichtung wird somit durch ein empfangenes Signal aktiviert.

In einer Ausgestaltung empfängt die Kommunikationsvorrichtung durch das Aktivierungssignal Energie, um ein Antwortsignal zu senden oder um z. B. mit einem Sensor eine Messung durchzuführen.

In einer Ausgestaltung weist die Kommunikationsvorrichtung mindestens einen Sensor auf. Dabei ist die Aussendevorrichtung derartig ausgestaltet, ein Signal mit einem Messwert des Sensors auszusenden. Der Sensor ermittelt beispielsweise Temperatur, Druck, Leitfähigkeit, pH-Wert, Durchfluss oder Füllstand. Der Messwert wird dann von der Aussendevorrichtung ausgesendet.

Die Positionsbestimmungsvorrichtung gemäß der fünften Variante führt in einer Ausgestaltung die folgenden Schritte aus:

Von der Positionsbestimmungsvorrichtung wird ein Aktivierungssignal in einen Aktivierungsbereich ausgesendet. Der Aktivierungsbereich ist dabei in einer Ausgestaltung durch die ungerichtete Ausstrahlung des Aktivierungssignals und daher durch die Ausgestaltung der für das Aussenden verwendeten Antennenvorrichtung und deren Abstrahleigenschaften gegeben. In einer anderen Ausgestaltung ergibt sich der Aktivierungsbereich durch wenigstens eine Richtcharakteristik der für das Aussenden verwendeten Antennenvorrichtung, mit der eine bestimmte räumliche Verteilung der ausgesendeten Signale einhergeht.

Nach dem Empfang des Aktivierungssignals durch wenigstens eine Kommunikationsvorrichtung wird von dort wenigstens ein Antwortsignal gesendet.

Die Antwortsignale werden von der Positionsbestimmungsvorrichtung empfangen. Der Empfang der Antwortsignale beinhaltet, dass durch den Empfang auch eine Aussage über die Position oder zumindest die Richtung der aussendenden Kommunikationsvorrichtung relativ zur verwendeten Antennenvorrichtung möglich ist. Dies geschieht in einer Ausgestaltung durch die Verwendung von Empfangsbereichen, die jeweils Richtcharakteristiken der für den Empfang verwendeten Antennenvorrichtung zugeordnet sind. Daher werden in einer Ausgestaltung unterschiedliche Richtcharakteristiken für den Empfang verwendet.

Anschließend wird ein Kommunikationsbereich ausgewählt, indem insbesondere die zugehörige Richtcharakteristik verwendet wird. In diesen Kommunikationsbereich wird dann von der Vorrichtung an die sich in dem Kommunikationsbereich befindende mindestens eine Kommunikationsvorrichtung ein Kommunikationssignal gesendet. Anschließend können aus dem Kommunikationsbereich auch weitere Signale empfangen werden.

Die folgenden Ausführungen beziehen sich auf eine Positionsbestimmungsvorrichtung gemäß einer sechsten Variante.

In einer Ausgestaltung weist die Vorrichtung eine Positionsbestimmungsvorrichtung gemäß einer sechsten Variante auf. Die Positionsbestimmungsvorrichtung erlaubt dabei eine Erkennung mindestens eines Objekts. Dabei weist die Positionsbestimmungsvorrichtung vorzugsweise mindestens eine Sendevorrichtung, mindestens eine Empfangsvorrichtung und mindestens eine Auswertevorrichtung auf. Dabei ist die Sendevorrichtung derartig ausgestaltet, Signale auszusenden. Die Empfangsvorrichtung ist derartig ausgestaltet, Signale zu empfangen. Zudem ist die Auswertevorrichtung derartig ausgestaltet, die von der Sendevorrichtung ausgesendeten Signale mit den von der Empfangsvorrichtung empfangenen Signalen zu vergleichen und ein Vergleichsergebnis zu erzeugen. Weiterhin ist die Auswertevorrichtung derartig ausgestaltet, aus dem Vergleichsergebnis mindestens zu ermitteln, ob sich das Objekt zwischen der Sendevorrichtung und der Empfangsvorrichtung befindet. Bei den Signalen handelt es sich in einer Ausgestaltung um elektromagnetische (Funk-)Signale. In einer Ausgestaltung sind die Sendevorrichtung und/oder Empfangsvorrichtung als Sende- und Empfangsvorrichtung bzw. als Sende- /Empfangsvorrichtung ausgestaltet. Die Antennenvorrichtung der erfindungsgemäßen Vorrichtung zur Darstellung von Benutzerinformationen wird daher je nach Ausgestaltung von der Sendevorrichtung und/oder der Empfangsvorrichtung der hier beschriebenen sechsten Variante der Positionsbestimmungsvorrichtung umfasst.

Die Positionsbestimmungsvorrichtung verfügt somit über Komponenten, mit denen Signale ausgesendet und empfangen werden. Aus dem Vergleich der jeweiligen Signale wird dann zumindest ermittelt, ob sich ein Objekt zwischen der Sendevorrichtung und der Empfangsvorrichtung und daher im Pfad der ausgesendeten Signale befindet.

In einer Ausgestaltung ist vorgesehen, dass die Auswertevorrichtung derartig ausgestaltet ist, aus den von der Sendevorrichtung ausgesendeten Signalen und den von der Empfangsvorrichtung empfangenen Signalen ein Dämpfungsmaß als Vergleichsergebnis zu ermitteln. In dieser Ausgestaltung wird ermittelt, um welches Maß die gesendeten Signale gedämpft werden. Dabei bedeutet eine Dämpfung von 100%, dass das Signal den Raum nicht hat passieren können. Entsprechend bedeutet eine Dämpfung von 0%, dass der Raum zwischen der Sende- und Empfangsvorrichtung für die Signale transparent bzw. frei von einem Objekt ist. Dieses Dämpfungsmaß erlaubt anschließend weitere Aussagen über ein Objekt, zusätzlich dazu, ob ein Objekt überhaupt vorhanden ist. Dies ist z. B. die Bestimmung oder Klassifizierung wenigstens eines Materials des Objekts.

Eine Ausgestaltung beinhaltet, dass die Positionsbestimmungsvorrichtung mehrere Empfangsvorrichtungen an unterschiedlichen Positionen aufweist. Weiterhin ist die Auswertevorrichtung derartig ausgestaltet, für die von den Empfangsvorrichtungen empfangenen Signale ein der jeweiligen Empfangsvorrichtung und/oder der Position der jeweiligen Empfangsvorrichtung zugeordnetes Vergleichsergebnis zu erzeugen. In einer Ausgestaltung ist die Auswertevorrichtung derartig ausgestaltet, aus den Positionen der Empfangsvorrichtungen und den zugeordneten Vergleichsergebnissen mindestens eine Aussage über eine Eigenschaft des Objekts zu ermitteln. Die Aussage bezieht sich dabei auf das Vorhandensein des Objekts oder auf Materialeigenschaften oder auf den Umriss des Objekts usw. In dieser Ausgestaltung werden die Signale an unterschiedlichen Stellen durch die einzelnen Empfangsvorrichtungen empfangen. Daher durchqueren die ausgesendeten Signale auch unterschiedliche Raumbereiche und erlauben daher Aussagen über das Vorhandensein eines Objekts in den zugeordneten Raumbereichen oder weitere Aussagen über das Objekt oder ggf. die Objekte. Daher erzeugt die Auswertevorrichtung für die Empfangsvorrichtungen jeweils ein Vergleichsergebnis und verwendet diese in Verbindung mit Daten über die jeweilige Position der Empfangsvorrichtung um wenigstens eine weitere Aussage über das Objekt - zusätzlich zu der Aussage über dessen Anwesenheit - zu erzeugen. Die Position der Empfangsvorrichtung bezieht sich dabei in einer Ausgestaltung auf ein Flächenelement.

In einer Ausgestaltung ist vorgesehen, dass die Auswertevorrichtung derartig ausgestaltet ist, für die von den Empfangsvorrichtungen empfangenen Signale jeweils ein Dämpfungsmaß zu ermitteln. Es wird somit pro Ort der Empfangsvorrichtung jeweils ein Dämpfungsmaß ermittelt.

Eine Ausgestaltung beinhaltet, dass die Auswertevorrichtung derartig ausgestaltet ist, für Amplituden der empfangenen Signale jeweils ein Amplitudenmaß zu ermitteln. In einer Ausgestaltung wird der sogenannte RSSI-Wert der empfangenen Signale ermittelt. Dabei handelt es sich um den "Receive Signal Strength Indicator", der ein Wert für die Feldstärke der empfangenen Signale ist.

In einer Ausgestaltung ist vorgesehen, dass die Auswertevorrichtung derartig ausgestaltet ist, aus dem jeweiligen Amplitudenmaß und einem der jeweiligen Empfangsvorrichtung zugeordneten Kalibrierungsmaß das Dämpfungsmaß zu ermitteln. Das jeweilige Kalibrierungsmaß wird beispielsweise durch einen Kalibriervorgang ermittelt, bei dem - ohne ein Objekt - ermittelt wird, mit welcher Amplitude ein von der Sendevorrichtung ausgesendeten Signal jeweils von der Empfangsvorrichtung empfangen wird.

Eine Ausgestaltung beinhaltet, dass die Auswertevorrichtung derartig ausgestaltet ist, aus den Dämpfungsmaßen und den Positionen der Empfangsvorrichtungen einen Umriss des Objekts ermitteln. In dieser Ausgestaltung wird ausgenutzt, dass ein ausgedehntes Objekt in der Regel den Durchgang der Signale für mehrere Empfangsvorrichtungen verhindert bzw. die Signale abschwächt. Daher kann z. B. aus der Menge der durch das Objekt gleichsam verdeckten Empfangsvorrichtungen und dem Wissen über deren Positionen zumindest auf den Umriss des Objekts geschlossen werden.

In einer Ausgestaltung ist vorgesehen, dass die Auswertevorrichtung derartig ausgestaltet ist, ausgehend von dem ermittelten Umriss des Objekts und ausgehend von - insbesondere für die oder in der Auswertevorrichtung hinterlegten - Umrissdaten das Objekt zu klassifizieren. In dieser Ausgestaltung verfügt die Auswertevorrichtung über Referenzdaten bzw. spezielle Umrissdaten, die es erlauben, das Objekt zumindest zu einer Klasse oder einer Gruppe von Objekten zuzuordnen.

Eine Ausgestaltung beinhaltet, dass die Auswertevorrichtung derartig ausgestaltet ist, aus mindestens einem ermittelten Dämpfungsmaß oder entsprechend aus mehreren ermittelten Dämpfungsmaßen eine Aussage über ein Material des Objekts zu ermitteln. In dieser Ausgestaltung werden besonders Signale ausgewertet, die zumindest gedämpft das Objekt passieren können und die nicht vollständig von dem Objekt in ihrem Pfad blockiert werden.

In einer Ausgestaltung ist vorgesehen, dass die Sendevorrichtung derartig ausgestaltet ist, mindestens ein Signal ungerichtet auszustrahlen. In dieser Ausgestaltung sendet die Sendevorrichtung ungerichtet in den Raum hinein.

In einer Ausgestaltung ist die Sendevorrichtung derartig ausgestaltet, mindestens ein Signal in einen von mehreren vorgebbaren Raumbereichen auszustrahlen. In dieser Ausgestaltung erlaubt die Sendevorrichtung die Ausstrahlung von mindestens einem Signal in einen von mehreren vorgebbaren Raumbereichen. In einer Variante erlaubt es die Sendevorrichtung, Signale unter Verwendung von unterschiedlichen Richtcharakteristiken auszusenden, indem beispielsweise unterschiedliche Antennenelemente verwendet werden. Alternativ verfügt die Sendevorrichtung über eine spezielle Richtcharakteristik und die Sendevorrichtung wird mechanisch unterschiedlich ausgerichtet. Die genannten Richtcharakteristiken bestehen in einer Ausgestaltung darin, dass die Sendevorrichtung die Signale keulenförmig aussendet, so dass die Signale hauptsächlich in den Raumbereich gelangen, in den die jeweilige Keule oder Hauptkeule weist.

In einer Ausgestaltung ist vorgesehen, dass die Sendevorrichtung derartig ausgestaltet ist, Signale in mehrere unterschiedliche Raumbereiche auszustrahlen. In dieser Ausgestaltung richtet die Sendevorrichtung die Signale jeweils in einen von mehreren Raumbereichen aus. Indem die Signale abwechselnd jeweils in andere Raumbereiche ausgestrahlt werden, wird insgesamt der Raum um die Sendevorrichtung herum bereichsweise mit den Signalen beaufschlagt.

Eine Ausgestaltung beinhaltet, dass die Auswertevorrichtung eine Signalbewertevorrichtung aufweist. In einer Ausgestaltung sind mehrere Signalbewertevorrichtungen vorhanden. Dabei ist die mindestens eine Signalbewertevorrichtung derartig ausgestaltet, das Vergleichsergebnis zu erzeugen. Zudem ist die Signalbewertevorrichtung der Empfangsvorrichtung zugeordnet. Weiterhin ist die Empfangsvorrichtung derartig ausgestaltet, abhängig vom Vergleichsergebnis ein Antwortsignal zu erzeugen.

In einer weiteren Ausgestaltung weist die Auswertevorrichtung mehrere Signalbewertevorrichtungen für mehrere Empfangsvorrichtungen auf. Dabei sind die Signalbewertevorrichtungen derartig ausgestaltet, Vergleichsergebnisse zu erzeugen. Insbesondere ist den Empfangsvorrichtungen jeweils mindestens eine Signalbewertevorrichtung zugeordnet, so dass die mindestens eine Signalbewertevorrichtung das Vergleichsergebnis für das von der zugeordneten Empfangsvorrichtung empfangene Signal ermittelt. Zudem sind die Empfangsvorrichtungen derartig ausgestaltet, jeweils abhängig vom Vergleichsergebnis ein Antwortsignal zu erzeugen.

In den beiden vorgenannten Ausgestaltungen verfügt die Empfangsvorrichtung bzw. verfügen die Empfangsvorrichtungen jeweils über eine Signalbewertevorrichtung, die jeweils ein Vergleichsergebnis erzeugt. Das Vergleichsergebnis wird zusätzlich zur Auswertung hinsichtlich des Objekts noch als Kriterium benutzt, ob die Empfangsvorrichtung oder die Empfangsvorrichtungen ein Antwortsignal erzeugt bzw. erzeugen. Daher ereignet sich die Bewertung der empfangenen Signale dezentral durch die einzelnen Signalbewertevorrichtungen. Damit die Signalbewertevorrichtungen die gesendeten mit den empfangenen Signalen vergleichen können, sind in einer Ausgestaltung Referenzdaten aus Kalibrierungen vorhanden. In einer alternativen oder ergänzenden Ausgestaltung sind in den Signalbewertevorrichtungen die Daten über die von der Sendevorrichtung gesendeten Signale hinterlegt. Die Empfangsvorrichtung ist daher in dieser Ausgestaltung auch eine Sendevorrichtung zum Aussenden bzw. allgemein zum Ausgeben des Antwortsignals. Das Antwortsignal wird dabei in einer Ausgestaltung kabellos ausgesendet und wird in einer alternativen kabelgebunden übertragen.

Indem die Ausgabe des Antwortsignals abhängig von dem Vergleichsergebnis ist, lässt sich die Menge der Daten und insbesondere der Energiebedarf auf Seiten der Empfangsvorrichtung, die damit auch eine Sendevorrichtung ist, reduzieren. Der Vorteil besteht darin, dass nicht generell jedes Antwortsignal ausgegeben wird, sondern nur besondere.

Daher ist in einer Ausgestaltung vorgesehen, dass die Empfangsvorrichtung das Antwortsignal nur beim Vorliegen einer vorgebbaren Bedingung ausgibt. Es muss also wenigstens eine vorgegebene Bedingung erfüllt sein, damit das Antwortsignal ausgegeben wird.

Entsprechend ist beim Vorliegen einer Vielzahl von Empfangsvorrichtungen mit Signalbewertevorrichtungen in einer Ausgestaltung vorgesehen, dass die Empfangsvorrichtungen die Antwortsignale nur beim Vorliegen einer jeweils vorgebbaren Bedingung ausgeben. Dabei sind in einer Ausgestaltung die Bedingungen für alle Empfangsvorrichtungen gleich. In einer alternativen Ausgestaltung ist zumindest für eine Empfangsvorrichtung die Bedingung unterschiedlich zu den Bedingungen für die anderen Empfangsvorrichtungen.

Eine vorgebbare Bedingung für das Ausgeben des Antwortsignals ist, dass überhaupt ein Vergleichsergebnis vorhanden ist, d. h. dass die Empfangsvorrichtung überhaupt ein Signal empfangen hat.

Eine Ausgestaltung beinhaltet, dass die vorgebbare Bedingung mindestens darin besteht, dass ein als Vergleichsergebnis ermitteltes Dämpfungsmaß größer als ein vorgebbarer Dämpfungsgrenzwert ist. In dieser Ausgestaltung werden somit nur dann die Antwortsignale ausgegeben, wenn ein Mindestdämpfungsmaß überschritten worden ist. Je nach Anwendungsfall findet möglicherweise auch ohne die Anwesenheit des Objekts eine gewisse Dämpfung statt. Je nach den spezifischen Eigenschaften der Empfangsvorrichtungen haben diese ggf. eine beschränkte Genauigkeit beim Empfang bzw. bei der Verarbeitung der empfangenen Signale. Da daher eine gewisse Grundschwankung besteht, wird hier eine untere Grenze für die Dämpfung vorgegeben. In anderen Ausgestaltungen lässt sich durch die Vorgabe der unteren Grenze die Menge der erkennbaren Objekte einschränken.

In einer Ausgestaltung ist vorgesehen, dass die vorgebbare Bedingung mindestens darin besteht, dass das Vergleichsergebnis sich über einen vorgebbaren Entwicklungsgrenzwert von einem vorherigen Vergleichsergebnis unterscheidet. In dieser Ausgestaltung werden die Antwortsignale nur dann ausgegeben, wenn sich das Vergleichsergebnis über ein vorgebbares Maß in Form eines Entwicklungsgrenzwerts hinaus von einem vorherigen Wert unterscheidet. Ändert sich das Vergleichsergebnis somit nicht oder unterhalb des Entwicklungsgrenzwerts, so wird das Antwortsignal nicht ausgegeben. Das bedeutet, dass nur hinreichend deutliche Änderungen des empfangenen Signals und daher Änderung im Raum vor der Empfangsvorrichtung durch das Antwortsignal signalisiert werden. Diese Ausgestaltung trägt ebenfalls zu einer Reduktion der zu übertragenen Signale bzw. zu einer Reduktion des Energiebedarfs der Empfangsvorrichtungen bei.

Eine Ausgestaltung beinhaltet, dass mindestens eine Empfangsvorrichtung als Sendevorrichtung dient. In dieser Ausgestaltung handelt es sich somit um mindestens eine Empfangs-/Sendevorrichtung. In einer Ausgestaltung erlaubt dies die Ausgabe der Antwortsignale. In einer alternativen oder ergänzenden Ausgestaltung passieren die Signale zweimal den Raum, in dem sich das Objekt befindet bzw. befinden kann. Dies z. B. für die Identifizierung der Materialeigenschaften des Objekts.

In einer Ausgestaltung ist vorgesehen, dass mindestens eine Empfangsvorrichtung derartig ausgestaltet ist, Signale auszugeben. In dieser Ausgestaltung handelt es sich somit um eine Empfangs-/Sendevorrichtung.

Die vorgenannte Ausgestaltung erlaubt es in einer Ausgestaltung, dass die Empfangsvorrichtungen die Antwortsignale als Signale und in einer Ausgestaltung insbesondere als Funksignale ausgeben. In einer Ausgestaltung geben die Empfangsvorrichtungen als Antwortsignale einen Wert für die Amplitude der empfangenen Signale aus. In einer weiteren Ausgestaltung wird das ermittelte Dämpfungsmaß als Antwortsignal ausgegeben. In einer zusätzlichen Ausgestaltung wird der Unterschied zwischen einem Wert eines aktuell empfangenen Signals und dem entsprechenden Wert eines vorher empfangenen Signals als Antwortsignal ausgegeben.

In einer weiteren Ausgestaltung dienen die Empfangsvorrichtungen ebenfalls als Sendevorrichtungen, so dass von ihnen die Signale ausgehen, die den Raum durchqueren, in den sich das Objekt befinden kann. In dieser Ausgestaltung sind daher insgesamt zwei Sende-/Empfangsvorrichtungen vorgesehen, die so angeordnet sind, dass sich zwischen ihnen der Raum befindet, in dem sich wiederum das Objekt befinden kann.

Eine Ausgestaltung beinhaltet, dass mindestens eine Empfangsvorrichtung derartig ausgestaltet ist, nach dem Empfangen eines Signals von einem passiven Zustand in einen aktiven Zustand zu wechseln. Die beschriebene Empfangsvorrichtung wird somit durch das empfangene Signal geweckt. Solche Empfangsvorrichtungen sind beispielsweise offenbart in der Offenlegungsschrift DE 10 2009 047 199 A1.

In einer Ausgestaltung ist vorgesehen, dass mindestens eine Empfangsvorrichtung einen Energiespeicher aufweist. Der Energiespeicher ist beispielsweise eine Batterie oder ein Akkumulator/Akku.

Eine Ausgestaltung beinhaltet, dass mindestens eine Empfangsvorrichtung derartig ausgestaltet ist, aus einem vorgebbaren Raumbereich ein Signal zu empfangen. In dieser Ausgestaltung verfügt die Empfangsvorrichtung über die Möglichkeit, Signale nur aus einem vorgebbaren Raumbereich zu empfangen. Damit horcht die Empfangsvorrichtung gleichsam nur in eine Richtung, so dass auch nur ein Objekt, dass sich in diesem Raumbereich befindet, auf die gesendeten Signale und damit auch auf die empfangenen Signale einwirken kann. Es findet daher ein selektiver Empfang der Signale statt.

In einer Ausgestaltung sendet die Sendevorrichtung die Signale in ausgesuchte Raumbereich aus und empfängt die Empfangsvorrichtung Signale nur aus ausgesuchten Raumbereichen. Durch das selektive Senden und Empfangen wird der Raum zwischen den beiden Positionsbestimmungsvorrichtung gleichsam stückweise abgetastet.

In einer Ausgestaltung erlaubt die mindestens eine Empfangsvorrichtung den Empfang aus einem von mehreren vorgebbaren Raumbereichen. In dieser Ausgestaltung scannt die Empfangsvorrichtung gleichsam den Raum um sich herum ab und empfängt Signale jeweils nur aus den ausgewählten Raumbereichen.

In einer Ausgestaltung ist vorgesehen, dass die Positionsbestimmungsvorrichtung eine Halterungsvorrichtung aufweist und dass mehrere Empfangsvorrichtungen an unterschiedlichen Positionen der Halterungsvorrichtung angeordnet sind. In einer Ausgestaltung handelt es sich bei der Halterungsvorrichtung um ein Wandelement, in oder an dem sich die Empfangsvorrichtungen befinden.

Eine Ausgestaltung beinhaltet, dass die Sendevorrichtung derartig ausgestaltet ist, Signale mit unterschiedlichen Frequenzen auszustrahlen. Die unterschiedlichen Frequenzen dienen in einer Ausgestaltung der Bestimmung der Materialien des Objekts.

In einer Ausgestaltung ist vorgesehen, dass die Sendevorrichtung als Mehrkeulenantenne ausgestaltet ist. Die Sendevorrichtungen ist in dieser Ausgestaltung eine Mehrkeulen-(alternative Bezeichnung: Multibeam-)Antenne. Es bestehen somit mehrere Richtcharakteristiken der Sendevorrichtung, die jeweils durch eine Keule bzw. Hauptkeule ausgezeichnet sind. Damit geht einher, dass die Sendevorrichtung die Signale hauptsächlich in Richtung der ausgewählten oder geschalteten Keulen ausstrahlt.

In einer Ausgestaltung handelt es sich bei der Empfangsvorrichtung ebenfalls um eine Mehrkeulenantenne mit unterschiedlichen auswählbaren Keulen. Diese Antennenform erlaubt es in einer Ausgestaltung, dass die Empfangsvorrichtung Signale selektiv aus den Raumbereichen empfangen kann, die den Keulen zugeordnet sind. In einer weiteren Ausgestaltung werden die Signale abwechselnd mit unterschiedlichen Keulen empfangen.

Eine Ausgestaltung beinhaltet, dass die Sendevorrichtung mehrere unterschiedliche Richtcharakteristiken aufweist und dass die Richtcharakteristiken sich jeweils auf eine Menge an räumlich unterschiedlichen Sendeeigenschaften (oder Sendeempfindlichkeiten) beziehen. Die Richtcharakteristiken bedeuten somit, dass die Signale in unterschiedliche Raumbereiche unter-schiedlich stark ausgesendet werden.

Die oben beschriebenen Ausgestaltungen der Positionsbestimmungsvorrichtung gemäß den sechs Varianten oder ggf. auch gemäß einer Kombination der Varianten erlauben die Ermittlung der Informationen, die erfindungsgemäß über die Darstellungsvorrichtung der Vorrichtung dargestellt bzw. dem Benutzer zugänglich gemacht werden. Weitere Positionsbestimmungsvorrichtung lassen sich jedoch auch mit der erfindungsgemäßen Vorrichtung kombinieren.

Die Erfindung löst die Aufgabe weiterhin durch ein Verfahren zur Darstellung von Benutzerinformationen.

Das Verfahren umfasst zumindest die folgenden Schritte: Es werden Signale eines Senders mit mindestens einer sich auf räumlich unterschiedliche Empfangsempfindlichkeiten beziehenden Richtcharakteristik empfangen. Alternativ oder ergänzend werden Signale mit mindestens einer Richtcharakteristik hinein in eine Szenerie gesendet und werden Signale mindestens eines Senders aus der Szenerie empfangen. Die empfangenen Signale werden in Hinblick auf die Szenerie verarbeitet und es werden Darstellungsdaten ermittelt. Die Darstellungsdaten werden - insbesondere für den Benutzer - dargestellt.

Die Verarbeitung der empfangenen Signale umfasst beispielsweise die Auswertung oder Weiterverarbeitung der Signale unter Anwendung der Digitalisierung der Signale oder der Verrechnung von Messgrößen der Signale mit Daten bezüglich der jeweils zugeordneten Richtcharakteristik.

Dabei gelten die obigen Ausführungen und Ausgestaltungen zu der Vorrichtung entsprechend auch für das erfindungsgemäße Verfahren. Umgekehrt lassen sich auch Verfahrensschritte durch Ausgestaltungen der Vorrichtung realisieren, so dass auch die Ausführungen bezüglich des Verfahrens für die Vorrichtung gelten.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1 einen schematischen Aufbau einer erfindungsgemäßen Vorrichtung als Blockschaltbild,

Fig. 2 eine schematische Verdeutlichung einer Visualisierung durch die erfindungsgemäße Vorrichtung,

Fig. 3 eine schematische Darstellung einer weiteren Ausgestaltung der erfindungsgemäßen Vorrichtung,

Fig. 4 eine Darstellung einer alternativen Ausgestaltung eines Teils einer erfindungsgemäßen Vorrichtung,

Fig. 5 eine schematische Darstellung einer ersten Variante einer Positionsbestimmungsvorrichtung,

Fig. 6 eine Prinzip-Skizze zur Verdeutlichung des Verfahrens mit einer Ausgestaltung der Positionsbestimmungsvorrichtung der Fig. 5,

Fig. 7 eine Prinzip-Skizze mit einer weiteren Ausgestaltung der ersten Variante der Positionsbestimmungsvorrichtung,

Fig. 8 eine skizzenhafte Darstellung einer zweiten Variante einer Positionsbestimmungsvorrichtung,

Fig. 9 eine Skizze eines Ausleuchtbereichs und dessen Zerlegung in 16 Sektoren für die zweite Variante,

Fig. 10 eine Skizze über die Zuordnung der Richtcharakteristiken zu den Sektoren des Ausleuchtbereichs der zweiten Variante,

Fig. 11 eine schematische Darstellung einer alternativen Ausgestaltung der Positionsbestimmungsvorrichtung der zweiten Variante,

Fig. 12 eine schematische Darstellung einer dritten Variante der Positionsbestimmungsvorrichtung,

Fig. 13 eine schematische Darstellung von zwei Antennenelementen einer Antennenvorrichtung und der zugehörigen Richtcharakteristiken,

Fig. 14 ein Koordinatensystem für die Beschreibung der Antennenelemente der Fig. 13,

Fig. 15 eine Darstellung der Richtcharakteristiken, die sich bei den zwei Antennenelementen der Fig. 13 bei Gleich- und Gegentakt ergeben,

Fig. 16 eine schematische Darstellung der Bestimmung der Position eines Senders relativ zu der Antennenvorrichtung mit den Antennenelementen der Fig. 13,

Fig. 17 eine schematische Darstellung der Zeitverläufe der Amplituden der Empfangssignale bei der Anordnung der Fig. 16,

Fig. 18      die Zeitverläufe der Fig. 17 mit überlagertem Rauschen,

Fig. 19      eine Abhängigkeit der Standardabweichung $\sqrt{\text{Var}}$ ($\theta$) des geschätzten Einfallswinkels $\theta$ vom Signal-Rausch-Abstand p,

Fig. 20      eine schematische Darstellung einer weiteren Ausgestaltung der Positionsbestimmungsvorrichtung der dritten Variante,

Fig. 21      eine funktionale Darstellung eines Ringkopplers als Beispiel eines Speisenetzwerks,

Fig. 22      eine schematische Darstellung der Zeitverläufe der Amplituden der Empfangssignale bei der Verwendung von drei Antennenelementen mit drei Moden,

Fig. 23      eine Darstellung der Abhängigkeit der Standardabweichung des ermittelten Einfallswinkels $\theta$ vom Rauschen für eine Antennenvorrichtung mit drei Antennenelementen,

Fig. 24      eine schematische Darstellung einer Positionsbestimmungsvorrichtung gemäß einer vierten Variante und deren Anwendung,

Fig. 25      eine Prinzip-Skizze zur Verdeutlichung des mit der Positionsbestimmungsvorrichtung der Fig. 24 durchgeführten Verfahrens,

Fig. 26      einen schematischen Aufbau einer Positionsbestimmungsvorrichtung gemäß einer fünften Variante in der Anwendung,

Fig.27      eine schematische Skizze einer alternativen Ausführung der Positionsbestimmungsvorrichtung gemäß der fünften Variante in der Anwendung,

Fig. 28      eine schematische Skizze des Schritts 1 der Kommunikation mit einer weiteren Ausgestaltung der Positionsbestimmungsvorrichtung,

Fig. 29      eine schematische Skizze des Schritts 2 der Anordnung der Fig. 28,

Fig. 30      eine schematische Skizze des Schritts 3 der Anordnung der Fig. 28,

Fig. 31      eine schematische Darstellung eines zeitlichen Ablaufs des Durchlaufens von Feldern,

Fig. 32      eine schematische Darstellung der Komponenten einer Positionsbestimmungsvorrichtung in Art eines Blockschaltbilds,

Fig. 33      eine schematische Darstellung einer Positionsbestimmungsvorrichtung mit einer Kommunikationsvorrichtung,

Fig. 34      eine schematische Darstellung eines ersten Anwendungsszenarios,

Fig. 35      eine schematische Darstellung eines zweiten Anwendungsszenarios,

Fig. 36      eine schematische Darstellung eines dritten Anwendungsszenarios,

Fig. 37      einen beispielhaften Aufbau der Positionsbestimmungsvorrichtung gemäß einer sechsten Variante,

Fig. 38      einen Zustand während des Beaufschlagens der Empfangsvorrichtungen mit Signalen der Sendevorrichtung,

Fig. 39      ein Beispiel für eine Matrix mit ermittelten Pfaddämpfungen $ATTEN_{i,j}$,

Fig. 40      ein Beispiel für die diskretisierten Pfaddämpfungen der Fig. 39,

Fig. 41 eine Positionsbestimmungsvorrichtung mit einem Automobil als Objekt im Durchgangsbereich der Signale,

Fig. 42 die Positionsbestimmungsvorrichtung der Fig. 41 mit einer Person mit Einkaufswagen als Objekt,

Fig. 43 die Positionsbestimmungsvorrichtung der Fig. 41 mit einem Gabelstapler als Objekt,

Fig. 44 a)-f) die für die Beispiele der Abbildungen Fig. 41 - 43 ermittelte Dämpfungswerte,

Fig. 45 ein Beispiel für den zeitlichen Ablauf von Verfahrensschritten bei der Positionsbestimmungsvorrichtung gemäß der sechsten Variante,

Fig. 46 eine beispielhafte Positionsbestimmungsvorrichtung gemäß der sechsten Variante mit Empfangsvorrichtungen entlang einer Transportstrecke,

Fig. 47 Beispielhafte Antwortsignale für die Positionsbestimmungsvorrichtung der Fig. 46,

Fig. 48 eine Positionsbestimmungsvorrichtung zur Objekterkennung gemäß der sechsten Variante mit zwei Sende-/Empfangsvorrichtungen mit jeweils einer schaltbaren Mehrkeulenantenne,

Fig. 49 eine weitere Ausgestaltung der Positionsbestimmungsvorrichtung der sechsten Variante und

Fig. 50 eine alternative Ausgestaltung der Positionsbestimmungsvorrichtung der sechsten Variante.

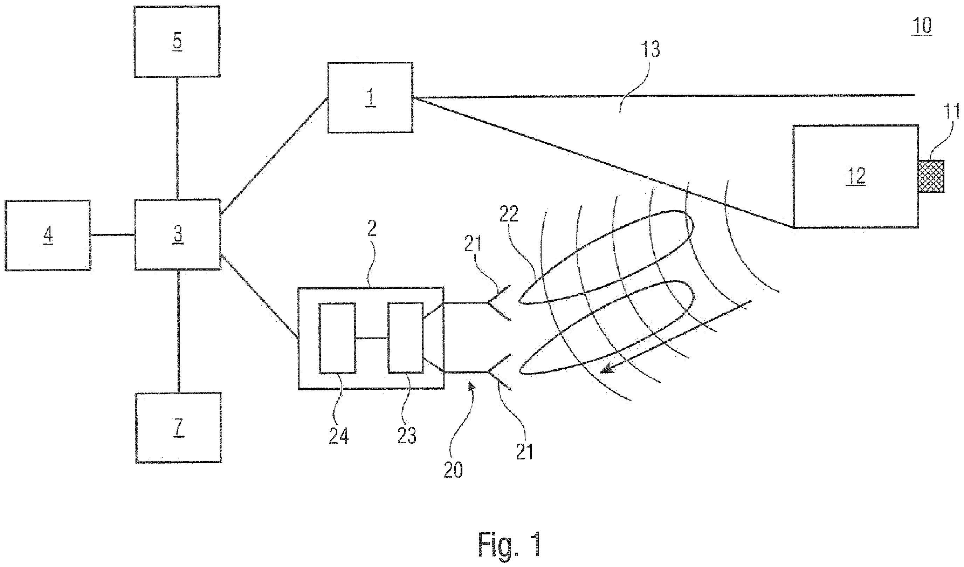

Die Fig. 1 zeigt einen schematischen Aufbau eines Beispiels einer Vorrichtung zur Darstellung von Benutzerinformationen.

Eine optische Aufnahmevorrichtung 1, die beispielsweise als Kamera ausgestaltet ist, erfasst ein visuelles Bild einer Szenerie 10. In der Szenerie 10 befindet sich ein Objekt 12, z. B. ein Karton, an dem wiederum ein Sender 11 angebracht ist. Der Sender 11 ist hier ein RFID-Transponder, der auf ein Request-Signal eines RFID-Readers mit einem Antwortsignal reagiert.

In einer Ausgestaltung lässt sich der Sender 11 durch ein Aktivierungssignal aus einem passiven Zustand in einen aktiven Zustand versetzen, wobei die Ausführung des Senders 11 dabei gemäß der Offenlegungsschrift DE 10 2009 047 199 A1 ist.

In einer weiteren Ausgestaltung handelt es sich um einen aktiven Sender, der von sich aus Signale aussendet. Über diese Signale wird beispielsweise eine Kommunikation mit einer Funkeinheit initiiert, so dass durch von der Funkeinheit ausgesendete Signale der Sender Energie für die weitere Kommunikation erhalten kann.

Zu erkennen ist, dass sich in dem gezeigten beispielhaften Blockschaltbild der Sender 11 auf der von der Aufnahmevorrichtung 1 abgewandten Seite des Objekts 12 befindet, so dass der Sender 11 für rein visuelle Anwendungen nicht erkennbar wäre.

Daher ist die Positionsbestimmungsvorrichtung 2 vorgesehen, die hochfrequenten elektromagnetischen Signale des Senders 11 empfängt (diese sind hier die Antwortsignale des RFID-Transmitters; in einer alternativen - nicht dargestellten - Ausgestaltung handelt es sich um reflektierte Radar-Signale).

Die Positionsbestimmungsvorrichtung 2 verfügt über eine Antennenvorrichtung 20 mit hier zwei Antennenelementen 21 - z. B. in Form von Patch-Antennen oder Dipolantennen - und ein Speisenetzwerk 23, das mit den Antennenelementen 21 verbunden ist und für unterschiedliche Richtcharakteristiken 22 sorgt, mit denen die Signale des Senders 11 empfangen werden. Die Richtcharakteristiken 22 beziehen sich dabei auf räumlich unterschiedliche Empfangsempfindlichkeiten der Antennenvorrichtung 20.

Hier handelt es sich als Beispiel bei der Antennenvorrichtung 20 um eine Mehrkeulenantenne. Die Richtcharakteristiken 22 sind somit jeweils durch eine Keule mit einer Hauptrichtung oder einer Hauptachse gekennzeichnet.

Das Speisenetzwerk 23 erlaubt in der dargestellten Ausgestaltung das Betreiben mit zwei Varianten: In einer Variante wird jeweils nur eine Richtcharakteristik 22 für den Empfang von Signalen verwendet. Nacheinander werden Signale mit unterschiedlichen und somit jeweils aktiven bzw. geschalteten Richtcharakteristiken 22 empfangen. In einer alternativen Ausgestaltung werden mit mehreren Richtcharakteristiken 22 gleichzeitig Signale empfangen, und durch das - z. B. als Butler-Matrix oder alternativ als Eigenmodennetzwerk ausgestaltete - Speisenetzwerk 23 lassen sich die einzelnen, jeweils den Richtcharakteristiken 22 zugeordneten Empfangssignale erhalten.

Die Signalverarbeitungsvorrichtung 24 verarbeitet die empfangenen Signale und stellt sie damit vorzugsweise in digitaler Form der weiteren Verarbeitung zur Verfügung.

In der dargestellten Ausgestaltung ermittelt die Signalverarbeitungsvorrichtung 24 aus den empfangenen Signalen die physikalischen Größen, wie z. B. den Betrag der Feldstärke und/oder deren Phase, um die Signale vollständig beschreiben zu können. Beide Werte der empfangenen Signale in Verbindung mit Daten über die jeweils zugeordnete, d. h. für den Empfang verwendete Richtcharakteristik erlauben die Ermittlung von gewichteten Empfangswerten. Dabei werden die Daten über die Richtcharakteristiken beispielsweise in Form von Matrizen verwendet.

Aus allen gewichteten Empfangswerten lassen sich dann Aussagen über die Position des Senders 11 ermitteln: Werden beispielsweise mit zwei Richtcharakteristiken Signale jeweils nur aus der Richtung der jeweils zugeordneten Keule empfangen, so befindet sich der Sender 11 in dem Bereich, in dem sich die beiden Keulen überlappen.

In einer Ausgestaltung werden die gewichteten Empfangswerte miteinander verarbeitet. So werden beispielsweise in Form von Matrizen vorliegende gewichtete Empfangswerte addiert. Die Überlagerung - z. B. von allen oder nur von Gruppen - der gewichteten Empfangswerte lässt sich z. B. anschließend graphisch darstellen.

In einer alternativen Ausgestaltung ist die Signalverarbeitungsvorrichtung 24 als RFID-Reader bzw. als RFID-Lesegerät ausgestaltet und erzeugt daher für die empfangenen Signale jeweils nur einen Wert für die Feldstärke (sog. RSSI, "Receive Signal Strength Indicator"). In dieser Variante wird mit den unterschiedlichen Richtcharakteristiken und den jeweils verbundenen Amplitudenwerten für die empfangenen Signale eine Art von Empfangsvektor ermittelt. Die Einheitsvektoren dieses Vektors ergeben sich dabei in einer Ausgestaltung aus den Achsen der Keulen der Richtcharakteristiken.

Indem die Richtcharakteristiken 22 also unterschiedlichen Raumbereichen zugeordnet sind, kann aus den empfangenen Signalen auf die Position des Senders 11 oder zumindest auf die Richtung, in der der Sender 11 sich relativ zur Antennenvorrichtung 20 befindet, geschlossen werden. Weitere Realisierungen der Positionsbestimmungsvorrichtung 2 werden anhand einiger folgender Abbildungen erläutert. Die Verarbeitung der empfangenen Signale - bzw. deren digitale Repräsentation - und den Daten über die Richtcharakteristiken geschieht hier in der Verarbeitungsvorrichtung 3.

Die Verarbeitungsvorrichtung 3 erhält auch die visuellen Bilder der Aufnahmevorrichtung 1. Ausgehend von der Ausrichtung der Aufnahmevorrichtung 1 sowie der Ausrichtung der Positionsbestimmungsvorrichtung 2 bzw. der Richtcharakteristiken 22 der Antennenvorrichtung 20 zueinander und zu der Lage der Szenerie 10 werden die Daten zusammengeführt und über die Darstellungsvorrichtung 4 dargestellt.

In einer alternativen Ausgestaltung ist die Verarbeitungsvorrichtung 3 direkt in der Darstellungsvorrichtung 4 integriert.

Für die Darstellung der Daten wird hier weiterhin auf eine externe Datenbank 5 zugegriffen, die zusätzliche Daten oder Informationen über den Sender 11 bereitstellt. Dies setzt in dem dargestellten Beispiel darauf, dass der Sender 11 auch Daten aussendet, die eine Identifikation erlauben. Diese Daten oder der Hinweis darauf, dass solche Daten vorhanden sind, werden dann zusätzlich bei der Darstellung durch die Darstellungsvorrichtung 4 eingeblendet. Bei der Darstellungsvorrichtung 4 handelt es sich beispielsweise um einen Monitor oder um ein Smartphone.

Weiterhin ist hier eine Steuervorrichtung 7 vorhanden, die es erlaubt, einen Bereich 13 der Szenerie 10 auszuwählen, der durch die Aufnahmevorrichtung 1 aufgenommen wird. Die Steuervorrichtung 7 ist hier mit der Verarbeitungsvorrichtung 3 verbunden, damit der gewählte Bereich 13 bei der Überlagerung durch die über die Positionsbestimmungsvorrichtung 2 ermittelten Daten passend berücksichtigt wird.

Bei der Auswahl des Bereichs 13 ist alternativ oder ergänzend vorgesehen, dass der Bereich 13 im Sichtfeld der Antennenvorrichtung 20 mit erhöhter Auflösung durch die Richtcharakteristiken untersucht wird.

Für den Abgleich zwischen den visuellen Bildern und den Messdaten bzw. den Darstellungsdaten der Positionsbestimmungsvorrichtung 2 ist in einer Ausgestaltung ein Lagesensor vorgesehen. Dies insbesondere für den Fall, dass die Position bzw. Ausrichtung der Aufnahmevorrichtung 1 oder der Positionsbestimmungsvorrichtung 2 nicht statisch, sondern variabel ist.

In einer - nicht dargestellten - Ausgestaltung ist die Aufnahmevorrichtung 1, z. B. in Form einer Kameraeinheit, an der Antennenvorrichtung 20 befestigt und deckt in einer Ausgestaltung den Sichtbereich der Antennenvorrichtung 20 ab. In einer alternativen - nicht dargestellten - Ausgestaltung ist die Aufnahmevorrichtung 1 in der Darstellungsvorrichtung 4 integriert. In diesem Fall wird der Sichtbereich der Darstellungsvorrichtung 4 mit dem Sichtbereich der Antennenvorrichtung 20 bzw. der Positionsbestimmungsvorrichtung 2 abgeglichen. Dies geschieht in einer Ausgestaltung über die Auswertung von Lagesensoren, die zum Teil in Tabletts oder Smartphones vorhanden sind.

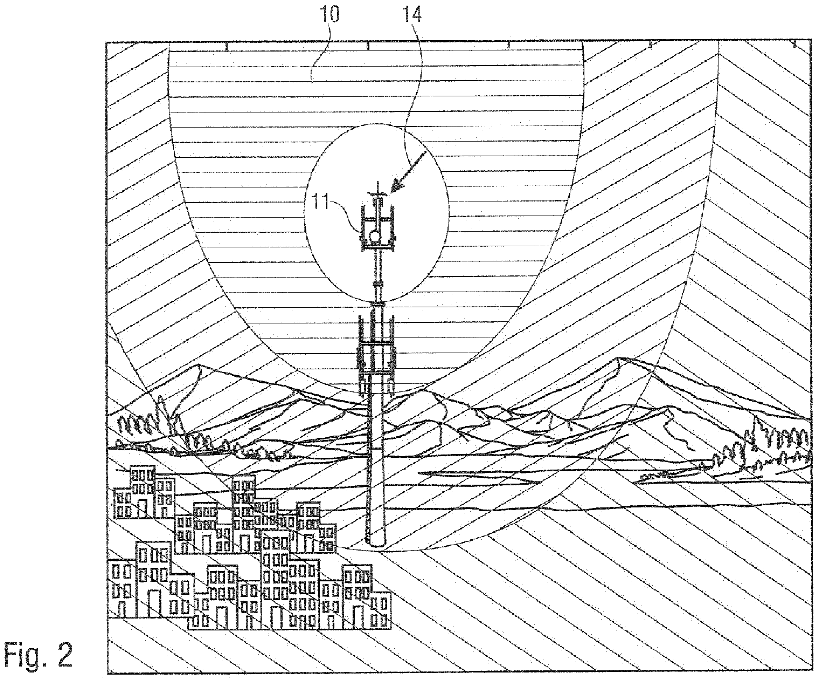

Die Fig. 2 zeigt schematisch eine Variante einer Visualisierung der empfangenen Signale bzw. der daraus ermittelten Darstellungsdaten. Hier werden die aufbereiteten Daten über das visuelle Bild, also über das Kamerabild gelegt. Anstelle einer Farbkodierung sind hier drei Bereiche um einen Funkmast, der als Sender 11 fungiert, unterschiedlich schraffiert. Dies ist somit ein Ausführungsbeispiel, um Signale mit visuell nicht sichtbaren Frequenzen für einen Beobachter sichtbar zu machen.

Die Schraffuren deuten dabei Bereiche mit unterschiedlicher Feldstärke der empfangenen Signale an. Hierfür werden in einer Variante die Messgrößen der empfangenen Signale (Amplitude und Phase) mit den Daten über die jeweils verwendeten Richtcharakteristiken - also die räumliche Verteilung der Empfangsempfindlichkeiten - verrechnet. Damit ergeben sich jeweils gewichtete Empfangsdaten, die z. B. in Matrixform vorliegen. Werden die mit unterschiedlichen Richtcharakteristiken empfangenen Signale gemeinsam verarbeitet, indem z. B. die gewichteten Empfangsdaten aufaddiert werden, so ergeben sich die Daten über die Verteilung der Sendeeigenschaften des Senders 11. Diese Darstellungsdaten sind hier dem visuellen Bild der Szenerie 10 überlagert.

Ergänzend ist noch ein optisches Element 14 in Form eines Pfeils hinzugefügt, das die Aufmerksamkeit auf den Sender 11 lenkt.

In einer - hier nicht dargestellten - Ausgestaltung werden mehrere Darstellungsvorrichtungen mit den Darstellungsdaten einer Positionsbestimmungsvorrichtung 2 versorgt.

In einer weiteren - hier nicht dargestellten - Ausführung wird ein Verkehrsteilnehmer mit einem Sender ausgestattet, so dass seine Position einem weiteren Teilnehmer dargestellt wird. Ein Beispiel ist, dass der Sender an einer Schultasche in das Sichtfeld eines Autofahrers eingeblendet wird.

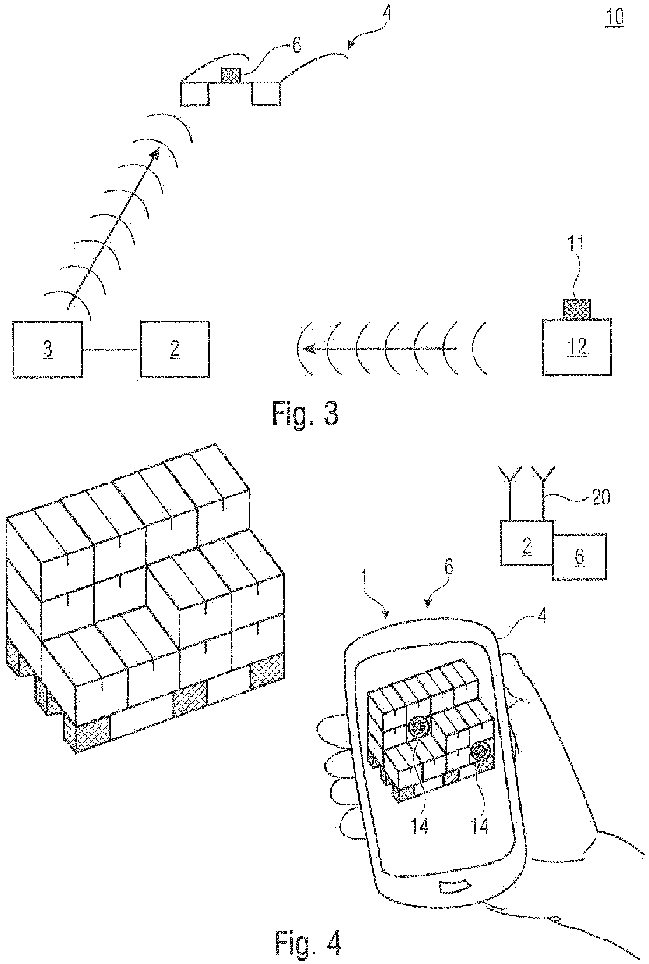

Die Fig. 3 zeigt eine alternative Ausgestaltung, bei der die Darstellungsvorrichtung 4 als Brille ausgeführt ist. Daher entfällt die Aufnahmevorrichtung.

An der Darstellungsvorrichtung 4 befindet sich ein Lagesensor 6, der es erlaubt, die Ausrichtung der Darstellungsvorrichtung 4 relativ zur Szenerie 10 zu ermitteln, so dass die passende Projizierung der Darstellungsdaten erfolgt.

Die Positionsbestimmungsvorrichtung 2 empfängt Signale von dem Sender 11 und ist hier mit der Verarbeitungsvorrichtung 3 verbunden, die beispielhaft per Funk oder über Ethernet (WLAN) die ermittelten Informationen passend zur Orientierung der Darstellungsvorrichtung 4 an die Darstellungsvorrichtung 4 kommuniziert.

Da im gezeigten Beispiel die Brille 4 vom Sender 11 abgewandt ist, würde entsprechend keine Darstellung über den Sender 11 erfolgen oder nur ein seitlicher Hinweis, dass sich der Sender 11 außerhalb des Blickfelds bzw. in welcher Richtung relativ zur Darstellungsvorrichtung 4 er sich befindet.

Die Fig. 4 zeigt ein Beispiel, in dem auf einer Darstellungsvorrichtung 4 für die gefundenen Sender, die sich hier in den dargestellten Kartons befinden sollen, durch optische Elemente 14 (sog. Icons) kenntlich gemacht werden. Die Darstellungsdaten werden somit dem visuellen Bild überlagert.

Die Aufnahmevorrichtung 1 sei dabei die in dem Smartphone vorhandene Kamera. Die Darstellung der zusätzlichen Informationen baut darauf, dass die Sender durch ihre ausgesendeten Signale eine Identifizierung erlauben. Dies geschieht beispielsweise bei RFID-Tags, die auf ein Request-Signal Identifikationsdaten aussenden. Für diese Ausgestaltung geht von der Positionsbestimmungsvorrichtung 2 beispielweise das Aufweckoder Request-Signal aus.

In einer weiteren Ausgestaltung ändert sich die Darstellung der Sender z. B. in Abhängigkeit vom Abstand der Darstellungseinheit 4 bzw. wie hier des Betrachters, dessen Hand dargestellt ist. Dies geschieht z. B. durch kleiner bzw. größer werdenden Kreise oder durch Farbänderungen bei der Darstellung der ermittelten Information. Die Darstellung erfolgt somit in einer Ausgestaltung auch dynamisch.

Wird beispielsweise ein Sender bzw. ein spezieller RFID-Tag gesucht, so wird mit dem optischen Element gesondert dessen Position angezeigt. Ist die Position in einer Datenbank hinterlegt, so kann die Anzeige auch dann geschehen, wenn der RFID-Tag nicht im Empfangsreichweite der Antennenvorrichtung befindlich ist.

In der dargestellten Ausgestaltung ist die Aufnahmevorrichtung 1, also die Kameraeinheit des Smartphones, von der Positionsbestimmungsvorrichtung 2 bzw. speziell von deren Antennenvorrichtung 20 abgesetzt. Die Lagesensoren 6 der Positionsbestimmungsvorrichtung 2, die damit insbesondere Auskunft über die Position und Ausrichtung der Antennenvorrichtung 20 gibt, und der Darstellungsvorrichtung 4 erlauben eine Umrechnung der Darstellungsdaten, um die korrekte Position der Sender in Abhängigkeit von der Beobachterposition darzustellen.

In einer Anwendung werden Störsender im Sichtbereich detektiert. Durch die Visualisierung kann ein Benutzer die Position eines Funksenders an einer für ihn unerwarteten Stelle erkennen. Beispielsweise können Signale im GPS/Galileo Band aufgrund ihrer Position (nicht auf einer Satellitenposition) und Feldstärke (sehr viel stärker als das erwartete Signal) erkannt werden.

In einer weiteren Ausgestaltung lassen sich Flugzeuge oder Drohnen (als Beispiel für UAV, d. h. unmanned, uninhabited oder unpiloted aerial vehicle) lokalisieren, da diese in der Regel eine Vielzahl von Signalen aussenden. Die Lokalisierung im Sichtbereich ist sowohl für Fluglotsen, Bodenpersonal am Flugfeld, Drohnenpiloten und Modellflugpiloten von Interesse.

Im Weiteren werden unterschiedliche Ausgestaltungen der Positionsbestimmungsvorrichtung beschrieben, die je nach Ausgestaltung als Teil der oben beschriebenen Vorrichtung zur Darstellung von Benutzerinformationen verwendet werden.

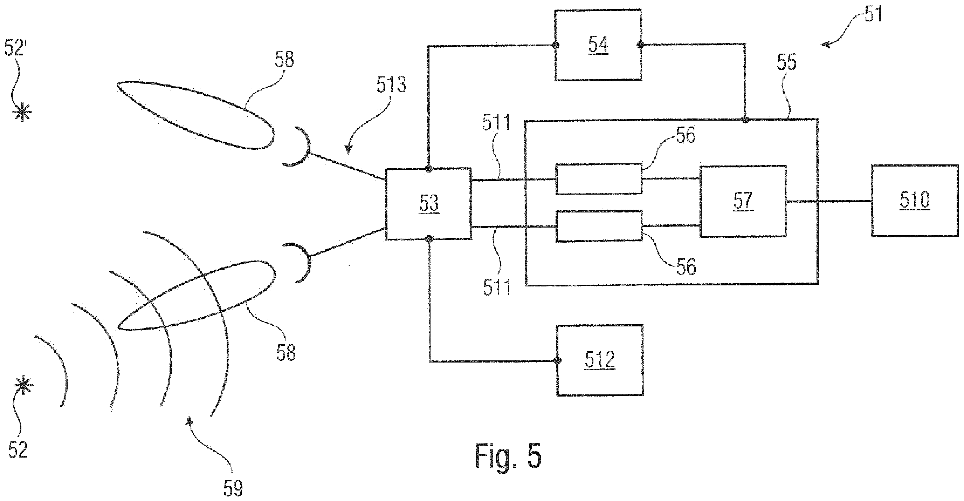

In den Abbildungen Fig. 5 bis Fig. 7 werden Ausgestaltungen einer ersten Variante der Positionsbestimmungsvorrichtung zur Bestimmung der Daten gezeigt, die über die vorgenannte Vorrichtung dargestellt werden.

Die Fig. 5 zeigt eine Anwendung einer Positionsbestimmungsvorrichtung 51 zur Bestimmung einer Information über eine Position eines Senders 52, 52'. Die damit gewonnene Information bzw. die Daten werden dann mit der zuvor beschriebenen Vorrichtung dargestellt.

In dem Beispiel der Fig. 5 werden die Positionen von zwei unterschiedlichen Sendern 52, 52' (z. B. RFID-Transponder oder allgemein Funksender) ermittelt, also lokalisiert. Dafür verfügt die Positionsbestimmungsvorrichtung 51 über eine Antennenvorrichtung 53, die mehrere Antennenelemente 513 aufweist, von denen hier beispielhaft zwei dargestellt sind. Die Steuerung der Antennenvorrichtung 53 geschieht über eine Kontrollvorrichtung 54, die auch mit einer Datenverarbeitungsvorrichtung 55 verbunden ist.

In der Datenverarbeitungsvorrichtung 55 befinden sich hier zwei ADC-Wandler 56, die die von der Antennenvorrichtung 53 empfangenen Signale in digitale Form umwandeln, und die jeweils zu einem Empfangszug gehören. In einer alternativen - nicht dargestellten - Ausgestaltung sind die ADC-Wandler Bestandteile der Antennenvorrichtung 53 (die alternativ auch als Empfänger bezeichnet werden kann), so dass die Datenverarbeitungsvorrichtung 55 direkt die digitalen Signalen empfängt. Die digitalen Signale werden dann von einer Rechenvorrichtung 57 verarbeitet.

Die Antennenvorrichtung 53 verfügt über mehrere spezifische Richtcharakteristiken 58. Die Kontrollvorrichtung 54 aktiviert die Richtcharakteristiken 58 für den Empfang der von den Sendern 52, 52' ausgehenden (sei es beispielsweise durch aktive Erzeugung oder sei es durch Reflexion) Signale 59.

Die Antennenvorrichtung 53 verfügt über Signalausgänge 511, die jeweils einer spezifischen Richtcharakteristik 58 zugeordnet sind. Die Antennenvorrichtung 53 ist weiterhin derartig ausgestaltet, dass an jedem Signalausgang 511 das Signal ausgegeben wird, welches mit der jeweils zugeordneten Richtcharakteristik 58 empfangen worden ist. Dies geschieht hier als Beispiel über eine Butler-Matrix. In einer alternativen Ausgestaltung wird ein Eigenmodennetzwerk erzeugt.

Daher empfängt in einer Ausgestaltung die Datenverarbeitungsvorrichtung 55 die empfangenen Signale von mehreren Richtcharakteristiken, d. h. von mehreren Signalausgängen 511 gleichzeitig. In einer alternativen Ausgestaltung - bei der z. B. auch nur ein Empfangszug erforderlich ist - empfängt die Datenverarbeitungsvorrichtung 55 jeweils nur das mit einer Richtcharakteristik empfangene Signal, wobei in einer Ausgestaltung nach einem vorgegebenen Schema zwischen den Richtcharakteristiken gewechselt wird.

Das Wechseln zwischen den Richtcharakteristiken erfolgt dabei in einer Ausgestaltung nach einer Art von Zwischenauswertung. Dabei wird beispielsweise eine Richtung ermittelt, aus der verstärkt die empfangenen Signale stammen, so dass bei den folgenden Messungen die Richtcharakteristiken bevorzugt werden, die sich auf diese ermittelte Richtung beziehen.

Die Datenverarbeitungsvorrichtung 55 (z. B. realisiert als DSP oder FPGA und ggf. Teil der Antennenvorrichtung 53) wertet die empfangenen Signale derartig aus, dass sie auf die Daten zurückgreift, die die Richtcharakteristiken beschreiben. Die Richtcharakteristiken bestehen insbesondere darin, dass die Antennenvorrichtung 53 eine jeweils zugeordnete Empfangsempfindlichkeit aufweist. Je nach Richtcharakteristik gibt es also räumlich verteilte Bereiche mit höherer bzw. geringerer Empfindlichkeit für den Empfang von Signalen. In einer Ausgestaltung werden die - z. B. durch Messungen und/oder theoretische Betrachtungen ermittelten - Daten über die Empfindlichkeiten so für die weitere Verarbeitung abgelegt, dass sie als Matrizen aufgefasst werden können. In einer Ausgestaltung sind die Richtcharakteristiken insbesondere jeweils durch eine Keule gekennzeichnet, die eine Hauptrichtung vorgibt.

Die Datenverarbeitungsvorrichtung 55 verarbeitet beispielsweise die digitalisierten empfangenen Signale und die Richtcharakteristiken miteinander, indem die Daten passend multipliziert werden, indem also die empfangenen Signale auf die Richtcharakteristiken abgebildet werden und sich gewichtete Empfangswerte ergeben. Bei den als Matrizen erfassten Empfindlichkeiten der Richtcharakteristiken ergibt sich pro Richtcharakteristik eine Matrix mit den gewichteten Empfangswerten. Die Multiplikation erfolgt dabei beispielsweise über den Zugriff auf bereits abgespeicherte Tabellen oder Wertepaare. Alternativ werden in einer Ausgestaltung für einzelne Richtcharakteristiken zu unterschiedlichen Zeitpunkten Signale empfangen. Dies erlaubt bei unbewegten Sendern die Verbesserung der Messgenauigkeit und erlaubt ggf. auch das Erkennen einer Bewegung eines Senders.

Um die Positionen der Sender 52, 52' zu ermitteln, werden die gewichteten Empfangswerte miteinander verarbeitet. So werden in einer Ausgestaltung die Matrizen mit den gewichteten Empfangswerten addiert. In einer weiteren Ausgestaltung werden zumindest zwei Gruppen (bzw. Teilgruppen) der gewichteten Empfangswerte jeweils aufaddiert und wird anschließend die Differenz zwischen den beiden Summen-Matrizen gebildet. Damit lassen sich beispielsweise die Signale von den zwei an unterschiedlichen Positionen befindlichen Sendern 52, 52' voneinander trennen. Für die gemeinsame Verarbeitung beziehen sich die gewichteten Empfangswerte vorzugsweise zumindest teilweise auf die gleichen räumlichen Bereiche um die Positionsbestimmungsvorrichtung 51 herum.

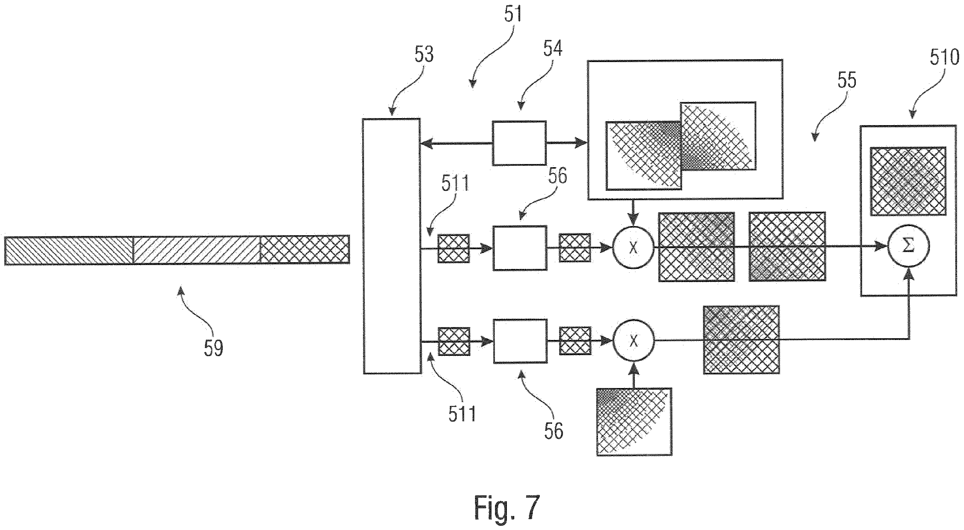

In einer Ausgestaltung werden die gewichteten Empfangswerte unter Verwendung einer vorgebbaren Farbskala (oder wie in der Fig. 7 mit einer Skala von Grautönen) auf einer Visualisierungsvorrichtung 510, z. B. einem Monitor, einem Smartphone, einem Tablet, einem Handheld oder einer Brille für virtuelle Realität dargestellt. Zu weiteren Beispielen siehe die vorangehenden Ausführungen. Dies entspricht somit der Darstellungsvorrichtung 4 der in der Fig. 1 dargestellten Ausgestaltung.

Das in den Fig. 5 bis Fig. 7 dargestellte Verfahren zur Bestimmung einer Information über eine Position mindestens eines Senders umfasst also zumindest die folgenden Schritte:

Es wird eine Richtcharakteristik der Antennenvorrichtung aktiviert, die sich auf eine bestimmte Verteilung der räumlichen Empfindlichkeit der Antennenvorrichtung bezieht. Dabei ist die jeweils zugeordnete Verteilung der Empfindlichkeit bekannt, z. B. durch vorherige Kalibrierungsmessungen oder durch die theoretische Kenntnis über die Antennenvorrichtung und deren Eigenschaften. Das Aktivieren einer Richtcharakteristik bedeutet dabei, dass die über die aktivierte Richtcharakteristik empfangenen Signale einer Auswertung bzw. einer Weiterverarbeitung zur Verfügung stehen oder z. B. registriert werden.

Mit der aktivierten Richtcharakteristik wird ein Signal des Senders empfangen und mit den Daten über die Richtcharakteristik verarbeitet, so dass sich gewichtete Empfangswerte ergeben. In einer Ausgestaltung wird die Empfindlichkeitsverteilung durch eine Matrix beschrieben, die mit den Daten des empfangenen Signals multipliziert wird.

Zu den unterschiedlichen Richtcharakteristiken wird jeweils mindestens ein Signal empfangen und ausgewertet. Aus den sich ergebenden gewichteten Empfangswerten wird schließlich die Information über die Position mindestens eines Senders ermitteln. Die Information bezieht sich dabei je nach Ausgestaltung beispielsweise auf eine Richtung oder eine Position relativ zur Positionsbestimmungsvorrichtung bzw. relativ zur Antennenvorrichtung. Die Information bezieht sich ggf. auch auf die relative Position von zwei Sendern zueinander oder auf die Veränderung der Position usw..

Die Positionsbestimmungsvorrichtung 51 weist in dem dargestellten Beispiel eine Signalquelle 512 auf, die der Erzeugung von Anregungs-, Abfrage- oder z. B. sogenannten Request Signalen dient. Die Signale der Signalquelle 512 werden mit einer gewählten Richtcharakteristik in Richtung der Sender 52, 52' ausgestrahlt. Die jeweils aktivierte Richtcharakteristik ergibt sich in einer Ausgestaltung dadurch, dass mehrere der für den Empfang der Signal verwendeten und hier den Antennenelementen zugeordneten Richtcharakteristiken gemeinsam aktiviert und daher überlagert werden.

Das Ausstrahlen der Anregungssignale erlaubt es, auch passive Sender bzw. deren Position zu vermessen, indem sie durch das Anregungssignal zum Ausstrahlen von Signalen aktiviert werden und/oder die hierfür erforderliche Energie erhalten. Letzteres bezieht sich insbesondere auf den Fall, dass es sich bei den Sendern um RFID-Tags handelt. In einer weiteren Ausgestaltung strahlen die Sender die Signale durch Reflexion aus. Dies ist z. B. der Fall, wenn es sich um eine Radaranwendung handelt. Das bedeutet, dass die Signalquelle 512 Radarsignale erzeugt und dass die Sender 52, 52' als Reflektoren wirken.

Optional sind ein Datenspeicher und/oder eine Kontrolleinheit (z. B. ein Server-PC) vorhanden. Auf die Datenverarbeitungsvorrichtung 55 können damit durch Steuerungsdaten noch ein Server und ggf. weitere Clients einwirken.

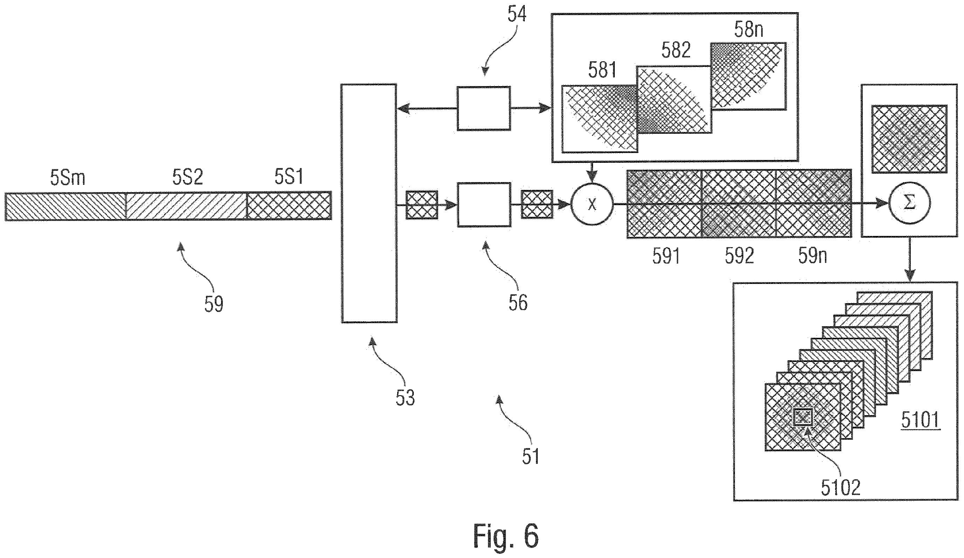

Das Prinzip der Informationsermittlung verdeutlicht besonders im Hinblick auf die Auswertung die Fig. 6 anhand einer Ausgestaltung.

Ein - hier nicht dargestellter - Sender sendet Signale 5S1, 5S2 ... 5Sm aus, welche hier als Symbole interpretiert werden. Die Signale 5S1, 5S2 ... 5Sm werden von einer Mehrkeulenantenne 53 empfangen. Die Kontrolleinheit 54 aktiviert nach einem vorgegebenen Muster die Keulen der Mehrkeulenantenne 53 bzw. aktiviert die unterschiedlichen Richtcharakteristiken. Das Muster zum Wechsel zwischen den Richtcharakteristiken erfolgt in einer Ausgestaltung nach Zufall. In einer anderen Ausgestaltung sind ausgezeichnete Richtungen vorgesehen, so dass bevorzugt die Keulen aktiviert werden, die in diese ausgezeichneten Richtungen weisen.

Die Signale 59 aus der angesteuerten Keule werden von einem Empfangszug demoduliert und digitalisiert.

Die digitalisierten Signale werden jeweils mit der Richtcharakteristik 581, 582 ... 58n multipliziert, die der durch die Kontrolleinheit 54 selektierten Keulen zugeordnet ist (siehe das Multiplikationszeichen und den oberen Kasten mit hier drei Richtcharakteristiken). Damit ergibt sich jeweils eine Matrix mit gewichteten Empfangswerten 591, 592, ..., 59n.

Die Matrizen 591, 592, ..., 59n werden aufsummiert (dargestellt durch ein Summenzeichen $\Sigma$) und werden hier beispielsweise in einem Speicher 5101 abgelegt.

In einer alternativen Ausgestaltung wird eine Untermenge (oder Gruppe) der Matrizen aufsummiert. Es können weiterhin verschiedene Untermengen der Matrizen gebildet und aufsummiert werden. Dies ermöglicht die Erkennung von Mehrwegen der Signale oder das Erkennen von mehreren Funksignalen bzw. Sendern.

So wird in einer Ausgestaltung eine Untermenge U1 aus den Matrizen 591 und 592 gebildet. Eine weitere Untermenge U2 wird aus den Matrizen 591, 592 und 593 gebildet usw.. Der Vergleich zwischen den aufsummierten Untermengen kann Aufschluss über die Anzahl der Funksender bzw. -Transponder und das Vorhandensein von Mehrwegen geben. Die Untermengen oder Gruppen können überlappend oder nicht-überlappend sein.

Aus den abgespeicherten Matrizen wird im dargestellten Beispiel das gewünschte Signal 5102 entnommen.

Alternativ wird wenigstens eine Matrix der gewichteten Empfangswerte als Empfangswertematrix an eine Visualisierungseinheit übergeben. Eine visuelle Richtungsbestimmung erfolgt vorzugsweise durch eine Kolorierung der Matrixwerte. Optional kann auch das Maximum der Matrix gesucht und markiert werden. Optional kann ein gewünschtes Feld der Matrix digital weiterverarbeitet werden oder über einen Digital zu Analogumsetzer an eine weitere Verarbeitungseinheit übergeben werden.

Die Fig. 7 zeigt eine parallele Verarbeitung mehrerer Empfangszüge - also Pfade zum Empfangen von Signalen von der Antenne zur Auswertevorrichtung - bei Verwendung einer Merkeulenantenne 53 mit mehreren Ausgängen 511 : Eine parallele Verarbeitung mehrerer Empfangszüge ist hier ermöglicht durch Verwendung einer Mehrkeulenantenne 53 mit mehreren (hier zwei) Ausgängen 511 und vorzugsweise mehreren Empfangszügen.

Stehen mehrere Ausgänge 511 der Mehrkeulenantenne 53 und daher mehrere Empfangszüge zur Verfügung, so können auch mehrere Pfade in der Datenverarbeitungsvorrichtung 55 verarbeitet werden. Dies bezieht sich insbesondere auf den Fall, dass die Mehrkeulenantenne 53 auch in dem Fall, dass nur eine Richtcharakteristik aktiviert ist, auch die mit den anderen Richtcharakteristiken empfangenen Signale ausgeben kann. Hierfür ist beispielsweise die Butler-Matrix in der Antennenvorrichtung 53 realisiert.

In einer Ausgestaltung beschränkt sich die Auswertung auf die Multiplikation der empfangenen Signale mit den Daten der jeweiligen Richtcharakteristik. In einer Ausgestaltung werden auch lediglich diese gewichteten Empfangswerte aufaddiert, so dass auch hier kaum Verarbeitungsaufwand entsteht. Insbesondere werden keine komplexen Daten benötigt.

In einer Ausgestaltung, die den Verarbeitungsaufwand weiter reduziert, werden die zu verarbeitenden Datenmengen reduziert, indem von den in Form von Matrizen vorliegenden Daten nur ausgewählte Teilbereiche, die gewünschten Richtungen entsprechen, ausgewertet werden.

Die Antennenvorrichtung weist in einer Ausgestaltung mehrere Einzelantennen auf, welche durch eine Schaltmatrix an die Empfangseinheit angeschlossen werden.

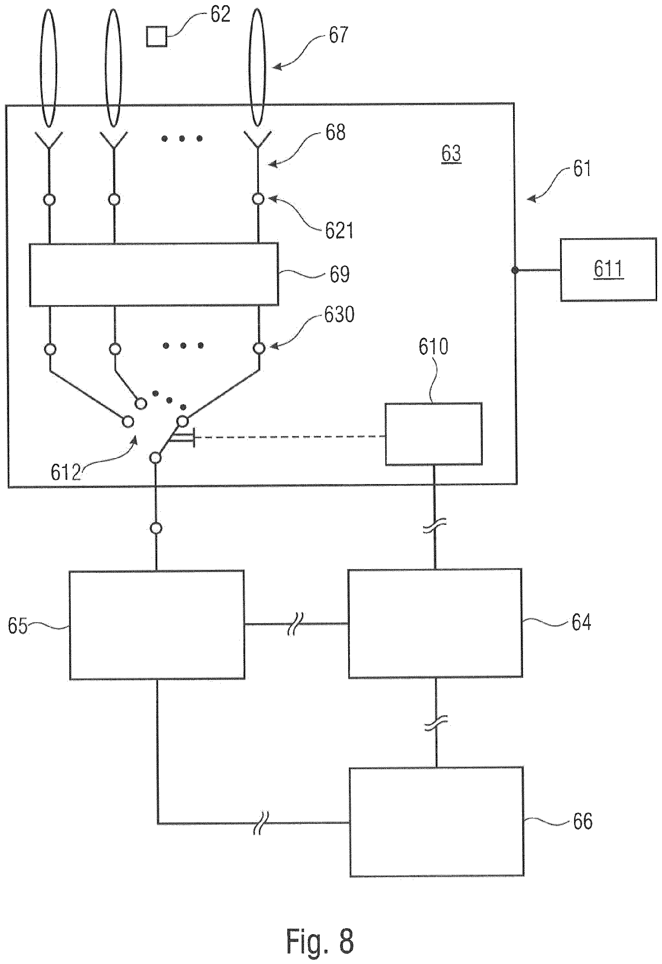

In den Abbildungen Fig. 8 bis Fig. 11 werden Ausgestaltungen einer zweiten Variante der Positionsbestimmungsvorrichtung gezeigt.

Die Fig. 8 zeigt eine Anwendung der Positionsbestimmungsvorrichtung 61 zur Ermittlung der Position eines Senders 62.

Für diesen Zweck verfügt die Positionsbestimmungsvorrichtung 61 über eine Antennenvorrichtung 63, die mehrere Antennenelemente 68 aufweist, über eine Steuervorrichtung 64, eine Signalverarbeitungsvorrichtung 65 sowie eine Datenverarbeitungsvorrichtung 66. Die Antennenvorrichtung 63 ist hier eine Mehrkeulen- bzw. Multibeam-Antenne.

Die Steuervorrichtung 64 wirkt auf die Antennenvorrichtung 63 ein, um vorzugeben, welche Richtcharakteristik 67 geschaltet werden soll, so dass das über diese Richtcharakteristik empfangene Signal der Signalverarbeitungsvorrichtung 65 zugeführt wird. Die von der Antennenvorrichtung 63 empfangenen Signale werden dabei durch das Speisenetzwerk 69 den einzelnen Richtcharakteristiken 67 zugehörig ausgegeben. Hier ist jedem der n Antennenelemente 68 der Antennenvorrichtung 63 eine Richtcharakteristik 67 und wiederum einer der n Antenneneingänge 621 (eine alternative Bezeichnung ist Ausgangstore) des Speisenetzwerks 69 zugeordnet. Die m Signaleingänge 620 des Speisenetzwerks 69 werden dabei jeweils über den dargestellten Schalter 612 einzeln mit der Signalverarbeitungsvorrichtung 65 verbunden, so dass auch nur das empfangene Signal dieser einen Richtcharakteristik weiterverarbeitet wird. Hiermit lässt sich dann eine bestimmte Richtcharakteristik $\vec{C}_k$ auswählen bzw. schalten.

Alternativ sind mehrere - hier nicht dargestellte - Signalverarbeitungsvorrichtungen 65 vorhanden, die jeweils ein mit einer Richtcharakteristik empfangenes Signal auswerten. Eine solche Ausgestaltung erlaubt daher eine parallele Auswertung von mit mehreren Richtcharakteristiken verbundenen Signalen. Für diese Ausgestaltung ist insbesondere vorgesehen, dass das Speisenetzwerk 69 z. B. als Butler-Matrix ausgeführt ist. Oder allgemein: Das Speisenetzwerk 69 stellt für jede Richtcharakteristik, mit der die Antennenvorrichtung 63 Signale empfangen hat, die jeweils entsprechend getrennten Signale zur Verfügung. Daher gibt in dieser Ausgestaltung das Speisenetzwerk 69 an den m Signaleingängen 620 jeweils die über eine zugeordnete Richtcharakteristik 67 empfangenen Signale aus. Die n Antennenelemente 68 sind dabei mit n Antenneneingängen 621 des Speisenetzwerks 69 verbunden.

In der dargestellten Ausgestaltung ist jedoch eine einzige Signalverarbeitungsvorrichtung 65 ausreichend, für die jeweils eine Richtcharakteristik 67 geschaltet wird, indem eine Verbindung zwischen dem Signaleingang 620 der jeweils gewünschten Richtcharakteristik 67 und der Signalverarbeitungsvorrichtung 65 hergestellt wird. Hier dienen die Signaleingänge 620 somit der Ausgabe der empfangenen Signale. Die Eigenschaft als Signaleingang 620 ergibt sich, da sie als Eingang für die Anregungssignale dienen.

Die Signalverarbeitungsvorrichtung 65 ermittelt aus den empfangenen Signalen jeweils einen Amplitudenwert der Feldstärke der Signale. Es wird also quasi ein Maß für die Signalstärke erzeugt. Gleichzeitig ergibt sich so pro Messung bzw. pro geschalteter Richtcharakteristik nur ein Wert.

In einer Ausgestaltung ist die Signalverarbeitungsvorrichtung 65 insbesondere so ausgestaltet, dass sie aus dem jeweils empfangenen Signal auch eine Information extrahiert, die der Sender dem von ihm ausgehenden Signal aufgeprägt hat. So handelt es sich bei den Informationen beispielsweise um Messwerte, die der Sender 62 überträgt oder beispielsweise zumindest um ein Identifikationszeichen des Senders 62.

Die Signalverarbeitungsvorrichtung 65 reduziert die empfangenen Signale insbesondere nur auf den Amplitudenwert, so dass die an sich komplexen Signale - mit Betrag und Phase - auf einen Messwert reduziert werden. Die mit dem Signal übertragene Information ist dabei getrennt von den physikalischen Eigenschaften zu betrachten.

Daher werden - unter Verwendung einer Steuerlogik 610, die hier ein Teil der Antennenvorrichtung 63 ist - mehrere Richtcharakteristiken 67 geschaltet und wird jeweils der Amplitudenwert ermittelt. Basierend auf den ermittelten Amplitudenwerten und dem Wissen um die Empfindlichkeitsverteilung der Richtcharakteristiken 67 wird anschließend die Position des Senders 62 ermittelt. Hierfür dient die Datenverarbeitungsvorrichtung 66, die ggf. auch über einen Datenspeicher, z. B. zum Abspeichern der Daten über die Richtcharakteristiken, verfügt.

Die Richtcharakteristiken 67 weisen jeweils durch ihre Keulenform eine Hauptrichtung auf. Daher werden durch die unterschiedlichen Richtcharakteristiken 67 Signale aus unterschiedlichen Richtungen und Bereichen empfangen, so dass letztendlich über die Amplitudenwerte und die zugehörigen Verteilungen der Empfangsempfindlichkeiten der Richtcharakteristiken - also aus den den Richtcharakteristiken zugeordneten und diese in Bezug auf ihre Empfangsempfindlichkeiten beschreibenden Daten - die Position des Senders 62 bestimmbar wird.

Es sei ein Beispiel betrachtet, in dem der Sender 62 in einem Bereich liegt, aus dem Signale nur mit einer Richtcharakteristik 67 empfangen werden können. Daher lässt sich nur mit dieser Richtcharakteristik ein Signal empfangen bzw. nur mit dieser Richtcharakteristik ergibt sich ein Amplitudenwert ungleich Null. Daher kann aus den Amplitudenwerten auf die Richtung geschlossen werden, in der sich der Sender relativ zur Antennenvorrichtung 63 befindet.

Ist weiterhin ein Maß für die vom Sender 62 zu erwartende Feldstärke bekannt, so erlaubt in einer Ausgestaltung der ermittelte Amplitudenwert auch eine Aussage über den Abstand zur Antennenvorrichtung, insofern beispielsweise die Empfangsempfindlichkeit mit wachsendem Abstand abnimmt.

Zudem verfügt die Positionsbestimmungsvorrichtung 61 über eine Signalquelle 611, um unter Verwendung der unterschiedlichen Richtcharakteristiken Anregungssignale in Richtung des Senders 62 zu senden. Hierdurch kann der Sender 62 rein passiv sein, indem es sich z. B. um einen RFID-Tag handelt, der mit einem Antwortsignal auf das Anregungssignal reagiert. Oder es handelt sich beispielsweise um eine Radar-Anwendung, in welcher die von dem Sender 62 ausgehenden Signale Reflexionssignale sind. In einer - nicht dargestellten - Ausgestaltung ist die Signalquelle 611 ein Bestandteil der Signalverarbeitungsvorrichtung 65, die beispielsweise ein RFID-Lesegerät ist.

Bei der Signalverarbeitungsvorrichtung 65 handelt es sich für die Anwendung mit einem RFID-Tag als Sender 62 insbesondere um einen üblichen RFID-Reader oder um ein sog. RFID-Lesegerät. Eine solche RFID-Lesevorrichtung 65 wertet ein von einem RFID-Tag stammendes Signal aus, indem sie zum einen die Daten extrahiert, die der RFID-Tag übermittelt, z. B. Identifikationsdaten, und indem sie zum anderen einen sogenannten "Received Signal Strength Indicator" (RSSI)-Wert erzeugt, der ein Indikator für die Feldstärke der empfangenen Signale ist.

Im Weiteren seien die technischen Grundlagen der zweiten Variante der Positionsbestimmungsvorrichtung noch einmal erläutert.

Es wird ausgegangen von einem Gesamt-Raumbereich, in dem sich der Sender 62 befinden kann und der durch die Richtcharakteristiken der Antennenvorrichtung 63 abgedeckt wird.

Der Gesamt-Raumbereich bzw. Ausleuchtbereich $\Omega$ ist wie folgt gegeben:

$$\Omega = \left\{ \vec{\omega} = \begin{pmatrix} \phi \\ \theta \end{pmatrix} : \phi_l \leq \phi \leq \phi_u \ \& \ \theta_l \leq \theta \leq \theta_u \right\} \tag{1}$$

Dabei ist $\varphi$ der Azimutwinkel und $\theta$ der Co-Elevation-Winkel. Die Winkel haben jeweils eine unter Grenze $\varphi_l$ und $\theta_l$ sowie eine obere Grenze $\varphi_u$ und $\theta_u$. Es werden jeweils räumliche Sektoren $\Omega_{i,j}$ gebildet, mit denen jeweils eine Richtcharakteristik $\vec{C}_k$ der Antennenvorrichtung korrespondiert.

Die Richtcharakteristiken $\vec{C}_k$ zeichnen sich in einer Ausgestaltung dadurch aus, dass sie ihr globales Maximum in einem zugehörigen Sektor aufweisen. Zudem treten bis zu einem bestimmten vorgebbaren Pegelabstand unterhalb des globalen Maximums keine weiteren Maxima in einem der übrigen Sektoren auf.

Der Sektor $\Omega_{i,j}$ ist gegeben durch die Definition:

$$\Omega_{ij} = \left\{ \vec{\omega} = \begin{pmatrix} \phi \\ \theta \end{pmatrix} : \phi_{l,i} \leq \phi \leq \phi_{u,i} \ \& \ \theta_{l,j} \leq \theta \leq \theta_{u,j} \right\} \subset \Omega \tag{2}$$

mit i = 1, … μ und j = 1, … ν. $\tag{3}$

Dabei gilt:

$$\Omega = \bigcup_{(i)} \bigcup_{(j)} \Omega_{ij} \tag{4}$$

Aus dem Zusammenhang (3) ergibt sich die Anzahl der Sektoren zu μ* ν.

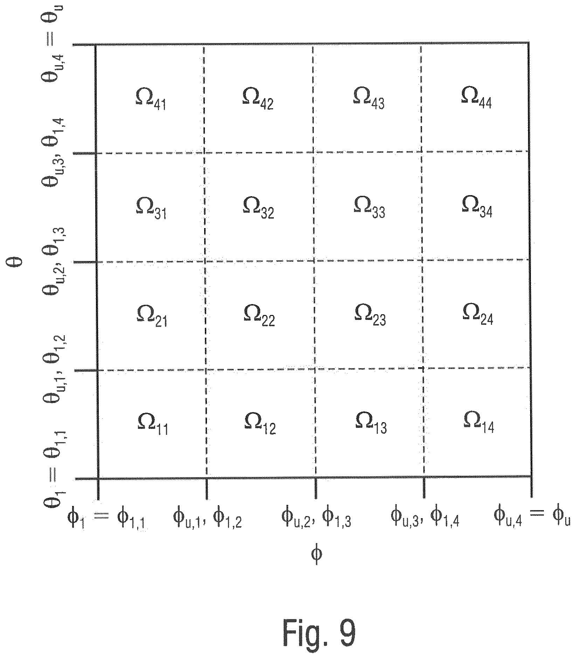

Die Fig. 9 zeigt beispielhaft die Einteilung des Ausleuchtbereichs $\Omega$ (gemäß der Definition (1)) in 16 Sektoren

$\Omega_{ij}$ (gemäß der Definition in (2)) mit $\mu = v = 4$.

Dem Sektor $\Omega_{ij}$ ist folgende Richtcharakteristik zugeordnet:

$$\vec{C}_k = \vec{C}_k(\vec{\omega}) = \vec{C}_k(\phi, \theta) = \begin{pmatrix} C_k^{(co)} \\ C_k^{(cross)} \end{pmatrix} \qquad \text{mit } k = v * (j - 1) + i, \qquad (5)$$

mit der co-polarisierten Komponente $C_k^{(co)}$ und der kreuzpolarisierten Komponente $C_k^{(cross)}$ .

Die Richtcharakteristik weist ihr globales betragsmäßiges Maximum im Intervall $\varphi_{1,i} \le \varphi \le \varphi_{u,i}$ und $\theta_{1,j} \le \theta \le \theta_{u,j}$ auf.

Dabei lässt sich die Zuordnung zwischen (i, j) und k in der Zuordnung (5) beliebig wählen, sofern gilt: max{k} = $\mu * v$. Eine alternative Zuordnung ist: $k = \mu * (i - 1) + j$.

Die Richtcharakteristiken werden durch ein entsprechendes Speisenetzwerk 69 eingestellt. Jeder Signaleingang (alternative Bezeichnung ist: Eingangstor) 620 des Speisenetzwerks 69 korrespondiert dabei mit einer bestimmten Richtcharakteristik 67, wie in Fig. 8 für eine Mehrkeulenantenne skizziert.

Bei den Richtcharakteristiken $\vec{C}_k$ handelt es sich insbesondere um sogenannte Torrichtcharakteristiken. Das Speisenetzwerk 69 ist in einer Ausgestaltung ein Eigenmode-Netzwerk. In einer weiteren Ausgestaltung ist das Speisenetzwerk 69 als Butler-Matrix realisiert, deren Signaleingänge 620 mit zueinander orthogonalen Speisevektoren korrespondieren. Alternativ handelt es sich um ein Netzwerk 69, das beliebig zueinander orientierte Speisevektoren erzeugt.

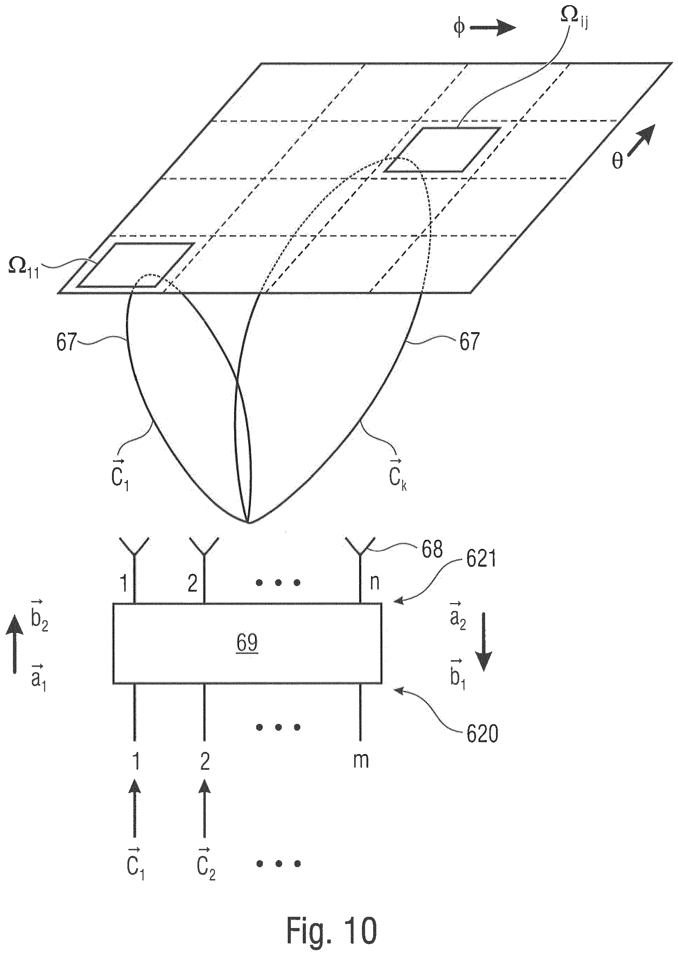

In der Fig. 10 korrespondiert jedes Tor am Eingang (also jeder Signaleingang) 620 der Antennenvorrichtung 63 bzw. des Speisenetzwerks 69 mit einer Richtcharakteristik $\vec{C}_k$ gemäß Gleichung (5), die zu einem Strahlungsmaximum im Sektor $\Omega_{ij}$ (gemäß der Gleichung (2)) führt.

Dabei verfügt die hier beispielhafte Mehrkeulenantenne als Antennenvorrichtung 63 über n Antennenelemente, die an den n Antenneneingängen 621 des Speisenetzwerks 69 angeschlossen und über die m Signaleingänge 620 angeregt bzw. geschaltet werden.

In Verbindung mit Fig. 10 (siehe die beiden Vektoren auf der linken Seite mit dem Pfeil nach oben) wird im Folgenden das Aussenden von Signalen über die Antennenvorrichtung bzw. dessen Antennenelemente 68 beschrieben.

Es sei

$$\vec{a}_{1,k} = \begin{pmatrix} 0 \\ \vdots \\ 1 \\ \vdots \\ 0 \end{pmatrix} \qquad (6)$$

der Eingangsvektor, der nur das k-te Eingangstor 620 (untere Ebene des Speisenetzwerks 69) anregt. Mit der Streumatrix des Speisenetzwerks 69

$$\tilde{S} = \begin{pmatrix} \tilde{S}_{11} & \tilde{S}_{12} \\ \tilde{S}_{21} & \tilde{S}_{22} \end{pmatrix} \qquad (7)$$

ergibt sich der Anregungsvektor am Ausgang des Netzwerks (obere Ebene mit den Antennenelementen 68) zu

$$\vec{b}_{2,k} = \vec{q}_k = \tilde{S}_{21}\, \vec{a}_{1,k} \qquad (8)$$

mit dem Vektor $\vec{q}_k$, der die Richtcharakteristik $\vec{C}_k$ hervorruft.

Werden mehrere Signaleingänge 620 (eine alternative Bezeichnung ist Tore) gleichzeitig gespeist, so erfolgt eine gewichtete Überlagerung der zu den Toren 620 zugeordneten Richtcharakteristiken. Für die Ausstrahlung der Anregungssignale werden also die Richtcharakteristiken miteinander kombiniert.

Beim Beispiel der Fig. 10 (linke Seite) wird der Eingangsvektor $\vec{a}_1$ der Formel (8) als Vektor des Anregungssignals anteilig auf die Speisevektoren $\vec{q}_i$ aufgeteilt.

Der Empfangsfall wird anhand der auf der rechten Seiten befindlichen Vektoren (verbunden durch den schematischen Pfeil nach unten) der Fig. 10 erläutert, wobei der Ein-gangsvektor $\vec{a}_2$ entsprechend der Gleichung (9) in seine Anteile der einzelnen Richtcharakteristiken 67 zerlegt wird.

Wird ein Signal aus einer bestimmten Richtung empfangen, dann liegt an der oberen Ebene des Speisenetzwerks 69 der Vektor $\vec{a}_2$ vor.

$$\tilde{S}_{12} = \tilde{S}_{21}^{\mathrm{T}}$$

Da das Netzwerk 69 in der hier beschriebenen Ausgestaltung passiv ist, gilt

Somit transformiert sich $\vec{a}_2$ auf die untere Ebene des Speisenetzwerks 69 in der Form

$$\vec{b}_1 = \tilde{S}_{12}\,\vec{a}_2 = \tilde{S}_{21}^{\mathrm{T}}\,\vec{a}_2 = \begin{pmatrix} \vec{q}_1^{\mathrm{T}} \\ \vdots \\ \vec{q}_k^{\mathrm{T}} \\ \vdots \\ \vec{q}_m^{\mathrm{T}} \end{pmatrix} \vec{a}_2 \qquad (9)$$

Der Term $\vec{q}_k^{\mathrm{T}}\,\vec{a}_2$ entspricht dabei der Projektion des Vektors der Empfangssignale der Antennenelemente 68 auf den Vektor $\vec{q}_k$, der zur Richtcharakteristik $\vec{C}_k$ führt. $\vec{a}_2$ wird somit in die Anteile zerlegt, die in den einzelnen $\vec{C}_k$ auftreten.

Es sei angenommen, dass die Vektoren $\vec{q}_k$ und $\vec{q}_l$ mit (k, l) = 1, ... m und k ungleich l paarweise orthogonal sind. Weiterhin soll ein Signal aus der Hauptstrahlungsrichtung der Charakteristik $\vec{C}_k$ empfangen werden. Daher gilt

$$\vec{a}_2 = c\,\vec{q}_k^{*}$$ mit einer beliebigen reellen Konstante c > 0, die als Maß für die Empfangsamplitude zu verstehen ist.

Dann ergibt sich $\vec{b}_1 = c\vec{a}_{1,k}$. Somit liegt nur an dem Antenneneingang 621 ein Signal an, das mit der Richtcharakteristik $C_k$ korrespondiert. In den übrigen Charakteristiken $\vec{C}_l$ (l ≠ k) sind keine Signalanteile enthalten.

Daher kann mithilfe des Signals $\vec{b}_1$, das das nach den einzelnen Richtcharakteristiken aufgeteilte Empfangssignal $\vec{a}_2$ beschreibt, auf die Einfallsrichtung des jeweils empfangenen Signals geschlossen werden.

Das Verfahren zur Identifikation gemäß der zweiten Variante gestaltet sich in einer Ausgestaltung wie folgt:

- Es wird eine Richtcharakteristik $\vec{C}_k$ geschaltet. Hierbei wird in einer Ausgestaltung insbesondere eines der Eingangstore 620 des Speisenetzwerks 69 ausgewählt und mit der Signalverarbeitungsvorrichtung 65 bzw. auch mit der Signalquelle 611 verbunden.
- Die Antennenvorrichtung 63 sendet ein Anregungs- oder Abfrage-Signal über die gewählte Richtcharakteristik aus.
- Die mit der Richtcharakteristik erreichten bzw. angeregten oder aufgeweckten Transponder 62 (oder RFID-Tags als Beispiele für die hier beschriebenen Sender) senden ein Antwortsignal zurück, das u. a. die Identifikation des Transponder enthält.
- Das Antwortsignal wird über die Antennenvorrichtung empfangen und der Teil des Signals, der mit der gewählten Richtcharakteristik $\vec{C}_k$ korrespondiert, steht dem Lesegerät als Ausgestaltung der Signalverarbeitungsvorrichtung 65 zur Verfügung.
- Das Lesegerät 65 wertet das Antwortsignal aus und stellt die Identifikation des Transponder und ein Maß für die Stärke des empfangenen Signals (RSSI-Wert) zur Verfügung.

Damit kann der Transponder (allgemein der Sender) zur aktuell gewählten (bzw. geschalteten) Richtcharakteristik zugeordnet werden.

Dieser Ablauf wird für mehrere Richtcharakteristiken 67 durchgeführt. Es werden also die Signalanteile in den

einzelnen $\vec{C}_k$ nacheinander ausgelesen und die Transpondersignale bzw. die Amplitudenbeträge können den Richtcharakteristiken zugewiesen werden. Somit wird insgesamt ein Vektor für die Position des Senders konstruiert. Die Werte der Einträge ergeben sich aus den Beträgen der Feldstärken der jeweils empfangenen Signale und die Basisvektoren ergeben sich aus den zugeordneten Richtcharakteristiken, z. B. der jeweiligen Richtung der Keule.

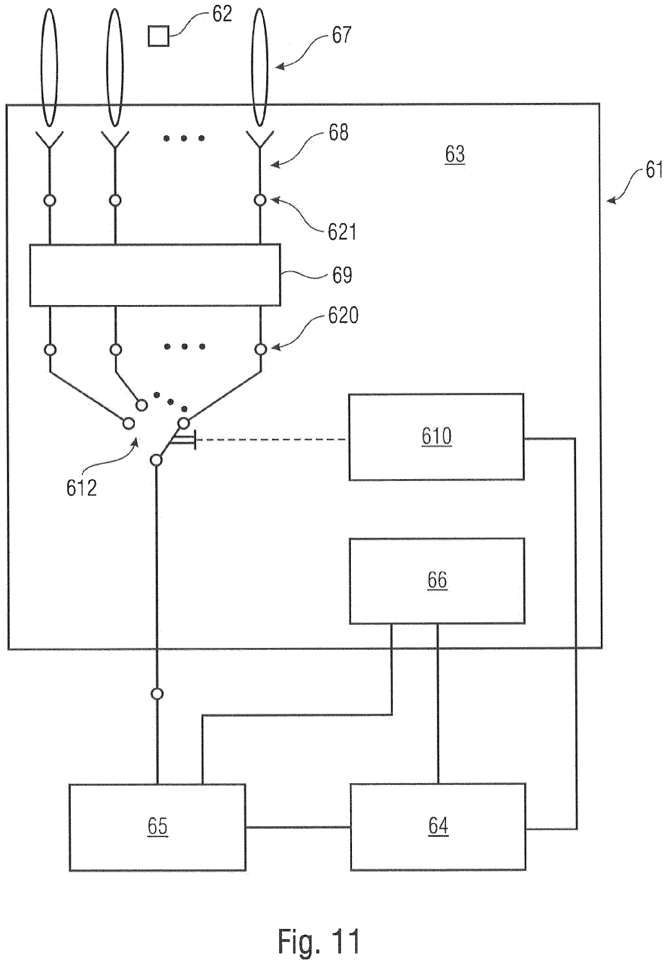

Die Fig. 11 zeigt eine alternative Ausgestaltung der Positionsbestimmungsvorrichtung 61 der zweiten Variante. Die Antennenvorrichtung 63 ist dabei ebenfalls als Mehrkeulenantenne ausgestaltet und weist die Steuerlogik 610 und die Datenverarbeitungsvorrichtung 66 auf.

Es folgt eine Betrachtung der Auswertung der empfangenen Signale bzw. der Ermittlung der Information über die Position des Senders 62.

Um die Richtung der Transponder (bzw. allgemein Sender und zwar unabhängig davon, ob es sich um aktive oder passive Sender handelt) bestimmen zu können, wäre es einfacher, wenn die Antwortsignale (oder allgemein die empfangenen Signale) in komplexer Form vorliegen, d. h. mit Betrag und Phase. Ein übliches RFID-Lesegerät (oder RFID-Receiver oder RFID-Reader genannt) stellt jedoch lediglich Amplituden in Form von RSSI-Werten zur Verfügung. Mit der Aufteilung des Ausleuchtbereichs $\Omega$ in die einzelnen Sektoren $\Omega_{ij}$ gemäß den Gleichungen (2) und (4) kann auf die komplexen Signale an den Antennenelementen 68 geschlossen werden, wie nachfolgend ausgeführt.

Anstatt der komplexen Signale $\vec{b}_1$ (vergleiche Gleichung (9) und Fig. 10) sind nach der oben beschriebenen Identifikation des Senders bzw. RFID-Tags die Amplituden der einzelnen Komponenten von $\vec{b}_1$. Man erhält also folgenden Vektor:

$$\hat{\vec{b}}_1 = \begin{pmatrix} \hat{b}_{1,1} \\ \vdots \\ \hat{b}_{1,k} \\ \vdots \\ \hat{b}_{1,m} \end{pmatrix} = \begin{pmatrix} |\vec{q}_1^{\mathrm{T}}\, \vec{a}_2| \\ \vdots \\ |\vec{q}_k^{\mathrm{T}}\, \vec{a}_2| \\ \vdots \\ |\vec{q}_m^{\mathrm{T}}\, \vec{a}_2| \end{pmatrix} \tag{10}$$

Wie $\vec{b}_1$ ist auch der Vektor $\hat{\vec{b}}_1$ von der Einfallsrichtung des Empfangssignal abhängig. Durch die eindeutige Zuordnung einer Richtcharakteristik $\vec{C}_k$ zu einem bestimmten Ausleuchtbereich $\Omega_{ij}$ ist jedoch zu jeder Einfallsrichtung auch ein eindeutiger Vektor von RSSI-Werten $\hat{\vec{b}}_1$ zuzuordnen.

Für eine bestimmte Einfallsrichtung $\vec{\omega_0}$ ergibt sich $\hat{\vec{b}}_1(\vec{\omega_0})$ nur für $\vec{\omega} = \vec{\omega_0}$ und für keine andere Einfallsrichtungen. Die Phase der Signale verbirgt sich somit inhärent in den einzelnen Richtcharakteristiken. Damit kann eine Abbildung der Form

$$f : \hat{\vec{b}}_1(\vec{\omega}) \mapsto \vec{b}_1(\vec{\omega}) \tag{11}$$

bzw.

$$f : \hat{\vec{b}}_1(\vec{\omega}) \mapsto \vec{a}_2(\vec{\omega}) \tag{12}$$

definiert werden.

Um die Zuordnung zwischen $\hat{\vec{b}}_1(\vec{\omega})$ und $\vec{b}_1(\vec{\omega})$ bzw. $\vec{a}_2(\vec{\omega})$ treffen zu können, müssen die möglichen komplexen Vektoren für verschiedene Einfallswinkel zunächst ermittelt werden. Es muss also die Richtcharakteristik und deren räumliche Verteilung der Empfangsempfindlichkeit (bzw. in der Regel damit auch deren Eigenschaften in Bezug auf die räumliche Verteilung des Sendens) ermittelt werden. Dies kann durch Simulation oder Messung des Array erfolgen, bei der über dem Ausleuchtnereich $\Omega$ - gemäß der Definiti-on in (1) - die Vektoren für alle Einfallswinkel aufgenommen werden. Der Ausleuchtbereich wird dabei diskret durchlaufen, so dass sich schließlich eine abzählbare (endliche) Menge von bekannten Einfallswinkeln $\vec{\omega}_l$ und damit Vektoren $\vec{b}_1^{(s)}(\vec{\omega}_l)$ bzw. $\vec{a}_2^{(s)}(\vec{\omega}_l)$ ergibt. Die Hochstellung von (s) zeigt an, dass es sich um die für diskrete Einfallswinkel ermittelten Vektoren handelt. Prinzipiell handelt es sich um Steering-Vektoren.

Die Zuordnung zum komplexen Vektor entspricht damit einer Suche, bei der im Sinne des kleinsten quadratischen Fehlers der komplexe Vektor $\vec{b}_1'^{(s)} = \tilde{S}^{\mathrm{T}}\,\vec{a}_2'^{(s)}$ ermittelt wird, für den die Norm:

$$\left\| \hat{\vec{b}}_1 - \hat{\vec{b}}_1^{(s)}(\vec{\omega}_l) \right\| \tag{13}$$

mit dem Vektor:

$$\hat{\vec{b}}_1^{(s)}(\vec{\omega}_l) = \begin{pmatrix} \left| b_{1,1}^{(s)}(\vec{\omega}_l) \right| \\ \vdots \\ \left| b_{1,k}^{(s)}(\vec{\omega}_l) \right| \\ \vdots \\ \left| b_{1,m}^{(s)}(\vec{\omega}_l) \right| \end{pmatrix} = \begin{pmatrix} \left| \vec{q}_1^{\mathrm{T}}\,\vec{a}_2^{(s)}(\vec{\omega}_l) \right| \\ \vdots \\ \left| \vec{q}_k^{\mathrm{T}}\,\vec{a}_2^{(s)}(\vec{\omega}_l) \right| \\ \vdots \\ \left| \vec{q}_m^{\mathrm{T}}\,\vec{a}_2^{(s)}(\vec{\omega}_l) \right| \end{pmatrix} \tag{14}$$

minimal wird.

Dies bedeutet:

$$\left\| \hat{\vec{b}}_1 - \hat{\vec{b}}_1'^{(s)} \right\| = \min_l \left\| \hat{\vec{b}}_1 - \hat{\vec{b}}_1^{(s)}(\vec{\omega}_l) \right\| \tag{15}$$

Wie aus der Gleichung (14) hervorgeht, können einerseits die Vektoren $\vec{a}_2^{(s)}(\vec{\omega}_l)$ an den Antennenfußpunkten gemessen und die Vektoren $\vec{b}_1^{(s)}(\vec{\omega}_l)$ rechnerisch über die Streumatrix $\tilde{S}_{21}^{\mathrm{T}}$ ermittelt werden. Es ist somit ausreichend, die Richtcharakteristiken der einzelnen Antennenelemente im Array ohne das Speisenetzwerk zu bestimmen. Andererseits können die Torrichtcharakteristiken des Array, d. h. mit Speisenetzwerk, gemessen und somit die Vektoren $\vec{b}_1^{(s)}(\vec{\omega}_l)$ direkt ermittelt werden.

Der Einfallswinkel $\vec{\omega} \in \{\vec{\omega}_l\}$ ergibt sich direkt aus dem komplexen Vektor $\vec{b}_1'^{(s)}$ bzw. $\vec{a}_2'^{(s)}$ oder aus einem

beliebigen Richtungsschätzalgorithmus, der auf den Vektor angewendet wird. Es ist weiterhin möglich, einen zeitlichen Mittelwert über mehrere aufeinanderfolgende Einfallswinkel zu bestimmen, die über mehrere Schaltzyklen ermittelt werden. Damit verringert sich die Varianz des geschätzten Winkels und somit die Messunsicherheit. In der Praxis sind vorhandene Nebenmaxima der Richtcharakteristiken auf einen bestimmten maximalen Pegel bezogen auf den Pegel des Hauptmaximums in der Regel zu begrenzen, um robust gegenüber möglichen Unsicherheiten durch überlagertes Rauschen zu sein. Andernfalls können Mehrdeutigkeiten bei der Richtungsbestimmung auftreten.

Um die Eindeutigkeit der Funktionen (11) und (12) zu erhalten, ist es in einer Ausgestaltung vorgesehen, eine Mehrkeulenantenne einzusetzen, deren Richtcharakteristiken ein eindeutiges globales Maximum und sektorübergreifend keine Symmetrien in Form eines weiteren globalen Maximums innerhalb des Ausleuchtbereichs aufweisen. Die Kombination eines typischen oder üblichen RFID-Lesegeräts mit einer entsprechenden Mehrkeulenantenne erlaubt, auf das komplexwertige Empfangssignal zu schließen, ohne dass in das Lesegerät eingegriffen werden muss.

Die Abbildung Fig. 11 zeigt eine beispielhafte Architektur des entsprechenden Aufbaus der Positionsbestimmungsvorrichtung 61, mit dem die verfügbaren Richtcharakteristiken $\vec{C}_k$ gemäß des oben beschriebenen Ablaufs ausgelesen und der Einfallswinkel der identifizierten Tags (bzw. Senders) 62 bestimmt werden kann. Die Mehrkeulenantenne 63 umfasst neben den Antennenelementen 68 und dem Speisenetzwerk 69 einen Hochfrequenzschalter (HF-Schalter) 612 und eine Steuerlogik 610. Mit Hilfe der Steuerlogik 610 wird über den HF-Schalter 612 die gewünschte Torrichtcharakteristik $\vec{C}k$ (vergleiche Definition (5)) eingestellt. Über eine HF-Signalverbindung wird das zu sendende HF-Signal als Anregungssignal vom externen RFID-Lesegerät 65 (das somit die Signalquelle 611 der Ausgestaltung der Fig. 8 umfasst) und wird das Empfangssignal für das RFID-Lesegerät 65 bereitgestellt. Eine relativ zur Antennenvorrichtung 63 externe Steuervorrichtung 64 erlaubt die Steuerung des Lesegeräts 65 und der Mehrkeulenantenne 63. Bestimmt wird die Einfallsrichtung der Transpondersignale entsprechend der Gleichung (13). Die RSSI-Werte sowie die Transponder-Identifikation stammen dafür vom RFID-Lesegerät 65.

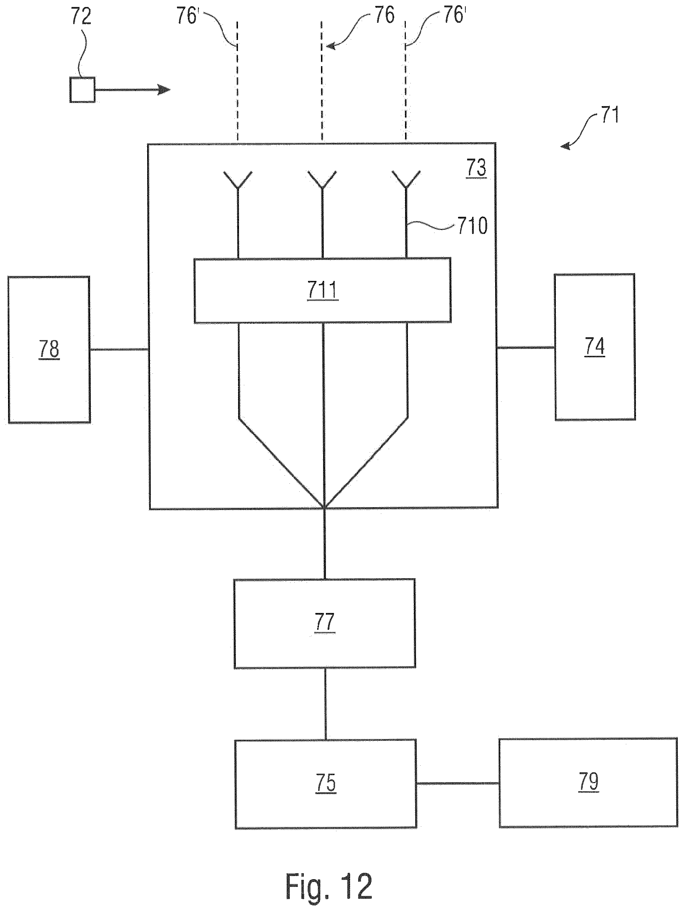

Die Abbildungen Fig. 12 bis Fig. 23 zeigen Ausgestaltungen einer dritten Variante der Positionsbestimmungsvorrichtung 71. Dabei lassen sich einzelne Komponenten und Ausgestaltungen auch auf die vorhergehenden Ausgestaltungen übertragen bzw. können die zuvor beschriebenen Ausgestaltungen auch Ergänzungen für die folgenden Ausgestaltungen darstellen.

Die Fig. 12 zeigt eine Anwendung einer dritten Variante einer Positionsbestimmungsvorrichtung 71, die es u. a. erlaubt anzuzeigen, ob und wann ein Sender 72 einen Detektionsbereich 76 passiert.

Hierfür verfügt die Positionsbestimmungsvorrichtung 71 über eine Antennenvorrichtung 73, die zumindest eine ausgezeichnete Richtcharakteristik aufweist. Die Richtcharakteristik bezieht sich auf eine räumliche Verteilung der Empfindlichkeit der Antennenvorrichtung 73 für das Empfangen von Signalen, die hier insbesondere von dem Sender 72 ausgehen.

In der dargestellten Ausgestaltung weist die Antennenvorrichtung 73 mehrere Richtcharakteristiken auf. Hierfür dienen in der beispielhaften Ausgestaltung drei Antennenelemente 710, die von einer Steuervorrichtung 74 über das Netzwerk 711 gesteuert werden. Die Antennenvorrichtung 73 ist in einer Ausgestaltung eine Patch-Antenne. Alternativ handelt es sich bei den Antennenelementen 710 um Dipolantennen, Monopolantennen, monopol-artige Antennen, Chip-Antennen oder um Schleifenantennen. Eine der Richtcharakteristiken ist die bereits angesprochene ausgezeichnete Richtcharakteristik, der der Definitionsbereich 76 zugeordnet ist.

In einer alternativen - nicht dargestellten - Ausgestaltung verfügt die Antennenvorrichtung 73 nur über eine einzige Richtcharakteristik, die damit auch die ausgezeichnete Richtcharakteristik ist. Im Folgenden wird die dargestellte Ausführung, die mehrere schaltbare Richtcharakteristiken aufweist, diskutiert.

Für das Schalten der unterschiedlichen Richtcharakteristiken zum Aussenden eines Anregungssignals bzw. zum Empfangen der vom Sender 72 ausgehenden Signale ist das Speisenetzwerk 711 vorgesehen. Das Speisenetzwerk 711 stellt in dem Beispiel eine Realisierung einer Butler-Matrix (in einer alternativen Ausgestaltung wird ein Eigenmodennetzwerk verwendet) dar und stellt an seinem Ausgang die Signale zur Verfügung, wie sie mit den einzelnen Richtcharakteristiken empfangen worden sind. Das Schalten der Richtcharakteristiken bedeutet daher, dass das Signal, das mit der geschalteten Richtcharakteristik empfangen worden ist, der Auswertung zugeführt bzw. besonders ausgewertet wird. In einer weiteren - nicht dargestellten - Ausgestaltung bedeutet das Schalten der Richtcharakteristiken, dass durch einen direkten Eingriff auf die Antennenvorrichtung 73 jeweils nur die geschaltete Richtcharakteristik vorhanden ist, d. h. dass die Antennenvorrichtung 73 nur mit der geschalteten Richtcharakteristik Signale empfangen kann.

Die Verarbeitung der empfangenen Signale bzw. der sich damit ergebenden Daten erfolgt durch die Datenverarbeitungsvorrichtung 75. Im gezeigten Beispiel ist die Datenverarbeitungsvorrichtung 75 mit einer Signalverarbeitungsvorrichtung 77 verbunden, die für die empfangenen Signale jeweils einen Amplitudenwert der Feldstärke ermittelt.

Insofern es sich bei dem Sender 72 um einen RFID-Tag handelt, ist entsprechend die Signalverarbeitungsvorrichtung 77 derartig ausgestaltet, dass sie als Amplitudenwert einen sogenannten "Received Signal Strength Indication" (RSSi)-Wert erzeugt. In einer weiteren damit einhergehenden Ausgestaltung ist die Signalverarbeitungsvorrichtung 77 auch dafür ausgestaltet, Informationen aus den empfangenen Signalen - z. B. ein Identifikationskennzeichen oder Messdaten - zu extrahieren. Es handelt sich somit bei der Signalverarbeitungsvorrichtung 77 beispielhaft um einen RFID-Reader bzw. ein RFID-Lesegerät.

Für die Anwendung bei Sendern 72 aufgrund von RFID-Tags ist zudem bei dem gezeigten Ausführungsbeispiel eine Signalquelle 78 vorhanden, die Anregungssignale erzeugt. Die Anregungssignale werden - je nach Anwendungsfall mit einzelnen Richtcharakteristiken oder im Wesentlichen ungerichtet - über die Antennenvorrichtung 73 ausgegeben. Die Anregungssignale sind dabei beispielweise sogenannte Request-Signale, über die der Sender 72 in Form eines RFID-Tags um den Aufbau einer Datenkommunikation gebeten wird und über die der Sender 72 ggf. die für die Kommunikation erforderliche Energie erhält. Für das Aussenden der Anregungssignale werden in einer Ausgestaltung Richtcharakteristiken kombiniert, so dass sich Überlagerungen für das Aussenden der Signale ergeben. Umgekehrt erlaubt das Speisenetzwerk 711 - wie bereits angesprochen - bei den empfangenen Signalen die Trennung in die einzelnen Richtcharakteristiken.

In einer alternativen - nicht dargestellten - Ausgestaltung ist die Signalquelle 8 ein Bestandteil der Signalverarbeitungsvorrichtung 77. Dies entspricht der im Stand der Technik üblichen Ausgestaltung von RFID-Readern, die selbst die Aktivierungssignale erzeugen.

Indem die Antennenvorrichtung 73 zum Empfangen und Senden von Signalen dient, ergibt sich daraus auch, dass die Richtcharakteristiken sich nicht nur auf die räumliche Verteilung der Empfindlichkeit, sondern auch auf die Sendeeigenschaften der Antennenvorrichtung 73 bezieht.

Schließlich ist die Datenverarbeitungsvorrichtung 75 mit einem Datenspeicher 79 verbunden, um dort Daten über die Trajektorie des Senders 72 abzulegen. Mit den Historiendaten bezüglich der jeweils ermittelten Positionen des Senders 72 wird die Bewegungsbahn des Senders 72 ermittelt und werden beispielsweise auch bei der Anwesenheit von mehreren Sendern Mehrdeutigkeiten aufgehoben und die Signale den Sendern zugeordnet. Hierfür sind entsprechende Plausibilitätsbetrachtungen vorgesehen.

Die ausgesuchte Richtcharakteristik verfügt hier über einen Detektionsbereich 76, senkrecht zu dem sich in dem gezeigten Beispiel der Sender 72 bewegt. Dabei bewegt sich hier der Sender 72 parallel zu den Antennenelementen 710 und senkrecht zu dem Detektionsbereich 76. Die Besonderheit des Detektionsbereichs 76 liegt darin, dass die Empfindlichkeit der Antennenvorrichtung 73 in diesem räumlichen Bereich minimal ist. Bei der Positionsbestimmungsvorrichtung 71 wird somit ein Signalminimum verwendet, um festzustellen, ob der Sender 72 den zugeordneten Detektionsbereich 76 passiert. Im Detektionsbereich 76 wird somit, wenn sich der Sender 72 an diesem Ort befindet, kein oder nur ein sehr schwaches Signal durch die Antennenvorrichtung 73 empfangen.

Die Antennenvorrichtung 73 verfügt hier über insgesamt drei Detektionsbereiche 76, 76', in denen sich jeweils ein Empfangsminimum befindet und die der Sender 72 nacheinander passiert. Hierdurch kann die Zuverlässigkeit der Detektion der Passage des mittleren Detektionsbereichs 76 erhöht werden.

Die Zuverlässigkeit der Messung wird insbesondere dadurch erhöht, dass die Steuervorrichtung 74 unterschiedliche Richtcharakteristiken einstellt, die jeweils unterschiedliche Empfindlichkeiten und Ortszuordnungen aufweisen, so dass auch Messungenauigkeiten oder Mehrdeutigkeiten kompensiert werden können.

In einer Ausgestaltung verfügt die Antennenvorrichtung 73 über mindestens eine weitere Richtcharakteristik, die im Detektionsbereich 76 ein Empfindlichkeitsmaximum aufweist. D. h. die Antennenvorrichtung 73 ist mit dieser anderen Richtcharakteristik gerade sehr empfindlich für das Empfangen von Signalen. Daher werden in dieser Ausgestaltung die Signale der ausgezeichneten Richtcharakteristik und der Vergleichscharakteristik gemeinsam ausgewertet, um die Messgenauigkeit zu erhöhen.

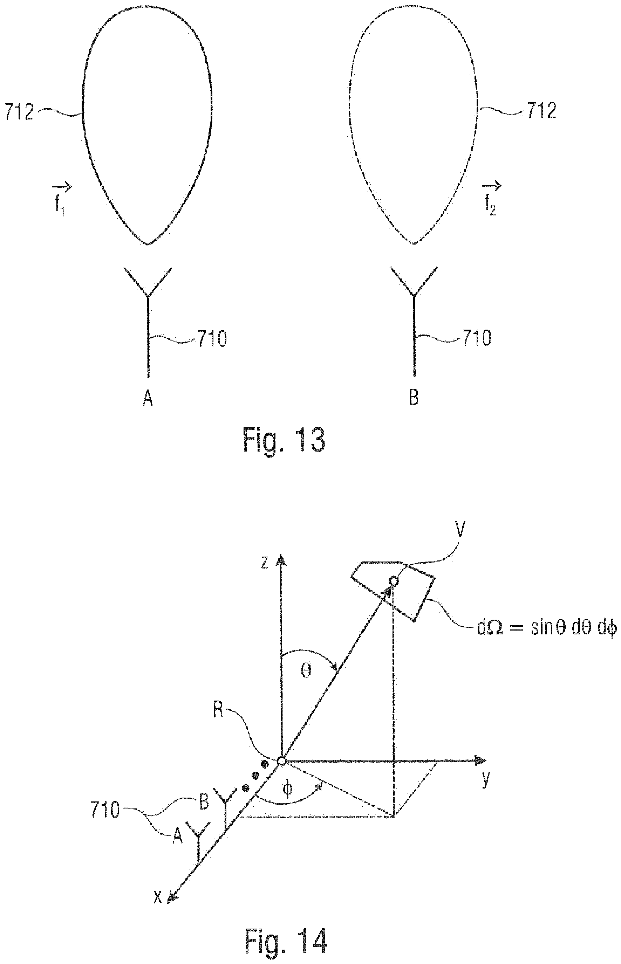

Die Fig. 13 zeigt die zwei Antennenelemente 710 (bezeichnet mit A und B) einer beispielhaften Antennenvorrichtung, die als Mehrkeulenantenne ausgestaltet ist. Die beiden Antennenelemente 710 verfügen jeweils über eine keulenförmige Richtcharakteristik 712. Die beiden Richtcharakteristiken 712 werden jeweils durch eine komplexwertige Richtcharakteristik $\vec{f}_j$ mit j = 1 (oder A) bzw. j = 2 (oder B) beschrieben.

Allgemein besteht eine Mehrkeulenantenne aus einer Menge von n Antennenelementen 710 (oder Strahlern, z. B. Dipole), die an ein Speisenetzwerk (siehe Fig. 12) angeschlossen sind. An jedem der n Ausgänge des Speisenetzwerks ist eine Antenne bzw. ein Antennenelement angeschlossen.

Die m Eingänge des Speisenetzwerks, die jeweils die Ausgabe der von den Antennenelementen 710 empfangenen Signale bzw. dem Einspeisen der über die Antennenelemente 710 auszusendenden HF-Signale dienen, korrespondieren in einer Ausgestaltung jeweils mit einer bestimmten Richtcharakteristik $\vec{C}_i$, die definiert ist als:

$$\vec{C}_i = \vec{C}_i(\vec{\omega}) = \vec{C}_i(\phi, \theta) = \begin{pmatrix} C_i^{(co)} \\ C_i^{(cross)} \end{pmatrix} \qquad \text{mit } i = 1, \dots m \qquad (1)$$

Dabei sind jeweils eine co-polarisierte Komponente $C_i^{(\mathrm{co})}$ und eine kreuzpolarisierte Komponente $C_i^{(\mathrm{cross})}$ gegeben.

Die Fig. 14 zeigt ein Koordinatensystem mit den drei Achsen x, y und z sowie dem Referenzpunkt R im Ursprung des Koordinatensystems. Die zwei Antennenelemente 710 (A und B) sind im dargestellten Beispiel entlang der x-Achse angeordnet. Beschrieben wird dabei ein Beobachtungspunkt V durch einen Azimutwinkel Φ in der x-y-Ebene sowie einen Co-Elevations-Winkel θ relativ zur z-Achse. Betrachtet sei dabei eine Fläche dΩ = sin θ * d θ *d Φ.

Für die Zuordnung eines Senders oder beispielsweise speziell eines RFID-Transponders zu einer bestimmten Richtung weisen die Richtcharakteristiken $\vec{C}_i$ der Antennenvorrichtung besondere Eigenschaften auf. Hier sei weiter das zwei-elementige Antennen-Array der Fig. 13 betrachtet.

Bezogen auf den Referenzpunkt R gemäß der Fig. 14, in den aus Gründen der Einfachheit der Koordinatenursprung gelegt wird, besitzen beide Antennenelemente 710 (also A und B) jeweils die angesprochene (komplexe) Strahlungscharakteristik

$$\vec{f}_j = \begin{pmatrix} f_j^{(\mathrm{co})} \\ f_j^{(\mathrm{cross})} \end{pmatrix} \quad \text{mit } j = 1, \dots n \tag{2}$$

Daraus lässt sich die sogenannte Strahlungsmatrix $\tilde{H}$ (vergleiche C. Volmer et al., "An Eigen-Analysis of Compact Antenna Arrays and Its Application to Port Decoupling", IEEE transactions on antennas and propagation, vol. 56, no. 2, Seiten 360 - 370, 2008) ermitteln, deren Komponenten durch folgende Formel gegeben sind:

$$\tilde{H}_{pj} = \frac{1}{4\pi} \int_\Omega \vec{f}_p^{\mathrm{H}} \vec{f}_j \, \mathrm{d}\Omega \quad \text{mit } \{p, j\} = 1, \dots, n \tag{3}$$

Da die Strahlungsmatrix $\tilde{H}$ eine hermitesche Matrix ist, kann sie diagonalisiert werden. Daher ergibt sich:

$$\tilde{H} = \tilde{Q} \, \tilde{\Lambda} \, \tilde{Q}^{\mathrm{H}} \quad \text{mit } \tilde{\Lambda} = \mathrm{diag}\{\lambda_1, \dots, \lambda_n\} \tag{4}$$

Die Gleichung (4) beschreibt die Eigenwertzerlegung der Strahlungsmatrix $\tilde{H}$. Dabei repräsentiert jede Spalte in $\tilde{Q}$ einen der n Eigenvektoren $\vec{q}_j$ und jedes Hauptdiagonalelement in $\tilde{\Lambda}$ beschreibt den zugehörigen Eigenwert $\lambda_j$.

Die Eigenvektoren $\vec{q}_j$ beschreiben die fundamentalen Anregungsvektoren der Antennenvorrichtung, die hier ein Antennen-Array mit den Antennenelementen ist. Die Eigenvektoren $\vec{q}_j$ sind paarweise orthogonal, sofern keine Eigenwerte $\lambda_j$ mehrfach auftreten. Kommen Eigenwerte $\lambda_j$ mehrfach vor, so muss eine orthonomale Basis zu diesen gefunden werden, deren Basisvektoren zueinander orthogonal sind.

Zudem besitzen die Eigenvektoren $\vec{q}_j$ eine Länge von Eins. Mit den Eigenvektoren gehen bestimmte Richtcharakteristiken

$$\vec{C}_j^{(\mathrm{m})} = \begin{pmatrix} C_j^{(\mathrm{m, co})} \\ C_j^{(\mathrm{m, cross})} \end{pmatrix} \tag{5}$$

einher, die zueinander orthogonal sind.

Es gilt also:

$$\oint \left(\vec{C}_p^{(m)}\right)^{\mathrm{H}} \vec{C}_j^{(m)} = 0$$

, falls p ≠ j. (6)

Die Eigenvektoren $\tilde{Q}$ stellen eine spezielle orthonormale Basis der möglichen Speisevektoren da. Es können jedoch auch andere orthonormale Basen ermittelt werden, so dass das Speisenetzwerk nicht zwangsläufig ein Eigenmodennetzwerk sein muss. Erforderlich ist, dass sich wenigstens eine Nullstelle in einer der Richtcharakteristiken entlang einer bestimmten Richtung ausprägt.

Für ein Array aus zwei gleichen Antennenelementen (siehe Fig. 13) mit gleicher Ausrichtung ergeben sich folgende Eigenvektoren:

$$\tilde{Q} = \frac{1}{\sqrt{2}} \begin{pmatrix} 1 & 1 \\ 1 & -1 \end{pmatrix}$$

(7)

Die Antennenelemente 710 (beispielsweise Dipole) werden also entweder im Gleichtakt ("even mode": $1/\sqrt{2}$ und $1/\sqrt{2}$) oder im Gegentakt ("odd mode": $1/\sqrt{2}$ und $-1/\sqrt{2}$) gespeist.

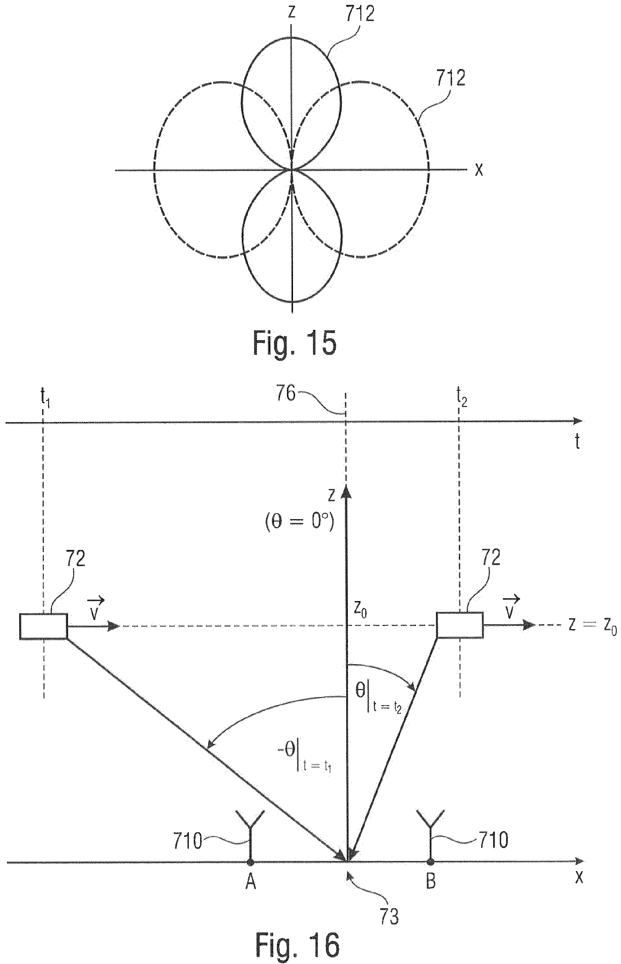

Die sich daraus ergebenden betragsmäßigen Richtcharakteristiken zeigt die Fig. 15 qualitativ für die x-z-Ebene. Die Richtcharakteristik 712 für den Gleichtakt ist dabei mit durchgezogenen Linien und die für den Gegentakt mit durchbrochenen Linien dargestellt. Die dargestellten Richtcharakteristiken ergeben sich insbesondere durch ein Eigenmodennetzwerk.

Bei Speisung im Gleichtakt ergibt sich ein Maximum senkrecht zum Array, das aus den zwei gleichen und gleich ausgerichteten Antennenelementen gebildet wird. Das Maximum liegt also in z-Richtung bzw. beim Co-Elevations-Winkel $\theta = 0°$.

Im Gegentakt hingegen entsteht ein Minimum bzw. eine Nullstelle an dieser Stelle. Die Nullstelle bzw. deren nähere Umgebung ist schmal gegenüber der Umgebung um das Maximum im Gleichtakt, da der Gradient bezüglich des Co-Elevations-Winkels $\theta$ in der Umgebung der Nullstelle betragsmäßig stark ansteigt.

Ein Funksignal, das aus Richtung der Nullstelle auf das Array der Antennenvorrichtung trifft, wird im Gegentakt daher kaum oder gar nicht empfangen, während im Gleichtakt das Empfangssignal maximal wird. Aus den gemessenen Signalpegeln im Gleich- und Gegentakt kann daher auf die Einfallsrichtung geschlossen werden.

In der Fig. 16 ist ein Szenario gezeigt, bei dem ein Objekt mit einem RFID-Transponder als Sender 72 parallel zur x-Achse mit konstanter Geschwindigkeit (v) befördert wird. Das Antennen-Array, das aus den zwei Antennenelementen 710 der Antennenvorrichtung 73 gebildet wird, ist im Ursprung des Koordinatensystems zentriert und ist so ausgerichtet, dass die Nullstelle der Empfangsempfindlichkeit im Gegentakt-Mode entlang der z-Achse $\theta = 0°$ auftritt. Diese Nullstelle ist damit der Detektionsbereich 76. In Abhängigkeit von der Position des Transponders 72 relativ zur Antennenvorrichtung 73 variiert das Empfangssignal der einzelnen Moden, da der Einfallswinkel eine Funktion der Zeit ist.

Der Position des Transponder in x-Richtung kann eine Zeit t zugeordnet werden. Dargestellt sind die zwei Positionen des Senders 72 zum Zeitpunkt t1 und damit vor dem Detektionsbereich 76 sowie zum Zeitpunkt t2 und damit nach der Passage des Detektionsbereichs 76. Der jeweilige Einfallswinkel $\theta$ als Winkel des einfallenden Antwortsignals (angedeutet durch die Pfeile, ausgehend vom Sender 72) zur z-Achse variiert somit mit der Zeit t.

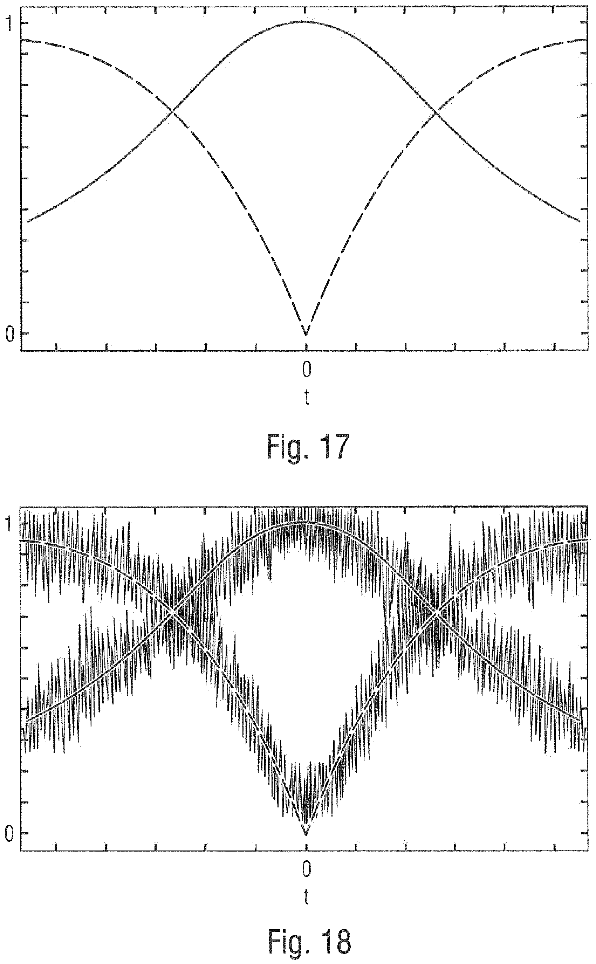

In der Fig. 17 sind die Zeitsignale der Anordnung der Fig. 16 beispielhaft dargestellt. Gezeigt ist der Verlauf der Empfangsamplitude normiert auf das Maximum als Funktion der Zeit t für den Sender der Fig. 16, der sich parallel zur x-Achse ($z = z_0$) mit konstanter Geschwindigkeit v bewegt. Die zwei Antennenelemente befinden sich auf der x-Achse und sind um den Koordinatenursprung zentriert, haben also gleichen Abstand dazu.

Wird der Transponder als Sender an verschiedenen Stellen und somit zu verschiedenen Zeitpunkten ausgelesen (das bedeutet, dass der Transponder identifiziert wurde und seine Kennung bekannt ist), so erlaubt es eine Analyse der Zeitsignale, den Zeitpunkt zu bestimmen, an dem sich der Transponder in Richtung $\theta = 0°$ und somit an einer bestimmten Stelle - nämlich des Detektionsbereichs - entlang des Förderweges befindet.

Das Empfangssignal im Gegentakt (unterbrochene Linie) ist zu diesem Zeitpunkt der Passage des Detektionsbereichs minimal, während es im Gleichtakt (durchgezogene Linie) maximal ist. Der Transponder kann somit von einem nachfolgenden Transponder, der ebenfalls ausgelesen wird, zu diesem Zeitpunkt der Passage des Detektionsbereichs unterschieden werden, da das Signal des nachfolgenden Transponders sowohl im Gleichals auch im Gegentakt empfangen wird. Beim Transponder, der somit aus der Richtung $\theta = 0°$ antwortet und dessen Signal nur im Gleichtakt empfangbar ist, muss es sich demnach um den ausgesuchten Transponder handeln. Dieses Ergebnis kann genutzt werden, um den Fluss der Objekte beispielsweise auf einem Förderband oder an einer Tordurchfahrt zu kontrollieren und zu steuern.

Der Zeitpunkt, an dem sich der Transponder entlang der Ebene mit Co-Elevations-Winkel $\theta = 0°$ befindet, lässt sich alternativ auch aus dem Gleichtakt-Mode ablesen. An dieser Stelle wird das von dem Sender ausgesendete Signal mit maximaler Amplitude empfangen.

Für die praktische Umsetzung sind jedoch die Unsicherheiten durch überlagertes Rauschen zu berücksichtigen. Die Fig. 18 illustriert den Zeitverlauf der Empfangssignale der Fig. 17 im Gleichtakt (durchgezogene Linie) und im Gegentakt (durchbrochene Linie) mit überlagertem Rauschen ausgehend von einem Signal-Rausch-Abstand von $\rho = 20$ dB.

Aufgrund der breiten Strahlungskeule im Gleichtakt wirkt sich das Rauschen stärker auf das Signal-Maximum im Detektionsbereich aus, so dass bei der Suche nach dem Maximum auch eine größere Unsicherheit auftritt. Durch das relativ schmale Minimum beim Gegentakt lässt sich dieses auch beim überlagerten Rauschen mit geringerer Unsicherheit auffinden.

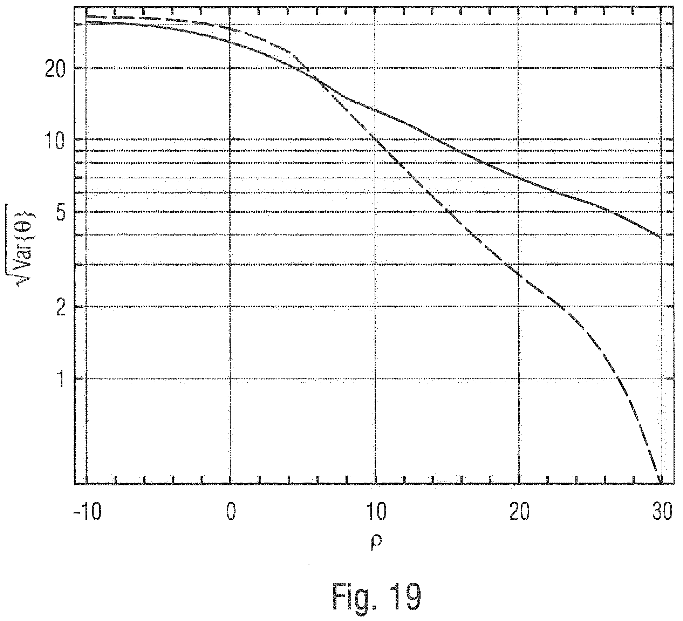

Um dies zu verdeutlichen, zeigt die Fig. 19 exemplarisch die ermittelte Standardabweichung des ermittelten Einfallswinkels $\theta$ für variierende Signal-Rausch-Abstände für den Aufbau gemäß der Fig. 16. Mit zunehmendem Signal-Rausch-Abstand $\rho$ (dargestellt auf der x-Achse in dB) verringert sich die Unsicherheit bei der Minimumsuche im Gegentakt (durchbrochene Linie) schnell, während die Maximumsuche im Gleichtakt (durchgezogene Linie) auch bei hohen Signal-Rausch-Abständen $\rho$ deutlich mehr Unsicherheiten zeigt. Dabei ist auf der y-Achse die Standardabweichung $\sqrt{\mathrm{Var}\,(\theta)}$ des geschätzten Einfallswinkels $\theta$ in Grad (°) aufgetragen. Der Transponder bewegt sich dabei für das Beispiel mit einer konstanten Geschwindigkeit von 3 m/s. Die Standardabweichung wurde über 10 000 Testwerte pro Signal-Rausch-Abstand-Wert $\rho$ ermittelt. Dabei beträgt $z_0 = 5$ m.

Die Umsetzung des Prinzips der Gleichtakt- und Gegentaktspeisung beruht auf einem Speisenetzwerk, das die erforderlichen Speisevektoren bereitstellt. Die den Eingangstoren zugeordneten Richtcharakteristiken $\vec{C}_i$ gemäß

Gleichung (1) entsprechen somit den Richtcharakteristiken der Eigenmoden $\vec{C}_j^{(m)}$ und beim Speisenetzwerk handelt es sich um ein Eigenmodennetzwerk, wobei in der Ausgestaltung $m = n$ gilt. Das bedeutet, dass pro Antennenelement 710 auch ein Signalausgang zur Ausgabe der jeweils empfangenen Signale zur Verfügung steht.

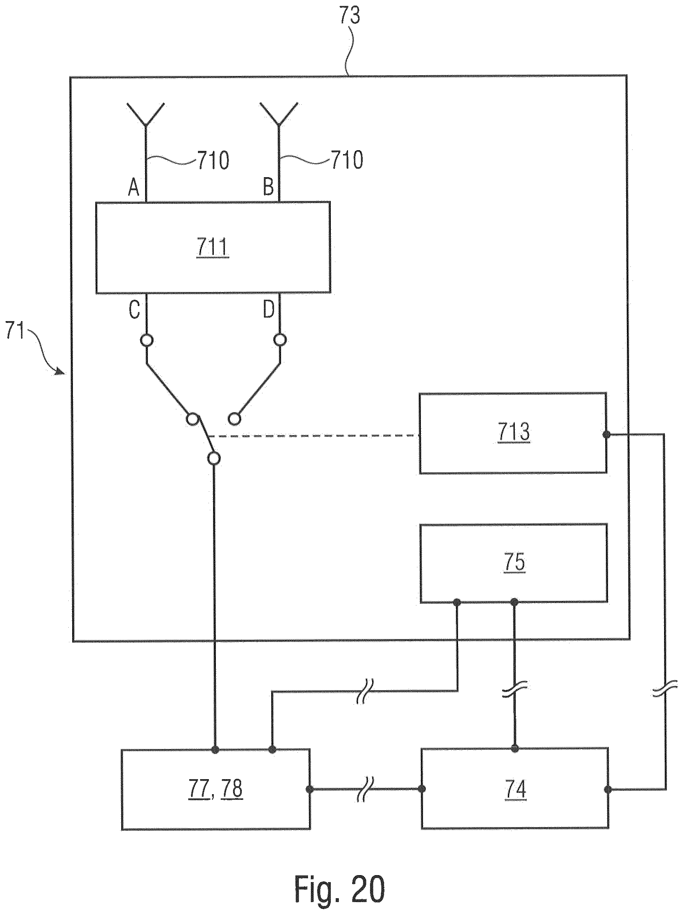

Eine mögliche Ausgestaltung der Positionsbestimmungsvorrichtung 71 mit zwei Antennenelementen 710 zeigt die Fig. 20. Das Antennen-Array der zwei Antennenelemente 710 (bezeichnet mit A und B) ist an ein Eigenmodennetzwerk als Speisenetzwerk 711 angeschlossen. Die Eingänge (bezeichnet mit C und D) des Speisenetzwerks 711 sind über einen Schalter für hochfrequente Signale (HF-Schalter) wählbar. Der Eingang des Schalters ist mit dem RFID-Lesegerät, das hier als Signalverarbeitungsvorrichtung 77 dient, verbunden. Dabei beinhaltet hier das RFID-Lesegerät auch die Signalquelle 78, so dass das RFID-Lesegerät das Anregungssignal für die Transponder bereitstellt und deren Antwortsignale auswertet. Das Umschalten der Eingänge des Speisenetzwerk 711 erfolgt über eine Steuerlogik 713, die hier ein Teil der Antennenvorrichtung 73 ist. Die Eingänge C und D des Speisenetzwerks 711 sind die Eingänge für das HF-Signal als Anregungssignal der Signalverarbeitungsvorrichtung 77. Zudem sind sie die Ausgänge für die mit den Antennenelementen 710 empfangenen Signale. Dabei ist jedem Eingang auch eine Richtcharakteristik, d. h. entweder Gegentakt oder Gleichtakt zugeordnet, so dass der Schalter den Wechsel zwischen den beiden Richtcharakteristiken erlaubt.

Das Auslesen der Transponder und daher das Empfangen der Signale wird über eine Steuervorrichtung 74 kontrolliert, die auf die Steuerlogik 713 einwirkt. Die TransponderSignale werden in der gezeigten Ausgestaltung alternierend im Gleichtakt und im Gegentakt ausgelesen. Mit den durch das RFID-Lesegerät 77 zur Verfügung stehenden RSSI-Werten als Werte für die Amplitude der empfangenen Signale können für jeden Transponder die zugeordneten Zeitsignale des Gleichtakt-Mode und des Gegentakt-Mode ermittelt werden. Davon ausgehend erfolgt in der Datenverarbeitungsvorrichtung 75 die Ermittlung des Zeitpunkts, an dem der jeweilige Transponder die z-Achse $\theta = 0°$ durchquert. In einer Ausgestaltung ermittelt die Datenverarbeitungsvorrichtung 75 insbesondere den Einfallswinkel der empfangenen Signale.

Die Datenverarbeitungsvorrichtung 75 ist hier ebenfalls eine Komponente der Antennenvorrichtung 73. In einer weiteren - hier nicht dargestellten - Ausgestaltung ist auch die Steuervorrichtung 74 ein Teil der Antennenvorrichtung 73, so dass die Positionsbestimmungsvorrichtung 71 in dieser Ausgestaltung insgesamt aus zwei Elementen besteht: Antennenvorrichtung 73 und RFID-Lesegerät 77.

Die Trennung in Steuerlogik 713, Steuervorrichtung 74 und Datenverarbeitungsvorrichtung 75 ist hier in Bezug auf ihre Funktionen zu verstehen. Für die Realisierung lassen sich unterschiedliche Ausgestaltungen implementieren.

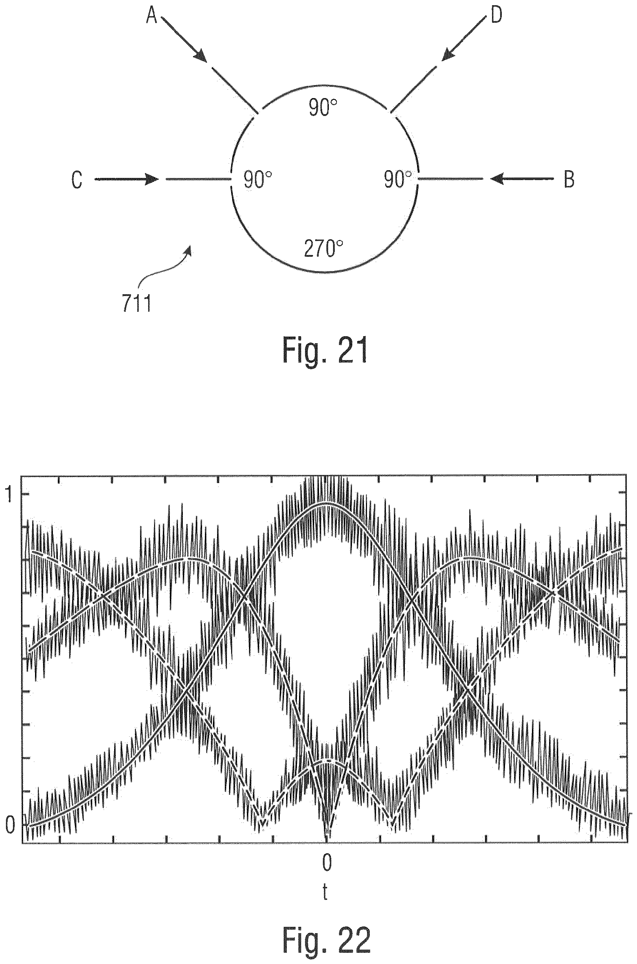

Eine Implementierung eines Eigenmoden-Netzwerks als Speisenetzwerk 711 zeigt die Fig. 21 für das aus zwei Antennenelementen (Antenne A und Antenne B) bestehende Antennen-Array der Fig. 13. Es handelt sich in der Ausgestaltung um einen Ringkoppler, der abhängig vom gespeisten Tor (also dem jeweiligen Eingang des Speisenetzwerks in Richtung des RFID-Lesegeräts gemäß Fig. 20, hier bezeichnet mit C für Gegentakteingang und D für Gleichtakteingang) ein Gleichtaktsignal bzw. ein Gegentaktsignal zur Verfügung stellt. Ein solcher Ringkoppler findet insbesondere Verwendung, wenn ein Eigenmodennetzwerk realisiert ist. Das Prinzip der Eigenmodenspeisung lässt sich auf Arrays mit beliebiger Anzahl an Antennen-Elementen anwenden:

Die Fig. 22 zeigt exemplarisch die Signale einer Antennenvorrichtung, die drei Antennenelemente aufweist (vgl. Fig. 12). Die drei Antennenelemente befinden sich auf der x-Achse und sind um den Koordinatenursprung zentriert. Es zeigen sich drei Moden. Die Zeitsignale (Zeit t auf der x-Achse, wobei t = 0 der Zeitpunkt des Passierens des Detektionsbereichs ist, und mit der Empfangsamplitude normiert auf das Maximum auf der y-Achse) sind hier mit überlagertem Rauschen dargestellt. Das Signalrauschverhältnis beträgt $\rho$ = 20 dB.

Im Gleichtakt-Mode (durchgezogene Linie) werden alle drei Antennenelemente gleichphasig gespeist. Die korrespondierende Richtcharakteristik weist somit ein Maximum entlang des Winkels $\theta$ = 0° auf, das zu beiden Seiten hin abfällt.

Im Gegentakt-Mode (gestrichelte Linie mit längeren Teilstrichen) werden die beiden äußeren Elemente gegenphasig und mit gleicher Amplitude gespeist. Dabei entsteht entlang der Achse mit Winkel $\theta$ = 0° ein Minimum bzw. eine Nullstelle, das seitlich zu einem Maximum, das kleiner als das Maximum der Gleichtakt-Mode ist, ansteigt und dann wiederum jeweils abfällt.

Im dritten Mode (gestrichelte Linie mit kürzeren Teilstrichen) sind jeweils benachbarte Elemente gegenphasig gespeist. Dadurch entstehen symmetrisch um die z-Achse zwei Nullstellen im Strahlungsdiagramm mit einem kleinen Maximum um den Bereich mit Winkel $\theta$ = 0° herum. Die beiden Nullstellen steigen seitlich wieder an.

Die Betrachtung beschränkt sich dabei auf die obere Halbebene z $\geq$ 0.

Mit Hilfe der zwei zusätzlichen Nullstellen des dritten Mode kann bei überlagertem Rauschen gegenüber dem zwei-elementigen Array eine genauere Bestimmung des Zeitpunktes erfolgen, an dem ein Transponder die z-Achse passiert. Aus Plausibilitätsgründen muss der geschätzte Zeitpunkt des Minimums im Gegentaktsignal zwischen den Zeitpunkten für die Minima im Signal des dritten Mode auftreten.

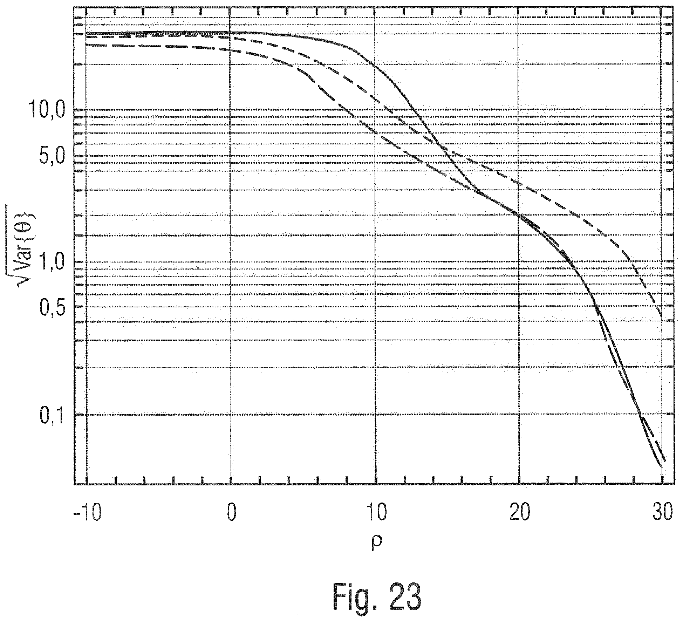

Außerdem ist beim drei-elementigen Array die Nullstelle im Gegentakt-Mode aufgrund der größeren Apertur schärfer als beim zwei-elementigen Array, wobei ein gleicher Abstand zwischen den Antennenelementen vorausgesetzt wird. Die Fig. 23 zeigt die Standardabweichung $\sqrt{\mathrm{Var}\{\theta\}}$ des geschätzten Einfallswinkels $\theta$ als Funktion des Signal-Rausch-Abstands p, der ermittelt worden ist anhand der Signale im Gegentakt-Mode (durchgezogene Linie) und anhand der Signale im Gegentakt-Mode und dem dritten Mode (durchbrochene dicke Linie). Zum Vergleich ist das Ergebnis für den Gegentakt-Mode des zwei-elementigen Arrays aufgetragen (durchbrochene dünne Linie, vgl. Fig. 19).

Der Transponder bewegt sich dabei für die ermittelten Werte parallel zur x-Achse (z = $z_0$) mit konstanter Geschwindigkeit v = 3 m/s. Die Antennenelemente befinden sich auf der x-Achse und sind um den Koordinatenursprung zentriert. Die Standardabweichung wurde über 10 000 Testwerte pro p-Wert ermittelt. Weiterhin war $z_0$ = 5 m.

Der Vergleich der Varianzen zwischen einem zwei-elementigen und einem drei-elementigen Array zeigt, dass die Kombination aus Gegentakt-Mode und dritter Mode eine geringere Standardabweichung aufweist als der Gegentakt-Mode des zwei-elementigen Array.

Der Gegentakt-Mode des drei-e!ementigen Array führt bei Signal-Rausch-Verhältnissen von weniger als 13 dB zu höheren Standardabweichungen als der Gegentakt-Mode des zwei-elementigen Array. Beim drei-elementigen Array nähert sich mit zunehmenden Wert für $\rho$ die Standardabweichung des Gegentakt-Mode an die Standardabweichung an, die sich aus der Kombination von Gegentakt-Mode und dritter Mode ergibt. Dies folgt, da die Unsicherheit beim Schätzen des Einfallswinkels und somit die Streuung um den Erwartungswert abnimmt. Es wird immer unwahrscheinlicher, dass das Minimum im Zeitsignal des Gegentakt-Mode nicht zwischen den Minima der dritten Mode auftritt.

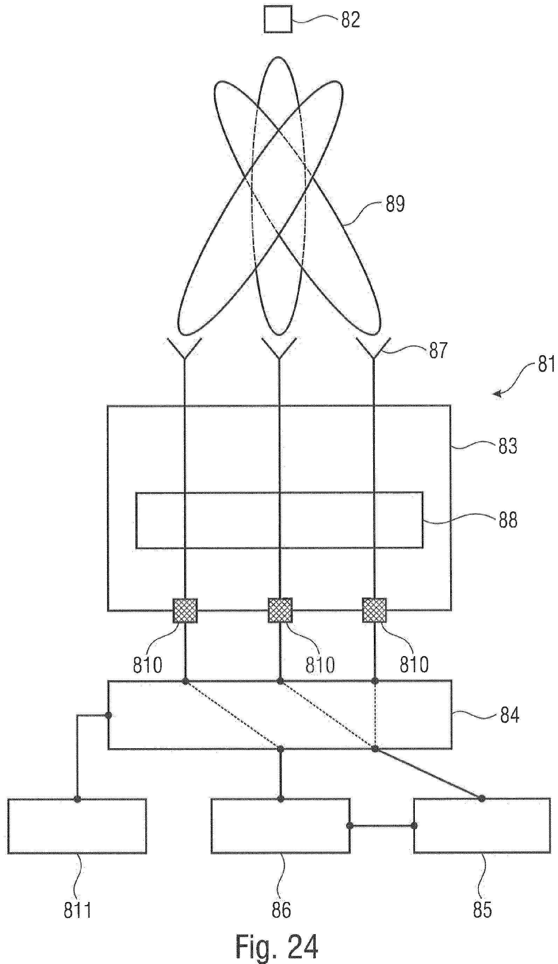

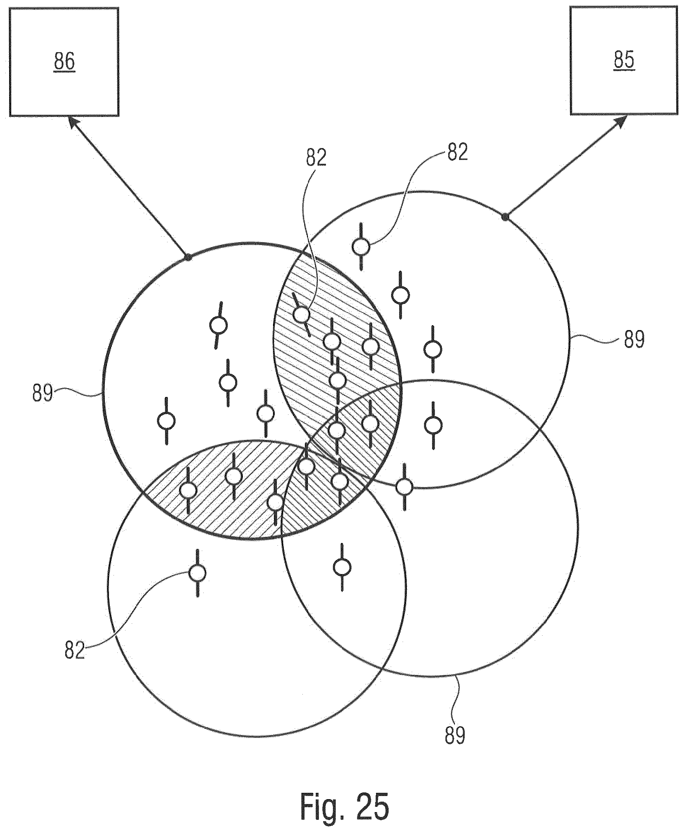

Die Abbildungen Fig. 24 und Fig. 25 zeigen eine vierte Variante zur Gewinnung der Daten, die über die erfindungsgemäße Vorrichtung dargestellt werden.

Die Fig. 24 zeigt eine schematische Ausgestaltung einer vierten Variante der Positionsbestimmungsvorrichtung 81, die der Bestimmung der Position des Senders 82 dient. Dafür verfügt die Positionsbestimmungsvorrichtung 81 über eine Antennenvorrichtung 83, die hier beispielhaft drei Antennenelemente 87 aufweist.

Die Antennenelemente 87 sind mit den Ausgängen eines Speisenetzwerks 88 verbunden. Über das Speisenetzwerk 88 lassen sich die jeweils mit den Antennenelementen 87 verbundenen Richtcharakteristiken 89 erzeugen und mit der Kontrollvorrichtung 84 schalten. Für das Senden z. B. von Anregungssignalen lassen sich die Richtcharakteristiken auch überlagern, was sich entsprechend in der Signalformung auswirkt. Empfängt die Antennenvorrichtung 83 umgekehrt Signale, so werden diese durch das Speisenetzwerk 88 in die einzelnen Richtcharakteristiken aufgespalten und einzeln über die Signalausgänge 810 ausgegeben. Daher verfügt die Antennenvorrichtung 83 in dem gezeigten Beispiel bei drei Antennenelementen 87 bzw. drei Richtcharakteristiken 89 auch über drei Signalausgänge 810.

Für die weitere Signalverarbeitung ist die Kontrollvorrichtung 84 vorhanden, die die Signalausgänge 810 mit der Informations-Lesevorrichtung 86 bzw. mit der Datenverarbeitungsvorrichtung 85 verbindet. Hier verbindet die Kontrollvorrichtung 84 einen Signalausgang mit der Informations-Lesevorrichtung 86 und die verbleibenden Signalausgänge 810 mit der Datenverarbeitungsvorrichtung 85.

Die Informations-Lesevorrichtung 86 und die Datenverarbeitungsvorrichtung 85 verarbeiten beide die empfangenen Signale und werten sie aus. In der gezeigten Ausgestaltung werten beide Vorrichtungen 85, 86 die Signale hinsichtlich ihrer physikalischen Eigenschaften aus. So bestimmen z. B. beide Vorrichtungen 85, 86 einen Betrag der Feldstärke der Signale oder ggf. auch die Phasenwerte der an sich komplexen Signale. Der Unterschied besteht jedoch darin, dass nur die Informations-Lesevorrichtung 86 auch eine Information aus den Signalen extrahiert, die von den Signalen als Daten übertragen werden. D. h. nur die Informations-Lesevorrichtung 86 kann z. B. aus den Signalen Identifikationskennzeichen oder z. B. digitale Informationen extrahieren. Diese höhere Auswertung leistet die Datenverarbeitungsvorrichtung 85 in der dargestellten Ausgestaltung nicht und wertet die Signale nur z. B. hinsichtlich der Amplitude oder der Phase aus. In einer alternativen - nicht dargestellten - Ausgestaltung verfügt die Datenverarbeitungsvorrichtung 85 ebenfalls über die Fähigkeit, Daten zu extrahieren.

Die dargestellte Positionsbestimmungsvorrichtung 81 insgesamt erlaubt die Auswertung der empfangenen Signale hinsichtlich ihrer physikalischen Eigenschaften und in Hinblick auf die Information über die Position des Senders 82 aus.

In dem gezeigten Beispiel handelt es sich jeweils um gleichzeitig empfangene Signale, die sich durch eine Abstrahlung des Senders 82 ergeben.

Die Datenverarbeitungsvorrichtung 85 erhält hier auch von der Informations-Lesevorrichtung 86 Daten (z. B. den ermittelten RSSI-Wert), um insgesamt die Information über die Position des Senders 82 oder zumindest über die Richtung zu ermitteln.

Da im gezeigten Beispiel der Sender 82 ein passiver Sender in Form eines RFID-Transponders ist, verfügt die Positionsbestimmungsvorrichtung 81 zusätzlich noch über eine Signalquelle 811, die ein Anregungssignal erzeugt, was über die Antennenvorrichtung 83 abgestrahlt und von dem Sender 82 empfangen wird, um seinerseits die Signale abstrahlen zu können. Dabei ist die übertragene Information zumindest eine Identifikationskennung des Senders 82.

In einer alternativen - nicht dargestellten - Ausgestaltung gehören die Signalquelle 811 und das Lesegerät 86 zu einem Gerät. Es handelt sich somit beispielsweise um ein RFID-Lesegerät.

Die Positionsbestimmungsvorrichtung 81 ermöglicht somit in einer Ausgestaltung die Bereitstellung von Amplituden- und Phaseninformationen der empfangenen Signale der Sender 82 oder speziell RFID-Transponder, die durch ein oder mehrere Lesegeräte als entsprechende Informations-Lesevorrichtung 86 angeregt worden sind. Dies geschieht mit einer Mehrkeulenantenne als Antennenvorrichtung 83, deren Einzelelemente oder Antennenelemente 87 an ein Speisenetzwerk 88, wie eine Butler-Matrix, angeschlossen sind.

Solch ein Keulenformungsnetzwerk 88 besitzt in der Regel eine Vielzahl von Ein- bzw. Ausgängen. Durch Ansteuern mindestens einer dieser Tore 810 (also eines Ein- bzw. Ausgangs) prägt sich für den Sendefall eine bestimmt geformte Richtcharakteristik (Keule) 89 aus. Bei der Speisung der anderen Tore 810 ergibt sich jeweils eine andere Keulenform.

Unter Verwendung des Speisenetzwerks 88 wird ein Tor 810 der Antennenvorrichtung 83 mit der Signalquelle 811 (in einer alternativen - nicht dargestellten - Ausgestaltung wäre die Verbindung der Antennenvorrichtung 83 mit der Informations-Lesevorrichtung 86) verbunden, um mit der entsprechenden Richtcharakteristik 89 das Anregungssignals auszusenden. Dadurch werden die RFID-Transponder als Sender 82 angeregt. Die einfallenden Signale werden über das gleiche Tor (also über den Signalausgang) 810 abgegriffen und direkt dem RFID-Lesegerät als Ausgestaltung der Informations-Lesevorrichtung 86, vor allem im Wesentlichen ohne Signalleistungsverlust, zugeführt.

In einer Ausgestaltung ist dabei vorgesehen, dass unter Verwendung des Keulenformungsnetzwerks als Ausgestaltung des Speisenetzwerks 86 bei der Mehrkeulenantenne 83 zu jedem Zeitpunkt t lediglich eine Keule, d. h. nur eine Richtcharakteristik für den Sendefall ausgeprägt wird.

Im Empfangsfall liegen allerdings an den Toren 810 des Speisenetzwerks 88 die Signalinformationen aller Keulen, also aller Richtcharakteristiken vor. Da sich in der vorliegenden Ausgestaltung diese Keulen überlagern (siehe Fig. 25), befinden sich angeregte Transponder 82 auch in Teilabschnitten in mindestens einer der restlichen Empfangskeulen. Da solch ein Keulenformungsnetzwerk 88 in der Praxis nicht absolut symmetrisch ist, fallen ebenso kleine Singalanteile an den (m - 1) verbleibenden, nicht mit der Informations-Lesevorrichtung 86 verbundenen, m Toren 810 des Netzwerkes 88 ab. Ausgenutzt wird insbesondere die Überlappung der Beams. Dadurch fallen auch Signalanteile von Transpondern, welche durch den aktiven Beam (Tor mit Sende-/Lesevorrichtung) angeregt werden, an den verbleibenden Toren ab, die mit der Datenverarbeitungsvorrichtung 85 verbunden sind. Diese Signalinformationen werden einer direkt in der Mehrkeulenantenne 83 integrierten oder auch extern verfügbaren Elektronik (der Datenverarbeitungsvorrichtung 85) zur Richtungsschätzung zur Verfügung gestellt.

Durch eine geeignete Schaltlogik wird zwischen den Toren 810 des Keulenformungsnetzwerkes 88 in der gezeigten Ausgestaltung umgeschaltet. Das bedeutet, dass das RFID-Lesegerät 86 kontinuierlich mit allen, aber zum Zeitpunkt t nur mit einem der Eingänge 810 des Netzwerkes 88 verbunden ist. Entsprechend werden die verbleibenden Tore 810 zur Datenverarbeitungsvorrichtung 85 für die Richtungsschätzung ebenso umgeschaltet.

Dadurch liegen nach einem gewissen Zeitpunkt t1 in Abhängigkeit von der Anzahl der Antennenelemente 87 bzw. Richtcharakteristiken 89 und der Umschaltzeit eine Menge von Richtungsinformationen in Amplitude und Phase vor. Diese können dann verrechnet werden und somit eventuell auftretende Fehlinformationen durch Reflexionen und Mehrdeutigkeiten erkannt und berücksichtigt werden.

Durch solch eine Mehrkeulenantenne 83 mit entsprechendem Keulenformungsnetzwerk 88 ist der Lese- bzw. Sendepfad der Informations-Lesevorrichtung 86 nahezu nicht betroffen. Durch die Überlagerung der Keulen einer Mehrkeulenantenne werden auch Transponder angeregt, welche durch mindestens eine der benachbarten Keulen im Empfangsfall erkannt werden, siehe Fig. 25.

Die Signalinformationen können somit an den entkoppelten Toren 810 des Speisenetzwerkes 88, welche gerade nicht dem zu diesem Zeitpunkt direkten Signalpfad des Lesegeräts 86 entsprechen, abgenommen werden, ohne dass der Signalpfad des Lesegeräts 86 beeinflusst wird. Dies ist für die Reichweite des Lesegeräts und den einwandfreien Betrieb des Lesegeräts 86 zwingend erforderlich, denn die Leistung des zurückgesendeten Signals der passiven Transponder 82 ist sehr gering. Aus diesem Grund besitzen die Lesegeräte 86 eine hohe Signalempfindlichkeit.

Die Fig. 25 zeigt schematisch eine Vielzahl von Sendern 82 in Form von RFID-Transpondern. Die vier Kreise bezeichnen hier vier unterschiedliche Richtcharakteristiken 89. Die mit einer Richtcharakteristik 89 empfangenen Signale (starke Umrandung) werden der Informations-Lesevorrichtung 86 zugeführt (angedeutet durch den Pfeil). Dort werden aus den Signalen die übertragenen Signale und auch ein Wert für die Signalamplitude (der RSSI-Wert) ermittelt. Die mit den verbleibenden drei Richtcharakteristiken 89 empfangenen Signale werden der Datenverarbeitungsvorrichtung 85 zugeführt.

Zu erkennen ist, dass sich die Richtcharakteristiken 89 überlagern (schraffierter Bereich), so dass die Signale von einigen Sendern 82 für den Empfangsfall zu der Informations-Lesevorrichtung 86 gelangen und auch in Bezug auf die Position durch die Datenverarbeitungsvorrichtung 85 ausgewertet werden.

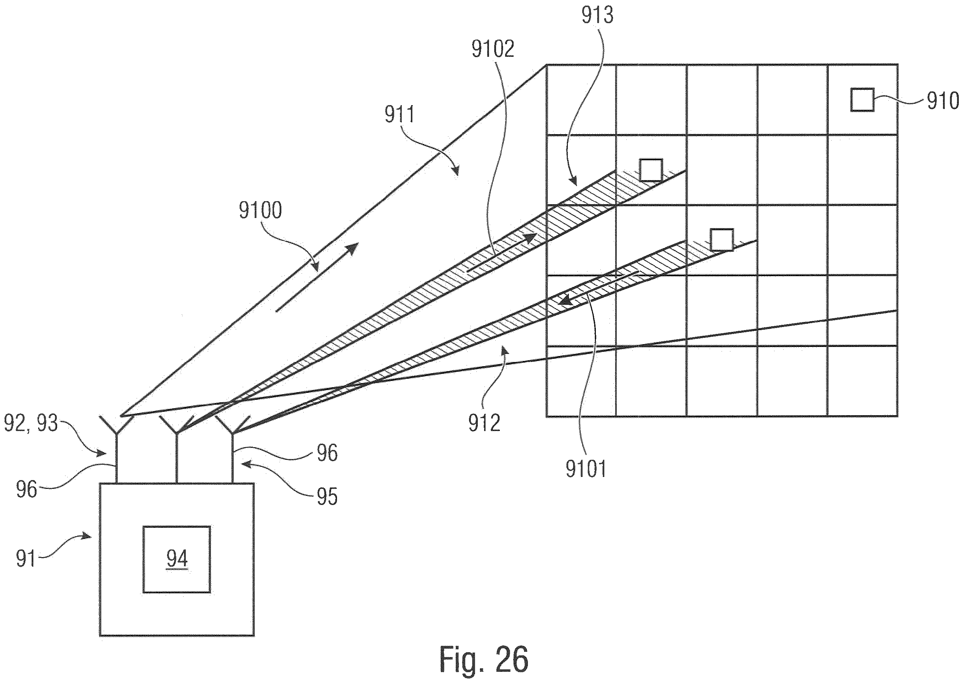

Die Abbildungen Fig. 26 bis 36 zeigen eine fünfte Variante der Positionsbestimmungsvorrichtung.

Die Ausgestaltung der Positionsbestimmungsvorrichtung 91 in Fig. 26 umfasst eine Sendevorrichtung (TX) 92 und eine Empfangsvorrichtung (RX) 93 sowie eine Antennenvorrichtung 95, die über mehrere (hier drei) Antennenelemente 96 (z. B. Teile einer Patchantenne oder Dipolantennen, Alternativen sind z. B. Monopolantennen, monopol-artige Antennen, Chip-Antennen oder Schleifenantennen) verfügt. Die Antennenvorrichtung 95 ist dabei als Mehrkeulenantenne bzw. Multibeam-Antenne ausgestaltet. Dabei sind die unterschiedlichen keulenförmigen Richtcharakteristiken schaltbar, so dass sich für das Senden bzw. Empfangen von Signalen über die Antennenvorrichtung 95 unterschiedliche Raumbereiche vorgeben lassen. Die Richtcharakteristiken sind dabei mit räumlich unterschiedlichen Empfangsempfindlichkeiten bzw. Sendeeigenschaften (oder Sendeempfindlichkeiten) verbunden. Das Auswählen der Richtcharakteristiken bzw. der Raumbereiche geschieht über die Steuervorrichtung 94, z. B. in Form eines Speisenetzwerks.

Die Positionsbestimmungsvorrichtung 91 (eine alternative Bezeichnung für die gezeigte Ausgestaltung ist zentrale Funkeinheit) weist eine Sendevorrichtung 92 und eine Empfangsvorrichtung 93 auf, die hier in einer Sende-/Empfangsvorrichtung zusammenfallen und gemeinsam die Antennenvorrichtung 95 mit den drei Antennenelementen 96 verwenden. Die Steuerung der Sendevorrichtung 92 und der Empfangsvorrichtung 93 bzw. der Sende- und Empfangsfunktion der Sende-/Empfangsvorrichtung 92, 93 erfolgt durch die Steuervorrichtung 94. Die Steuerung bezieht sich insbesondere auf die Raumbereiche, in die Signale gesendet bzw. aus denen Signale empfangen werden.

In dem Zusammenhang mit der Vorgabe einzelner Richtcharakteristiken und damit einzelner Raumbereiche sei erläutert, was unter ungerichteten Ausstrahlung bzw. ungerichtetem Empfang zu verstehen ist. In diesem Fall werden - je nach Ausgestaltung der Sendevorrichtung 92 bzw. der Empfangsvorrichtung 93 bzw. der zur Verfügung stehenden Antennenvorrichtung 95 - Signale homogen oder unter Verwendung einer Vielzahl von Richtcharakteristiken gesendet bzw. empfangen. Es gibt somit keine bevorzugte Verteilung. Es werden somit in einer Ausgestaltung für den ungerichteten Empfang bzw. das ungerichtete Senden alle Antennenelemente 96 bzw. alle Richtcharakteristiken verwendet, über die die Antennenvorrichtung 95 verfügt.

In dem dargestellten Beispiel umfasst die Antennenvorrichtung 95 drei Antennenelemente 96, über die sich unterschiedliche Richtcharakteristiken erzeugen lassen. Ein Antennenelement 96 hat dabei einen großen Aktivierungsbereich 911, in den ein Aktivierungssignal 9100 ausgesendet wird. Das Aktivierungssignal 9100 soll die Kommunikationsvorrichtungen 910 innerhalb des Aktivierungsbereichs 911 aktivieren oder aufwecken und soll ihnen z. B. die für die Kommunikation in Form eines Antwortsignals 9101 erforderliche Energie übermitteln.

Die Kommunikationsvorrichtungen 910 - also die weiter oben als Sender bezeichneten Einheiten, deren Signale erfindungsgemäß dargestellt bzw. zur Gewinnung von darzustellenden Informationen verwendet werden - befinden sich in dem dargestellten Ausführungsbeispiel in einer Wand, die gedanklich in einzelne Felder unterteilt ist. Die Unterteilung in Felder ergibt sich insbesondere dadurch, dass die Steuervorrichtung 94 der Empfangsvorrichtung 93 unterschiedliche Empfangsbereiche 912 vorgibt, aus denen die Empfangsvorrichtung 93 die Antwortsignale 9101 der Kommunikationsvorrichtungen 910 empfängt. Die Empfangsvorrichtung 93 tastet somit die Felder des Aktivierungsbereichs 911 ab. Dies kann z. B. zeilen- und spaltenweise erfolgen oder zufällig. Die Empfangsbereiche 912 sind dabei in der gezeigten Ausgestaltung Teilbereiche des Aktivierungsbereichs 911, in den das Aktivierungssignal 9100 gesendet worden ist. Die Vorgabe der Empfangsbereiche 912 geschieht hier durch das Schalten der unterschiedlichen Richtcharakteristiken der Antennenvorrichtung 95.

Beim Aktivieren der Kommunikationsvorrichtungen 910 wird somit eine Richtcharakteristik verwendet oder wird das Aktivierungssignal 9100 ungerichtet ausgesendet, um einen großen Aktivierungsbereich 911 zu erreichen. Die Antwortsignale 9101 der Kommunikationsvorrichtungen 910 werden jedoch aus kleineren Empfangsbereiche 912 empfangen, um damit auch die Information über den Ort der Kommunikationsvorrichtungen 910 zu erhalten.

Aus den empfangenen Signale wird zum einen eine Information über die Kommunikationsvorrichtung 910 ermittelt, z. B. ein Identifikationskennzeichen. Zudem wird aus dem Signal in Verbindung mit der für den Empfang verwendeten Richtcharakteristik die Lage der jeweiligen Kommunikationsvorrichtung 910 ermittelt.

Daher gewinnt die Positionsbestimmungsvorrichtung 91 aus den empfangenen Signalen - hier sind dies die Antwortsignale 9101 - Daten über die Position und Identität der vorhandenen Kommunikationsvorrichtungen 910, so dass auch ggf. mit den Kommunikationsvorrichtungen 910 verbundene Objekte identifizierbar sind.

Nach dem Identifizieren und Lokalisieren der Kommunikationsvorrichtungen 910 findet eine gezielte Kommunikation mit einzelnen Kommunikationsvorrichtungen 910 statt. Hierfür wird ein Kommunikationsbereich 913 vorgegeben, so dass die auszusendenden Kommunikationssignale 9102 nur in den ausgewählten Kommunikationsbereich 913 gesendet werden.

Bei den Bereichen 911, 912 und 913 deuten jeweils Pfeile an, in welche Richtungen sich die jeweils zugeordneten Signale bewegen. Dabei dient der Kommunikationsbereich 913 ggf. nach dem Versenden eines Kommunikationssignals 9102 der Positionsbestimmungsvorrichtung 91 auch dem Empfangen von weiteren Signalen, die von Kommunikationsvorrichtungen 910 stammen, die in den Kommunikationsbereich 913 hinein ihre Signale aussenden.

Die Positionsbestimmungsvorrichtung 91 erlaubt insgesamt die Kommunikation mit z. B. beweglichen Objekten oder Kommunikationsvorrichtungen 910, die beispielsweise eine autonome Stromversorgung in Form von Batterien oder Energy-Harvesting-Generatoren aufweisen.

Die Kommunikationsvorrichtungen 910 verfügen über eine Funkanbindung, die in einer Ausgestaltung aus einem vorzugsweise stromsparenden Funkempfänger, einem Funksender sowie einer Rechen- und Steuereinheit besteht. Optional können auch Sensoren (z. B. Fotodiode oder Mikrofon) oder Aktoren (z. B. Motor oder akustischer Signalgeber) vorhanden sein.

Die Kommunikationsvorrichtungen 910 sind zum Beobachtungszeitpunkt im Raum verteilt und zunächst nicht bewegt. Der einfacheren Darstellung und Erläuterung halber sind die Kommunikationsvorrichtungen 910 beispielsweise in einer Ebene oder in zwei versetzten, nebeneinander liegenden Halb-Ebenen (z. B. Wandregalen) angeordnet und können von der zentralen Funkeinheit aus - vergleichbar mit einem gebündelten Lichtstrahl von der Antenne der zentralen Funkeinheit - mit einem gebündelten Funkstrahl (im Folgenden auch "Beam" genannt) anvisiert werden.

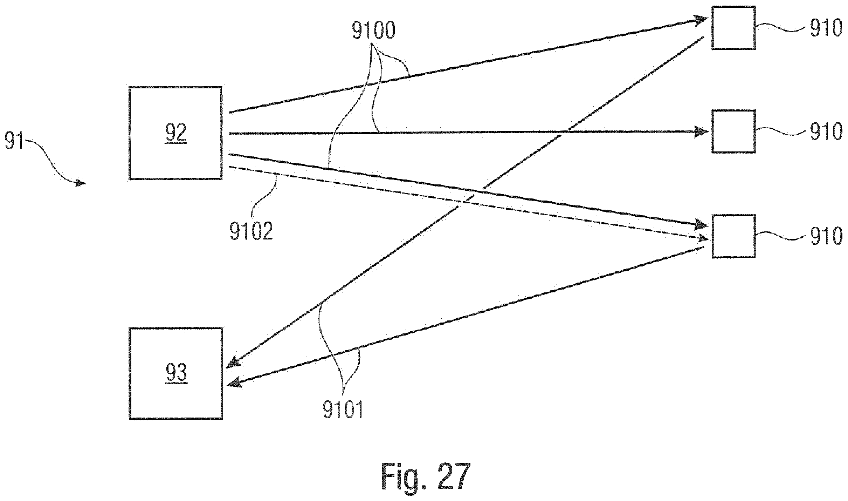

In der Fig. 27 ist der Weg von einigen Signalen schematisch dargestellt. Dabei bilden die Positionsbestimmungsvorrichtung 91 und die Kommunikationsvorrichtungen 910 zusammen ein Kommunikationssystem oder eine Kommunikationsanordnung.

In der dargestellten Ausgestaltung der Positionsbestimmungsvorrichtung 91 sind die Sendevorrichtung 92 und die Empfangsvorrichtung 93 separate Komponenten, die hier auch unterschiedliche - für die Übersichtlichkeit nicht dargestellte - Antennenvorrichtungen benutzen.

Von der Sendevorrichtung 92 geht ein Aktivierungssignal 9100 an die drei vorhandenen Kommunikationsvorrichtungen 910 aus. Das Aktivierungssignal 9100 trägt in der gezeigten Ausgestaltung eine Kennung, die angibt, welche Kommunikationsvorrichtungen 910 vollständig aktiviert werden und Antwortsignale senden sollen. Es wird also ein sogenannter selektiver Aufweckvorgang vorgenommen. Je nach Anwendungsfall werden Objekte individuell über ihre jeweilige ID-Kennung (z. B. 16-Bit-Folge) adressiert und aufgeweckt. Auch ein Aufwecken von Objektgruppen (z. B. alle Objekte des Typs 12 mit der Gruppen-ID "12") kann als selektiver Aufweckvorgang erfolgen. Dies hilft, um die Stromaufnahme innerhalb der Objekte weiter niedrig zu halten, weil unnötige Sendevorgänge vermieden werden. Ferner ist das selektive Aufwecken hilfreich, wenn eine sehr große Anzahl von Objekten erreichbar ist und tatsächlich nur eine Untergruppe für die Abfrage interessant ist. Die nicht adressierten Kommunikationsvorrichtungen 910 empfangen daher nur das Aktivierungssignal 9100 und lesen die Information aus, dass sie nicht weiter reagieren müssen.

In einer weiteren alternativen oder ergänzenden Ausgestaltung sendet die Sendevorrichtung 92 das Aktivierungssignal 9100 nicht wie hier dargestellt ungerichtet aus, sondern hinein in einen schmalen ausgewählten Aktivierungsbereich 911. Durch diese Beschränkung des Bereichs, in den das Aktivierungssignal 9100 gelangt, wird daher alternativ oder ergänzend eine Auswahl der Kommunikationsvorrichtungen 910 vorgenommen, mit denen eine Kommunikation stattfinden soll.

Aktiviert wurden in dem gezeigten Fall durch die Aussendung der Kennung nur die obere und die untere Kommunikationsvorrichtung 910, die jeweils ein Antwortsignal 9101 aussenden. Die Antwortsignale 9101 werden von der Empfangsvorrichtung 93 empfangen, indem die Richtcharakteristiken der Empfangsvorrichtung 93 die Kommunikationsvorrichtungen 910 hier von oben nach unten abfahren oder abscannen.

Aus den zwei Antwortsignalen 9101 in Verbindung mit den für den Empfang verwendeten Richtcharakteristiken wird jeweils die Position der einzelnen Kommunikationsvorrichtungen 910 ermittelt. Da - wie beispielsweise bei RFID-Transpondern üblich - die Antwortsignale auch Kennzeichnungsdaten der Kommunikationsvorrichtungen 910 umfassen, erlauben die Antwortsignale 9101 die Identifikation der einzelnen Kommunikationsvorrichtungen 910.

Nach dem Abscannen der - hier drei - Felder ist daher in der Positionsbestimmungsvorrichtung 91 der Zusammenhang zwischen den antwortenden Kommunikationsvorrichtungen 910 und ihren Positionen bzw. den erforderlichen Richtcharakteristiken gegeben, mit denen jeweils eine Kommunikationsvorrichtung 910 angesprochen werden kann.

Daher ist anschließend eine gezielte Kommunikation mit einzelnen Kommunikationsvorrichtungen 910 möglich. Hierfür wird der Kommunikationsbereich vorgegeben, in den das Kommunikationssignai 9102 ausgesendet wird. Dabei ergibt sich der Kommunikationsbereich dadurch, dass eine entsprechende Richtcharakteristik der Sendevorrichtung 92 für das Senden des Kommunikationssignals 9102 verwendet wird.

Hier wird beispielhaft das Kommunikationssignal 9102 an die untere Kommunikationsvorrichtung 10 ausgestrahlt (verdeutlicht durch den gestrichelten Pfeil).

Insgesamt lässt sich also bezogen auf Ausführungsbeispiele die Kommunikation, Identifikation und Lokalisierung als mehrstufiges Verfahren erläutern:

Schritt 1:

In einer ersten Ausgestaltung erfolgt eine Aktivierung von Kommunikationsvorrichtungen durch gerichtet oder ungerichtet ausgesendete Aktivierungssignale (oder auch bezeichnet als Anregungssignale). Diese Aktivierungssignale gehen von einer Sendevorrichtung aus, die in einer Ausgestaltung zu einer zentralen Funkeinheit gehört (siehe Fig. 26) und in einer alternativen Ausgestaltung eine separate Komponente ist (siehe Fig. 27). Das Anregungssignal stellt somit eine Aufforderung an die Kommunikationsvorrichtungen dar, ein Signal zu senden. Dabei wird ggf. noch eine Kennung übermittelt, welche der Kommunikationsvorrichtungen antworten sollen.

In einer alternativen zweiten Ausgestaltung des ersten Schritts wird von mindestens einer Kommunikationsvorrichtung ein Initiierungssignal ausgesendet, dass diese Kommunikationsvorrichtung eine Kommunikation aufnehmen möchte. Um auch dies zu erkennen, werden von einer Empfangsvorrichtung - die z. B. zu der genannten zentralen Funkeinheit gehört - in wenigstens einer Hör- oder Lauschphase Signale ungerichtet oder entsprechend mit einer Mehrzahl von zur Verfügung stehenden Richtcharakteristiken empfangen. Damit ist die Empfangsvorrichtung also aktiv für Signale aus vielen unterschiedlichen Bereichen.

Damit bedeutet der erste Schritt für eine Sendevorrichtung bzw. eine Empfangsvorrichtung, dass in einen großen und nicht unbedingt näher spezifizierten Raumbereich Signale gesendet bzw. daraus empfangen werden.

Schritt 2:

Nach dem Aktivierungssignal bei der ersten Ausgestaltung im Schritt 1 antworten die Kommunikationsvorrichtungen (die hier teilweise auch als Objekte bezeichnet werden) mit einem Antwortsignal. Dabei umfasst das Antwortsignal in einer Ausgestaltung objektspezifische Daten, bei denen es sich beispielsweise um Identifikationsdaten oder Messdaten usw. handelt. Die Antwortsignale werden dabei gebündelt empfangen, indem der Raum um die jeweils verwendete Antennenvorrichtung selektiv durch die zur Verfügung stehenden Richtcharakteristiken abgetastet wird. Dies geschieht sequentiell oder parallel, indem z. B. durch ein passendes Speisenetzwerk die empfangenen Signale den einzelnen Richtcharakteristiken zugeordnet werden. In einer Ausgestaltung senden die Kommunikationsvorrichtungen Antwortsignale, die eine Präambel und eigentlich zu übertragende Daten umfassen. Die Präambel umfasst dabei in einer Ausgestaltung eine Kennung der Kommunikationsvorrichtung. Die Daten beinhalten in einer Ausgestaltung von einem Sensor erfasste Messdaten.

Die Antwortsignale werden dabei im Wesentlichen verzögerungsfrei bzw. parallel empfangen: In einer Ausgestaltung geschieht dies durch die Mehrzahl an unterschiedlichen Richtcharakteristiken und die Aufspaltung durch ein Speisenetzwerk (z. B. in Form einer Butler-Matrix), das mit der Antennenvorrichtung verbunden ist. In einer anderen Ausgestaltung werden die unterschiedlichen Richtcharakteristiken so schnell geschaltet und werden daher die jeweils unterschiedlichen Empfangsbereiche so schnell geschaltet, dass alle Empfangsbereiche innerhalb der Zeit durchlaufen werden, in der die Kommunikationsvorrichtungen ihre Antwortsignale aussenden.

Bei der zweiten - im Schritt 1 angesprochenen - Ausgestaltung mit einer Kommunikationsvorrichtung, von der ein Initiierungssignal ausgeht, erlaubt es die Empfangsvorrichtung in einer Variante, dass der Schritt 2 übersprungen wird, weil z. B. über die Aufspaltung der empfangenen Signale in die Richtcharakteristiken bereits durch das Initiierungssignal bekannt ist, wo sich die Kommunikationsvorrichtung befindet. Ist dies aufgrund dieses Signals noch nicht möglich, so wird in einer anderen Variante der Raum durch die einzelnen Richtcharakteristiken abgetastet. Alternativ löst das Initiierungssignal den Schritt 1 aus.

Ein Ablauf bezüglich der Initiierung durch eine Kommunikationsvorrichtung ist z. B. wie folgt:

Von einem mit der Kommunikationsvorrichtung verbundenen Sensor wird zum Zeitpunkt t0 ein Ereignis festgestellt.

Daraufhin sendet die Kommunikationsvorrichtung des entsprechenden Objekts das Initiierungssignal aus. Diese Funkmeldung umfasst beispielsweise eine ID, den Sensorwert und eine Aussage über den Typ des Ereignisses oder einen Zeitstempel des Ereignisses.

Die Empfangsvorrichtung der Positionsbestimmungsvorrichtung ist auf den ungerichteten Empfang von Signalen eingestellt und empfängt daher das Initiierungssignal, indem es die Meldung quasi sofort entgegennimmt.

Verfügt die Empfangsvorrichtung über die Möglichkeit der Auftrennung der empfangenen Signale nach den Richtcharakteristiken, so liegt ihr mit dem Empfang des Initiierungssignals zugleich auch die Winkelposition bzw. die Matrixposition der Kommunikationsvorrichtung innerhalb der den Richtcharakteristiken zugeordneten Felder vor.

In einer alternativen Ausgestaltung schaltet die Empfangsvorrichtung die einzelnen Richtcharakteristiken durch, wobei hier der Wechsel zwischen den Feldern beschleunigt werden kann, da nur eine Kommunikationsvorrichtung sendet.

Insgesamt liegen nach einer Präambel ($31 * T_B$) und der Dauer des Datenpakets (16-Bit-ID und Daten, insgesamt zwischen 64 und 128 Bit) im Datenspeicher der Empfängervorrichtung (bzw. der Empfänger- oder RX-Komponente der zentralen Funkeinheit) die Informationen des Sensorereignisses vor. Die Informationen beziehen sich dabei auf die oben genannten Inhalte des Initiierungssignals.

Schritt 3:

In diesem Schritt 3 findet die eigentliche Kommunikation statt, wobei von der Sendevorrichtung bzw. der zentralen Funkeinheit Funktelegramme als Kommunikationssignale gezielt über entsprechende Richtcharakteristiken an die einzelnen Objekte oder Felder gesendet werden. Die gerichtete Kommunikation reduziert mögliche Störungen und erlaubt eine höhere Datenrate bei reduzierter Sendeleistung.

Dabei wird in einer Ausgestaltung nach dem Aussenden des Kommunikationssignals aus dem Kommunikationsbereich auch mindestens ein Signal empfangen. Die Positionsbestimmungsvorrichtung wählt daher einen Kommunikationsbereich aus, in den hinein die Sendevorrichtung das Kommunikationssignal sendet und aus dem die Empfangsvorrichtung mindestens ein weiteres Signal empfängt, das vorzugsweise ein Antwortsignal auf das Kommunikationssignal ist. In dieser Ausgestaltung ereignet sich daher im Kommunikationsbereich eine bidirektionale Signalübertragung.

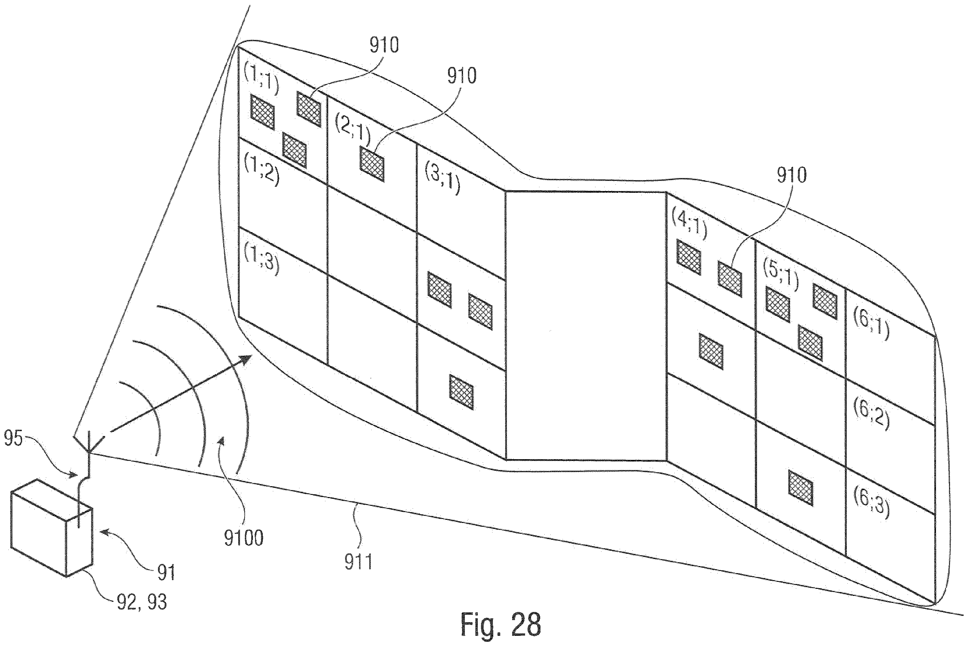

Die Schritte 1 bis 3 werden im Folgenden in Verbindung mit den Abbildungen Fig. 28 bis Fig. 30 noch einmal erläutert. Dargestellt ist dabei jeweils die Positionsbestimmungsvorrichtung 91 mit einer als eine Komponente ausgestalteten Sendevorrichtung 92 und Empfangsvorrichtung 93 sowie einer Antennenvorrichtung 95. Die Positionsbestimmungsvorrichtung 91 sei hier teilweise als zentrale Funkeinheit bezeichnet.

In dem Raum vor der zentralen Funkeinheit 91 befinden sich mehrere Kommunikationsvorrichtungen 910, die jeweils für ein Objekt stehen. Die Objekte 910 sind hier ortsfest und ändern daher nicht ihre Position. Die Richtcharakteristiken der Antennenvorrichtung 95 erlauben in dem dargestellten Beispiel die Aufteilung des Raumes in mehrere Felder, die mit Koordinaten (i; j) bezeichnet werden, die sich aus der i-ten Spalte und der j-ten Zeile ergeben.

Die zu diskutierenden Raumbereiche für das Senden bzw. Empfangen der Signale sind jeweils eingezeichnet, wobei Pfeile die Richtung der Signale kennzeichnen.

Im Schritt 1, der in Fig. 28 dargestellt ist, wird ein Anregungssignal 9100, das als Aufwecktelegramm bezeichnet werden kann, an alle Objekte 910 gleichzeitig im Sichtbereich der (un)gebündelten Antennenvorrichtung 95 von der zentralen Funkeinheit 91 gesendet. Das Signal ist in einer Ausgestaltung eine Aktiviersequenz mit einer Dauer von z. B. 30 ms. Die Objekte 910 sind dabei entsprechend ausgestaltet, das Anregungssignal 9100 als vereinbarte Aktiviersequenz zu empfangen und zu erkennen und daraufhin Antwortsignale für den Schritt 2 vorzubereiten. Die Objekte 910 sind nun "geweckt".

Die zentrale Funkeinheit 91 stellt nach dem Aussenden des Anregungssignals 9100 die Mehrkeulenantenne als Beispiel für die Antennenvorrichtung 95 auf das erste der m * n Felder der Objektebene ein und geht auf Empfang. War also zunächst die Sendevorrichtung 92 aktiv, so arbeitet nun die Empfangsvorrichtung 93 der zentralen Funkeinheit 91.

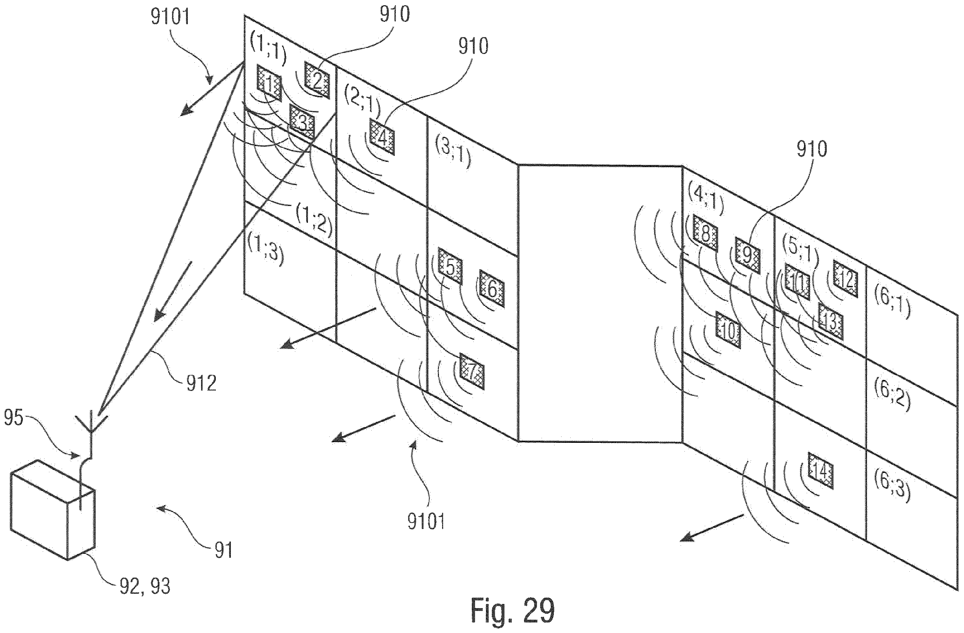

Die Fig. 29 zeigt, wie im Schritt 2 die aufgeweckten Objekte 910 antworten und ihre Antwortsignale 9101 senden. Die Antwortsignale 9101 umfassen dabei in der dargestellten Ausgestaltung eine Antwortpräambel sowie objektspezifische Informationen wie z. B. ID-Kennung, Seriennummer oder Statusinformationen. Weitere Informationen können auch Sensorwerte oder Daten über letzte besondere Objektereignisse (z. B. Erschütterung) sein.

Zu sehen ist in der Abbildung, dass aus einigen Feldern mehrere Kommunikationsvorrichtungen 910 antworten (hier sind dies die Felder (1; 1), (3; 2), (4; 1) und (5; 1)). Werden also die meisten Antwortsignale 9101 dadurch getrennt, dass durch die Richtcharakteristiken der Antennenvorrichtung 95 unterschiedliche Empfangsbereiche 912 geschaltet werden, so ist hier die Trennung der Antwortsignale 9101 z. B. über die Identifikations-Trennung möglich.

In einer weiteren Ausgestaltung erfolgt in dem Fall, dass mehrere Objekte 910 nah beieinander angeordnet sind, eine Antwortverzögerung, die z. B. aus der individuellen ID-Kennung abgeleitet wird. Die Verzögerung ergibt sich beispielsweise aus einer 16-Bit-ID-Kennung modulo 5, multipliziert mit der Antwortdauer.

Ein Beispiel: Ein Objekt 910 mit der ID-Kennung 68 antwortet nach 3,50 ms. Ein Objekt 910 mit der ID-Kennung 21 antwortet nach 1,50 ms und ein Objekt 910 mit der Kennung 40 antwortet unmittelbar ohne eine Verzögerung. Durch die Trennung der Zeitpunkte, zu denen die einzelnen Signale aus einem Feld oder einem Empfangsbereich empfangen werden, ergibt sich damit die Trennung hinsichtlich der einzelnen Kommunikationsvorrichtungen 910.

In dem Fall, dass die Objekte 910 den jeweiligen Empfangspegel der Aktivierfunksequenz 9100 - z. B. als RSSI-Wert - bestimmen, ist in einer Ausgestaltung vorgesehen, dass eine Anpassung - insbesondere eine Absenkung - der Sendeleistung für die zu leistende Funkantwort aus Gründen der Stromersparnis, längeren Batterielaufzeit und auch geringerer Nebenaussendungen zu Nachbarn erfolgt.

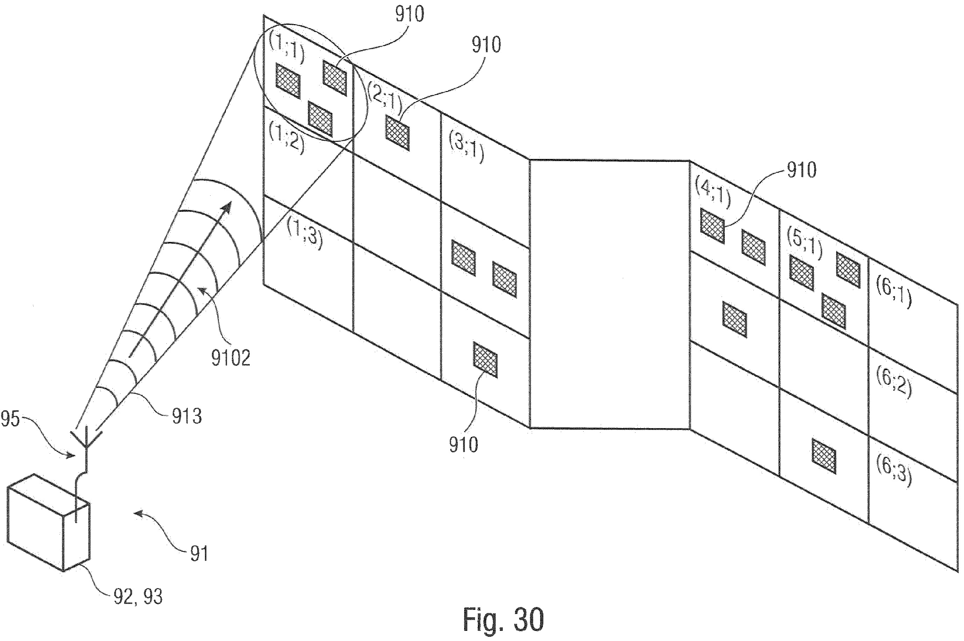

Die den Schritt 3 darstellende Fig. 30 zeigt die gezielte Kommunikation der Positionsbestimmungsvorrichtung 91 mit den Objekten 910 eines Feldes (1; 1).

Ausgehend von der Lokalisierung und Identifizierung der Kommunikationsvorrichtungen 910 kann die zentrale Funkeinheit 91 nun gezielt Objekte 910 in bestimmten Feldern mit gebündelter Strahlrichtung der Antennenvorrichtung 95 adressieren und weitere Kommunikation - ggf. sogar mit höherer Datenrate - abwickeln. Dafür sendet die Sendevorrichtung 93 die Kommunikationssignale 9102 aus. Der Empfang von daraufhin von der Kommunikationsvorrichtung des ausgewählten Kommunikationsbereich 913 gesendeten Signalen findet vorzugsweise ebenfalls mit einer ausgesuchten Richtcharakteristik statt. In einer Ausgestaltung wird für den Empfang der weiteren Signale die gleiche Richtcharakteristik verwendet.

Eine mögliche Reduktion der auszuleuchtenden Felder auf eine deutlich kleinere Untermenge ist für eine bestimmte Dauer sinnvoll, z. B. von 6 * 8 auf beispielsweise 12 Felder. Eine feldweise Aussendung der Feldkoordinaten (Ortsinformation) durch die zentrale Funkeinheit 91 an die Objekte 910 in den jeweiligen Feldern führt zur individuellen Kenntnis des Aufenthaltsorts bei den Objekten 910.

Multihop-Verfahren bei der Bildung von ad-hoc-Sensornetzwerken und die schnelle Feststellung von Nachbarschaftsverhältnissen unter den Objekten 910 ist durch diese Information (die Propagation der Ortsinformation durch die gebündelte, feldweise Funksendung) effizient möglich. Unter Mulithop-Verfahren versteht man dabei das Übertragen von Datenpakete über mehrere Zwischenstationen hinweg. In einer Ausgestaltung kommunizieren somit die Kommunikationsvorrichtungen 910 miteinander.

Nach der bestimmten Dauer kann wieder eine vollständige Feldausleuchtung aller m * n Felder erfolgen und das Verfahren im Schritt 1 erneut begonnen werden.

Die zeitliche Häufigkeit des Verfahrens nach Schritt 1 bis 3 gibt die mögliche Aktualisierungsrate der detektierten Objekte 910 bzw. deren Anwesenheit und Identität vor. Auch Bewegungsvorgänge von Objekten 910 können so erfasst und detektiert werden, etwa wenn ein Objekt 910 nach und nach verschiedene Felder durchläuft und für das Verfahren nach Schritt 1 bis 3 entsprechend antwortet. Indirekt kann somit sogar auf die Bewegungsrichtung innerhalb der Felder (bzw. einer Projektion) und auf die Objektgeschwindigkeit geschlossen werden.

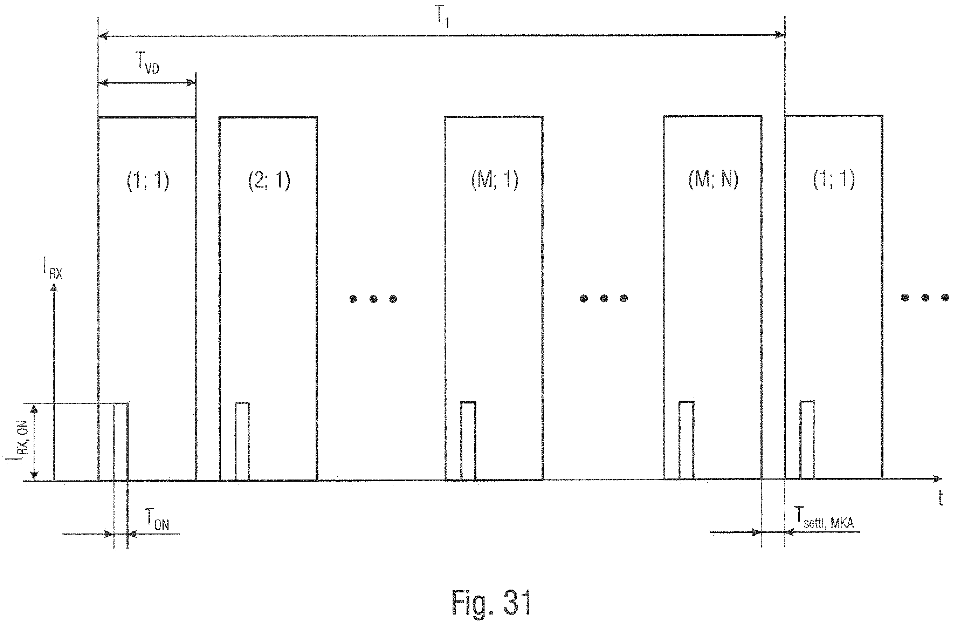

Die Fig. 31 zeigt ein Ausführungsbeispiel für einen zeitlichen Ablauf des Felddurchlaufs mit kurzer Abtastung. Es folgen auch ein paar beispielhafte Zahlenwerte.

Dargestellt ist die Abtastung der M * N Felder mit Koordinaten (i; j), wobei i = 1, ..., M und j = 1, ..., N. Die Abtastung aller Felder findet innerhalb der Zeitdauer $T_1$ statt.

Die Kommunikationsvorrichtungen senden ihre Antwortsignale mit einer bestimmten Datenrate $1/T_b$ oder langsamer aus, z. B. 1 kbps. Die zentrale Funkeinheit empfängt innerhalb der Verweildauer $T_{VD}$ die Funksignale aus dem über die Richtcharakteristik ausgewählten Feld (i; j). Die Verweildauer $T_{VD}$ - also die Zeit, für die eine Richtcharakteristik aktiv und daher Signale aus dem Empfangsbereich empfangen werden - beträgt in der gezeigten Ausgestaltung höchstens:

$$T_b/(m * n).$$

Die Symboldauer $T_b$ als Dauer der Antwortsignale betrage 1 ms. Dabei werden mit den Richtcharakteristiken M * N = 10 * 10 Felder abgetastet.

Die Verweildauer $T_{VD}$ des Empfangsbereichs - also des Beams - auf jedem Feld beträgt:

$$T_{VD} = T_b/(M * N) - T_{settl,MKA}.$$

Dabei ist $T_{settl,MKA}$ die Einstellzeit für die Richtcharakteristik pro Feld. Hier sei $T_{settl,MKA}$ = 100 ns. Damit ergibt sich $T_{VD}$ = 1 ms/100 - 100 ns = 10 $\mu$s - 100 ns = 9,9 $\mu$s.

Weiterhin ist noch die Einschaltdauer der Empfangsvorrichtung $T_{ON}$ eingetragen. In dieser Zeit werden die Antwortsignale während des Verweilens des Beams - also z. B. der Keule der jeweils geschalteten Richtcharakteristik - im Feld (i; j) empfangen. Die Einschaltdauer ist vorzugsweise sehr kurz (insbesondere $T_{ON} \ll T_{VD}$, z. B. $T_{ON}$ = 100 ns), so dass auf der Seite der Empfängervorrichtung Energie eingespart werden kann. Dies hat dann den Vorteil einer hohen Betriebsdauer. Gleichzeitig erlaubt eine stromsparende Empfängervorrichtung z. B. auch die Anwendung im Heimbereich bzw. ist allgemein eher wartungsarm.

In der Zeit $T_{ON}$ wird eine Signalprobe empfangen und verarbeitet. Dies kann in Form von Amplituden-, Frequenz- oder Phasendemodulation geschehen. Vorzugsweise wird die Amplitude des Empfangssignals innerhalb $T_{ON}$ verarbeitet, weil dies häufig stromsparend erfolgen kann (vergleichbar einem Diodendetektor).

insbesondere sei $T_{ON}/T_0 \ll 1$ und möglichst $T_{ON}/T_0 \leq 1$ %. Dabei ist die Zeit $T_0$ gegeben durch: $T_0 = T_{VD} + T_{settl,MKA} = T_b/(M * N)$. Es handelt sich also um die Zeit zwischen jeweils zwei abgetasteten Feldern.

Die Empfangsvorrichtung der Positionsbestimmungsvorrichtung bzw. der zentralen Funkeinheit habe als ON-Strom - also als Strombedarf für den Empfang und die Verarbeitung von empfangenen Signalen - den Wert: $I_{RX,ON}$.

Damit ergibt sich als mittlere Stromaufnahme der Kommunikationsvorrichtung:

$$\overline{I_{RX}} = \frac{T_{ON}}{T_0} \cdot I_{RX,ON} = \frac{T_{ON} \cdot M \cdot N}{T_B} \cdot I_{RX,ON} \ .$$

Sei $I_{RX,ON}$ = 1 mA. Dann ergibt sich beispielsweise für $T_{ON}$ = 100 ns und $T_0$ = 10 $\mu$s eine mittlere Stromaufnahme $\overline{I_{RX}}$ von 10 $\mu$A. Dies erlaubt es, batteriebetriebene Kommunikationsvorrichtungen mehrere Jahre zu betreiben.

Eine weitere Variante zur Beschleunigung des Verfahrens bzw. zum Einsparen von Energie ermöglicht die folgende Ausgestaltung:

Für den Fall, dass bereits die interessierenden Objekte bzw. die zugehörigen Felder (x; y) durch die Auswertung der Präambeln der Antwortsignale ermittelt worden sind, gibt es für das weitere Vorgehen bezüglich der m * n-Feldmatrix mehrere Varianten:

In einer Variante werden mit der bestehenden Abtastrate $f_{MKA,MUX}$ und derselben Datenrate $f_{Abtast,RX}$ die weiteren Felder abgetastet. Dadurch ist eine vollständige, lückenlose Verarbeitung aller möglichen m * n Sendesignale möglich. Es ist kein Synchronisationsaufwand zwischen den sendenden Objekten untereinander oder mit der Empfängervorrichtung bzw. der zentralen Funkeinheit notwendig.

In einer alternativen Variante wird die Anzahl der "ausgeleuchteten" Beams auf die Felder reduziert, die bereits mit der Auswertung der Präambeln der Antwortsignale lokalisiert wurden: Sind z. B. nur fünf Felder identifiziert, könnte der Beam statt auf alle m * n, nun auf die fünf Plätze beschränkt werden. Im Falle der 10 * 10 Felder wäre damit eine Erhöhung der Abtastrate $f_{MKA,MUX}$ um den Faktor 100/5 = 20 möglich, was mit einer 20-fachen Datenrate für den Empfänger einhergeht. Nach einem bestimmten Abbruchkriterium (z. B. eine vorgegebene Zeitspanne oder die Tatsache, dass keine Funkdaten aus dem Feld mehr empfangen werden) kann die Reduktion der erfassten Felder wieder aufgehoben werden und die volle m*n-Erfassung, d. h. die Erfassung der Antwortsignale über alle m * n Felder, ablaufen.

Alternativ oder ergänzend wird im Falle des Erkennens einer Präambelsequenz innerhalb der m * n Felder die Verweildauer $T_{VD}$ des Beams pro Feld verkürzt, z. B. von 10 $\mu$s auf 1 $\mu$s, womit eine häufigere Erfassung, d.h. eine höhere Datenrate $1/T_b$ möglich wird. Dabei gehen keine Sendedaten anderer Objekte aus dem Feld verloren. Nach einem bestimmten Abbruchkriterium (beispielweise eine vorgegebene Zeitspanne oder der Zustand, dass keine Funkdaten aus dem Feld mehr empfangbar sind), kann wieder die ursprüngliche, niedrigere Abtastrate $f_{MKA,MUX}$ eingestellt werden. Dies erlaubt einen stromsparenden Empfang der Antwortsignale, indem nur bei tatsächlichem Bedarf die Sendedaten mit höherer Datenrate empfangen werden. $\overline{I_{RX}}$ wird meist nur wenig erhöht.

Nach Ablauf der Verweildauer $T_{VD}$ wird das nächste Feld durch den Beam angesteuert. Dazu wird die Antenne auf eine andere Richtcharakteristik umgeschaltet. Die Reihenfolge der angepeilten m * n Felder kann regelmäßig auf- oder absteigend sein, zufällig oder heuristisch erfolgen.

Das Verfahren wird für alle Felder ausgeführt und erfordert höchstens so viel Zeit wie ein Datenbit lang ($T_b$) ist. Damit gehen keine Sendedaten verloren.

Nach Erfassung aller m * n Felder wird das Verfahren für das nächste Datenbit wiederholt. Somit sind in den m * n Datenpuffern der Empfangsvorrichtung bzw. der zentralen Funkeinheit die empfangenen Bitfolgen abgelegt.

Bei Bedarf wird das Verfahren in einer Ausgestaltung überabtastend eingesetzt, d. h. es wird pro Feld mehr als eine Probe genommen, z. B. vier Abtastproben. Dazu muss die Verweildauer entsprechend viermal kürzer gewählt werden. Die Datenverarbeitungseinheit läuft mit Bittakt $1/T_b$ und kann verzögerungsarm die Detektion bestimmter Präambeln oder Korrelationsmuster vollziehen, um die tatsächlich erfolgte Antwort des jeweiligen Objektes mit gewisser Sicherheit feststellen zu können.

In diesem Fall können mehrere Schlüsse gezogen werden:

Im jeweiligen Feld hat ein Objekt die Aktivierungsfunksequenz in Form des Aktivierungssignals erfolgreich empfangen, decodiert und ein Antwortsignal gesendet. Es ist somit auch gleich die Feldposition (i; j) bekannt. Damit kann beispielsweise in einem Zwischenspeicher das Vorhandensein von Funk-Objekten vermerkt werden. Zusammen mit der nachfolgend vom Objekt ausgesendeten Identitätskennung (ID) kann die Zuordnung Feldposition (i; j) und Objekt-ID erfolgen. Damit ist das Objekt aus Sicht einer von der zentralen Funkeinheit ausgehenden Winkelschätzung lokalisiert.

Falls mehrere Positionsbestimmungsvorrichtungen nebeneinander eingesetzt werden, kann durch geschickte Anordnung mit sich zumindest teilweise überlappenden Winkelfeldern auf den Ort im Raum geschlossen werden. Für den Fall von nur einer eingesetzten Positionsbestimmungsvorrichtung kann zusammen mit der Empfangsfeldstärke oder einer als "Received Signal Strength Indicator" (RSSI) abgeleiteten Maßzahl auf die Entfernung innerhalb eines Winkelfeldes geschlossen werden. Falls eine RSSI-Detektion ohne Funkhindernisse zu Kalibrierzwecken mit der eingesetzten Positionsbestimmungsvorrichtung möglich ist, kann so auf die Entfernung bzw. auf etwaige Hindernisse oder Abschattungen im Winkelfeld geschlossen werden.

Der durch Strahlbündelung im Beam erzielbare Richtgewinn kann sowohl sendeseitig als auch empfangsseitig genutzt werden, z. B. durch reduzierte Sendeleistung bzw. durch verminderte Mindestempfindlichkeit in der Empfangsvorrichtung. Daneben ist die gerichtete Kommunikation im Sinne von "Space Diversity" möglich mit geringen oder sehr geringen Nebenaussendungen außerhalb der jeweiligen Hauptkeule der einzelnen Richtcharakteristiken. Letzteres insbesondere für den Fall, dass es sich bei der Antennenvorrichtung um eine Mehrkeulenantenne handelt, bei der die Richtcharakteristiken jeweils eine dominante Keule aufweisen.

Die Positionsbestimmungsvorrichtung ist insbesondere günstig für den Betrieb ausgeführt, wenn in den Objekten und in der zentralen Funkeinheit stromsparende Funkempfänger mit geringer Reaktionszeit, z. B. Wake-Up-Receiver-Schaltungen o.ä. eingesetzt werden. So seien beispielsweise die Empfängervorrichtungen gemäß der DE 10 2009 047 199 A1 genannt. Sind daher sowohl die Kommunikationsvorrichtungen als auch die zentrale Funkeinheit entsprechend energiesparend ausgestaltet, dann können auf Objektseite, aber auch auf der Seite der zentralen Funkeinheit batteriebetriebene Implementierungen wartungsarm mit Betriebsdauern von Jahren vorgesehen sein.

Im Sonderfall, dass das Verfahren nach Schritt 1 nur relativ selten, z. B. alle 2 Minuten ausgeführt wird, jedoch der Empfangsfall mit dem abtastenden Erfassen aller m * n Felder mittels stromsparendem Funkempfänger (Schritt 2) die meiste Zeit vorliegt, kann die Stromaufnahme im Wesentlichen auf den Empfängerstromverbrauch auf Seite der zentralen Funkeinheit als auch auf Objektseite reduziert werden.

Das Abtastverfahren erlaubt außerdem das spontane Aussenden von Funktelegrammen auf Objektseite. Eine Koordination oder Synchronisation kann entfallen. Falls Objekte nur ereignisgesteuert Funkmeldungen absenden, ist die erhöhte Stromaufnahme auf Objektseite nur abhängig von der Häufigkeit solcher Ereignisse. Eine numerische Begrenzung der Objektzahl besteht prinzipiell nicht. Eine Erweiterbarkeit oder Veränderbarkeit bei der Objektanzahl ist jederzeit möglich.

Das Verfahren ist sehr verzögerungsarm ausgeführt und erlaubt eine zügige Detektion von Objektereignissen und stellt eine deutliche technische Verbesserung von drahtlosen Funksystemen zur Umsetzung von vernetzten Objekten im Sinne eines "Internet der Dinge" dar.

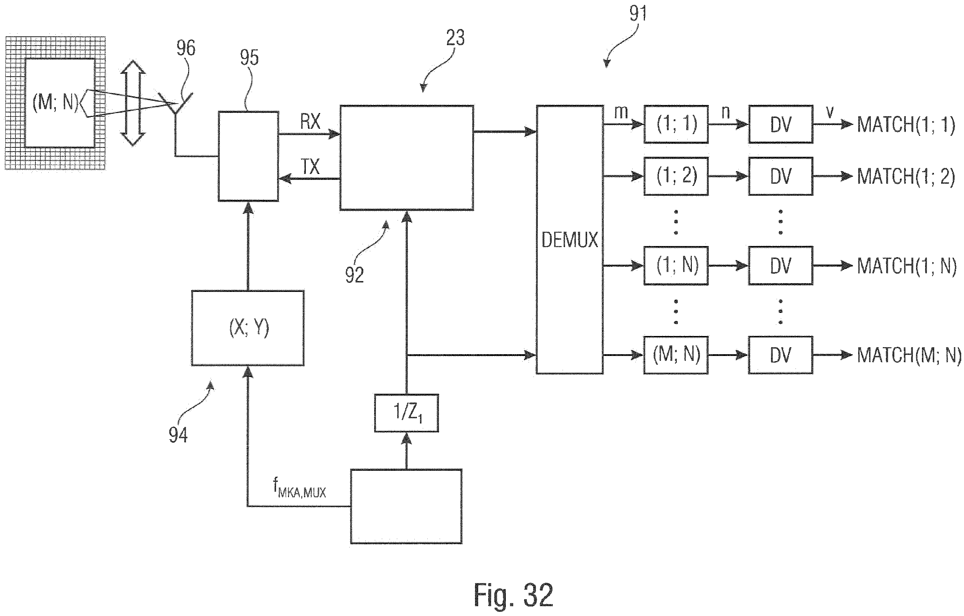

Die Fig. 32 zeigt eine Ausgestaltung eines Aufbaus der zentralen Funkeinheit 91 mit Antennensteuerung, Abtasteinheit und Datenverarbeitung.

Dabei verfügt die Antennenvorrichtung 95 über mehrere Antennenelemente 96, von denen hier nur eine dargestellt ist, und ist mit einer Vorrichtung verbunden, die hier als Empfangsvorrichtung 93 - dargestellt über den mit RX bezeichneten Pfeil - und als Sendevorrichtung 92 - dargestellt mit dem mit TX bezeichneten Pfeil - fungiert. Dabei handelt es sich vorzugsweise um eine stromsparende Sende-/Empfangsvorrichtung, die hier als abtastender ASK-/OOK-demodulierender Funkempfänger arbeitet. Alternativ wird Frequenzumtastung (Frequency Shift Keying, FSK) für die Datenübertragung verwendet.

Die Steuervorrichtung 94 wählt die einzelnen Richtcharakteristiken der Antennenvorrichtung 95 aus und bestimmt daher die (x; y)-Koordinaten der Felder, die mit den Richtcharakteristiken verbunden sind und aus denen (Antwort-)Signale empfangen bzw. in die (Kommunikations- oder Aktivierungs-)Signale gesendet werden. Zudem erhält die Steuervorrichtung 94 noch von einer Taktquelle die Frequenz $f_{MKA,MUX}$ für die Abtastung der Felder, d. h. für das Schalten der Richtcharakteristiken, um die einzelnen Empfangsbereiche zu erhalten. Die damit verbundene Datenrate $f_{Abtast,RX}$ wird in der dargestellten Ausgestaltung der Sende-/Empfangsvorrichtung und als Abtastfrequenz dem Demultiplexer zugeführt.

Die empfangenen Daten, z. B. in Form von ASK-/OOK-Daten oder FSK-Daten, lassen sich als binärer Datenstrom mit der Wortbreite n beschreiben. Der einfachste Fall der Wortbreite 1 Bit liegt z. B. bei einfacher 2-ASK- oder OOK-Demodulation vor.

Die Daten werden auf einen Demultiplexer (hier bezeichnet mit DEMUX) mit n Ausgängen gegeben, die jeweils mit einem von insgesamt n Empfangsdatenpuffern und einem jeweils zugeordneten Datenverarbeitungseinheit DV verbunden sind. Die detektierten Bits der empfangenen Signale werden somit sortiert und in einem Datenpuffer für die M * N Empfangsbitfolgen der jeweiligen Länge L abgelegt. Die M * N Empfangsdatenpuffer sind z. B. als Schieberegister der Länge L mit der Wortbreite n ausgeführt. Der Einfachheit halber seien diese gleichartig ausgeführt.

Die Datenverarbeitungseinheiten DV erzeugen jeweils einen Match (i; j), zugeordnet zu den einzelnen Feldern (i; j). Dies erfolgt beispielsweise als Mustererkenner mit oder ohne Fehlertoleranz, um jeweils die Antwortpräambel der jeweiligen Kommunikationsvorrichtung mit gewisser Sicherheit zu erkennen. Die Datenverarbeitungseinheiten DV führen eine Datencodierung oder Datenanalyse durch. Zur schnellen Lokalisierung wird in einer Ausgestaltung eine Korrelationsanalyse als digitale Berechnung der Kreuzkorrelation zur Bestimmung der Ähnlichkeit einer ausgesendeten Identifikationssequenz mit jeweils einer Referenzsequenz verwendet. Die Datenverarbeitungseinheiten DV liefern z. B. einen decodierten Datenstrom oder z. B. ein digitales Signal der Wortbreite v - bezeichnet als MATCH(m;n) - zur Anzeige der Übereinstimmung von Sende- und Referenzsequenz.

Wird als Sendesequenz - also als Antwortsignal - eine für die Kreuzkorrelationsanalyse geeignete Sequenz (z. B. wenn die Autokorrelationsfunktion der Referenzsequenz einem zeitdiskreten Dirac-Impuls ähnlich ist) verwendet, so kann die erfolgreiche Übereinstimmung von Sende- und Referenzsequenz leicht und empfangsfehlertolerant digital ermittelt werden. Das jeweilige MATCH(m;n)-Signal kann in diesem Fall als rein binäres Signal erzeugt werden, wenn ein numerischer Vergleich eines Übereinstimmungsmaßes mit einer Entscheidungsschwelle zugrunde gelegt wird. Die ausgesendete Sequenz kann als Zusammensetzung von Präambel zur Korrelation und Datenteil ausgebildet sein.

In dieser Ausgestaltung wird die Funkantwort der Kommunikationsvorrichtungen aus dem Bereich mit m * n Feldern als 2-ASK-moduliertes (Amplitude-Shift Keying oder Amplitudenumtastung, wobei die Amplitude der Trägersignale für die Übertragung von Daten verändert wird) Antwortsignal gesendet. In einem Sonderfall geschieht dies als On-Off-Keying (OOK). Beim On-Off Keying wird das Trägersignal angeschaltet und ausgeschaltet, um eine logische 1 bzw. eine logische 0 zu übertragen. Für diesen Fall der Modulation kann die Demodulation im Empfänger durch einfache Entscheidung mit analogen Komparatoren erfolgen.

Der Empfang und die Detektion des Datenbits der Dauer $T_b$ ausgehend von einem Objekt innerhalb des Feldes (i; j) kann auf diese Weise bereits nach der Einschaltzeit $T_{ON}$ erfolgen (siehe Fig. 31).

Hierbei sei noch einmal mit anderen Worten der zeitliche Ablauf der Lokalisierung erläutert:
Der im Zeilensprungverfahren gerichtete Beam der Positionsbestimmungsvorrichtung 91 mit einer Mehrkeulenantenne als Antennenvorrichtung 95 tastet die M * N Felder (hier z. B. 10 x 10) innerhalb einer Symboldauer (hier 1 ms) in 100 Schritten mit 10 μs ab und stellt jeweils das Antennenempfangssignal einem stromsparenden Abtastfunkempfänger zur Verfügung. Dieser nimmt eine "kurze Probe" vom HF-Signal innerhalb der Beam-Verweildauer $T_{VD}$ (9,9 μs) mit der Empfänger-Einschaltdauer $T_{ON}$ (hier z. B. 100 ns).

Dieses Sample wird ASK-/OOK-demoduliert dem 1-zu-(M * N)-Demultiplexer zur weiteren digitalen Signalverarbeitung zugeführt. Es gibt M * N Schieberegister (bezeichnet mit (1; 1) bis (M; N)) zum Zwischenspeichern der Empfangsdatensamples. Zu jedem der M * N Schieberegister gibt es eine Sequenz- bzw. Präambelerkennung, die z. B. als digitaler Kreuzkorrelator der Länge 31 Bit ausgeführt sein kann. Dies geschieht über die Datenverarbeitungseinheiten DV.

Wird für den jeweiligen der M * N Datenvektoren die vereinbarte Präambel fehlertolerant erkannt, so ist automatisch und verzögerungsfrei die (x; y)-Position innerhalb der M * N - Feldmatrix bekannt: die Winkelschätzung ist durch die vereinbarte Zuordnung Beamstrahlwinkel und Matrixzuordnung vollzogen.

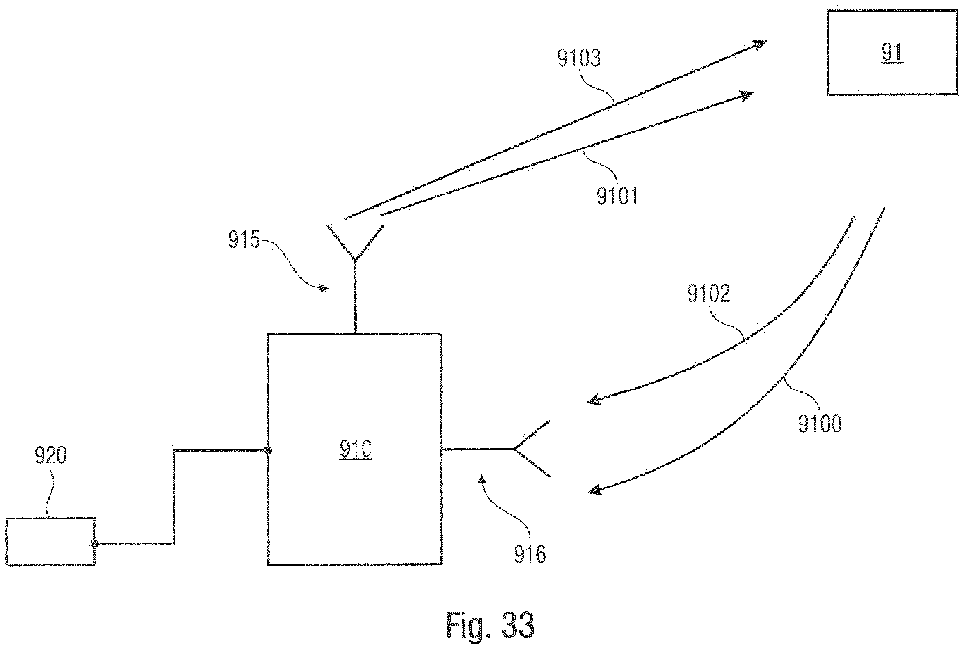

Die Fig. 33 zeigt schematisch eine Kommunikationsvorrichtung 910, die über eine Aussendevorrichtung 915 und eine Detektionsvorrichtung 916 verfügt, die hier zwei Antennenelemente einer Antennenvorrichtung sind und auch unterschiedliche Richtcharakteristiken repräsentieren. Die Kommunikationsvorrichtung 910 ist dabei beispielsweise gemäß der Offenbarung der DE 10 2009 047 199 A1 ausgestaltet. In einem einfachen, hier nicht dargestellten Fall, handelt es sich bei der Kommunikationsvorrichtung 910 um einen RFID-Tag oder RFID-Transponder. Ausgehend von dieser stromsparenden Ausgestaltung der Kommunikationsvorrichtung 910 ist in einer Ausgestaltung die Positionsbestimmungsvorrichtung 91 selbst ebenfalls eine solche energiesparende Einheit, wie sie in der DE 10 2009 047 199 A1 offenbart ist. Dabei ist die Positionsbestimmungsvorrichtung 91 jedoch mit der Antennenvorrichtung mit den unterschiedlichen auswählbaren Richtcharakteristiken für das Senden und Empfangen von elektromagnetischen Signalen ausgerüstet.

Mit der Aussendevorrichtung 915 sendet die Kommunikationsvorrichtung 910 ein Initiierungssignal 9103 aus, um die Positionsbestimmungsvorrichtung 91 zum Aussenden eines Aktivierungssignals 9100 zu veranlassen. Dieses Aktivierungssignal 9100 dient hier beispielsweise dazu, dass die Kommunikationsvorrichtung 910 mehr Energie für die weitere bzw. eigentliche Kommunikation erhält. Daraufhin sendet die Kommunikationsvorrichtung 910 ihr Antwortsignal 9101 aus, um hier als Beispiel die Messdaten des Sensors 920 zu übertragen. Der Sensor 920 sei dabei beispielsweise ein Temperatursensor.

Im nächsten Schritt sendet die Positionsbestimmungsvorrichtung 91 ein Kommunikationssignal 9102 aus, um z. B. weitere Daten mit der Kommunikationsvorrichtung 910 auszutauschen.

Hier geht somit die Sendeinitiative von der Kommunikationsvorrichtung 910 bzw. dem die Kommunikationsvorrichtung 910 aufweisenden - hier nicht dargestellten - Objekt aus. Beispielweise möchte das Objekt von sich aus die Positionsbestimmung durch die zentrale Funkeinheit 91 initiieren und sendet daher eine Aufwecksequenz oder eine andere geeignete, vorher vereinbarte Sequenz in Form eines Initiierungssignals 9103 an die zentrale Funkeinheit 91 ab. Für den Empfang von solchen Initiierungssignalen 9103 verfügt in einer Ausgestaltung die zentrale Funkeinheit 91 über eine ungerichtete und vorzugsweise auch omnidirektionale Richtcharakteristik. In einer alternativen Ausgestaltung werden z. B. die vorhandenen keulenförmigen Richtcharakteristiken der Antennenvorrichtung zeilenweise über alle Felder abtastend laufen gelassen.

Beim Empfangen der Initiativnachricht des Objekts stellt die zentrale Funkeinheit 91 die Objektposition (bzw. die Feldkoordinaten) fest. Dies geschieht z. B. durch das Aufspalten der empfangenen Signale gemäß den einzelnen Richtcharakteristiken oder durch das gezielte Schalten der einzelnen Richtcharakteristiken.

Sendet das Objekt 910 auch seine ID als Funknachricht mit aus, dann ist der zentralen Funkeinheit (d. h. die Positionsbestimmungsvorrichtung) 91 zusätzlich die verknüpfte Information zwischen der Objekt-ID und der Objekt-Feldnummer bzw. dem Objekt-Platz bzw. der erforderlichen Richtcharakteristik bekannt. Dieser Zusammenhang kann bei der zentralen Funkeinheit 91 belassen bzw. über die erfindungsgemäße Vorrichtung dargestellt werden oder - in einer Ausgestaltung - an das Objekt 910 selbst zurückgesendet werden, z. B. als Teil des Kommunikationssignals. Das Vorgehen der Übertragung der Ortsinformation empfiehlt sich beispielsweise, wenn Objekte 910 neu in den Erfassungsbereich der zentralen Funkeinheit 91 dazukommen oder wenn Objekte 910 sich bewegen oder bewegt werden. Dann kann bei mehrfacher Anwendung des Initiierungssignals das Objekt 910 die schrittweise Erfassung der gesamten Bewegung veranlassen oder auch das Verlassen des Erfassungsbereichs schnell feststellen ("Tracking und Tracing").

Das Initiierungssignal wird in einer Ausgestaltung mit dem oben bereits beschriebenen Vorgang des selektiven Aufweckens bzw. Aktivierens verbunden.

So kann z. B. das selektive Aufwecken alle bewegten Objekte betreffen und nur diese Objekte senden die entsprechende Funkantwort zur Ortung durch die zentrale Funkeinheit aus. Damit kann der Funkverkehr auf die bewegten Objekte eingeschränkt werden und alle Positionen (Feldnummern) können laufend und mit geringer Verzögerung ermittelt werden.

Weitere Anwendungsgebiete sind insbesondere Umgebungen, wo eine RFID-basierte Erfassung im Nahbereich (Abstand << 10 m) z. B. aus Platzgründen o. ä. nicht möglich ist.

In einer - nicht dargestellten - Ausgestaltung werden mehrere zentrale Funkeinheiten verwendet, die jeweils Antennenvorrichtungen insbesondere in Form von Mehrkeulenantennen aufweisen. Hiermit lässt sich die Genauigkeit der Ortsschätzung von der reinen Feldnummer auf die Position im Raum verbessern. Zudem werden Redundanz und geringere Schätzfehler bewirkt. So kann beispielsweise mit zwei voneinander abgesetzten zentralen Funkeinheiten die Abschattung durch spontan eingebrachte Hindernisse detektiert werden und trotzdem die Ortsschätzung erfolgen.

Die Anordnung der Objekte bzw. Kommunikationsvorrichtungen kann auch als Matrix oder Satz von Bodenplatten erfolgen sowie als Deckenplatten. Ist jede Boden- oder Deckenplatte mit einem stromsparenden Funkempfänger und einem Funksender sowie einer Rechen- und Steuereinheit - also insgesamt einer Kommunikationsvorrichtung - und optional Sensoren ausgestattet, so können z. B. die Sensoren die Nähe eines beweglichen Gegenstandes oder einer Person detektieren und dann im Sinne der oben beschriebenen Schritte - z. B. durch das Initiierungssignal - die Kommunikation mit der zentralen Funkeinheit initiieren. Somit kann für jede Bodenplatte das Befahren oder Betreten individuell registriert und mit geringer Verzögerung an die zentrale Funkeinheit auch gleichzeitig übermittelt werden. Andere sensorische Ereignisse wie z. B. Beleuchtung oder verminderte Helligkeit durch Abschattung können ebenfalls die Initiierung auslösen.

Die Anordnung der Objekte bzw. der Kommunikationsvorrichtungen erfolgt in einer weiteren Ausgestaltung beispielsweise auf einer großen Fläche wie z. B. Parkplatz, Auslieferungslager, Feld etc. Dabei erlaubt die Erfindung, die Objekte (z. B. ein Transportbehälter, eine Gitterbox, ein Fahrzeug o. ä.) mit jeweils einer Kommunikationseinrichtung 910 in der Gesamtanordnung zu lokalisieren. Dazu dienen je nach Ausgestaltung eine oder mehrere zentrale Funkeinrichtungen 91, deren als Keulencharakteristik abgestrahlte Signale - je nach Ausgestaltung - die gesamte Fläche oder Teilflächen ausleuchten. Für eine höhere Zuverlässigkeit, eine genauere Bestimmtheit bzw. Genauigkeit werden in einer Ausgestaltung mehrere zentrale Funkeinheiten 91 eingesetzt. Diese teilen in einer Ausgestaltung die auszuleuchtende Fläche in mehrere Sektoren auf. Die Kommunikationseinrichtung 910 ist dabei in einer Ausgestaltung von außen an dem jeweiligen Objekt angebracht, z. B. an einem Autodach mit einem Magnet.

Das Verfahren zur Bestimmung der Objekt-Position innerhalb des Feldes durch Ausrichten der keulenförmigen Antennencharakteristik erfolgt bei der vorgenannten Ausgestaltung wie in den vorigen Abschnitten beschrieben. Die Antennen mit veränderbarer keulenförmiger Abstrahlcharakteristik sind je nach Anwendung vorzugsweise in größerer Höhe, z. B. auf Masten oder Hausdächern, aufgestellt, damit eine möglichst freie Sicht zu den Kommunikationseinrichtungen 910 der Objekte besteht und somit größere Reichweiten möglich sind. Das Verfahren dient z. B. zur schnellen Ortung von Objekten, Behältern oder Fahrzeugen (auch Personen oder Lebewesen sind denkbar) auf einer großen Fläche.

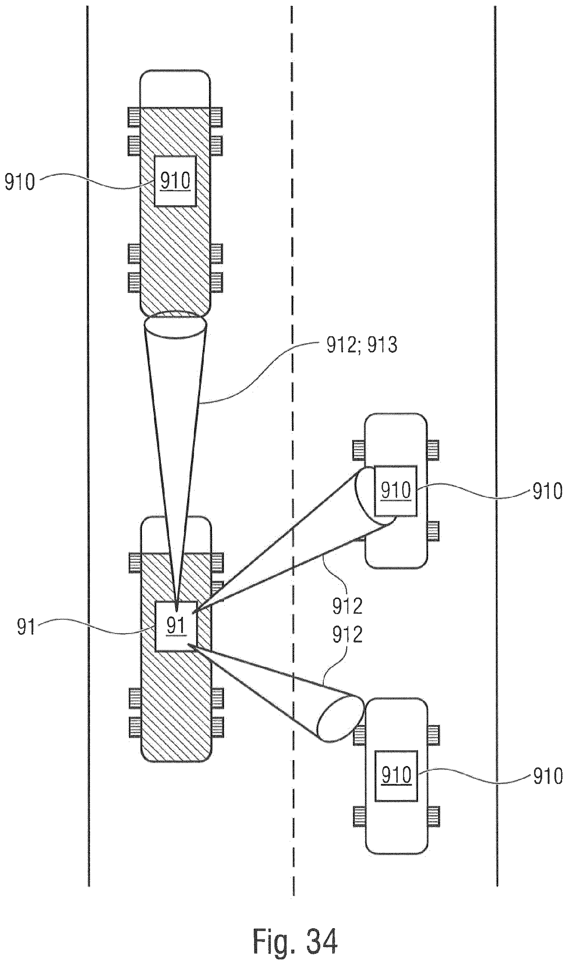

Die Fig. 34 zeigt einen Anwendungsfall, bei dem die Positionsbestimmungsvorrichtung 91 auf einem Fahrzeug, z. B. einem Lastkraftwagen installiert ist.

Weitere Fahrzeuge verfügen über entsprechende Kommunikationsvorrichtungen 910. Die zentrale Funkeinheit 91 kommuniziert mit der Kommunikationsvorrichtung 910, so dass auch der Kommunikationsbereich 913 auf dieses vorausfahrende Fahrzeug gerichtet ist. Dies dient beispielsweise der Einstellung bzw. Regelung der Fahrgeschwindigkeiten, um eine konstante Geschwindigkeit beizubehalten. Auf die beiden anderen Kommunikationsvorrichtungen 910 - der hier überholenden PKWs - sind die Empfangsbereiche 912 aus-gerichtet. Somit empfängt die Positionsbestimmungvorrichtung 91 von dort Signale und kann zumindest auch aus der Signalstärke der empfangenen Signale feststellen, ob sich die Objekte noch im Bereich der Empfangsbereiche 912 befinden. Weiterhin kann der Kommunikationsbereich 913 entsprechend auf die anderen Objekte umgelenkt werden, so dass sich auch mit diesen die Kommunikation realisieren lässt.

Dies ist somit ein Beispiel für eine Car-to-Car-Kommunikation und erlaubt, dass Fahrzeuge miteinander oder mit anderen Verkehrsteilnehmern kommunizieren. Über den Kommunikationsbereich 913 ereignet sich insbesondere eine bidirektionale Kommunikation mit einem anderen Fahrzeug, während über die anderen Empfangsbereiche 912 gelauscht wird, welche Fahrzeuge eventuell auch kommunizieren wollen. Davon ausgehend wird entsprechend zwischen den Richtcharakteristiken umgeschaltet. Ein möglicher Frequenzbereich liegt beispielsweise im Wireless-LAN 5,9 GHz-Band. Die Daten über die anderen Fahrzeuge lassen sich über die erfindungsgemäße Vorrichtung darstellen. So wird in einer Ausgestaltung aus den empfangenen Signalen auch eine Geschwindigkeit der anderen Fahrzeuge ermittelt und dargestellt.

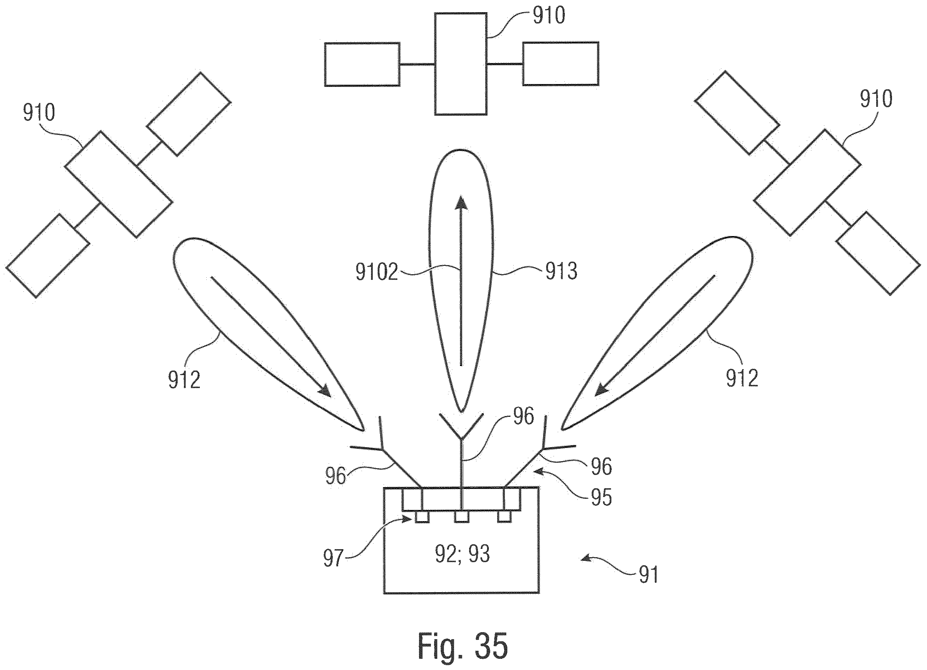

In einer ähnlichen Ausgestaltung - gezeigt in der Fig. 35 - handelt es sich bei den Objekten, die die Kommunikationsvorrichtungen 910 aufweisen bzw. die sogar die Kommunikationsvorrichtungen 910 sind, um Satelliten. Es handelt sich somit um den Fall der Kommunikation zwischen einem Satelliten 910 und der Erde, auf der sich die Positionsbestimmungsvorrichtung 91 befindet, oder zwischen mehreren Satelliten.

Dabei ist hier die Antennenvorrichtung 95 als Mehrkeulenantenne mit einem Speisenetzwerk als Steuervorrichtung 94 mit mehreren Toren 97 verbunden.

Die Richtcharakteristik, die dem Kommunikationsbereich 913 zugeordnet ist und die hier der bidirektionalen Kommunikation und zumindest dem Aussenden des Kommunikationssignals 9102 dient, ist als Sende-Empfangskeule über ein Tor 97 des Speisenetzwerks 94 in eine bestimmte Richtung gelenkt. An diesem Tor 97 des Speisenetzwerks 94 findet zunächst die bidirektionale Kommunikation zwischen der Positionsbestimmungsvorrichtung 91 (also der zentralen Funkeinheit) und der Kommunikationsvorrichtung in Form des ausgesuchten Satelliten 910 statt. An den anderen Toren 97 wird gelauscht (Empfangsfall), d. h. die anderen Richtcharakteristiken werden als reine Empfangsbereiche 912 verwendet, aus denen nur Signale (angedeutet durch die Pfeile) empfangen und in die keine Signale von der Positionsbestimmungsvorrichtung 91 ausgesendet werden. Über diese anderen Richtcharakteristiken bzw. über die zugeordneten Tore bzw. Signalausgänge 97 des Speisenetzwerks 94 lassen sich weitere Satelliten 910 lokalisiert und entsprechend für den Benutzer über die Erfindung darstellen.

Wird die Verbindung über das Kommunikationstor bzw. die Kommunikationskeule schlechter, so kann auf eine andere Keule bzw. eine andere Richtcharakteristik umgeschaltet werden, welche womöglich eine bessere Kommunikation (z. B. höherer Signalpegel) zu einem anderen Satelliten erlaubt.

Die Station auf der Erde bzw. die Position der Positionsbestimmungsvorrichtung kann auch ein Fahrzeug sein, welches irgendwo eine oder mehrere Antennen angeordnet hat, welche nachgeführt werden müssen, da sich das Fahrzeug bewegt.

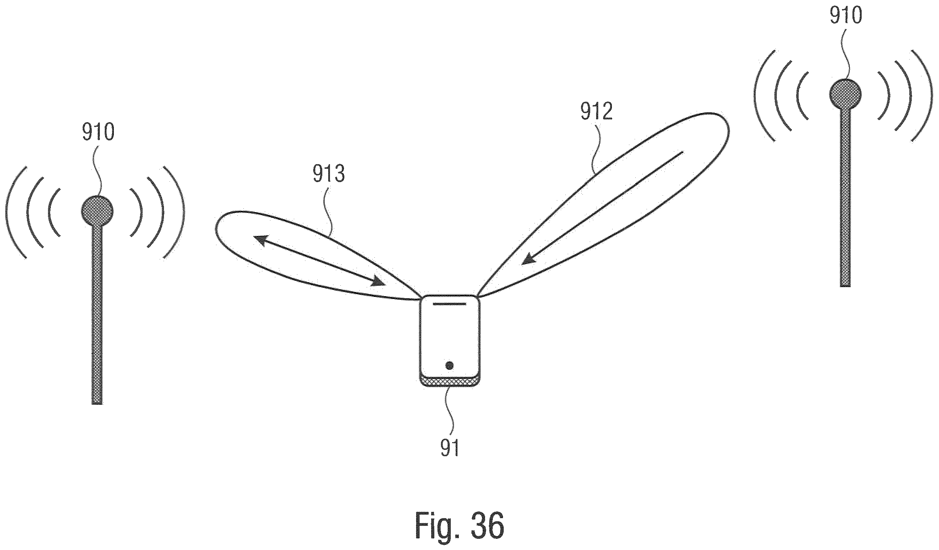

Die Fig. 36 zeigt eine Anwendung im Mobilfunkbereich.

Im Mobilfunk kommunizieren die Clients (z. B. Handy oder Smartphone) mit sogenannten Basisstationen, welche verteilt angeordnet sind. Die Basisstationen sind in der Regel so an einem Mast angeordnet, dass in Summe eine Art Rundstrahlcharakteristik entsteht. Auch der Client besitzt in der Regel eine Rundstrahlantenne. Oft treten aber Verdeckungsfälle bzw. Abschattungen auf.

Das dargestellte Smartphone sei hier die Positionsbestimmungsvorrichtung 91 und sei mit einer - nicht dargestellten - Mehrkeulenantenne ausgerüstet. Dies erlaubt die Vorgabe des Kommunikationsbereichs 913 in Richtung eines sogenannten Funkmasts als Ausgestaltung der Kommunikationsvorrichtung 910 sowie des Empfangsbereichs 912 in Richtung eines weiteren Funkmasts 910. Dies erlaubt eine Kommunikation und die gleichzeitige Ermittlung einer - möglicherweise von der Zeit oder z. B. von dem Abstand zu ihr abhängigen - bestimmten Basisstationen 910 mit deutlich höheren Gewinn (Richtwirkung).

Über die eingezeichneten Pfeile ist hier auch angedeutet, dass die Positionsbestimmungsvorrichtung 91 über den Empfangsbereich 912 nur Signale empfängt (einfacher Pfeil in Richtung der Positionsbestimmungsvorrichtung 91) und dass die Positionsbestimmungsvorrichtung 91 über den Korrespondenzbereich Signale sendet und empfängt (Doppelpfeil in beide Richtungen).

Kommt es nun zu Verdeckungsfällen oder zu größeren Abständen zu einer Basisstation 910, so kann ausgehend vom Detektieren der Signalpegel anderer Basisstationen 910 durch die verbleibenden Empfangspfade der Mehrkeulenantenne der Beam für die Kommunikation gezielt auf andere Basisstationen 910 geschwenkt werden. So ist es möglich, dass der Beam stets auf die Basisstationen mit der besten Signalstärke ausgerichtet ist.

Bewegt sich hier beispielsweise die Positionsbestimmungsvorrichtung 91 mehr zur rechten Seite, so bietet die dortige Basisstation 910 einen besseren Empfang.

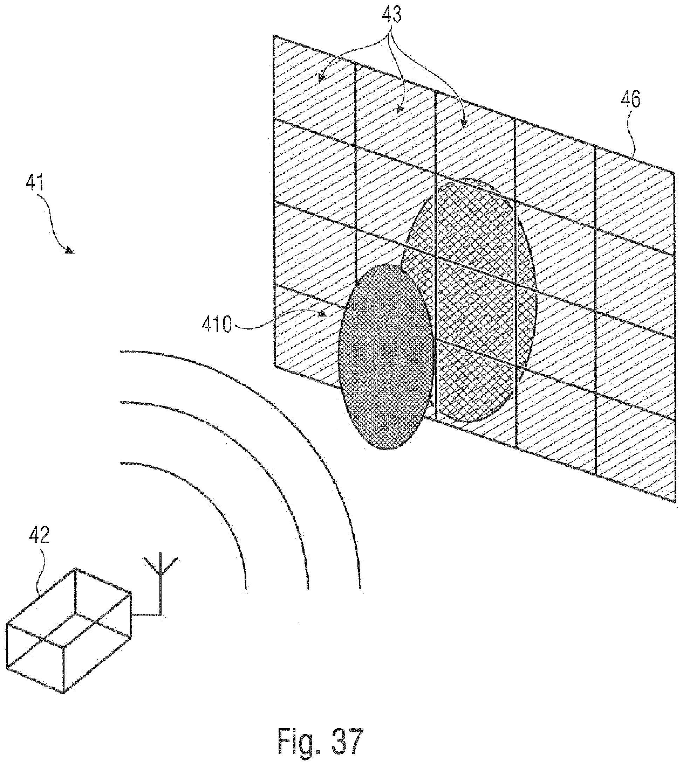

Die Abbildungen Fig. 37 bis 50 zeigen eine Positionsbestimmungsvorrichtung gemäß einer sechsten Variante.

Die Fig. 37 zeigt als Prinzipskizze einen beispielhaften Aufbau der Positionsbestimmungsvorrichtung 41 zur Erkennung eines Objekts 410. Die Positionsbestimmungsvorrichtung 41 verfügt über eine Sendevorrichtung 42 (andere Bezeichnung ist: zentrale Funkeinheit), die hier beispielsweise als Sender fungiert und beabstandet dazu über Empfangsvorrichtungen 43 (andere Bezeichnung ist: Funkmodul), die hier in einer Wand 46 mit einer Segmentierung in insgesamt 20 Teilbereichen angebracht sind bzw. die diese Teilbereiche bilden. Die Empfangsvorrichtungen 43 sind hier beispielsweise die Antennenvorrichtung als Teil der erfindungsgemäßen Vorrichtung zur Darstellung von Benutzerinformationen.

Die Sendevorrichtung 42 ist hier eine Mehr-Keulen-Antenne (MKA oder Mulibeam-Antenne), die hier als Sender und Empfänger fungiert. Dabei wird die OOK-Modulierung verwendet. OOK steht dabei für das sogenannte On-Off-Keying, bei dem das Trägersignal einer digitalen Information an- und ausgeschaltet wird, um eine logische 1 bzw. eine logische 0 zu übertragen.

Die Empfangsvorrichtungen 43 erlauben ebenfalls sowohl das Empfangen als auch das Senden von Signalen. Insbesondere handelt es sich um entsprechend der Segmentierung m * n (hier 5 * 4) WakeUp-Detektoren (siehe z. B. die Offenlegungsschrift DE 10 2009 047 199 A1). Dabei beträgt in dem gezeigten Beispiel die Stromaufnahme der Empfangsvorrichtungen 43 weniger als 20 μA.

Die Empfangsvorrichtungen 43 (im Folgenden teilweise auch als Funkmodule bezeichnet) sind zum Beobachtungszeitpunkt in der Wand 46 vorzugsweise regelmäßig angeordnet und zunächst nicht bewegt. Die Funkmodule 43 werden durch die Ausgestaltung der Sendevorrichtung 42 (im Folgenden teilweise als zentrale Funkeinheit bezeichnet) mit einem gebündelten Funkstrahl als Signal (im Folgenden auch "Beam" genannt) anvisiert.

Die Anordnung der Empfangsvorrichtungen 43 erfolgt in einer - nicht dargestellten - Ausgestaltung ergänzend über Bodenplatten sowie Deckenplatten. In einer Ausgestaltung ist insbesondere jede Boden- oder Deckenplatte mit einem stromsparenden Funkempfänger als Empfangsvorrichtung und einem zentralen Funksender als Sendevorrichtung ausgestattet. In einer weiteren Ausgestaltung sind zusätzlich Sensoren, z. B. Infrarotsensoren, Wärme- oder Feuchtigkeitssensoren, vorhanden, die die Nähe eines beweglichen Gegenstandes oder einer Person detektieren und dann zentralen Funkeinheit - also die Sendevorrichtung - zum Aussenden der Signale anstößt. Somit kann für jede Bodenplatte bzw. jede Empfangsvorrichtung das Befahren oder Betreten individuell registriert und mit geringer Verzögerung durch die zentrale Funkeinheit auch gleichzeitig für alle Bodenplatten festgestellt werden. Andere sensorische Ereignisse wie z. B. Beleuchtung oder verminderte Helligkeit durch Abschattung können ebenfalls - durch entsprechende Sensoren - die Sendevorrichtung aktivieren.

Ein beispielhafter Ablauf zur Detektion eines Objekts 410 wird anhand der folgenden Schritte erläutert. Dabei gelten die Ausführungen entsprechend auch für ergänzende oder alternative Ausgestaltungen. Zudem sind nicht alle Schritte bei allen Ausgestaltungen erforderlich.

Das Verfahren besteht in folgenden Stufen oder Schritten:

Schritt 1: Gebündeltes Aussenden eines Signals von der Sendevorrichtung 42 an eine jeweilige Empfangsvorrichtung 43.
Schritt 2: Aussenden eines Antwortsignals von der Empfangsvorrichtung 43 in dem Fall, dass eine Signaldämpfung feststellbar ist.
Schritt 3: Einstellen des Signals für ein nächstes Feld und weiter mit Schritt 1.
Schritt 4: Diskretisierung der RSSI- bzw. der Dämpfungswerte, die sich aus den Antwortsignalen ergeben.
Schritt 5: Formklassifikation und Ableitung von Bewegungsvektoren des Objekts.

Bei der Verdeckung der Empfangsvorrichtungen 43 durch das Objekt 410 sei hier bereits auf den Schattenwurf hingewiesen, der das Objekt 43 größer erscheinen lässt. Für diesen Effekt sieht es eine - hier nicht dargestellte - Ausgestaltung vor, dass die Empfangsvorrichtungen 43 so verteilt sind, dass sich auch ein Abstand des Objekts 410 zu der Halterungsvorrichtung 46 ermitteln lässt.

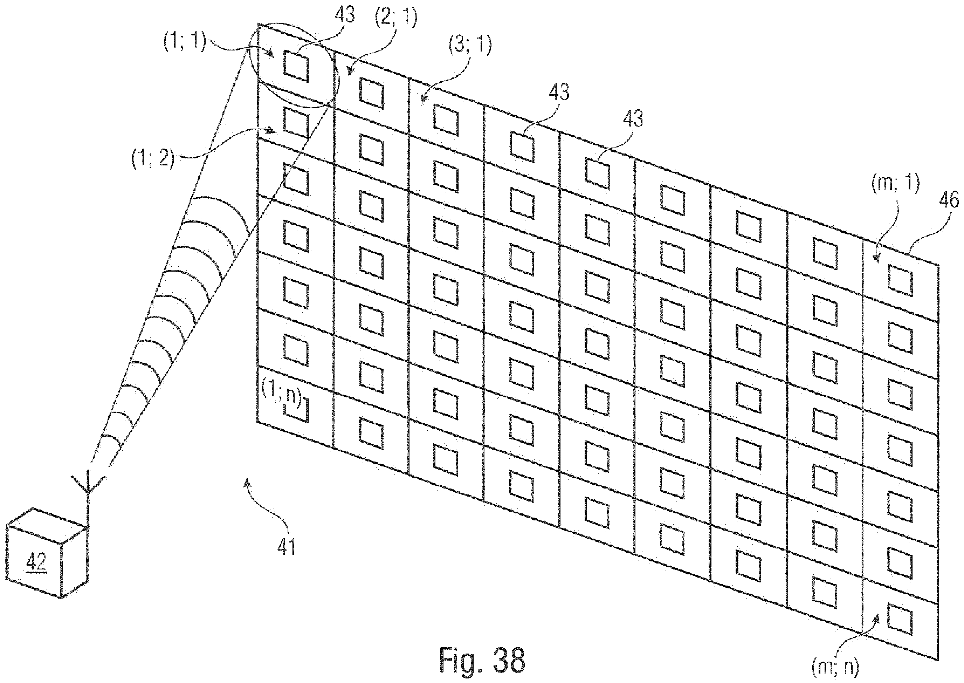

Die Fig. 38 zeigt den Fall, dass die als Mehrkeulenantenne ausgestaltete Sendevorrichtung 42 mit ihrer Richtcharakteristik und daher mit ihre Hauptstrahlrichtung auf ein erstes Feld einer Funkmodulewand 46 ausgerichtet ist. Die Richtcharakteristiken beziehen sich dabei auf räumlich unterschiedliche Ausstrahleigenschaften, wobei jede Richtcharakteristik hier durch eine Keule gekennzeichnet ist.

Mit dem Schalten der unterschiedlichen Richtcharakteristiken wird dabei in dem gezeigten Ausführungsbeispiel die Hauptkeule über die Felder der Wand 46 und damit über die Empfangsvorrichtungen 43 geleitet. Die m * n Felder seien im Folgenden mit (i; j) bezeichnet, wobei i = 1, 2 ... m und j = 1, 2 ... n.

Anschließend wird ein als Aufwecktelegramm bezeichnetes Funktelegramm bzw. Signal an die Empfangsvorrichtung 43 im ersten Feld (1; 1) gesendet. Dies kann eine Aktiviersequenz mit einer Dauer von z. B. 30 ms sein.

Die Empfangsvorrichtung 43 empfängt die - insbesondere vorab vereinbarte - Aktiviersequenz im gesendeten Signal und erkennt sie auch. Daraufhin bereitet die Empfangsvorrichtung 43 ein Antwortsignal für den obigen Schritt 42 vor. Das Funkmodul als Empfangsvorrichtung 43 im ersten Feld (1; 1) ist nun "geweckt" bzw. aktiv.

In einer Ausgestaltung wird - z. B. für eine verfeinerte Ermittlung der Signaldämpfung zwischen der Sendevorrichtung 42 und der Empfangsvorrichtung 43 in einem Feld (i; j) - ein gesondertes Signal von der Sendevorrichtung 42 ergänzend ausgesendet.

Die vorzugsweise stromsparende Empfängervorrichtung 43 erfasst das gesendete Signal und bestimmt für die Signalamplitude einen RSSI-Wert, vorzugsweise als Digitalwert. Liegt der für die Signalamplitude ermittelte RSSI-Wert oberhalb eines erwarteten RSSI-Soll-Werts, der z. B. in einer gesonderten Kalibrierung vorab bei hindernisfreier Umgebung ermittelt wurde, so führt der von einer entsprechenden Recheneinheit in der Empfangsvorrichtung 43 ermittelte RSSI-Wert zu der Aktion in dem obigen Schritt 2, d. h. die Empfangsvorrichtung 43 gibt ein Antwortsignal aus. Dies geschieht hier beispielsweise über Funksignale.

Im Schritt 2 verzichtet in der dargestellten Ausgestaltung die Empfangsvorrichtung 43 auf eine Rückantwort in Form des Aussendens eines Antwortsignals zu der Sendevorrichtung 42 als zentraler Funkeinheit in dem folgenden Fall: Für den Fall gilt, dass der RSSI-Unterschied, der definiert ist als Differenz zwischen dem aktuell ermittelten RSSI-Wert ($RSSI_{ist}$) und einem erwarteten Soll-Wert ($RSSI_{erwartet}$): $RSSI_{ist}$ - $RSSI_{erwartet}$, unterhalb eines vereinbarten Schwellwertes (dem Dämpfungsgrenzwert) liegt. In einer alternativen Ausgestaltung wird der Dämpfungsgrenzwert bezogen auf einen prozentualen Wert für die ermittelte Amplitude relativ zu der erwarteten Amplitude.

Für den Fall, dass der RSSI-Unterschied größer als der Schwellwert ist, wird je nach Ausgestaltung entweder der ermittelte $RSSI_{ist}$-Wert oder der RSSI-Unterschied ($RSSI_{ist}$ - $RSSI_{erwartet}$) oder eine entsprechende diskretisierte Größe als Funktelegramm von der Empfangsvorrichtung 43 als Funkmodul im Feld (i; j) zurück an die zentrale Funkeinheit 42 gesendet werden.

Aus Gründen der Überprüfbarkeit der vollständigen Funktionstüchtigkeit der Empfangsvorrichtung 43 im Feld (i; j) erfolgt in einer Ausgestaltung auf besondere Veranlassung durch die Sendevorrichtung 42 die Rücksendung entweder der $RSSI_{ist}$-Werte oder des RSSI-Unterschieds, gegeben durch $RSSI_{ist}$ - $RSSI_{erwartet}$ als Funktelegramm bzw. als Antwortsignal.

Für den Fall, dass sich im Strahlengang zwischen Sendevorrichtung 42 und Empfangsvorrichtung 43 keine Objekte befinden, entfallen die Antworten der Empfangsvorrichtung 43. Damit können die Empfangsvorrichtungen 43 die meiste Zeit auf Empfang verharren und verbrauchen nur den durch den jeweils stromsparenden Funkempfänger erforderlichen Strom. Dadurch ist ein wartungsarmer Betrieb der Funkmodulewand 46 mit Batterien über mehrere Jahre möglich.

In Schritt 3 wird die Richtcharakteristik der schaltbaren Mehrkeulenantenne 42 auf ein nächstes Feld ausgerichtet.

Die Reihenfolge der angepeilten m * n Felder kann regelmäßig auf- oder absteigend sein, zeilen- oder spaltenweise oder auch in Diagonalen oder auch zufällig oder heuristisch erfolgen. Die Bestimmung des jeweiligen RSSI-Wertes erfolgt wie in Schritt 1 und 2 beschrieben.

Nach Erfassung aller m * n Felder ergibt sich insgesamt bei dem hier diskutierten Beispiel eine Matrix der einzelnen RSSI-Werte $(RSSI_{ist})_{i,j}$ bzw. der festgestellten Abweichungen vom jeweils erwarteten RSSI-Wert $(RSSI_{ist} - RSSI_{erwartet})_{i,j}$. Dies ist daher ein Messzyklus, der sich als eine Abbildung des Raums zwischen der Sendevorrichtung und der Empfangsvorrichtung verstehen lässt.

Im Folgenden sei als beispielhafter Dämpfungswert für die einzelnen Felder mit Koordinaten (i; j) definiert:

$$ATTEN_{i,j} := (RSSI_{ist} - RSSI_{erwartet})_{i,j}.$$

Je nach Dämpfung des Funksignals im Strahlenbündel für ein Feld (i; j) beim Durchgang durch ein Objekt, das sich zwischen der Sendevorrichtung 42 und den Empfangsvorrichtungen 43 in der Wand 46 befindet, geben die jeweiligen Pegelwerte $ATTEN_{i,j}$ Auskunft über das zu detektierende Hindernis bzw. Objekt.

Dabei ist die Dämpfung abhängig vom Material und von der Dicke des Objekts beim jeweiligen Strahlengang sowie von der Frequenz der Strahlung.

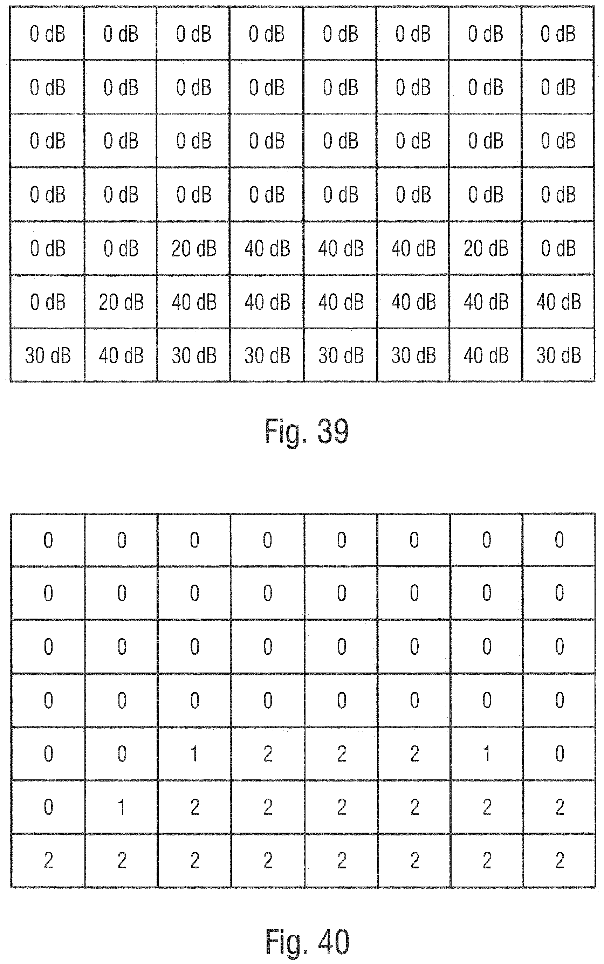

Fig. 39 zeigt eine mögliche Matrix $ATTEN_{i,j}$, die sich beim Strahldurchgang durch ein Testobjekt ergibt und bei der die ermittelten Dämpfungsmaße in Dezibel angegeben sind.

In Schritt 4 der beispielhaften Ausgestaltung wird die Matrix der Fig. 39 zur vereinfachten Berechnung noch mit 1 bis k Entscheidungsschwellen ($ATTEN_{schwelle,i}$) diskretisiert.

In einer Ausgestaltung ergibt sich eine Vorschrift zur Bildung der diskreten Pfaddämpfungsklassen $disk\_ATTEN_{i,j}$ wie folgt:
Wenn $ATTEN_{schwelle,S-1} < ATTEN_{i,j}$ und wenn $ATTEN_{i,j} <= ATTEN_{schwelle,S}$, dann sei $disk\_ATTEN_{i,j} := S$.

Gibt man für das Beispiel der Fig. 39 zwei Entscheidungsschwellen: $ATTEN_{schwelle,1}$ = 15 dB und $ATTEN_{schwelle,2}$ = 25 dB vor, so ergibt sich die Matrix der diskreten ATTEN-Werte der Fig. 40.

Für eine stromsparendere Weiterverarbeitung ist die Diskretisierung mit nur einer Entscheidungsschwelle vorgesehen. In diesem Fall ergeben sich Matrizen mit den binären Einträgen 0 oder 1.

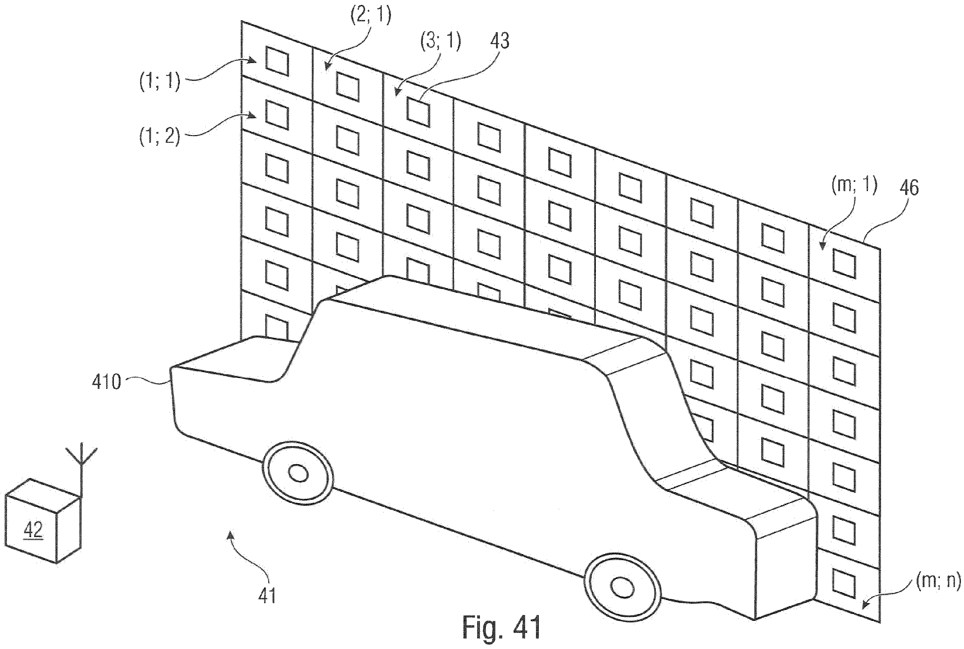

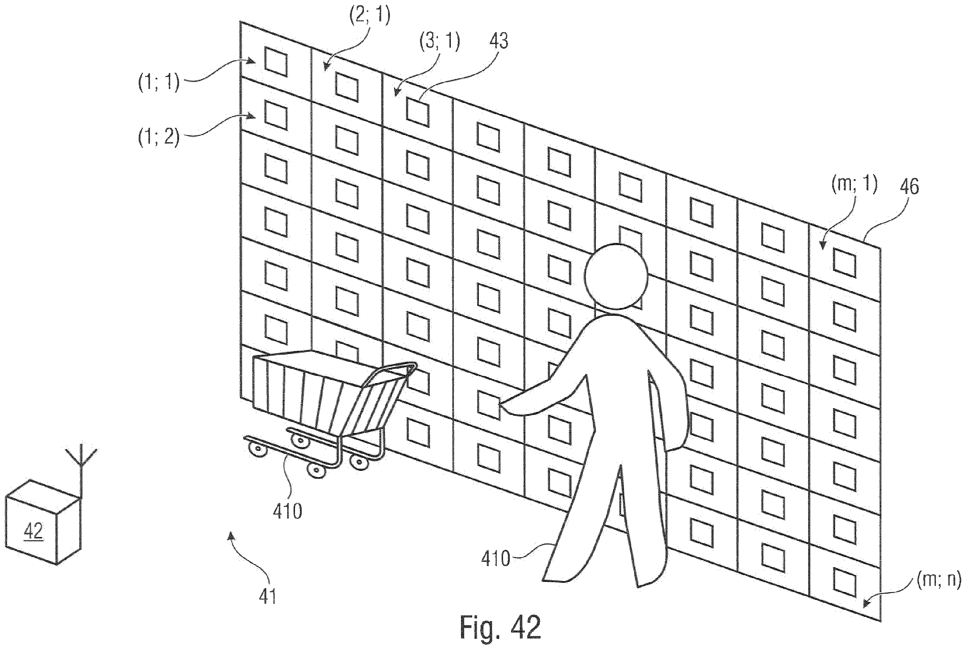

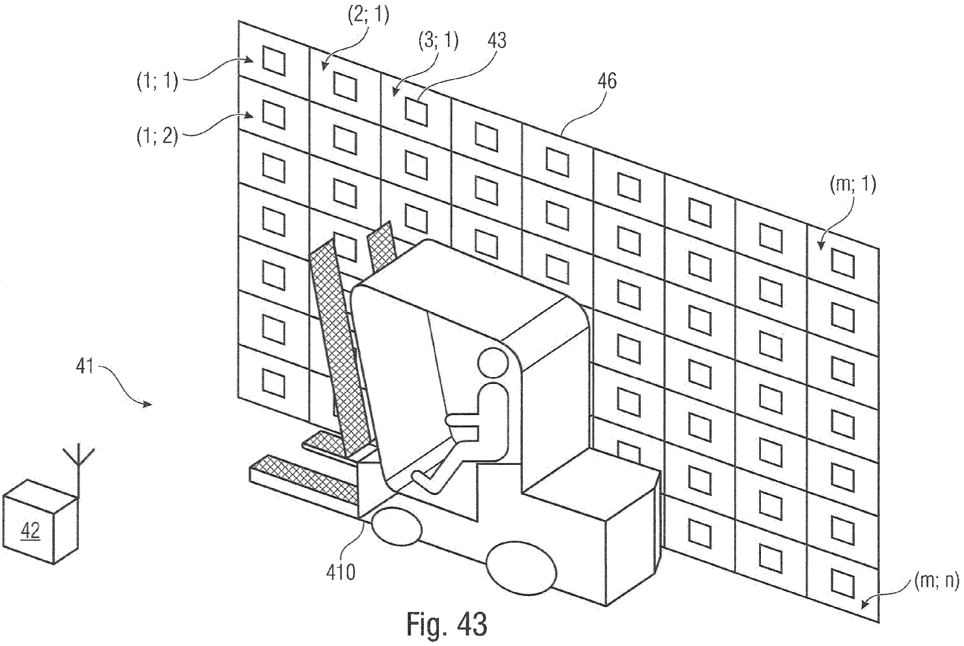

Die Abbildungen Fig. 41, Fig. 42 und Fig. 43 zeigen jeweils eine Positionsbestimmungsvorrichtung 41 mit einer Sendevorrichtung 42 und in einer Wand als Halterungsvorrichtung 46 angebrachten Empfangsvorrichtungen 43. Dabei befindet sich im Signaldurchgangsbereich als Objekt 410 einmal ein PKW (Fig. 41), einmal eine Person mit Einkaufswagen (Fig. 42) sowie einmal ein Gabelstapler (Fig. 43).

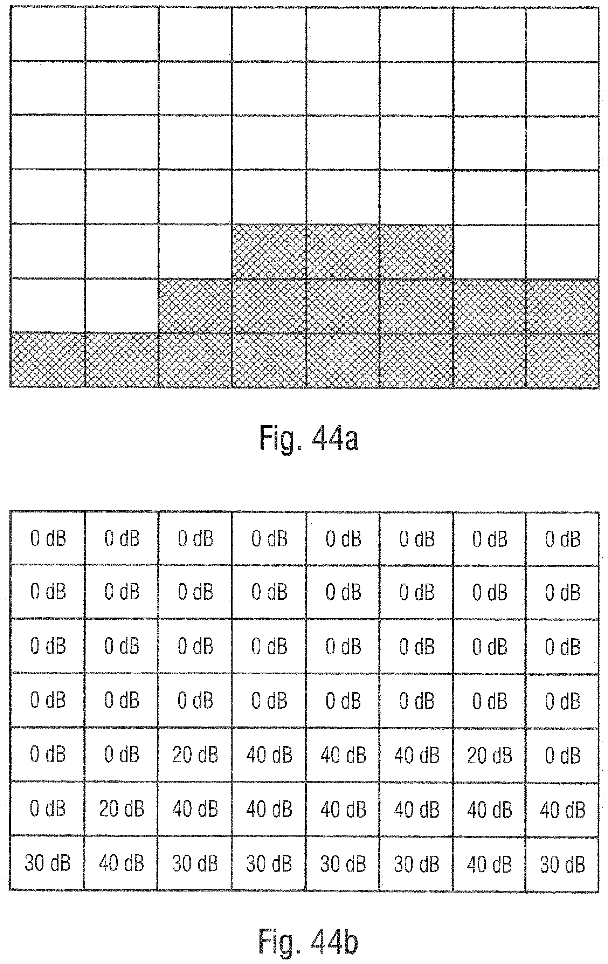

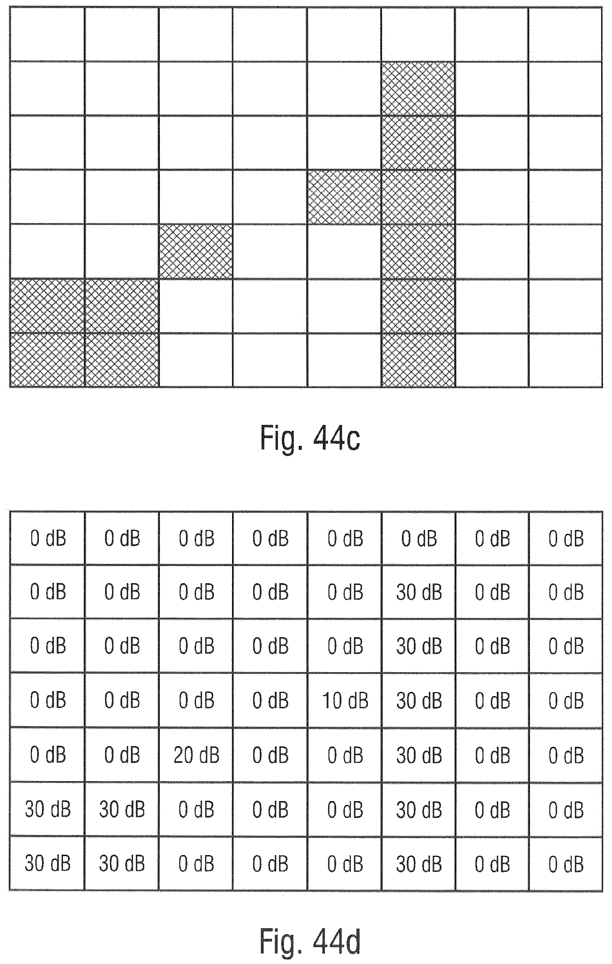

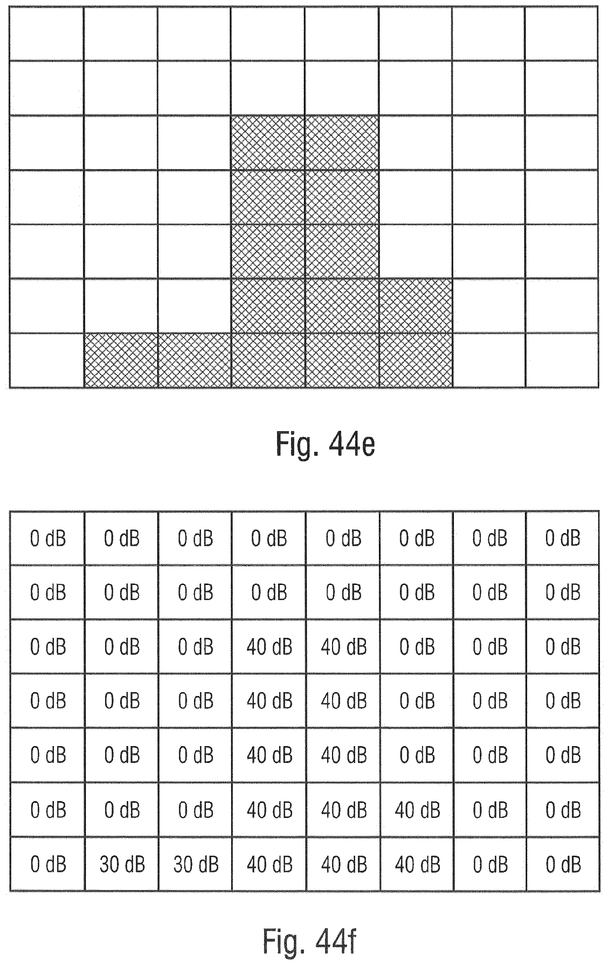

Die sich jeweils ergebenden Matrizen der Dämpfungen $ATTEN_{i,j}$ sind in der Fig. 44b (PKW), in der Fig. 44d (Person mit Einkaufswagen) sowie in der Fig. 44f (Gabelstapler) dargestellt. Werden die Matrizenwerte mit nur einer Entscheidungsschwelle diskretisiert und wird eine Einfärbung der Felder nach dem Schema: weiße Färbung für den Wert 0 und graue Färbung für den Wert 1 vorgenommen, so zeigen sich die unterschiedlichen Formen in den Abbildungen Fig. 44a (PKW), Fig. 44c (Person mit Einkaufswagen) sowie Fig. 44e (Gabelstapler).

In Schritt 5 wird die Formklassifikation anhand der diskretisierten Matrix vorgenommen. Dazu können die Fläche, die Ausdehnung in x- oder in y-Richtung, die diagonale Ausdehnungen des Objekts bestimmt werden. Eine Objektklassifikation kann anhand dieser Kennzahlen zusammen mit einer 2D-Mustererkennung mit hinterlegten Referenzformen erfolgen.

Nach Erfassung aller m * n Felder wird das Verfahren zur Gewinnung der Daten für das nächste Abbild $ATTEN_{i,j}$ wiederholt. Durch die zu unterschiedlichen, insbesondere aufeinander folgenden Messzyklen bzw. den daraus jeweils erhaltenen Dämpfungs-Abbildern lässt sich z. B. ermitteln, ob sich ein Objekt bewegt hat.

Ausgehend von der Abfragehäufigkeit der Sendevorrichtung 42 als zentralen Funkeinheit sowie ausgehend von der prinzipiell möglichen ständigen Anwesenheit eines Objekts als Funkhindernis kann auf die maximale Stromaufnahme jeder Empfangsvorrichtung 43 als Funkmodul aus der jeweiligen Sendedauer geschlossen werden.

Für diesen Fall wird in einer Ausgestaltung der Schritt 2 modifiziert:
Bleiben die RSSI-Werte bzw. die ermittelten Dämpfungen $RSSI_{ist}$ - $RSSI_{erwartet}$ von einem Messzyklus (der jeweils als Abbildung verstanden sei) im Vergleich zu einem vorhergehenden Messzyklus ähnlich bzw. sind die diskretisierten Werte $disk\_ATTEN_{i,j}$ für das jeweilige Feld unverändert, so entfällt in dieser Ausgestaltung die Ausgabe des Antwortsignals als Rückantwort der jeweiligen Empfangsvorrichtung. Erst wenn ein veränderter Wert für $disk\_ATTEN_{i,j}$ vorliegt, wenn also eine Abweichung oberhalb eines vorgegebenen Entwicklungsgrenzwerts vorliegt, erfolgt die Funkübermittlung dieses neuen Wertes von der Empfangsvorrichtung zur Sendevorrichtung.

Diese Ausgestaltung dient zur Reduktion des Funkverkehrs und der Stromaufnahme bei den Empfangsvorrichtungen bzw. Funkmodulen für den Fall, das Objekte sich nicht oder sehr langsam bewegen. Dies begünstigt wiederum den Einsatz von wartungsarmen stromsparenden Funkempfängern in der Funkmodulewand als Haltevorrichtung bei gleichzeitig niedrigem Installationsaufwand, da keine Verkabelung bzw. kein Anschließen an Stromleitungen erforderlich. Damit ist auch ein flexibler Einsatz der gesamten Anordnung möglich.

In einem weiteren Schritt wird durch Vergleich verschiedener Abbilder $ATTEN_{i,j}$ bzw. $disk\_ATTEN_{i,j}$ mit den Vorgängerabbildern auf die Bewegungsrichtung und auf die Geschwindigkeit geschlossen. Dazu sind insbesondere für diskrete Matrizen Methoden zur Korrelationsberechnung (auch Matched-Filter-Ansätze) bekannt, um mit wenigen Rechenschritten auf die Bewegungsrichtung bei gleichzeitiger Beibehaltung der Objektform schließen zu können. Dies erlaubt es, Zählvorgänge für Objekte mit gleichzeitiger Feststellung der Bewegungsrichtung zu realisieren.

In einer Ausgestaltung wird die Frequenz der von der Sendevorrichtung ausgestrahlten Signale entsprechend gewählt, um z. B. die Unterscheidung nach Materialklasse Metall, Holz, Kunststoff und Biogewebe anhand der unterschiedlichen Signaldämpfung vorzunehmen. In einer Ausgestaltung werden mindestens zwei Signalfrequenzen verwendet.

Die Signalverarbeitung der diskretisierten Abbilder als Verarbeitung der ermittelten Dämpfungswerte, insbesondere bei rein binärer Diskretisierung, ist mit geringem bis mittlerem Rechenaufwand möglich und kann dadurch gut als batterie-betriebenes Rechenwerk (dediziertes Schaltwerk oder programmierbarer Mikrocontroller oder Mikroprozessor) umgesetzt werden, weil nur Rechenoperationen in Ganzzahlarithmetik anfallen.

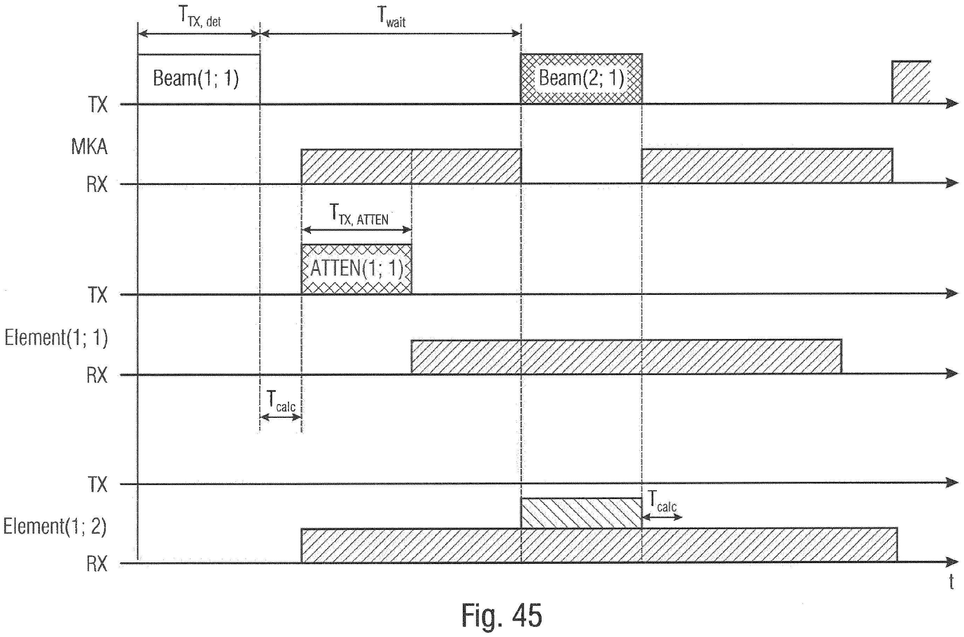

In der Fig. 45 ist ein zeitlichen Verlauf einiger Verfahrensschritte dargestellt. MKA steht hier für die Sendevorrichtung, die als Sender (TX) der Signale an die Empfangsvorrichtungen und als Empfänger (RX) der von dort ausgehenden Antwortsignale fungiert.

Die Sendevorrichtung MKA sendet ein in einen Raumbereich gerichtetes Signal (hier bezeichnet als Beam) gezielt in den Raumbereich (1; 1) und sendet einen weiteren Beam anschließend in einen anderen Raumbereich (2; 1). Dies geschieht jeweils für die Zeitdauer $T_{TX, det}$. Danach wartet die Sendevorrichtung MKA ab und lauscht auf Antwortsignale. Dies für die Zeitdauer $T_{wait}$, die hier länger als die Sendezeitdauer $T_{TX, det}$ ist.

Hier ist das Verhalten von zwei Empfangsvorrichtungen (bezeichnet mit Element) an zwei Orten (1; 1) und (1; 2) gezeigt, wobei beide Elemente ebenfalls dem Senden (TX) als auch dem Empfangen (RX) von Signalen dienen.

Das zuerst adressierte Empfangselement im Raumbereich (1; 1) empfängt den Beam (1; 1) und berechnet in der Zeit $T_{calc}$ das Dämpfungsmaß. Dieses sei hier größer als der vorgegebene Dämpfungsgrenzwert, so dass die Empfangsvorrichtung Element (1; 1) in der Zeitdauer $T_{TX, ATTEN}$ ein Antwortsignal mit dem Dämpfungsmaß aussendet.

Beim anderen Empfangselement Element (1; 2) wird ebenfalls ein Signal (Beam (2; 1)) empfangen, wobei jedoch der Dämpfungswert kleiner als der Grenzwert sei. Daher sendet das zweite Empfangselement Element (1; 2) kein Antwortsignal aus.

Für den Fall, dass die Signaldämpfung durch Abschattung aufgrund des Betretens bzw. Befahrens eines Feldes (i; j) (z. B. auf einer Bodenplatte) durch ein Objekt sehr hohe Werte annimmt und damit die Funk-Kommunikation zwischen der Empfängervorrichtung in dem durch das Objekt besetzten Feld (i; j) und zentraler Funkeinheit in Form der Sendevorrichtung verhindert ist, sieht eine Ausgestaltung ein Ausweichen auf die Empfängervorrichtung in wenigstens einem benachbarten Feld - z.B. (i+1; j) oder (i+1; j+1) - vor. Dies kann lokal von Feld zu Feld z. B. per Funk propagiert werden.

In bestimmten Fällen wickeln - in einer weiteren Ausgestaltung - alle unmittelbaren Nachbarn von Feld (i; j) die Funkkommunikation mit der zentralen Funkeinheit ab. Im Fall einer regelmäßigen matriziellen Feldanordnung kommen dann vier bzw. acht Nachbarfelder in Frage. Damit wird der prinzipielle Ausfall der Kommunikation durch sehr hohe Funkabschattung auf einem Feld bzw. in einer Ausbreitungskeule vermieden.

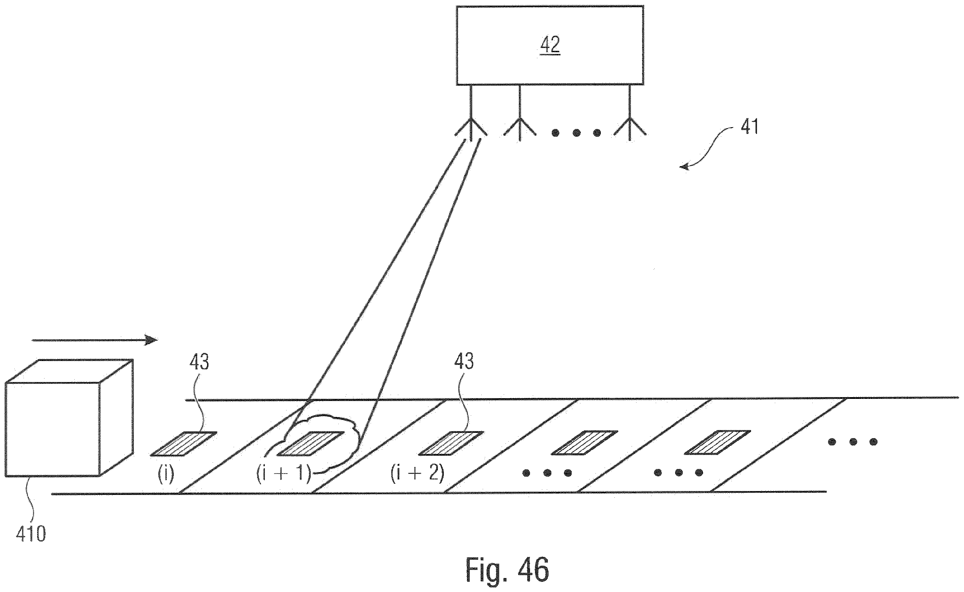

Die Fig. 46 zeigt eine beispielhafte Anordnung der Empfängervorrichtungen 43 entlang einer Strecke, die hier durch ein Förderband gegeben sei, für den Sonderfall einer eindimensionalen Erfassung eines Objekts 410.

Entlang der Strecke, über die sich das Objekt 410 bewegt (angedeutet durch den Pfeil), sind Empfangsvorrichtungen 43 angeordnet, die hier entsprechend ihrer Position mit i, i+1, i+2 usw. bezeichnet sind. Oberhalb der Beförderungsstrecke befindet sich eine Sendevorrichtung 42, die über mehrere Antennenelemente verfügt und die als Mehrkeulenantenne ausgestaltet ist. Befindet sich das Objekt 410 über einer Empfangsvorrichtung 43, während die Mehrkeulenantenne 42 zu dieser Empfangsvorrichtung 43 sendet, so wird das Signal durch das Objekt 410 gedämpft. Damit kann festgestellt werden, wo sich das transportierte Objekt 410 entlang der Strecke befindet.

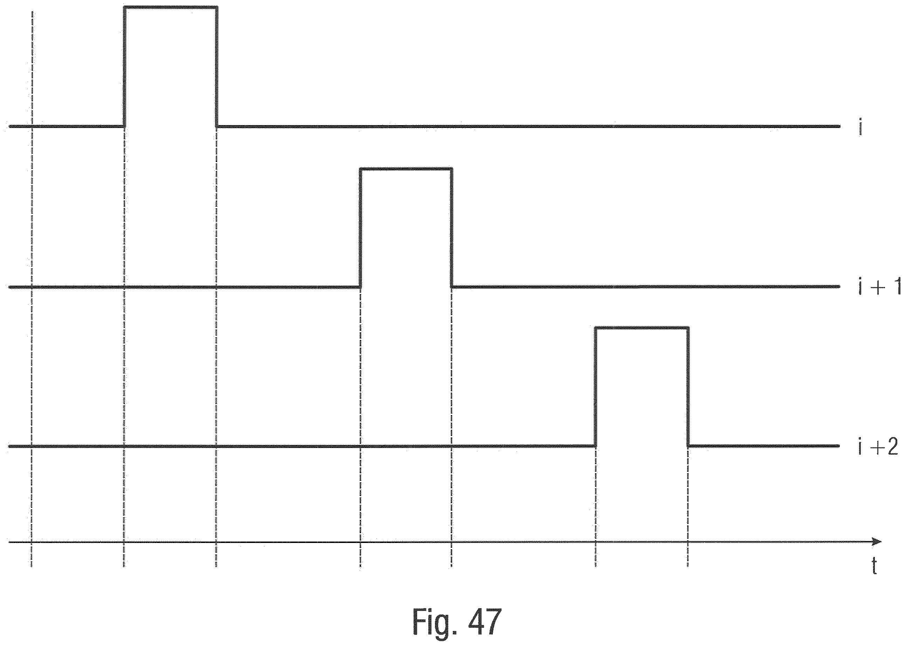

Die Fig. 47 zeigt die Antwortsignale der Empfangsvorrichtungen 43 der Fig. 46 in Abhängigkeit von der Zeit t. Die Empfangsvorrichtungen an den Positionen i, i+1 und i+2 geben jeweils infolge der Anwesenheit des Objekts 410 einen Puls aus. Befindet sich das transportierte Objekt oberhalb einer Empfangsvorrichtung, so verringert sich die Empfangsfeldstärke des von der Mehrkeulenantenne ausgesendeten Signals für die Empfangsvorrichtung. In diesem Fall wird das Antwortsignal ausgesendet.

Aus den Antworten der Empfangsvorrichtungen kann auf die Geschwindigkeit des Objekts, dessen Größe (Länge) und beispielsweise dessen Zusammensetzung geschlossen werden. Dies ermöglicht eine Flusskontrolle.

Gegenüber optischen Sensoren in Form von Lichtschranken hat eine funkbasierte Lösung dabei den Vorteil, dass sie nicht schmutzempfindlich ist und eine praktikable Toleranz bei der Ausrichtung zwischen Mehrkeulenantenne und Funkobjekten zulässt.

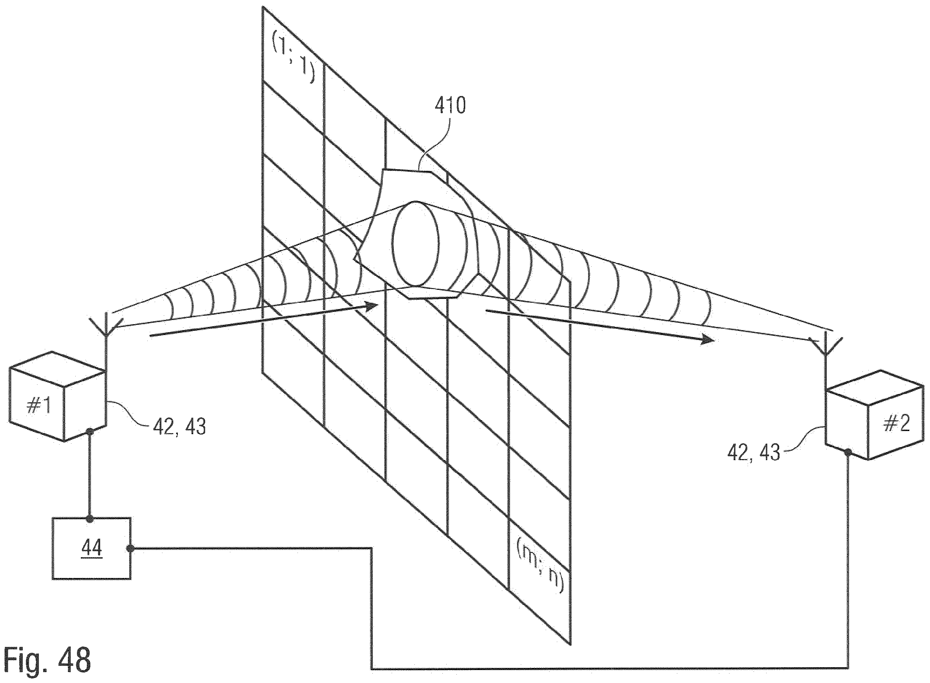

Die Fig. 48 zeigt den Fall, dass als primäre Sendevorrichtung 42 (dargestellt auf der linken Seite und mit #1 bezeichnet) und als primäre Empfangsvorrichtung 43 (dargestellt auf der rechten Seite und mit #2 bezeichnet) jeweils Vorrichtungen mit schaltbaren Mehrkeulenantennen eingesetzt werden, die somit das Aussenden in besondere Raumrichtungen bzw. das Empfangen aus ausgewählten Raumrichtungen erlauben. Dadurch ergibt sich der Vorteil, dass die eigentliche Halterungsvorrichtung entfallen kann und dass sich das mit der Halterungsvorrichtung einhergehende Koordinatensystem jetzt nur noch in Datenform durch das Schalten der einzelnen Keulen für das Senden bzw. das Empfangen der Signale ergibt. Hier ist das Raster daher nur angedeutet, wobei es insbesondere nicht gegenständlich gegeben ist.

Zudem sind in der dargestellten Ausgestaltung auf beiden Seiten jeweils Sende- und Empfangsvorrichtungen 42, 43 vorhanden, so dass auch von beiden Vorrichtungen (#1, #2) jeweils Signale gesendet und Signale empfangen werden können. Die Signale beziehen sich dabei auf die eigentlichen Messsignale, deren Dämpfungsmaß ermittelt wird, als auch auf die Antwortsignale, die die Informationen über die empfangenen Signale tragen.

Die Sende-/Empfangsvorrichtung 42, 43 #1 sendet z. B. im Zeilensprungverfahren Funktelegramme für alle m * n Felder ab, die von der Sende-/Empfangsvorrichtung 42, 43 #2 empfangen werden. Dies ist jeweils angedeutet durch die Pfeile. Dabei genügt ein einmaliges Koordinieren/Verabreden der zwei Sende-/Empfangsvorrichtungen 42, 43 bezüglich der Reihenfolge, in der die Felder mit den Signalen beaufschlagt werden.

Wenn das zu erfassende Objekt 410 von Strahlbündeln der Sende-/Empfangsvorrichtung 42, 43 #1 angepeilt wird, kann die Sende-/Empfangsvorrichtung 42, 43 #2 mit ihrem jeweils eingestellten Strahlbündel die reflektierten und gedämpften Funksignale von der Sende-/Empfangsvorrichtung 42, 43 #1 auffangen und decodieren. Aufgrund der bekannten Information über die Feldnummer des Strahlbündels der Sende-/Empfangsvorrichtung 42, 43 #1 für das Signalaussenden und der Feldnummer des Strahlbündels der Sende-/Empfangsvorrichtung 42, 43 #2 für den Signalempfang kann ähnlich wie bei gekreuzten Lichtkegeln auf die Position des Objekts 410 im Raum (als x;y;z-Koordinaten) und die Größe des Objekts 410 geschlossen werden.

In der dargestellten Ausgestaltung ist die Auswertevorrichtung 44 mit der Sende-/Empfangsvorrichtung 42, 43 #1 und der Sende-/Empfangsvorrichtung 42, 43 #2 verbunden und erhält daher die Informationen über das von der Sende-/Empfangsvorrichtung 42, 43 #1 gesendete Signal (also zumindest die Amplitude) und die dafür verwendete Richtcharakteristik. Weiterhin erhält die Auswertevorrichtung 44 von der Sende-/Empfangsvorrichtung 42, 43 #2 die Informationen über das empfangene Signal und die zugehörige Richtcharakteristik. Aus den zwei Richtcharakteristiken ergibt sich dann die Position des Objekts 410 und aus den beiden Signalen ergeben sich weitere Aussagen über das Objekt 410, z. B. über dessen Material.

In einer Ausgestaltung geschieht Folgendes:
Die Sende-/Empfangsvorrichtung 42, 43 #1 platziert ihr Strahlbündel an eine Feldposition (i; j). Die Sende-/Empfangsvorrichtung 42, 43 #2 tastet aufgrund der mangelnden Kenntnis über das zu detektierende Objekte 410 ihrerseits alle Felder (p; q) ab. Stellt die Sende-/Empfangsvorrichtung 42, 43 #2 für bestimmte Felder den Empfang von reflektierten Signalen fest, so kann auf die Lage des Objekts 410 als Hindernis geschlossen werden. Sind alle Felder (p; q) durch die Sende-/Empfangsvorrichtung 42, 43 #2 abgetastet, so steuert die Sende-/Empfangsvorrichtung 42, 43 #1 das nächste Feld an usw.

Optional ist in einer Ausgestaltung vorgesehen, dass neben reinen systembezogenen Funkpräambeln auch die jeweiligen Feldpositionen der beiden Strahlbündel ausgesendet werden. Dann kann eine Koordinierung/Absprache auf ein Minimum reduziert werden und beide Funkeinheiten (also beider Sende-/Empfangsvorrichtungen 42, 43 #1 und #2) wissen über den Strahlreflexion durch das Objekt 410 Bescheid. Dazu tauschen in einer Ausgestaltung die beiden Funkeinheiten die Rolle als Sender und als Empfänger feldweise.

In einer weiteren Ausgestaltung verfügt die Sende-/Empfangsvorrichtung 42, 43 #2, die in dem hier gezeigten Fall nur als Empfangsvorrichtung 43 fungiert, über unterschiedliche Richtcharakteristiken und empfängt auch mit mehreren Richtcharakteristiken gleichzeitig Signale. Die empfangenen Signale werden dabei jeweils in die einzelnen Richtcharakteristiken zerlegt (z. B. durch eine Butler-Matrix). Dies erlaubt das Hören auf unterschiedliche Raumbereiche. Dabei kann durch die Auswertung der Signalamplituden der einzelnen Signale der Raumbereich mit der größten Amplitude ermittelt werden. Dieser Raumbereich wird dann gesondert von der Sende-/Empfangsvorrichtung 42, 43 #2 ausgewertet.

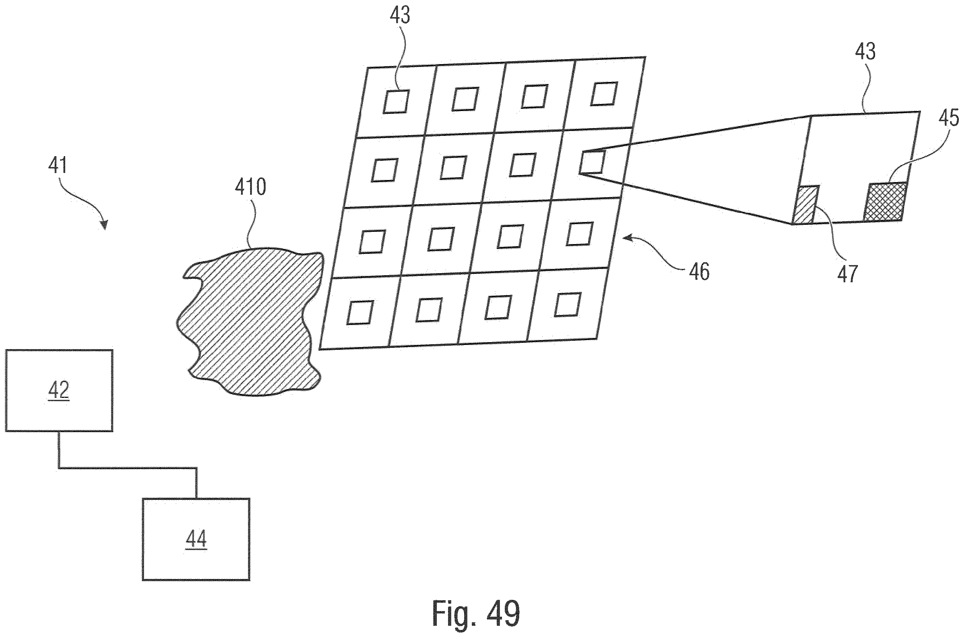

Die Fig. 49 zeigt eine weitere Ausgestaltung der erfindungsgemäßen Positionsbestimmungsvorrichtung 41.

Eine Sendevorrichtung 42 strahlt Signale in Richtung einer Halterungsvorrichtung 46 aus, die hier als Wandelement ausgeführt ist. Die Signale werden dabei je nach Anwendungsfall ungerichtet oder in einzelne Raumbereiche ausgestrahlt. Die ungerichtete Ausstrahlung ist dabei abhängig von der Ausgestaltung der verwendeten Antenne und deren genereller Ausstrahlungseigenschaften. Die gezielte Ausstrahlung in einzelne Raumbereich wird dadurch ermöglicht, dass die Sendevorrichtung 42 über einzelne Richtcharakteristiken verfügt, die jeweils mit unterschiedlichen räumlichen Sendeeigenschaften verbunden sind. Durch die Richtcharakteristiken werden also die Signale jeweils unterschiedlich stark in unterschiedliche Bereiche ausgestrahlt. In der gezeigten Ausgestaltung handelt es sich insbesondere um Richtcharakteristiken, die mit einer Keulenform verbunden sind.

Die Richtcharakteristiken bzw. die Ausstrahlung der Signale mit den unterschiedlichen Richtcharakteristiken erlaubt es gleichsam, ein Signal über die Halterungsvorrichtung 46 wandern zu lassen und damit auch die einzelnen Empfangsvorrichtungen 43 in der Halterungsvorrichtung 46 einzeln zu adressieren.

Die Sendevorrichtung 42 ist hier mit einer Auswertevorrichtung 44 verbunden, die aus den von der Sendevorrichtung 42 abgestrahlten Signalen und aus den von den Empfangsvorrichtungen 43 empfangenen Signalen Informationen über ein Objekt 410 zwischen der Sendevorrichtung 42 und der Empfangsvorrichtung 43 erzeugt.

Hierfür sind die Signalbewertungsvorrichtungen 45 vorgesehen. In dem gezeigten Beispiel verfügt jede Empfangsvorrichtung 43 über eine solche Signalbewertungsvorrichtung 45, die im gezeigten Beispiel aus den empfangenen Signalen in Relation zu während einer Kalibrierung erzeugten Werten ein Dämpfungsmaß ermitteln. Während der Kalibrierung empfangen beispielsweise die Empfangsvorrichtungen 43 jeweils ein Signal, ohne dass sich ein Objekt im Strahlengang befindet. Die Amplitude des empfangenen Signals wird dann jeweils als Referenzwert in einem Datenspeicher 47 abgespeichert. Bei der Anwendung wird wiederum die Amplitude des aktuell gemessenen Signals mit dem Referenzwert verglichen, um das Dämpfungsmaß zu ermitteln.

Die Empfangsvorrichtungen 43 sind nun derartig ausgestaltet, dass sie nach dem Empfangen eines Signals ein Antwortsignal erzeugen und ausstrahlen. In diesem Fall wird die Sendevorrichtung 42 zu einer Empfangsvorrichtung, so dass in dem gezeigten Beispiel die zentrale Funkeinheit 42 und die verteilten Funkmodule 43 sowohl Sendervorrichtungen als auch Empfangsvorrichtungen, mithin Sende-/Empfangsvorrichtungen sind.

Die Empfangsvorrichtungen 43 senden in der gezeigten Ausgestaltung das Antwortsignal unter zwei Bedingungen aus, um u. a. Energie zu sparen: Zum einen muss das Dämpfungsmaß einen gewissen ersten Grenzwert übersteigen. Die Dämpfung muss also eine Mindestgröße aufweisen. Zum anderen muss sich das Dämpfungsmaß um einen gewissen zweiten Grenzwert von einem vorhergehenden Dämpfungsmaß unterscheiden, d. h. es muss eine Änderung aufgetreten sein.

Sind beide Kriterien erfüllt, so sendet die Empfangsvorrichtung 43 das Antwortsignal an die Sendevorrichtung 42, die das Antwortsignal oder eine damit verbundene Information an die Auswertevorrichtung 44 übermittelt.

Nachdem die Sendevorrichtung 42 - durch das Schalten der unterschiedlichen Richtcharakteristiken - alle Empfangsvorrichtungen 43 mit einem Signal angestrahlt und entsprechende Antwortsignale erhalten hat, wertet die Auswertevorrichtung 44 die Dämpfungsmaße und die Lokalisationen der Empfangsvorrichtungen 43 aus, um zumindest die Anwesenheit des Objekts 410 zu erkennen bzw. um aus den Umrissen des Objekts 410 und somit aus der Anordnung der Dämpfungsmaße das Objekt zu klassifizieren bzw. eine Aussage über dessen Materialien zu tätigen.

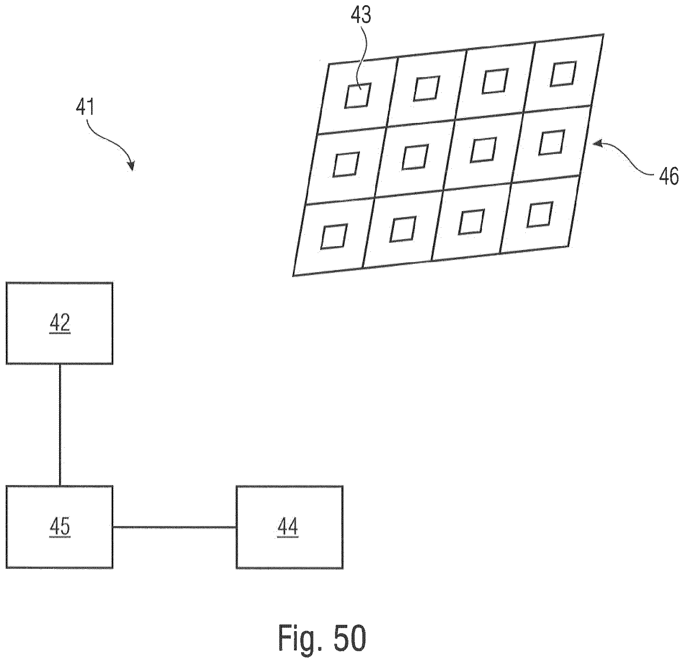

In der Fig. 50 ist eine Signalbewertungsvorrichtung 45 vorgesehen, die mit der Sendevorrichtung 42 verbunden ist. In dieser Ausgestaltung reflektieren die Empfangsvorrichtungen 43 die von der Sendervorrichtung 42 ausgestrahlten Signale, die anschließend von der Sendevorrichtung 42 wieder empfangen werden. Die Signale passieren somit zweimal den Raum zwischen der Sendevorrichtung 42 und der jeweiligen Empfangsvorrichtung 43.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder ein ARM-Mikroprozessor.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Gemäß einem ersten Aspekt kann eine Vorrichtung zur Darstellung von Benutzerinformationen eine Antennenvorrichtung 20, 53, 63, 73, 83, 95, 43, eine Verarbeitungsvorrichtung 3 und eine Darstellungsvorrichtung 4 umfassen, wobei die Antennenvorrichtung 20, 53, 63, 73, 83, 95, 43 derartig ausgestaltet ist, Signale mindestens eines Senders 11 in einer Szenerie 10 mit mindestens einer sich auf räumlich unterschiedliche Empfangsempfindlichkeiten beziehenden Richtcharakteristik 22 zu empfangen und/oder Signale mit mindestens einer Richtcharakteristik 22 in eine Szenerie 10 zu senden und Signale mindestens eines Senders 11 aus der Szenerie 10 zu empfangen, wobei die Verarbeitungsvorrichtung 3 derartig ausgestaltet ist, die empfangenen Signale in Hinblick auf die Szenerie 10 zu verarbeiten und Darstellungsdaten zu ermitteln, und wobei die Darstellungsvorrichtung 4 derartig ausgestaltet ist, zumindest die ermittelten Darstellungsdaten darzustellen.

Gemäß einem zweiten Aspekt unter Bezugnahme auf den ersten Aspekt kann die Vorrichtung eine Aufnahmevorrichtung 1 aufweisen, wobei die Aufnahmevorrichtung 1 derartig ausgestaltet ist, visuelle Bilder der Szenerie 10 aufzunehmen, und wobei die Darstellungsvorrichtung 4 derartig ausgestaltet ist, einer Darstellung mindestens eines aufgenommenen visuellen Bildes zumindest die ermittelte Darstellungsdaten zu überlagern.

Gemäß einem dritten Aspekt unter Bezugnahme auf zumindest einen des ersten bis zweiten Aspekts kann die Vorrichtung mindestens einen Lagesensor 6 aufweisen, und die Darstellungsvorrichtung 4 kann die Darstellungsdaten in Abhängigkeit von Daten des Lagesensors 6 darstellen.

Gemäß einem vierten Aspekt unter Bezugnahme auf den dritten Aspekt kann der Lagesensor 6 der Darstellungsvorrichtung 4 zugeordnet sein, und die Darstellungsvorrichtung 4 kann die Darstellungsdaten in Abhängigkeit von einer Ausrichtung der Darstellungsvorrichtung 4 relativ zur Szenerie 10 darstellen.

Gemäß einem fünften Aspekt unter Bezugnahme auf den dritten Aspekt kann der Lagesensor 6 der Aufnahmevorrichtung 1 zugeordnet sein, und die Darstellungsvorrichtung 4 kann die Darstellungsdaten in Abhängigkeit von einer Ausrichtung der Aufnahmevorrichtung 1 relativ zur Antennenvorrichtung 20 darstellen.

Gemäß einem sechsten Aspekt unter Bezugnahme auf zumindest einen des ersten bis fünften Aspekts kann die Darstellungsvorrichtung 4 in Form einer Brille ausgestaltet sein.

Gemäß einem siebten Aspekt unter Bezugnahme auf zumindest einen des ersten bis sechsten Aspekts kann die Darstellungsvorrichtung 4 derartig ausgestaltet sein, basierend auf aus den empfangenen Signalen ermittelten Informationen ein optisches Element 14 darzustellen.

Gemäß einem achten Aspekt unter Bezugnahme auf den siebten Aspekt kann die Darstellungsvorrichtung 4 derartig ausgestaltet sein, basierend auf einem Abstand zwischen dem Sender 11 und der Darstellungsvorrichtung 4 und/oder basierend auf einer Orientierung zwischen Sender 11 und Darstellungsvorrichtung 4 und/oder basierend auf einer von dem Sender 11 übertragenen Information die ermittelten Informationen darzustellen.

Gemäß einem neunten Aspekt unter Bezugnahme auf zumindest einen des ersten bis achten Aspekts kann die Verarbeitungsvorrichtung 3 derartig ausgestaltet sein, auf in einer Datenbank 5 hinterlegte Daten zuzugreifen.

Gemäß einem zehnten Aspekt unter Bezugnahme auf zumindest einen des ersten bis neunten Aspekts kann die Verarbeitungsvorrichtung 3 derartig ausgestaltet sein, basierend auf der mindestens einen Richtcharakteristik 22 und basierend auf mindestens einem empfangenen Signal eine Signalverteilung des Senders 11 als Darstellungsdaten zu ermitteln, und die Darstellungsvorrichtung 4 kann derartig ausgestaltet sein, die Signalverteilung darzustellen.

Gemäß einem elften Aspekt unter Bezugnahme auf den zehnten Aspekt kann die Darstellungsvorrichtung 4 derartig ausgestaltet sein, die Signalverteilung mit einer Farbkodierung oder mit einer Graustufenkodierung oder mit Signalstärkelinien darzustellen.

Gemäß einem zwölften Aspekt unter Bezugnahme auf zumindest einen des ersten bis elften Aspekts kann die Vorrichtung eine Positionsbestimmungsvorrichtung 51 aufweisen, wobei die Antennenvorrichtung 53 mehrere unterschiedliche Richtcharakteristiken 58 aufweist, wobei die Richtcharakteristiken 58 sich jeweils auf eine Menge an räumlich unterschiedlichen Empfangsempfindlichkeiten der Antennenvorrichtung 53 beziehen, wobei eine Kontrollvorrichtung 54 derartig auf die Antennenvorrichtung 53 einwirkt, dass mindestens eine der Richtcharakteristiken 58 der Antennenvorrichtung 53 aktiviert ist, wobei die Antennenvorrichtung 53 mit der aktivierten Richtcharakteristik 58 mindestens ein von dem Sender 52 ausgehendes Signal 59 empfängt, und wobei eine Datenverarbeitungsvorrichtung 55 das mindestens eine empfangene Signal und die der aktivierten Richtcharakteristik 58 zugeordnete Menge an räumlich unterschiedlichen Empfangsempfindlichkeiten zu einer Menge von gewichteten Empfangswerten verarbeitet und mindestens aus der Menge der gewichteten Empfangswerte die Information über die Position des Senders 52 ermittelt.

Gemäß einem dreizehnten Aspekt unter Bezugnahme auf zumindest einen des ersten bis zwölften Aspekts kann die Vorrichtung eine Positionsbestimmungsvorrichtung 61 aufweisen, wobei die Antennenvorrichtung 63 mehrere unterschiedliche Richtcharakteristiken 67 aufweist, wobei die Richtcharakteristiken 67 sich jeweils zumindest auf eine Menge an räumlich unterschiedlichen Empfangsempfindlichkeiten der Antennenvorrichtung 63 beziehen, wobei die Antennenvorrichtung 63 derartig ausgestaltet ist, mit unterschiedlichen Richtcharakteristiken jeweils mindestens ein Signal von dem Sender 62 zu empfangen, wobei eine Signalverarbeitungsvorrichtung 65 derartig ausgestaltet ist, die von der Antennenvorrichtung 63 empfangenen Signale zu verarbeiten und jeweils einen Amplitudenwert einer Feldstärke des empfangenen Signals zu ermitteln, und wobei eine Datenverarbeitungsvorrichtung 66 derartig ausgestaltet ist, basierend auf den Richtcharakteristiken 67 und den aus den jeweils zugeordneten empfangenen Signalen ermittelten Amplitudenwerten die Information über die Position des Senders 62 zu ermitteln.

Gemäß einem vierzehnten Aspekt unter Bezugnahme auf zumindest einen des ersten bis dreizehnten Aspekts kann die Vorrichtung eine Positionsbestimmungsvorrichtung 71 aufweisen, wobei die Antennenvorrichtung 73 derartig ausgestaltet ist, von dem Sender 72 ausgehende Signale zu empfangen, wobei die Antennenvorrichtung 73 mindestens eine ausgezeichnete Richtcharakteristik aufweist, wobei die ausgezeichnete Richtcharakteristik sich auf eine Menge an räumlich unterschiedlichen Empfangsempfindlichkeiten der Antennenvorrichtung 73 bezieht, wobei die ausgezeichnete Richtcharakteristik über mindestens ein Empfindlichkeitsminimum verfügt, das einem räumlichen Detektionsbereich 76 zugeordnet ist, und wobei eine Datenverarbeitungsvorrichtung 75 derartig ausgestaltet ist, zumindest die von der Antennenvorrichtung 73 mit der ausgezeichneten Richtcharakteristik empfangenen Signale im Hinblick auf die Position des Senders 72 relativ zum Detektionsbereich 76 auszuwerten.

Gemäß einem fünfzehnten Aspekt unter Bezugnahme auf zumindest einen des ersten bis vierzehnten Aspekts kann die Vorrichtung eine Positionsbestimmungsvorrichtung 81 aufweisen, wobei die Antennenvorrichtung 83 mehrere unterschiedliche Richtcharakteristiken 89 aufweist, wobei die Richtcharakteristiken 89 sich jeweils auf eine Menge an räumlich unterschiedlichen Empfangsempfindlichkeiten der Antennenvorrichtung 83 beziehen, wobei die Antennenvorrichtung 83 mehrere Signalausgänge 810 aufweist, wobei die Richtcharakteristiken 89 den Signalausgängen 810 zugeordnet sind, wobei eine Kontrollvorrichtung 84 derartig ausgestaltet ist, einen Signalausgang 810 der Antennenvorrichtung 83 mit einer Informations-Lesevorrichtung 86 und weitere Signalausgänge 810 der Antennenvorrichtung 83 mit einer Datenverarbeitungsvorrichtung 85 zu verbinden, wobei die Informations-Lesevorrichtung 86 derartig ausgestaltet ist, aus empfangenen Signalen mit den Signalen übertragene Daten zu ermitteln, und wobei die Datenverarbeitungsvorrichtung 85 derartig ausgestaltet ist, empfangene Signale hinsichtlich ihrer physikalischen Eigenschaften auszuwerten.

Gemäß einem sechzehnten Aspekt unter Bezugnahme auf zumindest einen des ersten bis fünfzehnten Aspekts kann die Vorrichtung eine Positionsbestimmungsvorrichtung 91 aufweisen, wobei eine Empfangsvorrichtung 93 derartig ausgestaltet ist, Signale 9101, 9103 zu empfangen, und wobei eine Steuervorrichtung 94 derartig ausgestaltet ist, einen Raumbereich 911, 913 vorzugeben, in den die Sendevorrichtung 92 Signale 9100, 9102 aussendet.

Gemäß einem siebzehnten Aspekt unter Bezugnahme auf zumindest einen des ersten bis sechzehnten Aspekts kann die Vorrichtung eine Positionsbestimmungsvorrichtung 41 aufweisen, wobei eine Sendevorrichtung 42 derartig ausgestaltet ist, Signale auszusenden, wobei eine Empfangsvorrichtung 43 derartig ausgestaltet ist, Signale zu empfangen, wobei eine Auswertevorrichtung 44 derartig ausgestaltet ist, die von der Sendevorrichtung 42 ausgesendeten Signale mit den von der Empfangsvorrichtung 43 empfangenen Signalen zu vergleichen und ein Vergleichsergebnis zu erzeugen, und wobei die Auswertevorrichtung 44 derartig ausgestaltet ist, aus dem Vergleichsergebnis mindestens zu ermitteln, ob sich ein Objekt 410 zwischen der Sendevorrichtung 42 und der Empfangsvorrichtung 43 befindet.

Gemäß einem achtzehnten Aspekt schafft die Erfindung ein Verfahren zur Darstellung von Benutzerinformationen, wobei Signale eines Senders 11 mit mindestens einer sich auf räumlich unterschiedliche Empfangsempfindlichkeiten beziehenden Richtcharakteristik 22 empfangen werden und/oder Signale mit mindestens einer Richtcharakteristik 22 in eine Szenerie 10 gesendet und Signale mindestens eines Senders 11 aus der Szenerie 10 empfangen werden, wobei die empfangenen Signale in Hinblick auf die Szenerie 10 verarbeitet und Darstellungsdaten ermittelt werden, und wobei die Darstellungsdaten dargestellt werden.

**Patentansprüche**

1.   Vorrichtung zur Darstellung von Benutzerinformationen,

mit einer Antennenvorrichtung (20, 53, 63, 73, 83, 95, 43), einer Verarbeitungsvorrichtung (3), einer Darstellungsvorrichtung (4) und einer Positionsbestimmungsvorrichtung (41, 51, 61, 71, 81, 91),
wobei die Antennenvorrichtung (20, 53, 63, 73, 83, 95, 43) mehrere unterschiedliche Richtcharakteristiken (67) aufweist und derartig ausgestaltet ist, um jeweils mindestens ein Signal mindestens eines Senders (11) in einer Szenerie (10) mit mehreren sich auf räumlich unterschiedliche Empfangsempfindlichkeiten beziehenden Richtcharakteristiken (22) zu empfangen,
wobei die Verarbeitungsvorrichtung (3) derartig ausgestaltet ist, um die empfangenen Signale in Hinblick auf die Szenerie (10) zu verarbeiten und Darstellungsdaten zu ermitteln, und um basierend auf der mindestens einen Richtcharakteristik (22) und basierend auf mindestens einem empfangenen Signal eine Signalverteilung des Senders (11) als Darstellungsdaten zu ermitteln, und wobei die Darstellungsvorrichtung (4) derartig ausgestaltet ist, um die Signalverteilung darzustellen, um eine Visualisierung der elektromagnetischen Hochfrequenz-Signale, die von der Antennenvorrichtung (20, 53, 63, 73, 83, 95, 43) empfangen werden, zu ermöglichen, wobei die Positionsbestimmungsvorrichtung (41, 51, 61, 71, 81, 91) Daten über den mindestens einen Sender (11) und/oder über empfangene Signale, die von dem mindestens einen Sender (11) stammen, bereitstellt und die Antennenvorrichtung (20, 53, 63, 73, 83, 95, 43) und/oder die Verarbeitungsvorrichtung (3) aufweist, wobei eine Signalverarbeitungsvorrichtung (65) derartig ausgestaltet ist, um die von der Antennenvorrichtung (63) empfangenen Signale zu verarbeiten und jeweils einen Amplitudenwert einer Feldstärke des empfangenen Signals zu ermitteln, und wobei eine Datenverarbeitungsvorrichtung (66) derartig ausgestaltet ist, um basierend auf den Richtcharakteristiken (67) und den aus den jeweils zugeordneten empfangenen Signalen ermittelten Amplitudenwerten eine Information über die Position des Senders (62) zu ermitteln.

2. Vorrichtung nach Anspruch 1, wobei die Antennenvorrichtung (53) mehrere unterschiedliche Richtcharakteristiken (58) aufweist,

wobei die Richtcharakteristiken (58) sich jeweils auf eine Menge an räumlich unterschiedlichen Empfangsempfindlichkeiten der Antennenvorrichtung (53) beziehen, wobei eine Kontrollvorrichtung (54) derartig auf die Antennenvorrichtung (53) einwirkt, dass mindestens eine der Richtcharakteristiken (58) der Antennenvorrichtung (53) aktiviert ist, wobei die Antennenvorrichtung (53) mit der aktivierten Richtcharakteristik (58) mindestens ein von dem Sender (52) ausgehendes Signal (59) empfängt, und wobei eine Datenverarbeitungsvorrichtung (55) das mindestens eine empfangene Signal und die der aktivierten Richtcharakteristik (58) zugeordnete Menge an räumlich unterschiedlichen Empfangsempfindlichkeiten zu einer Menge von gewichteten Empfangswerten verarbeitet und mindestens aus der Menge der gewichteten Empfangswerte die Information über die Position des Senders (52) ermittelt.

3. Vorrichtung nach einem der Ansprüche 1 oder 2, wobei die Antennenvorrichtung (73) derartig ausgestaltet ist, von dem Sender (72) ausgehende Signale zu empfangen,

wobei die Antennenvorrichtung (73) mindestens eine ausgezeichnete Richtcharakteristik aufweist, wobei die ausgezeichnete Richtcharakteristik sich auf eine Menge an räumlich unterschiedlichen Empfangsempfindlichkeiten der Antennenvorrichtung (73) bezieht, wobei die ausgezeichnete Richtcharakteristik über mindestens ein Empfindlichkeitsminimum verfügt, das einem räumlichen Detektionsbereich (76) zugeordnet ist, und wobei eine Datenverarbeitungsvorrichtung (75) derartig ausgestaltet ist, zumindest die von der Antennenvorrichtung (73) mit der ausgezeichneten Richtcharakteristik empfangenen Signale im Hinblick auf die Position des Senders (72) relativ zum Detektionsbereich (76) auszuwerten.

4. Vorrichtung nach einem der Ansprüche 1 bis 3, wobei die Antennenvorrichtung (83) mehrere unterschiedliche Richtcharakteristiken (89) aufweist,

wobei die Richtcharakteristiken (89) sich jeweils auf eine Menge an räumlich unterschiedlichen Empfangsempfindlichkeiten der Antennenvorrichtung (83) beziehen, wobei die Antennenvorrichtung (83) mehrere Signalausgänge (810) aufweist, wobei die Richtcharakteristiken (89) den Signalausgängen (810) zugeordnet sind, wobei eine Kontrollvorrichtung (84) derartig ausgestaltet ist, einen Signalausgang (810) der Antennenvorrichtung (83) mit einer Informations-Lesevorrichtung (86) und weitere Signalausgänge (810) der Antennenvorrichtung (83) mit einer Datenverarbeitungsvorrichtung (85) zu verbinden, wobei die Informations-Lesevorrichtung (86) derartig ausgestaltet ist, aus empfangenen Signalen mit den Signalen übertragene Daten zu ermitteln, und wobei die Datenverarbeitungsvorrichtung (85) derartig ausgestaltet ist, empfangene Signale hinsichtlich ihrer physikalischen Eigenschaften auszuwerten.

5. Vorrichtung nach einem der Ansprüche 1 bis 4, wobei eine Empfangsvorrichtung (93) derartig ausgestaltet ist, Signale (9101, 9103) zu empfangen, und wobei eine Steuervorrichtung (94) derartig ausgestaltet ist, einen Raumbereich (911, 913) vorzugeben, in den die Sendevorrichtung (92) Signale (9100, 9102) aussendet.

**6.** Vorrichtung nach einem der Ansprüche 1 bis 5,

wobei eine Sendevorrichtung (42) derartig ausgestaltet ist, Signale auszusenden,
wobei eine Empfangsvorrichtung (43) derartig ausgestaltet ist, Signale zu empfangen,
wobei eine Auswertevorrichtung (44) derartig ausgestaltet ist, die von der Sendevorrichtung (42) ausgesendeten Signale mit den von der Empfangsvorrichtung (43) empfangenen Signalen zu vergleichen und ein Vergleichsergebnis zu erzeugen, und
wobei die Auswertevorrichtung (44) derartig ausgestaltet ist, aus dem Vergleichsergebnis mindestens zu ermitteln, ob sich ein Objekt (410) zwischen der Sendevorrichtung (42) und der Empfangsvorrichtung (43) befindet.

**7.** Vorrichtung nach einem der Ansprüche 1 bis 6,

wobei die Vorrichtung eine Aufnahmevorrichtung (1) aufweist,
wobei die Aufnahmevorrichtung (1) derartig ausgestaltet ist, visuelle Bilder der Szenerie (10) aufzunehmen, und
wobei die Darstellungsvorrichtung (4) derartig ausgestaltet ist, einer Darstellung mindestens eines aufgenommenen visuellen Bildes zumindest die ermittelte Darstellungsdaten zu überlagern.

**8.** Vorrichtung nach einem der Ansprüche 1 bis 7, wobei die Vorrichtung mindestens einen Lagesensor (6) aufweist, und wobei die Darstellungsvorrichtung (4) die Darstellungsdaten in Abhängigkeit von Daten des Lagesensors (6) darstellt.

**9.** Vorrichtung nach Anspruch 8,

wobei der Lagesensor (6) der Darstellungsvorrichtung (4) zugeordnet ist, und wobei die Darstellungsvorrichtung (4) die Darstellungsdaten in Abhängigkeit von einer Ausrichtung der Darstellungsvorrichtung (4) relativ zur Szenerie (10) darstellt, oder
wobei der Lagesensor (6) der Aufnahmevorrichtung (1) zugeordnet ist, und wobei die Darstellungsvorrichtung (4) die Darstellungsdaten in Abhängigkeit von einer Ausrichtung der Aufnahmevorrichtung (1) relativ zur Antennenvorrichtung (20) darstellt.

**10.** Vorrichtung nach einem der Ansprüche 1 bis 9, wobei die Darstellungsvorrichtung (4) in Form einer Brille ausgestaltet ist.

**11.** Vorrichtung nach einem der Ansprüche 1 bis 10, wobei die Darstellungsvorrichtung (4) derartig ausgestaltet ist, basierend auf aus den empfangenen Signalen ermittelten Informationen ein optisches Element (14) darzustellen.

**12.** Vorrichtung nach Anspruch 11, wobei die Darstellungsvorrichtung (4) derartig ausgestaltet ist, basierend auf einem Abstand zwischen dem Sender (11) und der Darstellungsvorrichtung (4) und/oder basierend auf einer Orientierung zwischen Sender (11) und Darstellungsvorrichtung (4) und/oder basierend auf einer von dem Sender (11) übertragenen Information die ermittelten Informationen darzustellen.

**13.** Vorrichtung nach einem der Ansprüche 1 bis 12, wobei die Verarbeitungsvorrichtung (3) derartig ausgestaltet ist, auf in einer Datenbank (5) hinterlegte Daten zuzugreifen.

**14.** Vorrichtung nach einem der Ansprüche 1 bis 13, wobei die Darstellungsvorrichtung (4) derartig ausgestaltet ist, die Signalverteilung mit einer Farbkodierung oder mit einer Graustufenkodierung oder mit Signalstärkelinien darzustellen.

**15.** Verfahren zur Darstellung von Benutzerinformationen,

wobei Signale eines Senders (11) mit unterschiedlichen sich auf räumlich unterschiedliche Empfangsempfindlichkeiten beziehenden Richtcharakteristiken (22) empfangen werden,
wobei jeweils ein Amplitudenwert einer Feldstärke der empfangenen Signale ermittelt wird,
wobei ausgehend von den Richtcharakteristiken (7) und den jeweils aus den zugeordneten empfangenen Signalen ermittelten Amplitudenwerten eine Information über eine Position des Senders (2) ermittelt wird,
wobei die empfangenen Signale in Hinblick auf die Szenerie (10) verarbeitet und Darstellungsdaten ermittelt werden, und
wobei basierend auf den unterschiedlichen Richtcharakteristiken (22) und basierend auf mindestens einem empfangenen Signal eine Signalverteilung des Senders (11) als Darstellungsdaten ermittelt wird, und wobei die Signalverteilung dargestellt wird, um eine Visualisierung der elektromagnetischen Hochfrequenz-Signale, die von der Antennenvorrichtung (20, 53, 63, 73, 83, 95, 43) empfangen werden, zu ermöglichen.

**Claims**

1. Apparatus for representing user information,
   comprising an antenna apparatus (20, 53, 63, 73, 83, 95, 43), a processing apparatus (3), a representation apparatus (4) and a positioning apparatus (41, 51, 61, 71,81,91),
   wherein the antenna apparatus (20, 53, 63, 73, 83, 95, 43) comprises several different directional characteristics (67) and is configured to receive at least one signal each of at least one transmitter (11) in a scene (10) with several directional characteristics (22) relating to spatially different receive sensitivities,
   wherein the processing apparatus (3) is configured to process the received signals with respect to the scene (10) and to determine representation data, and to determine, based on the at least one directional characteristic (22) and based on at least one received signal, a signal distribution of the transmitter (11) as representation data, and
   wherein the representation apparatus (4) is configured to represent the signal distribution in order to allow visualization of the electromagnetic radio frequency signals that are received from the antenna apparatus (20, 53, 63, 73, 83, 95, 43),
   wherein the positioning apparatus (41, 51, 61, 71, 81, 91) provides data about the at least one transmitter (11) and/or about received signals originating from the at least one transmitter (11) and comprises the antenna apparatus (20, 53, 63, 73, 83, 95, 43) and/or the processing apparatus (3),
   wherein a signal processing apparatus (65) is configured to process the signals received from the antenna apparatus (63) and to determine one amplitude value each of a field strength of the received signal; and
   wherein a data processing apparatus (66) is configured to determine, based on the directional characteristics (67) and the amplitude values determined from the respectively allocated signals, information about the position of the transmitter (62).

2. Apparatus according to claim 1, wherein the antenna apparatus (53) comprises several different directional characteristics (58),
   wherein the directional characteristics (58) each relate to a quantity of spatially different receive sensitivities of the antenna apparatus (53),
   wherein a regulating apparatus (54) acts on the antenna apparatus (53) such that at least one of the directional characteristics (58) of the antenna apparatus (53) is activated,
   wherein the antenna apparatus (53) with the activated directional characteristic (58) receives at least one signal (59) originating from the transmitter (52), and
   wherein a data processing apparatus (55) processes the at least one received signal and the quantity of spatially different receive sensitivities allocated to the activated directional characteristic (58) to a quantity of weighted receive values and determines the information about the position of the transmitter (52) at least from the quantity of weighted receive values.

3. Apparatus according to one of claims 1 or 2, wherein the antenna apparatus (73) is configured to receive signals originating from the transmitter (72),
   wherein the antenna apparatus (73) comprises at least one excellent directional characteristic,
   wherein the excellent directional characteristic relates to a quantity of spatially different receive sensitivities of the antenna apparatus (73),
   wherein the excellent directional characteristic comprises at least one receive minimum allocated to a spatial detection area (76), and
   wherein a data processing apparatus (75) is configured to evaluate at least the signals received from the antenna apparatus (73) with the excellent directional characteristic with respect to the position of the transmitter (72) relative to the detection area (76).

4. Apparatus according to one of claims 1 to 3, wherein the antenna apparatus (83) comprises several different directional characteristics (89),
   wherein the directional characteristics (89) each relate to a quantity of spatially different receive sensitivities of the antenna apparatus (83),
   wherein the antenna apparatus (83) comprises several signal outputs (810),
   wherein the directional characteristics (89) are allocated to the signal outputs (810),

wherein a regulating apparatus (84) is configured to connect a signal output (810) of the antenna apparatus (83) to an information reading apparatus (86) and further signal outputs (810) of the antenna apparatus (83) to a data processing apparatus (85),

wherein the information reading apparatus (86) is configured to determine, from the received signals, data transmitted with the signals, and

wherein the data processing apparatus (85) is configured to evaluate received signals with respect to their physical characteristics.

5. Apparatus according to one of claims 1 to 4, wherein a receiving apparatus (93) is configured to receive signals (9101, 9103) and

wherein a control apparatus (94) is configured to predetermine a spatial area (911, 913) into which the transmitting apparatus (92) sends out signals (9100, 9102).

6. Apparatus according to one of claims 1 to 5, wherein a transmitting apparatus (42) is configured to send out signals,

wherein a receiving apparatus (43) is configured to receive signals,

wherein an evaluation apparatus (44) is configured to compare the signals sent out by the transmitting apparatus (42) to signals received by the receiving apparatus (43) and to generate a comparison result, and

wherein the evaluation apparatus (44) is configured to determine, from the comparison result, at least whether an object (410) is located between the transmitting apparatus (42) and the receiving apparatus (43).

7. Apparatus according to one of claims 1 to 6,

wherein the apparatus comprises a capturing apparatus (1),

wherein the capturing apparatus (1) is configured to capture visual images of the scene (10), and

wherein the representation apparatus (4) is configured to superimpose at least the determined representation data on a representation of at least one of the captured visual images.

8. Apparatus according to one of claims 1 to 7, wherein the apparatus comprises at least one position sensor (6), and wherein the representation apparatus (4) represents the representation data in dependence on data of the position sensor (6).

9. Apparatus according to claim 8,

wherein the position sensor (6) is allocated to the representation apparatus (4), and wherein the representation apparatus (4) represents the representation data in dependence on an orientation of the representation apparatus (4) relative to the scene (10), or

wherein the position sensor (6) is allocated to the capturing apparatus (1) and

wherein the representation apparatus (4) represents the representation data in dependence on an orientation of the capturing apparatus (1) relative to the antenna apparatus (20).

10. Apparatus according to one of claims 1 to 9, wherein the representation apparatus (4) is implemented in the form of glasses.

11. Apparatus according to one of claims 1 to 10, wherein the representation apparatus (4) is configured to represent an optical element (14) based on the information determined from the received signals.

12. Apparatus according to claim 11, wherein the representation apparatus (4) is configured to represent the determined information based on a distance between the transmitter (11) and the representation apparatus (4) and/or based on an orientation between transmitter (11) and representation apparatus (4) and/or based on information transmitted by the transmitter (11).

13. Apparatus according to one of claims 1 to 12, wherein the processing apparatus (3) is configured to access data stored in a database (5).

14. Apparatus according to one of claims 1 to 13, wherein the representation apparatus (4) is configured to represent the signal distribution with a color coding or a grey-scale coding or with signal strength lines.

15. Method for representing user information,

wherein signals of a transmitter (11) are received with different directional characteristics (22) relating to spatially different receive sensitivities,

wherein one amplitude value each of a field strength of the received signals is determined,

wherein information about the position of the transmitter (2) is determined based on the directional characteristics (7) and the amplitude values determined from the respectively allocated signals,

wherein the received signals are processed with respect to the scene (10) and representation data are determined, and

wherein, based on the different directional characteristics (22) and based on at least one received signal, a signal distribution of the transmitter (11) is determined as representation data, and wherein the signal distribution is represented in order to allow visualization of the electromagnetic radio frequency signals that are received from the antenna apparatus (20, 53, 63, 73, 83, 95, 43).

**Revendications**

1. Dispositif de représentation d'informations d'utilisateur,

   avec un dispositif d'antenne (20, 53, 63, 73, 83, 95, 43), un dispositif de traitement (3), un dispositif de représentation (4) et un dispositif de détermination de position (41, 51, 61, 71, 81, 91),
   dans lequel le dispositif d'antenne (20, 53, 63, 73, 83, 95, 43) présente plusieurs caractéristiques directionnelles différentes (67) et est conçu pour recevoir chaque fois au moins un signal d'au moins un émetteur (11) dans un décor (10) avec plusieurs caractéristiques directionnelles (22) se rapportant à des sensibilités de réception spatialement différentes,
   dans lequel le dispositif de traitement (3) est conçu pour traiter les signaux reçus en ce qui concerne le décors (10) et déterminer les données de représentation, et pour déterminer, sur base de l'au moins une caractéristique directionnelle (22) et sur base d'au moins un signal reçu, une distribution de signal de l'émetteur (11) comme données de représentation, et dans lequel le dispositif de représentation (4) est conçu pour représenter la distribution de signal pour permettre une visualisation des signaux électromagnétiques de haute fréquence qui sont reçus par le dispositif d'antenne (20, 53, 63, 73, 83, 95, 43),
   dans lequel le dispositif de détermination de position (41, 51, 61, 71, 81, 91) met à disposition des données sur l'au moins un émetteur (11) et/ou sur les signaux reçus qui proviennent de l'au moins un émetteur (11), et présente le dispositif d'antenne (20, 53, 63, 73, 83, 95, 43) et/ou le dispositif de traitement (3),
   dans lequel un dispositif de traitement de signal (65) est conçu pour traiter les signaux reçus par le dispositif d'antenne (63) et pour déterminer une valeur d'amplitude d'une intensité de champ du signal reçu, et
   dans lequel un dispositif de traitement de données (66) est configuré pour déterminer, sur base des caractéristiques directionnelles (67) et des valeurs d'amplitude déterminées à partir des signaux reçus associés respectifs, une information sur la position de l'émetteur (62).

2. Dispositif selon la revendication 1, dans lequel le dispositif d'antenne (53) présente plusieurs caractéristiques directionnelles différentes (58),

   dans lequel les caractéristiques directionnelles (58) se rapportent, chacune, à une quantité de sensibilités de réception spatialement différentes du dispositif d'antenne (53),
   dans lequel un dispositif de contrôle (54) agit sur le dispositif d'antenne (53) de sorte qu'au moins une des caractéristiques directionnelles (58) du dispositif d'antenne (53) soit activée,
   dans lequel le dispositif d'antenne (53) reçoit avec la caractéristique directionnelle activée (58) au moins un signal (59) émanant de l'émetteur (52), et
   dans lequel un dispositif de traitement de données (55) traite l'au moins un signal reçu et la quantité de sensibilités de réception spatialement différentes associées à la caractéristique directionnelle activée (58) pour obtenir une quantité de valeurs de réception pondérées et détermine, au moins à partir de la quantité de valeurs de réception pondérées, l'information sur la position de l'émetteur (52).

3. Dispositif selon l'une des revendications 1 ou 2, dans lequel le dispositif d'antenne (73) est conçu pour recevoir les signaux émanant de l'émetteur (72),

   dans lequel le dispositif d'antenne (73) présente au moins une excellente caractéristique directionnelle,
   dans lequel l'excellente caractéristique directionnelle se rapporte à une quantité de sensibilités de réception spatialement différentes du dispositif d'antenne (73),
   dans lequel l'excellente caractéristique directionnelle dispose d'au moins un minimum de sensibilité qui est associé à une zone de détection spatiale (76), et

dans lequel un dispositif de traitement de données (75) est conçu pour évaluer au moins les signaux reçus par le dispositif d'antenne (73) avec l'excellente caractéristique directionnelle en ce qui concerne la position de l'émetteur (72) par rapport à la zone de détection (76).

4. Dispositif selon l'une des revendications 1 à 3, dans lequel le dispositif d'antenne (83) présente plusieurs caractéristiques directionnelles différentes (89),

dans lequel les caractéristiques directionnelles (89) se rapportent, chacune, à une quantité de sensibilités de réception spatialement différentes du dispositif d'antenne (83),
dans lequel le dispositif d'antenne (83) présente une pluralité de sorties de signal (810),
dans lequel les caractéristiques directionnelles (89) sont associées aux sorties de signal (810),
dans lequel un dispositif de contrôle (84) est configuré pour connecter une sortie de signal (810) du dispositif d'antenne (83) à un dispositif de lecture d'informations (86) et d'autres sorties de signal (810) du dispositif d'antenne (83) à un dispositif de traitement de données (85),
dans lequel le dispositif de lecture d'informations (86) est conçu pour déterminer, à partir des signaux reçus, les données transmises avec les signaux, et
dans lequel le dispositif de traitement de données (85) est conçu pour évaluer les signaux reçus en ce qui concerne leurs propriétés physiques.

5. Dispositif selon l'une des revendications 1 à 4, dans lequel un dispositif de réception (93) est conçu pour recevoir des signaux (9101, 9103), et dans lequel un dispositif de commande (94) est conçu pour indiquer une zone spatiale (911, 913) dans laquelle l'émetteur (92) émet des signaux (9100, 9102).

6. Dispositif selon l'une des revendications 1 à 5,

dans lequel un dispositif d'émission (42) est conçu pour émettre des signaux,
dans lequel un dispositif de réception (43) est conçu pour recevoir des signaux,
dans lequel un dispositif d'évaluation (44) est conçu pour comparer les signaux émis par le dispositif d'émission (42) avec les signaux reçus par le dispositif de réception (43) et pour générer un résultat de comparaison, et
dans lequel le dispositif d'évaluation (44) est conçu pour déterminer, à partir du résultat de la comparaison, au moins si un objet (410) se trouve entre le dispositif d'émission (42) et le dispositif de réception (43).

7. Dispositif selon l'une des revendications 1 à 6,

dans lequel le dispositif présente un dispositif de prise de vues (1),
dans lequel le dispositif de prise de vues (1) est conçu pour prendre des images visuelles du décors (10), et
dans lequel le dispositif de représentation (4) est conçu pour superposer au moins les données de représentation déterminées à une représentation d'au moins une image visuelle prise.

8. Dispositif selon l'une des revendications 1 à 7, dans lequel le dispositif présente au moins un capteur de position (6), et dans lequel le dispositif de représentation (4) représente les données de représentation en fonction des données du capteur de position (6).

9. Dispositif selon la revendication 8,

dans lequel le capteur de position (6) est associé au dispositif de représentation (4), et dans lequel le dispositif de représentation (4) représente les données de représentation en fonction d'une orientation du dispositif de représentation (4) par rapport au décors (10), ou
dans lequel le capteur de position (6) est associé au dispositif de prise de vues (1), et dans lequel le dispositif de représentation (4) représente les données de représentation en fonction d'une orientation du dispositif de prise de vues (1) par rapport au dispositif d'antenne (20).

10. Dispositif selon l'une des revendications 1 à 9, dans lequel le dispositif de représentation (4) est conçu sous forme de lunettes.

11. Dispositif selon l'une des revendications 1 à 10, dans lequel le dispositif de représentation (4) est conçu pour représenter, sur base des informations déterminées à partir des signaux reçus, un élément optique (14).

**12.** Appareil selon la revendication 11, dans lequel le dispositif de représentation (4) est configuré pour représenter, sur base d'une distance entre l'émetteur (11) et le dispositif de représentation (4) et/ou sur base d'une orientation entre l'émetteur (11) et le dispositif de représentation (4) et/ou sur base d'une information transmise par l'émetteur (11), les informations déterminées.

**13.** Dispositif selon l'une des revendications 1 à 12, dans lequel le dispositif de traitement (3) est conçu pour accéder aux données mémorisées dans une base de données (5).

**14.** Dispositif selon l'une des revendications 1 à 13, dans lequel le dispositif de représentation (4) est conçu pour représenter la distribution du signal par un codage couleur ou par un codage de niveaux de gris ou par des lignes d'intensité de signal.

**15.** Procédé de représentation d'informations d'utilisateur,

dans lequel les signaux d'un émetteur (11) sont reçus avec différentes caractéristiques directionnelles (22) se rapportant à des sensibilités de réception spatialement différentes,
dans lequel est chaque fois déterminée une valeur d'amplitude d'une intensité de champ des signaux reçus,
dans lequel est déterminée, en partant des caractéristiques directionnelles (7) et des valeurs d'amplitude déterminées respectivement à partir des signaux reçus associés, une information sur une position de l'émetteur (2),
dans lequel les signaux reçus sont traités en ce qui concerne le décors (10) et les données de représentation sont déterminées, et
dans lequel est déterminée, sur base des différentes caractéristiques directionnelles (22) et sur base d'au moins un signal reçu, une distribution de signal de l'émetteur (11) comme données de représentation, et dans lequel la distribution de signal est représentée pour permettre une visualisation des signaux électromagnétiques de haute fréquence qui sont reçus par le dispositif d'antenne (20, 53, 83, 73, 83, 95, 43).

Fig. 1

Fig. 2

EP 3 414 591 B1

Fig. 3

Fig. 4

Fig. 5

Fig. 6

Fig. 7

Fig. 8

Fig. 9

Fig. 10

Fig. 11

Fig. 12

Fig. 13

$$d\Omega = \sin\theta \, d\theta \, d\phi$$

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

EP 3 414 591 B1

Fig. 29

EP 3 414 591 B1

Fig. 30

Fig. 31

Fig. 32

EP 3 414 591 B1

91

9100

9102

9103

9101

916

915

910

920

Fig. 33

Fig. 34

Fig. 35

Fig. 36

EP 3 414 591 B1

Fig. 37

Fig. 38

| | | | | | | | |
|---|---|---|---|---|---|---|---|
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 20 dB | 40 dB | 40 dB | 40 dB | 20 dB | 0 dB |
| 0 dB | 20 dB | 40 dB | 40 dB | 40 dB | 40 dB | 40 dB | 40 dB |
| 30 dB | 40 dB | 30 dB | 30 dB | 30 dB | 30 dB | 40 dB | 30 dB |

## Fig. 39

| | | | | | | | |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 1 | 2 | 2 | 2 | 1 | 0 |
| 0 | 1 | 2 | 2 | 2 | 2 | 2 | 2 |
| 2 | 2 | 2 | 2 | 2 | 2 | 2 | 2 |

## Fig. 40

Fig. 41

EP 3 414 591 B1

Fig. 42

Fig. 43

Fig. 44a

| 0 dB | 0 dB | 0 dB | 0 dB | 0 dB | 0 dB | 0 dB | 0 dB |
|------|------|------|------|------|------|------|------|
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 20 dB | 40 dB | 40 dB | 40 dB | 20 dB | 0 dB |
| 0 dB | 20 dB | 40 dB | 40 dB | 40 dB | 40 dB | 40 dB | 40 dB |
| 30 dB | 40 dB | 30 dB | 30 dB | 30 dB | 30 dB | 40 dB | 30 dB |

Fig. 44b

Fig. 44c

| 0 dB | 0 dB | 0 dB | 0 dB | 0 dB | 0 dB | 0 dB | 0 dB |
|------|------|------|------|------|------|------|------|
| 0 dB | 0 dB | 0 dB | 0 dB | 0 dB | 30 dB | 0 dB | 0 dB |
| 0 dB | 0 dB | 0 dB | 0 dB | 0 dB | 30 dB | 0 dB | 0 dB |
| 0 dB | 0 dB | 0 dB | 0 dB | 10 dB | 30 dB | 0 dB | 0 dB |
| 0 dB | 0 dB | 20 dB | 0 dB | 0 dB | 30 dB | 0 dB | 0 dB |
| 30 dB | 30 dB | 0 dB | 0 dB | 0 dB | 30 dB | 0 dB | 0 dB |
| 30 dB | 30 dB | 0 dB | 0 dB | 0 dB | 30 dB | 0 dB | 0 dB |

Fig. 44d

Fig. 44e

| 0 dB | 0 dB | 0 dB | 0 dB | 0 dB | 0 dB | 0 dB | 0 dB |
|------|------|------|-------|-------|-------|------|------|
| 0 dB | 0 dB | 0 dB | 0 dB | 0 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 40 dB | 0 dB | 0 dB |
| 0 dB | 30 dB | 30 dB | 40 dB | 40 dB | 40 dB | 0 dB | 0 dB |

Fig. 44f

Fig. 45

EP 3 414 591 B1

Fig. 46

Fig. 47

EP 3 414 591 B1

Fig. 48

Fig. 49

EP 3 414 591 B1

Fig. 50

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015067982 A1
- US 20130135146 A1
- US 20060022814 A1
- EP 2797330 A1
- DE 165546 C

- US 20080191846 A1
- DE 102014223328 A1
- DE 102009047199 A1

**In der Beschreibung aufgeführte Nicht-Patentliteratur**

- **C. VOLMER et al.** An Eigen-Analysis of Compact Antenna Arrays and Its Application to Port Decoupling. *IEEE transactions on antennas and propagation,* 2008, vol. 56 (2), 360-370